(19) **Europäisches Patentamt**
**European Patent Office**
**Office européen des brevets**

(11) **EP 3 872 520 A2**

(12) **EUROPEAN PATENT APPLICATION**

(43) Date of publication:
**01.09.2021 Bulletin 2021/35**

(51) Int Cl.:
**G01S 7/41** (2006.01)     **G01S 13/04** (2006.01)
**G01S 13/50** (2006.01)     **G01S 13/88** (2006.01)

(21) Application number: **21158554.2**

(22) Date of filing: **22.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2020   US 202062981387 P**
**03.03.2020   US 202062984737 P**
**27.03.2020   US 202063001226 P**
**23.06.2020   US 202016909940**
**13.09.2020   US 202017019271**
**13.09.2020   US 202017019273**
**13.09.2020   US 202017019270**
**05.12.2020   US 202017113024**
**14.01.2021   US 202117149667**

(71) Applicant: **Origin Wireless, Inc.**
**Greenbelt, MD 20770 (US)**

(72) Inventors:
• **MAI, Chao-Lun**
**Cambridge, MA 02139 (US)**

• **LAI, Hung-Quoc Duc**
**Parkville, MD 21234 (US)**
• **CLAFFEY, David N**
**Somervill, MA 02143 (US)**
• **BUGOS, Dan**
**Washington, DC 20010 (US)**
• **ZHANG, Hangfang**
**Greenbelt, MD 20770 (US)**
• **ZHANG, Feng**
**Greenbelt, MD 20770 (US)**
• **WANG, Beibei**
**Clarksvill, MD 21029 (US)**
• **AU, Oscar Chi-Lim**
**San Jose, CA 95136 (US)**
• **MARUMO, Masato**
**Shibuya-ku, Tokyo 150-0012 (JP)**
• **LEE, Jeng-Feng**
**Cambridge, MA 02139 (US)**
• **LIU, K.J. Ray**
**Potomac, MD 20854 (US)**

(74) Representative: **Boult Wade Tennant LLP**
**Salisbury Square House**
**8 Salisbury Square**
**London EC4Y 8AP (GB)**

(54) **DEVICE AND METHOD FOR VEHICLE RELATED WIRELESS MONITORING BASED ON MULTIPATH CHANNEL INFORMATION**

(57)     Methods, apparatus and systems for wireless monitoring are described. In one example, a described method comprises: transmitting a first wireless signal from a first wireless device through a wireless multipath channel of a venue, the venue comprising a vehicle and an immediate vicinity of the vehicle; receiving a second wireless signal by a second wireless device in the venue through the wireless multipath channel, wherein the second wireless signal differs from the first wireless signal due to the wireless multipath channel and a modulation by an object undergoing a motion in the venue; obtaining a time series of channel information (TSCI) of the wireless multipath channel based on the second wireless signal; and performing a monitoring task by monitoring, based on the TSCI, at least one of: the vehicle, the object or the motion of the object.

**FIG. 9B**

EP 3 872 520 A2

## Description

## TECHNICAL FIELD

The present teaching generally relates to wireless monitoring. More specifically, the present teaching relates to: automatic and adaptive multi-mode wireless monitoring based on wireless channel information; placement of the power sources of a wireless monitoring system; enhancing vehicle security through wireless monitoring based on wireless channel information; triggering an assistance device based on the wireless monitoring using wireless channel information (CI); and various power supply designs and qualification for a wireless monitoring system or device which performs wireless monitoring.

## BACKGROUND

With the proliferation of Internet of Things (IoT) applications, billions of household appliances, phones, smart devices, security systems, environment sensors, vehicles and buildings, and other radio-connected devices will transmit data and communicate with each other or people, and everything will be able to be measured and tracked all the time. Among the various approaches to measure what is happening in the surrounding environment, wireless sensing has received an increasing attention in recent years because of the ubiquitous deployment of wireless radio devices. In addition, human activities affect wireless signal propagations, therefore understanding and analyzing the way how wireless signals react to human activities can reveal rich information about the activities around us. As more bandwidth becomes available in the new generation of wireless systems, wireless sensing will make many smart IoT applications only imagined today possible in the near future. That is because when the bandwidth increases, one can see many more multipaths, in a rich-scattering environment such as in indoors or metropolitan area, which can be treated as hundreds of virtual antennas/sensors. As such, wireless sensing and tracking has received a lot of attention in the era of Internet of Things. In order to improve the efficiency of device computation, power management, and environmental channel traffic (such as channel availability and usage) management and improve the sensitivity and resolution for events to be detected, an automatic and adaptive multi-mode operation is desirable but not available yet.

Vehicle monitoring has become a very important application with the ubiquitous deployment of wireless devices in vehicles. For example, by occupant awareness, the vehicle monitoring may enable the identification of the motion and breathing of a pet (pet awareness), identification of subtle motion and breathing of a child (child awareness), detection of motion within the trunk (unknown awareness), detection of broken glass (window breakage) and a hit and run. Existing methods and systems related to vehicle monitoring are not entirely satisfactory in terms of security and safety concerns. Vehicle monitoring needs power to operate such as power/energy from battery, solar, or other sources. By some means of energy harvesting component and energy storage component, the power/energy part can free the device from the need of any electric outlet (in a car or at home). By flexible placement of the device, or transmitter or receiver that is connected to some power source (say solar panel), a user may not need to take the device down frequently to re-charge it manually, which can be applied in not only vehicle monitoring but also other indoor monitoring applications.

Digital assistance systems such as Google home, Amazon Alexa, etc. have brought convenience to people's daily life. In order to trigger these digital assistance systems, voice command is the most common way, which however sometimes needs more than one trial due to unsatisfactory recognition of user's voice command or background noise. Wireless monitoring using wireless channel state information (CSI) has received a lot of attention in the era of Internet of Things. There is no existing method to utilize both the wireless monitoring and the digital assistance system to provide an automatic assistance. While the location of wireless monitoring devices can play an important role in providing a reasonable coverage, there is no existing design of power supply for the wireless monitoring devices to enable the locations of the devices to be flexible enough.

## SUMMARY

The present teaching generally relates to wireless monitoring. More specifically, the present teaching relates to: automatic and adaptive multi-mode wireless monitoring based on wireless channel information; placement of the power sources of a wireless monitoring system; enhancing vehicle security through wireless monitoring based on wireless channel information; triggering an assistance device based on the wireless monitoring using wireless channel information (CI); and various power supply designs and qualification for a wireless monitoring system or device which performs wireless monitoring.

In one embodiment, a method implemented by a wireless monitoring system having a processor, a memory communicatively coupled with the processor, and a set of instructions stored in the memory to be executed by the processor, is described. The method comprises: transmitting, using a transmitter, a wireless signal through a wireless multipath channel of a venue; receiving, using a receiver, the wireless signal through the wireless multipath channel, wherein the wireless signal is impacted by the wireless multipath channel and a modulation of an object undergoing a motion in the venue; obtaining a set of channel information (CI) of the wireless multipath channel based on the wireless signal; performing a monitoring task by monitoring the object and the motion of the object based on the set of CI; determining a plurality of admissible system states of the wireless monitoring system, wherein each of the admissible system states is associated with a respective setting of at least one of: the wireless signal, a series of sounding signals in the wireless signal, or the monitoring task; choosing one of the admissible system states to be a system state of the wireless monitoring system based on the monitoring task; and configuring the wireless monitoring system by applying a setting associated with the chosen admissible system state to the wireless monitoring system.

In another embodiment, a method for configuring a wireless monitoring system is described. The method comprises: transmitting, from a transmitter, a wireless signal through a wireless multipath channel of a venue; receiving, by a receiver, the wireless signal through the wireless multipath channel, wherein the wireless signal is impacted by the wireless multipath channel and a modulation of an object undergoing a motion in the venue; obtaining a set of channel information (CI) of the wireless multipath channel based on the wireless signal using a processor, a memory and a set of instructions; performing a monitoring task by monitoring the object and the motion of the object based on the set of CI; determining a plurality of admissible system states of the wireless monitoring system, wherein each of the admissible system states is associated with a respective setting; choosing one of the admissible system states to be a system state of the wireless monitoring system automatically based on the monitoring task; and configuring the wireless monitoring system by applying, based on the system state, the setting associated with the chosen admissible system state to at least one of: the transmitter, the receiver, the wireless signal, a series of sounding signals in the wireless signal, or the set of CI.

In yet another embodiment, a wireless monitoring system is described. The wireless monitoring system comprises: a transmitter, a receiver and a processor. The transmitter is configured for transmitting a wireless signal through a wireless multipath channel of a venue. The receiver is configured for: receiving the wireless signal through the wireless multipath channel, wherein the wireless signal is impacted by the wireless multipath channel and a modulation of an object undergoing a motion in the venue, obtaining a set of channel information (CI) of the wireless multipath channel based on the wireless signal, and performing a monitoring task by monitoring the object and the motion of the object based on the set of CI. The processor is configured for: determining a plurality of admissible system states of the wireless monitoring system, wherein each of the admissible system states is associated with a respective setting of at least one of: the wireless signal, a series of sounding signals in the wireless signal, or the monitoring task, choosing one of the admissible system states to be a system state of the wireless monitoring system based on the monitoring task, and configuring the wireless monitoring system by applying, based on the system state, a setting associated with the chosen admissible system state to at least one of: the transmitter, the receiver, the wireless signal, the set of CI, or the monitoring of the object.

In a different embodiment, a wireless device of a wireless monitoring system is described. The wireless device comprises: a receiver configured to receive a wireless signal transmitted by a transmitter through a wireless multipath channel of a venue, wherein the wireless signal is impacted by the wireless multipath channel and a modulation of an object undergoing a motion in the venue; a processor communicatively coupled with the receiver; a memory communicatively coupled with the processor; and a set of instructions stored in the memory. The set of instructions, when executed by the processor, causes the processor to: obtain a set of channel information (CI) of the wireless multipath channel based on the wireless signal, and perform a monitoring task by monitoring the object and the motion of the object based on the set of CI. A plurality of admissible system states is determined for the wireless monitoring system, wherein each of the admissible system states is associated with a respective setting of at least one of: the wireless signal, a series of sounding signals in the wireless signal, or the monitoring task. One of the admissible system states is chosen to be a system state of the wireless monitoring system based on the monitoring task. The wireless monitoring system is configured by applying, based on the system state, a setting associated with the chosen admissible system state to at least one of: the transmitter, the receiver, the wireless signal, the set of CI, or the monitoring of the object.

In one embodiment, a method implemented by a wireless monitoring system having a processor, a memory communicatively coupled with the processor, and a set of instructions stored in the memory to be executed by the processor, is described. The method comprises: positioning and powering a transmitter at a first location in a venue; positioning and powering a receiver at a second location in the venue; transmitting a wireless signal from the transmitter through a wireless multipath channel of the venue; receiving the wireless signal by the receiver through the wireless multipath channel, wherein the wireless signal is impacted by the wireless multipath channel and a modulation of an object undergoing a motion in the venue; obtaining a set of channel information (CI) of the wireless multipath channel based on the wireless signal; and monitoring the object and the motion of the object based on the set of CI.

In another embodiment, a method for positioning and powering a wireless monitoring system is described. The method comprises: positioning a transmitter at a first location in a venue, wherein the transmitter is part of a first target device at the first location; positioning a receiver at a second location in the venue, wherein the receiver is part of a second target device at the second location, wherein each of the first target device and the second target device comprises at least one of: a power supply unit, a power management unit, a power transfer unit, an energy storage unit, a power generation unit or an energy harvesting unit; powering each of the transmitter and the receiver based on at least one of: the respective power supply unit, the respective power management unit, the respective power transfer unit, the respective energy storage unit, the respective power generation unit or the respective energy harvesting unit, of the respective target device; transmitting a wireless signal from the transmitter through a wireless multipath channel of the venue; receiving the wireless signal by the receiver through the wireless multipath channel, wherein the wireless signal is impacted by the wireless multipath channel and a modulation of an object undergoing a motion in the venue; obtaining a set of channel information (CI) of the wireless multipath channel based on the wireless signal using a processor, a memory communicatively coupled with the processor and a set of instructions stored in the memory; and monitoring, based on the set of CI, at least one of the object or a motion of the object.

In yet another embodiment, a wireless monitoring system is described. The wireless monitoring system comprises: a first target device, a second target device and a processor. The first target device is positioned at a first location in a venue. The first target device comprises a transmitter configured to transmit a wireless signal through a wireless multipath channel of the venue. The second target device is positioned at a second location in the venue. The second target device comprises a receiver configured to receive the wireless signal through the wireless multipath channel, wherein the wireless signal is impacted by the wireless multipath channel and a modulation of an object undergoing a motion in the venue. Each of the first target device and the second target device comprises at least one of: a power supply unit, a power management unit, a power transfer unit, an energy storage unit, a power generation unit or an energy harvesting unit, for powering the transmitter and the receiver respectively. The processor is configured for: obtaining a set of channel information (CI) of the wireless multipath channel based on the wireless signal, and monitoring, based on the set of CI, at least one of the object or a motion of the object.

In a different embodiment, a wireless device of a wireless monitoring system is described. The wireless device comprises: a receiver; a processor communicatively coupled with the receiver; a memory communicatively coupled with the processor; and a set of instructions stored in the memory. The receiver is configured to receive a wireless signal transmitted by a transmitter through a wireless multipath channel of a venue. The wireless signal is impacted by the wireless multipath channel and a modulation of an object undergoing a motion in the venue. The transmitter is part of a first target device positioned at a first location in the venue. The wireless device is a second target device positioned at a second location in the venue. Each of the first target device and the second target device comprises at least one of: a power supply unit, a power management unit, a power transfer unit, an energy storage unit, a power generation unit or an energy harvesting unit, for powering the transmitter and the receiver respectively. The set of instructions, when executed by the processor, causes the processor to: perform a test procedure to determine the first and second locations to install the first and second target devices respectively based on a criterion, wherein each of the first and second target devices is powered based on its respective location, obtain a set of channel information (CI) of the wireless multipath channel based on the wireless signal, and monitor, based on the set of CI, at least one of the object or a motion of the object.

In one embodiment, a first wireless device of a wireless monitoring system is described. The first wireless device comprises: a receiver, a processor communicatively coupled with the receiver, a memory communicatively coupled with the processor, and a set of instructions stored in the memory. The receiver is configured to receive a first wireless signal through a wireless multipath channel of a venue. The venue comprises a vehicle and an immediate vicinity of the vehicle. The first wireless signal is received based on a transmitted wireless signal transmitted by a second wireless device of the wireless monitoring system. The first wireless signal differs from the transmitted wireless signal due to the wireless multipath channel and a modulation by an object undergoing a motion in the venue. The set of instructions, when executed by the processor, causes the processor to: obtain a time series of channel information (TSCI) of the wireless multipath channel based on the first wireless signal, and perform a monitoring task by monitoring, based on the TSCI, at least one of: the vehicle, the object, or the motion of the object.

In another embodiment, a method of a wireless monitoring system is described. The method comprises: transmitting a first wireless signal from a first wireless device in a venue through a wireless multipath channel of the venue, the venue comprising a vehicle and an immediate vicinity of the vehicle; receiving a second wireless signal by a second wireless device in the venue through the wireless multipath channel, wherein the second wireless signal differs from the first wireless signal due to the wireless multipath channel and a modulation of the first wireless signal by an object undergoing a motion in the venue; obtaining a time series of channel information (TSCI) of the wireless multipath channel based on the second wireless signal using a processor, a memory communicatively coupled with the processor and a set of instructions stored in the memory; and performing a monitoring task by monitoring, based on the TSCI, at least one of: the vehicle, the object or the motion of the object.

In yet another embodiment, a first wireless device of a wireless monitoring system is described. The first wireless device comprises: a transmitter; a processor communicatively coupled with the transmitter; a memory communicatively coupled with the processor; and a set of instructions stored in the memory. The set of instructions, when executed by the processor, causes the processor to perform: generating a first wireless signal, and transmitting the first wireless signal through a wireless multipath channel of a venue. The venue comprises a vehicle and an immediate vicinity of the vehicle. A second wireless signal is received by a second wireless device of the wireless monitoring system based on the first wireless signal. The second wireless signal differs from the first wireless signal due to the wireless multipath channel and a modulation by an object undergoing a motion in the venue. A time series of channel information (TSCI) of the wireless multipath channel is obtained based on the second wireless signal. A monitoring task is performed by monitoring, based on the TSCI, at least one of: the vehicle, the object or the motion of the object.

In a different embodiment, a wireless monitoring system is described. The wireless monitoring system comprises: a first wireless device and a second wireless device. The first wireless device is configured to transmit a first wireless signal through a wireless multipath channel of the venue, wherein the venue comprises a vehicle and an immediate vicinity of the vehicle. The second wireless device is configured to: receive a second wireless signal based on the first wireless signal transmitted through the wireless multipath channel, wherein the second wireless signal differs from the first wireless signal due to the wireless multipath channel and a modulation by an object undergoing a motion in the venue, obtain a time series of channel information (TSCI) of the wireless multipath channel based on the second wireless signal, and perform a monitoring task by monitoring, based on the TSCI, at least one of: the vehicle, the object, or the motion of the object, wherein the first wireless device and the second wireless device are at different locations in the vehicle.

In one embodiment, an automatic assistant system is described. The automatic assistant system comprises: a transmitter, a receiver, a processor, and an assistant device. The transmitter is configured for transmitting a first wireless signal through a wireless multipath channel of a venue. The receiver is configured for receiving a second wireless signal through the wireless multipath channel. The second wireless signal differs from the first wireless signal due to the wireless multipath channel that is impacted by a motion of an object in the venue. The processor is configured for: obtaining a time series of channel information (TSCI) of the wireless multipath channel based on the second wireless signal, and monitoring the motion of the object in the venue based on the TSCI. The assistant device is configured for generating an assistance with respect to the object in the venue based on the monitoring.

In another embodiment, a method of an automatic assistant system is described. The method comprises: transmitting a first wireless signal from a first wireless device in a venue through a wireless multipath channel of the venue; receiving a second wireless signal by a second wireless device in the venue through the wireless multipath channel, wherein the second wireless signal differs from the first wireless signal due to the wireless multipath channel that is impacted by a motion of a person in the venue; obtaining a time series of channel information (TSCI) of the wireless multipath channel based on the second wireless signal using a processor, a memory communicatively coupled with the processor and a set of instructions stored in the memory; monitoring the motion of the person in the venue based on the TSCI; and generating an assistance to the person in the venue based on the monitoring without any input from the person.

In yet another embodiment, a smart speaker is described. The smart speaker comprises: a receiver and a processor. The receiver is configured for receiving a first wireless signal through a wireless multipath channel of a venue. The first wireless signal is received based on a transmitted wireless signal transmitted by a wireless device separate from the smart speaker. The first wireless signal differs from the transmitted wireless signal due to the wireless multipath channel and a modulation by an object undergoing a motion in the venue. The processor is configured for: obtaining a time series of channel information (TSCI) of the wireless multipath channel based on the first wireless signal, monitoring the motion of the object in the venue based on the TSCI, and generating an assistance with respect to the object in the venue based on the monitoring and an attempt of communication with the object.

In one embodiment, an accessory of a wireless monitoring system is described. The accessory comprises at least one physical attachment feature attaching the accessory to at least one of: a first wireless device in the wireless monitoring system or a second wireless device in the wireless monitoring system. The first wireless device is configured for transmitting a first wireless signal through a wireless multipath channel of a venue. The second wireless device is configured for receiving a second wireless signal through the wireless multipath channel. The second wireless signal differs from the first wireless signal due to the wireless multipath channel that is impacted by a motion of an object in the venue. The wireless monitoring system comprises a processor configured for: obtaining a time series of channel information (TSCI) of the wireless multipath channel based on the second wireless signal, and monitoring the motion of the object in the venue based on the TSCI.

In another embodiment, a wireless monitoring system is described. The wireless monitoring system comprises: a first wireless device, a second wireless device, a processor, and an accessory comprising at least one physical attachment feature configured to attach the accessory to at least one of the first wireless device or the second wireless device. The first wireless device is configured for transmitting a first wireless signal through a wireless multipath channel of a venue. The second wireless device is configured for receiving a second wireless signal through the wireless multipath channel, wherein the second wireless signal differs from the first wireless signal due to the wireless multipath channel that is impacted by a motion of an object in the venue. The processor is configured for: obtaining a time series of channel information (TSCI) of the wireless multipath channel based on the second wireless signal, and monitoring the motion of the object in the venue based on the TSCI.

In yet another embodiment, a wireless device of a wireless monitoring system is described. The wireless device comprises: a processor; a memory communicatively coupled to the processor; an interface to an accessory; and at least one of a transmitter or a receiver, communicatively coupled to the processor. The transmitter is configured for transmitting a first wireless signal through a wireless multipath channel of a venue to the receiver. The receiver is configured for receiving a second wireless signal through the wireless multipath channel. The second wireless signal differs from the first wireless signal due to the wireless multipath channel that is impacted by a motion of an object in the venue. A time series of channel information (TSCI) of the wireless multipath channel is obtained based on the second wireless signal. The motion of the object in the venue is monitored based on the TSCI. The accessory comprises at least one physical attachment feature configured to attach the accessory to the wireless device through the interface. The wireless device, when attached to the accessory based on the interface and the at least one physical attachment feature, is powered by a power cord which is connected to a power plug with protruding pins to be inserted into a power socket of a power source. The accessory comprises at least one of: the power cord, the power plug, or a space-saving short power cord.

In one embodiment, a method of a qualified wireless system is described. The method comprises: transmitting a wireless signal from a Type 1 device to a Type 2 device through a wireless multipath channel of a venue, wherein the Type 1 device and the Type 2 device are heterogeneous wireless devices; receiving the wireless signal by the Type 2 device; obtaining a time series of channel information (TSCI) of the wireless multipath channel based on the wireless signal; performing a qualification test based on the TSCI for at least one to-be-qualified device, which is at least one of: the Type 1 device, a module of the Type 1 device, an integrated circuit (IC) of the Type 1 device, the Type 2 device, a module of the Type 2 device, or an IC of the Type 2 device; determining that each of the at least one to-be-qualified device is a qualified device based on a determination that a respective qualification criterion associated with the to-be-qualified device is satisfied, to obtain at least one qualified device; and performing a task based on the TSCI using the at least one qualified device. The Type 2 device may transmit the TSCI (or a simplified or compressed version of TSCI) to the Type 1 device using the wireless multipath channel (e.g. in a return packet based on a standard such as 802.11), or another wireless channel, or via wired network.

In another embodiment, a qualified wireless system is described. The qualified wireless system comprises: a Type 1 heterogeneous wireless device configured for transmitting a wireless signal through a wireless multipath channel of a venue; a Type 2 heterogeneous wireless device configured for: receiving the wireless signal, obtaining a time series of channel information (TSCI) of the wireless multipath channel based on the wireless signal; and a processor communicatively coupled with a memory storing a set of instructions, and configured for: performing a qualification test based on the TSCI for at least one to-be-qualified device, which is at least one of: the Type 1 device, a module of the Type 1 device, an integrated circuit (IC) of the Type 1 device, the Type 2 device, a module of the Type 2 device, or an IC of the Type 2 device, determining that each of the at least one to-be-qualified device is a qualified device based on a determination that a respective qualification criterion associated with the to-be-qualified device is satisfied, to obtain at least one qualified device, and performing a task based on the TSCI using the at least one qualified device.

Other concepts relate to software for implementing the present teaching on wireless monitoring in a rich-scattering environment. Additional novel features will be set forth in part in the description which follows, and in part will become apparent to those skilled in the art upon examination of the following and the accompanying drawings or may be learned by production or operation of the examples. The novel features of the present teachings may be realized and attained by practice or use of various aspects of the methodologies, instrumentalities and combinations set forth in the detailed examples discussed below.

**BRIEF DESCRIPTION OF DRAWINGS**

The methods, systems, and/or devices described herein are further described in terms of exemplary embodiments. These exemplary embodiments are described in detail with reference to the drawings. These embodiments are non-limiting exemplary embodiments, in which like reference numerals represent similar structures throughout the several views of the drawings.

FIG. 1 illustrates an exemplary scenario where object motion is monitored and tracked, according to some embodiments of the present disclosure.
FIG. 2A illustrates a mode transition process of a wireless monitoring system, according to some embodiments of the present disclosure.
FIG. 2B illustrates another mode transition process of a wireless monitoring system, according to some embodiments of the present disclosure.

FIG. 3 illustrates a flow chart of an exemplary method of a wireless monitoring system, according to some embodiments of the present teaching.

FIG. 4 illustrates a flow chart of another exemplary method of a wireless monitoring system, according to some embodiments of the present teaching.

FIG. 5 illustrates a system state transition process of a wireless monitoring system, according to some embodiments of the present disclosure.

FIG. 6 illustrates another system state transition process of a wireless monitoring system, according to some embodiments of the present disclosure.

FIG. 7A illustrates some positions for transmitter and receiver in a vehicle wireless monitoring system, according to some embodiments of the present disclosure.

FIG. 7B illustrates other positions for transmitter and receiver in a vehicle wireless monitoring system, according to some embodiments of the present disclosure.

FIG. 7C illustrates yet other positions for transmitter and receiver in a vehicle wireless monitoring system, according to some embodiments of the present disclosure.

FIG. 8 illustrates a flow chart of an exemplary method of a wireless monitoring system, according to some embodiments of the present teaching.

FIG. 9A illustrates an occupant awareness function of a vehicle wireless monitoring system, according to some embodiments of the present disclosure.

FIG. 9B illustrates a tampering awareness function of a vehicle wireless monitoring system, according to some embodiments of the present disclosure.

FIG. 10 illustrates a flow chart of an exemplary method of a vehicle wireless monitoring system, according to some embodiments of the present teaching.

FIG. 11 illustrates an exemplary state flow of a vehicle wireless monitoring system, according to some embodiments of the present teaching.

FIG. 12A illustrates an exemplary function of an automatic assistant system, according to some embodiments of the present disclosure.

FIG. 12B illustrates another exemplary function of an automatic assistant system, according to some embodiments of the present disclosure.

FIG. 13 illustrates a flow chart of an exemplary method for triggering an assistance device based on wireless monitoring, according to some embodiments of the present teaching.

FIG. 14 illustrates a flow chart of an exemplary method for wireless monitoring with flexible power supply, according to some embodiments of the present teaching.

FIG. 15A and FIG. 15B illustrate an exemplary device with a power supply design, according to some embodiments of the present teaching.

FIG. 16A illustrates an exemplary accessory for mounting a device on a wall, according to some embodiments of the present teaching.

FIG. 16B illustrates an exemplary device coupled to the accessory shown in FIG. 16A, according to some embodiments of the present teaching.

FIG. 17A illustrates an exemplary accessory for mounting and connecting a device to a power socket, according to some embodiments of the present teaching.

FIG. 17B illustrates an exemplary device coupled to the accessory shown in FIG. 17A, according to some embodiments of the present teaching.

FIG. 18A and FIG. 18B illustrate another exemplary device with a power supply design, according to some embodiments of the present teaching.

FIG. 19 illustrates a scenario when an integrated or convertible device is utilized as a plug-in design, according to some embodiments of the present teaching.

FIG. 20 illustrates a scenario when an integrated or convertible device is utilized as a desk-top design, according to some embodiments of the present teaching.

FIG. 21 illustrates an exemplary device with interchanging plugs for power supply, according to some embodiments of the present teaching.

FIG. 22 illustrates an exemplary block diagram of a first wireless device of a wireless monitoring system, according to some embodiments of the present disclosure.

FIG. 23 illustrates an exemplary block diagram of a second wireless device of a wireless monitoring system, according to some embodiments of the present disclosure.

FIG. 24 shows exemplary performances of motion detections based on passive infrared (PIR) sensing and WiFi sensing, according to some embodiments of the present teaching.

FIG. 25 illustrates a flow chart of an exemplary method of a qualified wireless sensing system, according to some embodiments of the present teaching.

## DETAILED DESCRIPTION

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and/or circuitry have been described at a relatively high-level, without detail, in order to avoid unnecessarily obscuring aspects of the present teachings.

In one embodiment, the present teaching discloses a method, apparatus, device, system, and/or software (method/apparatus/device/system/software) of a wireless monitoring system. A time series of channel information (CI) of a wireless multipath channel (channel) may be obtained (e.g. dynamically) using a processor, a memory communicatively coupled with the processor and a set of instructions stored in the memory. The time series of CI (TSCI) may be extracted from a wireless signal (signal) transmitted between a Type 1 heterogeneous wireless device (e.g. wireless transmitter, TX) and a Type 2 heterogeneous wireless device (e.g. wireless receiver, RX) in a venue through the channel. The channel may be impacted by an expression (e.g. motion, movement, expression, and/or change in position/pose/shape/expression) of an object in the venue. A characteristics and/or a spatial-temporal information (STI, e.g. motion information) of the object and/or of the motion of the object may be monitored based on the TSCI. A task may be performed based on the characteristics and/or STI. A presentation associated with the task may be generated in a user-interface (UI) on a device of a user. The TSCI may be a wireless signal stream. The TSCI or each CI may be preprocessed. A device may be a station (STA). The symbol "A/B" means "A and/or B" in the present teaching.

The expression may comprise placement, placement of moveable parts, location, position, orientation, identifiable place, region, spatial coordinate, presentation, state, static expression, size, length, width, height, angle, scale, shape, curve, surface, area, volume, pose, posture, manifestation, body language, dynamic expression, motion, motion sequence, gesture, extension, contraction, distortion, deformation, body expression (e.g. head, face, eye, mouth, tongue, hair, voice, neck, limbs, arm, hand, leg, foot, muscle, moveable parts), surface expression (e.g. shape, texture, material, color, electromagnetic (EM) characteristics, visual pattern, wetness, reflectance, translucency, flexibility), material property (e.g. living tissue, hair, fabric, metal, wood, leather, plastic, artificial material, solid, liquid, gas, temperature), movement, activity, behavior, change of expression, and/or some combination.

The wireless signal may comprise: transmitted/received signal, EM radiation, RF signal/transmission, signal in licensed/unlicensed /ISM band, bandlimited signal, baseband signal, wireless/mobile/cellular communication signal, wireless/mobile/cellular network signal, mesh signal, light signal/communication, downlink/uplink signal, unicast/multicast/broadcast signal, standard (e.g. WLAN, WWAN, WPAN, WBAN, international, national, industry, defacto, IEEE, IEEE 802, 802.11/15/16, WiFi, 802.11n/ac/ax/be, 3G/4G/LTE/5G/6G/7G/8G, 3GPP, Bluetooth, BLE, Zigbee, RFID, UWB, WiMax) compliant signal, protocol signal, standard frame, beacon/pilot/probe/enquiry/acknowledgement/handshake/synchronization signal, management/control/data frame, management/control/data signal, standardized wireless/cellular communication protocol, reference signal, source signal, motion probe/detection/sensing signal, and/or series of signals. The wireless signal may comprise a line-of-sight (LOS), and/or a non-LOS component (or path/link). Each CI may be extracted/generated/computed/sensed at a layer (e.g. PHY/MAC layer in OSI model) of Type 2 device and may be obtained by an application (e.g. software, firmware, driver, app, wireless monitoring software/system).

The wireless multipath channel may comprise: a communication channel, analog frequency channel (e.g. with analog carrier frequency near 700/800/900MHz, 1.8/1.8/2.4/3/5/6/27/60 GHz), coded channel (e.g. in CDMA), and/or channel of a wireless network/system (e.g. WLAN, WiFi, mesh, LTE, 4G/5G, Bluetooth, Zigbee, UWB, RFID, microwave). It may comprise more than one channel. The channels may be consecutive (e.g. with adjacent/overlapping bands) or non-consecutive channels (e.g. non-overlapping WiFi channels, one at 2.4GHz and one at 5GHz).

The TSCI may be extracted from the wireless signal at a layer of the Type 2 device (e.g. a layer of OSI reference model, physical layer, data link layer, logical link control layer, media access control (MAC) layer, network layer, transport layer, session layer, presentation layer, application layer, TCP/IP layer, internet layer, link layer). The TSCI may be extracted from a derived signal (e.g. baseband signal, motion detection signal, motion sensing signal) derived from the wireless signal (e.g. RF signal). It may be (wireless) measurements sensed by the communication protocol (e.g. standardized protocol) using existing mechanism (e.g. wireless/cellular communication standard/network, 3G/LTE/4G/5G/6G/7G/8G, WiFi, IEEE 802.11/15/16). The derived signal may comprise a packet with at least one of: a preamble, a header and a payload (e.g. for data/control/management in wireless links/networks). The TSCI may be extracted from a probe signal (e.g. training sequence, STF, LTF, L-STF, L-LTF, L-SIG, HE-STF, HE-LTF, HE-SIG-A, HE-SIG-B, CEF) in the packet. A motion detection/sensing signal may be recognized/identified base on the probe signal. The packet may be a standard-compliant protocol frame, management frame, control frame, data frame, sounding frame, excitation frame, illumination frame, null data frame, beacon frame, pilot frame, probe frame, request frame, response frame, association frame, reassociation frame, disassociation frame, authentication frame, action frame, report frame, poll frame, announcement frame, extension frame, enquiry frame, acknowledgement frame, RTS frame, CTS frame, QoS frame, CF-Poll frame, CF-Ack frame, block acknowledgement frame, reference frame, training frame, and/or synchronization frame.

The packet may comprise a control data and/or a motion detection probe. A data (e.g. ID/parameters/characteristics/ settings/ control signal/command/instruction/ notification/ broadcasting-related information of the Type 1 device) may be obtained from the payload. The wireless signal may be transmitted by the Type 1 device. It may be received by the Type 2 device. A database (e.g. in local server, hub device, cloud server, storage network) may be used to store the TSCI, characteristics, STI, signatures, patterns, behaviors, trends, parameters, analytics, output responses, identification information, user information, device information, channel information, venue (e.g. map, environmental model, network, proximity devices/networks) information, task information, class/category information, presentation (e.g. UI) information, and/or other information.

The Type 1/Type 2 device may comprise at least one of: electronics, circuitry, transmitter (TX)/receiver (RX)/transceiver, RF interface, "Origin Satellite"/"Tracker Bot", unicast/multicast/broadcasting device, wireless source device, source/destination device, wireless node, hub device, target device, motion detection device, sensor device, remote/wireless sensor device, wireless communication device, wireless-enabled device, standard compliant device, and/or receiver. The Type 1 (or Type 2) device may be heterogeneous because, when there are more than one instances of Type 1 (or Type 2) device, they may have different circuitry, enclosure, structure, purpose, auxiliary functionality, chip/IC, processor, memory, software, firmware, network connectivity, antenna, brand, model, appearance, form, shape, color, material, and/or specification. The Type 1/Type 2 device may comprise: access point, router, mesh router, internet-of-things (IoT) device, wireless terminal, one or more radio/RF subsystem/wireless interface (e.g. 2.4GHz radio, 5GHz radio, front haul radio, backhaul radio), modem, RF front end, RF/radio chip or integrated circuit (IC).

At least one of: Type 1 device, Type 2 device, a link between them, the object, the characteristics, the STI, the monitoring of the motion, and the task may be associated with an identification (ID) such as UUID. The Type 1/Type 2/another device may obtain/store/retrieve/access/preprocess/condition/process/analyze/monitor/apply the TSCI. The Type 1 and Type 2 devices may communicate network traffic in another channel (e.g. Ethernet, HDMI, USB, Bluetooth, BLE, WiFi, LTE, other network, the wireless multipath channel) in parallel to the wireless signal. The Type 2 device may passively observe/monitor/receive the wireless signal from the Type 1 device in the wireless multipath channel without establishing connection (e.g. association/authentication) with, or requesting service from, the Type 1 device.

The transmitter (i.e. Type 1 device) may function as (play role of) receiver (i.e. Type 2 device) temporarily, sporadically, continuously, repeatedly, interchangeably, alternately, simultaneously, concurrently, and/or contemporaneously; and vice versa. A device may function as Type 1 device (transmitter) and/or Type 2 device (receiver) temporarily, sporadically, continuously, repeatedly, simultaneously, concurrently, and/or contemporaneously. There may be multiple wireless nodes each being Type 1 (TX) and/or Type 2 (RX) device. A TSCI may be obtained between every two nodes when they exchange/communicate wireless signals. The characteristics and/or STI of the object may be monitored individually based on a TSCI, or jointly based on two or more (e.g. all) TSCI.

The motion of the object may be monitored actively (in that Type 1 device, Type 2 device, or both, are wearable of/associated with the object) and/or passively (in that both Type 1 and Type 2 devices are not wearable of/associated with the object). It may be passive because the object may not be associated with the Type 1 device and/or the Type 2 device. The object (e.g. user, an automated guided vehicle or AGV) may not need to carry/install any wearables/fixtures (i.e. the Type 1 device and the Type 2 device are not wearable/attached devices that the object needs to carry in order perform the task). It may be active because the object may be associated with either the Type 1 device and/or the Type 2 device. The object may carry (or installed) a wearable/a fixture (e.g. the Type 1 device, the Type 2 device, a device communicatively coupled with either the Type 1 device or the Type 2 device).

The presentation may be visual, audio, image, video, animation, graphical presentation, text, etc. A computation of the task may be performed by a processor (or logic unit) of the Type 1 device, a processor (or logic unit) of an IC of the Type 1 device, a processor (or logic unit) of the Type 2 device, a processor of an IC of the Type 2 device, a local server, a cloud server, a data analysis subsystem, a signal analysis subsystem, and/or another processor. The task may be performed with/without reference to a wireless fingerprint or a baseline (e.g. collected, processed, computed, transmitted and/or stored in a training phase/survey/current survey/previous survey/recent survey/initial wireless survey, a passive fingerprint), a training, a profile, a trained profile, a static profile, a survey, an initial wireless survey, an initial setup, an installation, a re-training, an updating and a reset.

The Type 1 device (TX device) may comprise at least one heterogeneous wireless transmitter. The Type 2 device (RX device) may comprise at least one heterogeneous wireless receiver. The Type 1 device and the Type 2 device may be collocated. The Type 1 device and the Type 2 device may be the same device. Any device may have a data processing unit/apparatus, a computing unit/system, a network unit/system, a processor (e.g. logic unit), a memory communicatively coupled with the processor, and a set of instructions stored in the memory to be executed by the processor. Some processors, memories and sets of instructions may be coordinated.

There may be multiple Type 1 devices interacting (e.g. communicating, exchange signal/control/notification/other data) with the same Type 2 device (or multiple Type 2 devices), and/or there may be multiple Type 2 devices interacting with the same Type 1 device. The multiple Type 1 devices/Type 2 devices may be synchronized and/or asynchronous, with same/different window width/size and/or time shift, same/different synchronized start time, synchronized end time, etc. Wireless signals sent by the multiple Type 1 devices may be sporadic, temporary, continuous, repeated, synchronous, simultaneous, concurrent, and/or contemporaneous. The multiple Type 1 devices/Type 2 devices may operate independently and/or collaboratively. A Type 1 and/or Type 2 device may have/comprise/be heterogeneous hardware circuitry (e.g. a heterogeneous chip or a heterogeneous IC capable of generating/receiving the wireless signal, extracting CI from received signal, or making the CI available). They may be communicatively coupled to same or different servers (e.g. cloud server, edge server, local server, hub device).

Operation of one device may be based on operation, state, internal state, storage, processor, memory output, physical location, computing resources, network of another device. Difference devices may communicate directly, and/or via another device/server/hub device/cloud server. The devices may be associated with one or more users, with associated settings. The settings may be chosen once, pre-programmed, and/or changed (e.g. adjusted, varied, modified)/varied over time. There may be additional steps in the method. The steps and/or the additional steps of the method may be performed in the order shown or in another order. Any steps may be performed in parallel, iterated, or otherwise repeated or performed in another manner. A user may be human, adult, older adult, man, woman, juvenile, child, baby, pet, animal, creature, machine, computer module/software, etc.

In the case of one or multiple Type 1 devices interacting with one or multiple Type 2 devices, any processing (e.g. time domain, frequency domain) may be different for different devices. The processing may be based on locations, orientation, direction, roles, user-related characteristics, settings, configurations, available resources, available bandwidth, network connection, hardware, software, processor, co-processor, memory, battery life, available power, antennas, antenna types, directional/unidirectional characteristics of the antenna, power setting, and/or other parameters/characteristics of the devices.

The wireless receiver (e.g. Type 2 device) may receive the signal and/or another signal from the wireless transmitter (e.g. Type 1 device). The wireless receiver may receive another signal from another wireless transmitter (e.g. a second Type 1 device). The wireless transmitter may transmit the signal and/or another signal to another wireless receiver (e.g. a second Type 2 device). The wireless transmitter, wireless receiver, another wireless receiver and/or another wireless transmitter may be moving with the object and/or another object. The another object may be tracked.

The Type 1 and/or Type 2 device may be capable of wirelessly coupling with at least two Type 2 and/or Type 1 devices. The Type 1 device may be caused/controlled to switch/establish wireless coupling (e.g. association, authentication) from the Type 2 device to a second Type 2 device at another location in the venue. Similarly, the Type 2 device may be caused/controlled to switch/establish wireless coupling from the Type 1 device to a second Type 1 device at yet another location in the venue. The switching may be controlled by a server (or a hub device), the processor, the Type 1 device, the Type 2 device, and/or another device. The radio used before and after switching may be different. A second wireless signal (second signal) may be caused to be transmitted between the Type 1 device and the second Type 2 device (or between the Type 2 device and the second Type 1 device) through the channel. A second TSCI of the channel extracted from the second signal may be obtained. The second signal may be the first signal. The characteristics, STI and/or another quantity of the object may be monitored based on the second TSCI. The Type 1 device and the Type 2 device may be the same. The characteristics, STI and/or another quantity with different time stamps may form a waveform. The waveform may be displayed in the presentation.

The wireless signal and/or another signal may have data embedded. The wireless signal may be a series of probe signals (e.g. a repeated transmission of probe signals, a re-use of one or more probe signals). The probe signals may change/vary over time. A probe signal may be a standard compliant signal, protocol signal, standardized wireless protocol signal, control signal, data signal, wireless communication network signal, cellular network signal, WiFi signal, LTE/5G/6G/7G signal, reference signal, beacon signal, motion detection signal, and/or motion sensing signal. A probe signal may be formatted according to a wireless network standard (e.g. WiFi), a cellular network standard (e.g. LTE/5G/6G), or another standard. A probe signal may comprise a packet with a header and a payload. A probe signal may have data embedded. The payload may comprise data. A probe signal may be replaced by a data signal. The probe signal may be embedded in a data signal. The wireless receiver, wireless transmitter, another wireless receiver and/or another wireless transmitter may be associated with at least one processor, memory communicatively coupled with respective processor, and/or respective set of instructions stored in the memory which when executed cause the processor to perform any and/or all steps needed to determine the STI (e.g. motion information), initial STI, initial time, direction, instantaneous location, instantaneous angle, and/or speed, of the object.

The processor, the memory and/or the set of instructions may be associated with the Type 1 device, one of the at least one Type 2 device, the object, a device associated with the object, another device associated with the venue, a cloud server, a hub device, and/or another server.

The Type 1 device may transmit the signal in a broadcasting manner to at least one Type 2 device(s) through the channel in the venue. The signal is transmitted without the Type 1 device establishing wireless connection (e.g. association, authentication) with any Type 2 device, and without any Type 2 device requesting services from the Type 1 device. The Type 1 device may transmit to a particular media access control (MAC) address common for more than one Type 2 devices. Each Type 2 device may adjust its MAC address to the particular MAC address. The particular MAC address may be associated with the venue. The association may be recorded in an association table of an Association Server (e.g. hub device). The venue may be identified by the Type 1 device, a Type 2 device and/or another device based on the particular MAC address, the series of probe signals, and/or the at least one TSCI extracted from the probe signals.

For example, a Type 2 device may be moved to a new location in the venue (e.g. from another venue). The Type 1 device may be newly set up in the venue such that the Type 1 and Type 2 devices are not aware of each other. During set up, the Type 1 device may be instructed/guided/ caused/ controlled (e.g. using dummy receiver, using hardware pin setting/connection, using stored setting, using local setting, using remote setting, using downloaded setting, using hub device, or using server) to send the series of probe signals to the particular MAC address. Upon power up, the Type 2 device may scan for probe signals according to a table of MAC addresses (e.g. stored in a designated source, server, hub device, cloud server) that may be used for broadcasting at different locations (e.g. different MAC address used for different venue such as house, office, enclosure, floor, multi-storey building, store, airport, mall, stadium, hall, station, subway, lot, area, zone, region, district, city, country, continent). When the Type 2 device detects the probe signals sent to the particular MAC address, the Type 2 device can use the table to identify the venue based on the MAC address.

A location of a Type 2 device in the venue may be computed based on the particular MAC address, the series of probe signals, and/or the at least one TSCI obtained by the Type 2 device from the probe signals. The computing may be performed by the Type 2 device.

The particular MAC address may be changed (e.g. adjusted, varied, modified) over time. It may be changed according to a time table, rule, policy, mode, condition, situation and/or change. The particular MAC address may be selected based on availability of the MAC address, a pre-selected list, collision pattern, traffic pattern, data traffic between the Type 1 device and another device, effective bandwidth, random selection, and/or a MAC address switching plan. The particular MAC address may be the MAC address of a second wireless device (e.g. a dummy receiver, or a receiver that serves as a dummy receiver).

The Type 1 device may transmit the probe signals in a channel selected from a set of channels. At least one CI of the selected channel may be obtained by a respective Type 2 device from the probe signal transmitted in the selected channel.

The selected channel may be changed (e.g. adjusted, varied, modified) over time. The change may be according to a time table, rule, policy, mode, condition, situation, and/or change. The selected channel may be selected based on availability of channels, random selection, a pre-selected list, co-channel interference, inter-channel interference, channel traffic pattern, data traffic between the Type 1 device and another device, effective bandwidth associated with channels, security criterion, channel switching plan, a criterion, a quality criterion, a signal quality condition, and/or consideration.

The particular MAC address and/or an information of the selected channel may be communicated between the Type 1 device and a server (e.g. hub device) through a network. The particular MAC address and/or the information of the selected channel may also be communicated between a Type 2 device and a server (e.g. hub device) through another network. The Type 2 device may communicate the particular MAC address and/or the information of the selected channel to another Type 2 device (e.g. via mesh network, Bluetooth, WiFi, NFC, ZigBee, etc.). The particular MAC address and/or selected channel may be chosen by a server (e.g. hub device). The particular MAC address and/or selected channel may be signaled in an announcement channel by the Type 1 device, the Type 2 device and/or a server (e.g. hub device). Before being communicated, any information may be pre-processed.

Wireless connection (e.g. association, authentication) between the Type 1 device and another wireless device may be established (e.g. using a signal handshake). The Type 1 device may send a first handshake signal (e.g. sounding frame, probe signal, request-to-send RTS) to the another device. The another device may reply by sending a second handshake signal (e.g. a command, or a clear-to-send CTS) to the Type 1 device, triggering the Type 1 device to transmit the signal (e.g. series of probe signals) in the broadcasting manner to multiple Type 2 devices without establishing connection with any Type 2 device. The second handshake signals may be a response or an acknowledge (e.g. ACK) to the first handshake signal. The second handshake signal may contain a data with information of the venue, and/or the Type 1 device. The another device may be a dummy device with a purpose (e.g. primary purpose, secondary purpose) to establish the wireless connection with the Type 1 device, to receive the first signal, and/or to send the second signal. The another device may be physically attached to the Type 1 device.

In another example, the another device may send a third handshake signal to the Type 1 device triggering the Type 1 device to broadcast the signal (e.g. series of probe signals) to multiple Type 2 devices without establishing connection (e.g. association, authentication) with any Type 2 device. The Type 1 device may reply to the third special signal by transmitting a fourth handshake signal to the another device. The another device may be used to trigger more than one Type 1 devices to broadcast. The triggering may be sequential, partially sequential, partially parallel, or fully parallel. The another device may have more than one wireless circuitries to trigger multiple transmitters in parallel. Parallel trigger may also be achieved using at least one yet another device to perform the triggering (similar to what as the another device does) in parallel to the another device. The another device may not communicate (or suspend communication) with the Type 1 device after establishing connection with the Type 1 device. Suspended communication may be resumed. The another device may enter an inactive mode, hibernation mode, sleep mode, stand-by mode, low-power mode, OFF mode and/or power-down mode, after establishing the connection with the Type 1 device. The another device may have the particular MAC address so that the Type 1 device sends the signal to the particular MAC address. The Type 1 device and/or the another device may be controlled and/or coordinated by a first processor associated with the Type 1 device, a second processor associated with the another device, a third processor associated with a designated source and/or a fourth processor associated with another device. The first and second processors may coordinate with each other.

A first series of probe signals may be transmitted by a first antenna of the Type 1 device to at least one first Type 2 device through a first channel in a first venue. A second series of probe signals may be transmitted by a second antenna of the Type 1 device to at least one second Type 2 device through a second channel in a second venue. The first series and the second series may/may not be different. The at least one first Type 2 device may/may not be different from the at least one second Type 2 device. The first and/or second series of probe signals may be broadcasted without connection (e.g. association, authentication) established between the Type 1 device and any Type 2 device. The first and second antennas may be same/different.

The two venues may have different sizes, shape, multipath characteristics. The first and second venues may overlap. The respective immediate areas around the first and second antennas may overlap. The first and second channels may be same/different. For example, the first one may be WiFi while the second may be LTE. Or, both may be WiFi, but the first one may be 2.4GHz WiFi and the second may be 5GHz WiFi. Or, both may be 2.4GHz WiFi, but have different channel numbers, SSID names, and/or WiFi settings.

Each Type 2 device may obtain at least one TSCI from the respective series of probe signals, the CI being of the respective channel between the Type 2 device and the Type 1 device. Some first Type 2 device(s) and some second Type 2 device(s) may be the same. The first and second series of probe signals may be synchronous/asynchronous. A probe signal may be transmitted with data or replaced by a data signal. The first and second antennas may be the same.

The first series of probe signals may be transmitted at a first rate (e.g. 30Hz). The second series of probe signals may be transmitted at a second rate (e.g. 200Hz). The first and second rates may be same/different. The first and/or second rate may be changed (e.g. adjusted, varied, modified) over time. The change may be according to a time table, rule, policy, mode, condition, situation, and/or change. Any rate may be changed (e.g. adjusted, varied, modified) over time.

The first and/or second series of probe signals may be transmitted to a first MAC address and/or second MAC address respectively. The two MAC addresses may be same/different. The first series of probe signals may be transmitted in a first channel. The second series of probe signals may be transmitted in a second channel. The two channels may be same/different. The first or second MAC address, first or second channel may be changed over time. Any change may be according to a time table, rule, policy, mode, condition, situation, and/or change.

The Type 1 device and another device may be controlled and/or coordinated, physically attached, or may be of/in/of a common device. They may be controlled by/connected to a common data processor, or may be connected to a common bus interconnect/ network/ LAN/ Bluetooth network/ NFC network/ BLE network/ wired network/ wireless network/ mesh network/ mobile network/ cloud. They may share a common memory, or be associated with a common user, user device, profile, account, identity (ID), identifier, household, house, physical address, location, geographic coordinate, IP subnet, SSID, home device, office device, and/or manufacturing device.

Each Type 1 device may be a signal source of a set of respective Type 2 devices (i.e. it sends a respective signal (e.g. respective series of probe signals) to the set of respective Type 2 devices). Each respective Type 2 device chooses the Type 1 device from among all Type 1 devices as its signal source. Each Type 2 device may choose asynchronously. At least one TSCI may be obtained by each respective Type 2 device from the respective series of probe signals from the Type 1 device, the CI being of the channel between the Type 2 device and the Type 1 device.

The respective Type 2 device chooses the Type 1 device from among all Type 1 devices as its signal source based on identity (ID) or identifier of Type 1/Type 2 device, task to be performed, past signal source, history (e.g. of past signal source, Type 1 device, another Type 1 device, respective Type 2 receiver, and/or another Type 2 receiver), threshold for switching signal source, and/or information of a user, account, access info, parameter, characteristics, and/or signal strength (e.g. associated with the Type 1 device and/or the respective Type 2 receiver).

Initially, the Type 1 device may be signal source of a set of initial respective Type 2 devices (i.e. the Type 1 device sends a respective signal (series of probe signals) to the set of initial respective Type 2 devices) at an initial time. Each initial respective Type 2 device chooses the Type 1 device from among all Type 1 devices as its signal source.

The signal source (Type 1 device) of a particular Type 2 device may be changed (e.g. adjusted, varied, modified) when (1) time interval between two adjacent probe signals (e.g. between current probe signal and immediate past probe signal, or between next probe signal and current probe signal) received from current signal source of the Type 2 device exceeds a first threshold; (2) signal strength associated with current signal source of the Type 2 device is below a second threshold; (3) a processed signal strength associated with current signal source of the Type 2 device is below a third threshold, the signal strength processed with low pass filter, band pass filter, median filter, moving average filter, weighted averaging filter, linear filter and/or non-linear filter; and/or (4) signal strength (or processed signal strength) associated with current signal source of the Type 2 device is below a fourth threshold for a significant percentage of a recent time window (e.g. 70%, 80%, 90%). The percentage may exceed a fifth threshold. The first, second, third, fourth and/or fifth thresholds may be time varying.

Condition (1) may occur when the Type 1 device and the Type 2 device become progressively far away from each other, such that some probe signal from the Type 1 device becomes too weak and is not received by the Type 2 device. Conditions (2)-(4) may occur when the two devices become far from each other such that the signal strength becomes very weak.

The signal source of the Type 2 device may not change if other Type 1 devices have signal strength weaker than a factor (e.g. 1, 1.1, 1.2, or 1.5) of the current signal source.

If the signal source is changed (e.g. adjusted, varied, modified), the new signal source may take effect at a near future time (e.g. the respective next time). The new signal source may be the Type 1 device with strongest signal strength, and/or processed signal strength. The current and new signal source may be same/different.

A list of available Type 1 devices may be initialized and maintained by each Type 2 device. The list may be updated by examining signal strength and/or processed signal strength associated with the respective set of Type 1 devices. A Type 2 device may choose between a first series of probe signals from a first Type 1 device and a second series of probe signals from a second Type 1 device based on: respective probe signal rate, MAC addresses, channels, characteristics/properties/ states, task to be performed by the Type 2 device, signal strength of first and second series, and/or another consideration.

The series of probe signals may be transmitted at a regular rate (e.g. 100 Hz). The series of probe signals may be scheduled at a regular interval (e.g. 0.01s for 100 Hz), but each probe signal may experience small time perturbation, perhaps due to timing requirement, timing control, network control, handshaking, message passing, collision avoidance, carrier sensing, congestion, availability of resources, and/or another consideration.

The rate may be changed (e.g. adjusted, varied, modified). The change may be according to a time table (e.g. changed once every hour), rule, policy, mode, condition and/or change (e.g. changed whenever some event occur). For example, the rate may normally be 100Hz, but changed to 1000Hz in demanding situations, and to 1Hz in low power/standby situation. The probe signals may be sent in burst.

The probe signal rate may change based on a task performed by the Type 1 device or Type 2 device (e.g. a task may need 100 Hz normally and 1000 Hz momentarily for 20 seconds). In one example, the transmitters (Type 1 devices), receivers (Type 2 device), and associated tasks may be associated adaptively (and/or dynamically) to classes (e.g. classes that are: low-priority, high-priority, emergency, critical, regular, privileged, non-subscription, subscription, paying, and/or non-paying). A rate (of a transmitter) may be adjusted for the sake of some class (e.g. high priority class). When the need of that class changes, the rate may be changed (e.g. adjusted, varied, modified). When a receiver has critically low power, the rate may be reduced to reduce power consumption of the receiver to respond to the probe signals. In one example, probe signals may be used to transfer power wirelessly to a receiver (Type 2 device), and the rate may be adjusted to control the amount of power transferred to the receiver.

The rate may be changed by (or based on): a server (e.g. hub device), the Type 1 device and/or the Type 2 device. Control signals may be communicated between them. The server may monitor, track, forecast and/or anticipate the needs of the Type 2 device and/or the tasks performed by the Type 2 device, and may control the Type 1 device to change the rate. The server may make scheduled changes to the rate according to a time table. The server may detect an emergency situation and change the rate immediately. The server may detect a developing condition and adjust the rate gradually.

The characteristics and/or STI (e.g. motion information) may be monitored individually based on a TSCI associated with a particular Type 1 device and a particular Type 2 device, and/or monitored jointly based on any TSCI associated with the particular Type 1 device and any Type 2 device, and/or monitored jointly based on any TSCI associated with the particular Type 2 device and any Type 1 device, and/or monitored globally based on any TSCI associated with any Type 1 device and any Type 2 device. Any joint monitoring may be associated with: a user, user account, profile, household, map of venue, environmental model of the venue, and/or user history, etc.

A first channel between a Type 1 device and a Type 2 device may be different from a second channel between another Type 1 device and another Type 2 device. The two channels may be associated with different frequency bands, bandwidth, carrier frequency, modulation, wireless standards, coding, encryption, payload characteristics, networks, network ID, SSID, network characteristics, network settings, and/or network parameters, etc.

The two channels may be associated with dif-

25      EP 3 872 520 A2      26

ferent kinds of wireless system (e.g. two of the following: WiFi, LTE, LTE-A, LTE-U, 2.5G, 3G, 3.5G, 4G, beyond 4G, 5G, 6G, 7G, a cellular network standard, UMTS, 3GPP, GSM, EDGE, TDMA, FDMA, CDMA, WCDMA, TD-SCDMA, 802.11 system, 802.15 system, 802.16 system, mesh network, Zigbee, NFC, WiMax, Bluetooth, BLE, RFID, UWB, microwave system, radar like system). For example, one is WiFi and the other is LTE.

The two channels may be associated with similar kinds of wireless system, but in different network. For example, the first channel may be associated with a WiFi network named "Pizza and Pizza" in the 2.4GHz band with a bandwidth of 20MHz while the second may be associated with a WiFi network with SSID of "StarBud hotspot" in the 5GHz band with a bandwidth of 40MHz. The two channels may be different channels in same network (e.g. the "StarBud hotspot" network).

In one embodiment, a wireless monitoring system may comprise training a classifier of multiple events in a venue based on training TSCI associated with the multiple events. A CI or TSCI associated with an event may be considered/may comprise a wireless sample/characteristics/fingerprint associated with the event (and/or the venue, the environment, the object, the motion of the object, a state/ emotional state/ mental state/ condition/ stage/ gesture/ gait/ action/ movement/ activity/ daily activity/ history/ event of the object, etc.).

For each of the multiple known events happening in the venue in a respective training (e.g. surveying, wireless survey, initial wireless survey) time period associated with the known event, a respective training wireless signal (e.g. a respective series of training probe signals) may be transmitted by an antenna of a first Type 1 heterogeneous wireless device using a processor, a memory and a set of instructions of the first Type 1 device to at least one first Type 2 heterogeneous wireless device through a wireless multipath channel in the venue in the respective training time period.

At least one respective time series of training CI (training TSCI) may be obtained asynchronously by each of the at least one first Type 2 device from the (respective) training signal. The CI may be CI of the channel between the first Type 2 device and the first Type 1 device in the training time period associated with the known event. The at least one training TSCI may be preprocessed. The training may be a wireless survey (e.g. during installation of Type 1 device and/or Type 2 device).

For a current event happening in the venue in a current time period, a current wireless signal (e.g. a series of current probe signals) may be transmitted by an antenna of a second Type 1 heterogeneous wireless device using a processor, a memory and a set of instructions of the second Type 1 device to at least one second Type 2 heterogeneous wireless device through the channel in the venue in the current time period associated with the current event.

At least one time series of current CI (current TSCI) may be obtained asynchronously by each of the at least one second Type 2 device from the current signal (e.g. the series of current probe signals). The CI may be CI of the channel between the second Type 2 device and the second Type 1 device in the current time period associated with the current event. The at least one current TSCI may be preprocessed.

The classifier may be applied to classify at least one current TSCI obtained from the series of current probe signals by the at least one second Type 2 device, to classify at least one portion of a particular current TSCI, and/or to classify a combination of the at least one portion of the particular current TSCI and another portion of another TSCI. The classifier may partition TSCI (or the characteristics/STI or other analytics or output responses) into clusters and associate the clusters to specific events/ objects/ subjects/ locations/ movements/ activities. Labels/tags may be generated for the clusters. The clusters may be stored and retrieved. The classifier may be applied to associate the current TSCI (or characteristics/STI or the other analytics/output response, perhaps associated with a current event) with: a cluster, a known/specific event, a class/ category/ group/ grouping/ list/ cluster/ set of known events/subjects/locations/movements/activities, an unknown event, a class/ category/ group/ grouping/ list/ cluster/ set of unknown events/subjects/locations/movements/activities, and/or another event/subject/location/movement/activity/ class/ category/ group/ grouping/ list/ cluster/ set. Each TSCI may comprise at least one CI each associated with a respective timestamp. Two TSCI associated with two Type 2 devices may be different with different: starting time, duration, stopping time, amount of CI, sampling frequency, sampling period. Their CI may have different features. The first and second Type 1 devices may be at same location in the venue. They may be the same device. The at least one second Type 2 device (or their locations) may be a permutation of the at least one first Type 2 device (or their locations). A particular second Type 2 device and a particular first Type 2 device may be the same device.

A subset of the first Type 2 device and a subset of the second Type 2 device may be the same. The at least one second Type 2 device and/or a subset of the at least one second Type 2 device may be a subset of the at least one first Type 2 device. The at least one first Type 2 device and/or a subset of the at least one first Type 2 device may be a permutation of a subset of the at least one second Type 2 device. The at least one second Type 2 device and/or a subset of the at least one second Type 2 device may be a permutation of a subset of the at least one first Type 2 device. The at least one second Type 2 device and/or a subset of the at least one second Type 2 device may be at same respective location as a subset of the at least one first Type 2 device. The at least one first Type 2 device and/or a subset of the at least one first Type 2 device may be at same respective location as a subset of the at least one second Type 2 device.

The antenna of the Type 1 device and the an-

14

tenna of the second Type 1 device may be at same location in the venue. Antenna(s) of the at least one second Type 2 device and/or antenna(s) of a subset of the at least one second Type 2 device may be at same respective location as respective antenna(s) of a subset of the at least one first Type 2 device. Antenna(s) of the at least one first Type 2 device and/or antenna(s) of a subset of the at least one first Type 2 device may be at same respective location(s) as respective antenna(s) of a subset of the at least one second Type 2 device.

A first section of a first time duration of the first TSCI and a second section of a second time duration of the second section of the second TSCI may be aligned. A map between items of the first section and items of the second section may be computed. The first section may comprise a first segment (e.g. subset) of the first TSCI with a first starting /ending time, and/or another segment (e.g. subset) of a processed first TSCI. The processed first TSCI may be the first TSCI processed by a first operation. The second section may comprise a second segment (e.g. subset) of the second TSCI with a second starting time and a second ending time, and another segment (e.g. subset) of a processed second TSCI. The processed second TSCI may be the second TSCI processed by a second operation. The first operation and/or the second operation may comprise: subsampling, resampling, interpolation, filtering, transformation, feature extraction, pre-processing, and/or another operation.

A first item of the first section may be mapped to a second item of the second section. The first item of the first section may also be mapped to another item of the second section. Another item of the first section may also be mapped to the second item of the second section. The mapping may be one-to-one, one-to-many, many-to-one, many-to-many. At least one function of at least one of: the first item of the first section of the first TSCI, another item of the first TSCI, timestamp of the first item, time difference of the first item, time differential of the first item, neighboring timestamp of the first item, another timestamp associated with the first item, the second item of the second section of the second TSCI, another item of the second TSCI, timestamp of the second item, time difference of the second item, time differential of the second item, neighboring timestamp of the second item, and another timestamp associated with the second item, may satisfy at least one constraint.

One constraint may be that a difference between the timestamp of the first item and the timestamp of the second item may be upper-bounded by an adaptive (and/or dynamically adjusted) upper threshold and lower-bounded by an adaptive lower threshold.

The first section may be the entire first TSCI. The second section may be the entire second TSCI. The first time duration may be equal to the second time duration. A section of a time duration of a TSCI may be determined adaptively (and/or dynamically). A tentative section of the TSCI may be computed. A starting time and an ending time of a section (e.g. the tentative section, the section) may be determined. The section may be determined by removing a beginning portion and an ending portion of the tentative section. A beginning portion of a tentative section may be determined as follows. Iteratively, items of the tentative section with increasing timestamp may be considered as a current item, one item at a time.

In each iteration, at least one activity measure/index may be computed and/or considered. The at least one activity measure may be associated with at least one of: the current item associated with a current timestamp, past items of the tentative section with timestamps not larger than the current timestamp, and/or future items of the tentative section with timestamps not smaller than the current timestamp. The current item may be added to the beginning portion of the tentative section if at least one criterion (e.g. quality criterion, signal quality condition) associated with the at least one activity measure is satisfied.

The at least one criterion associated with the activity measure may comprise at least one of: (a) the activity measure is smaller than an adaptive (e.g. dynamically adjusted) upper threshold, (b) the activity measure is larger than an adaptive lower threshold, (c) the activity measure is smaller than an adaptive upper threshold consecutively for at least a predetermined amount of consecutive timestamps, (d) the activity measure is larger than an adaptive lower threshold consecutively for at least another predetermined amount of consecutive timestamps, (e) the activity measure is smaller than an adaptive upper threshold consecutively for at least a predetermined percentage of the predetermined amount of consecutive timestamps, (f) the activity measure is larger than an adaptive lower threshold consecutively for at least another predetermined percentage of the another predetermined amount of consecutive timestamps, (g) another activity measure associated with another timestamp associated with the current timestamp is smaller than another adaptive upper threshold and larger than another adaptive lower threshold, (h) at least one activity measure associated with at least one respective timestamp associated with the current timestamp is smaller than respective upper threshold and larger than respective lower threshold, (i) percentage of timestamps with associated activity measure smaller than respective upper threshold and larger than respective lower threshold in a set of timestamps associated with the current timestamp exceeds a threshold, and (j) another criterion (e.g. a quality criterion, signal quality condition).

An activity measure/index associated with an item at time T1 may comprise at least one of: (1) a first function of the item at time T1 and an item at time T1-D1, wherein D1 is a pre-determined positive quantity (e.g. a constant time offset), (2) a second function of the item at time T1 and an item at time T1+D1, (3) a third function of the item at time T1 and an item at time T2, wherein T2 is a pre-determined quantity (e.g. a fixed initial reference time; T2 may be changed (e.g. adjusted, varied, modified) over time; T2 may be updated periodically; T2 may be the beginning of a time period and T1 may be a sliding time in the time period), and (4) a fourth function of the item at time T1 and another item.

At least one of: the first function, the second function, the third function, and/or the fourth function may be a function (e.g. $F(X, Y, ...)$) with at least two arguments: X and Y. The two arguments may be scalars. The function (e.g. F) may be a function of at least one of: $X$, $Y$, $(X-Y)$, $(Y-X)$, $abs(X-Y)$, $X^a$, $Y^b$, $abs(X^a - Y^b)$, $(X-Y)^a$, $(X/Y)$, $(X+a)/(Y+b)$, $(X^a/Y^b)$, and $((X/Y)^a-b)$, wherein a and b are may be some predetermined quantities. For example, the function may simply be $abs(X-Y)$, or $(X-Y)^2$, $(X-Y)^4$. The function may be a robust function. For example, the function may be $(X-Y)^2$ when $abs(X-Y)$ is less than a threshold T, and $(X-Y)+a$ when $abs(X-Y)$ is larger than T. Alternatively, the function may be a constant when $abs(X-Y)$ is larger than T. The function may also be bounded by a slowly increasing function when $abs(X-y)$ is larger than T, so that outliers cannot severely affect the result. Another example of the function may be $(abs(X/Y)-a)$, where $a=1$. In this way, if $X=Y$ (i.e. no change or no activity), the function will give a value of 0. If X is larger than Y, $(X/Y)$ will be larger than 1 (assuming X and Y are positive) and the function will be positive. And if X is less than Y, $(X/Y)$ will be smaller than 1 and the function will be negative. In another example, both arguments X and Y may be n-tuples such that $X=(x\_1, x\_2, ..., x\_n)$ and $Y=(y\_1, y\text{-}2, ..., y\_n)$. The function may be a function of at least one of: $x\_i$, $y\_i$, $(x\_i - y\_i)$, $(y\_i - x\_i)$, $abs(x\_i - y\_i)$, $x\_i^a$, $y\_i^b$, $abs(x\_i^a - y\_i^b)$, $(x\_i - y\_i)^a$, $(x\_i/y\_i)$, $(x\_i+a)/(y\_i+b)$, $(x\_i ^a/y\_i^b)$, and $((x\_i/ y\_i)^a-b)$, wherein i is a component index of the n-tuple X and Y, and $1 <=i<=n$, e.g. component index of $x\_1$ is $i=1$, component index of $x\_2$ is $i=2$. The function may comprise a component-by-component summation of another function of at least one of the following: $x\_i$, $y\_i$, $(x\_i - y\_i)$, $(y\_i - x\_i)$, $abs(x\_i - y\_i)$, $x\_i^a$, $y\_i^b$, $abs(x\_i^a - y\_i ^b)$, $(x\_i - y\_i)^a$, $(x\_i/y\_i)$, $(x\_i+a)/(y\_i +b)$, $(x\_i^a/y\_i ^b)$, and $((x\_i / y\_i)^a-b)$, wherein i is the component index of the n-tuple X and Y. For example, the function may be in a form of $sum\_{i=1}^n(abs(x\_i/y\_i)-1)/n$, or $sum\_{i=1}^n w\_i*(abs(x\_i/y\_i)-1)$, where $w\_i$ is some weight for component i.

The map may be computed using dynamic time warping (DTW). The DTW may comprise a constraint on at least one of: the map, the items of the first TSCI, the items of the second TSCI, the first time duration, the second time duration, the first section, and/or the second section. Suppose in the map, the $i^{th}$ domain item is mapped to the $j^{th}$ range item. The constraint may be on admissible combination of i and j (constraint on relationship between i and j). Mismatch cost between a first section of a first time duration of a first TSCI and a second section of a second time duration of a second TSCI may be computed.

The first section and the second section may be aligned such that a map comprising more than one links may be established between first items of the first TSCI and second items of the second TSCI. With each link, one of the first items with a first timestamp may be associated with one of the second items with a second timestamp. A mismatch cost between the aligned first section and the aligned second section may be computed. The mismatch cost may comprise a function of: an item-wise cost between a first item and a second item associated by a particular link of the map, and a link-wise cost associated with the particular link of the map.

The aligned first section and the aligned second section may be represented respectively as a first vector and a second vector of same vector length. The mismatch cost may comprise at least one of: an inner product, inner-product-like quantity, quantity based on correlation, correlation indicator, quantity based on covariance, discriminating score, distance, Euclidean distance, absolute distance, Lk distance (e.g. L1, L2, ...), weighted distance, distance-like quantity and/or another similarity value, between the first vector and the second vector. The mismatch cost may be normalized by the respective vector length.

A parameter derived from the mismatch cost between the first section of the first time duration of the first TSCI and the second section of the second time duration of the second TSCI may be modeled with a statistical distribution. At least one of: a scale parameter, location parameter and/or another parameter, of the statistical distribution may be estimated.

The first section of the first time duration of the first TSCI may be a sliding section of the first TSCI. The second section of the second time duration of the second TSCI may be a sliding section of the second TSCI.

A first sliding window may be applied to the first TSCI and a corresponding second sliding window may be applied to the second TSCI. The first sliding window of the first TSCI and the corresponding second sliding window of the second TSCI may be aligned.

Mismatch cost between the aligned first sliding window of the first TSCI and the corresponding aligned second sliding window of the second TSCI may be computed. The current event may be associated with at least one of: the known event, the unknown event and/or the another event, based on the mismatch cost.

The classifier may be applied to at least one of: each first section of the first time duration of the first TSCI, and/or each second section of the second time duration of the second TSCI, to obtain at least one tentative classification results. Each tentative classification result may be associated with a respective first section and a respective second section.

The current event may be associated with at least one of: the known event, the unknown event, a class/category/ group/ grouping/list/ set of unknown events, and/or the another event, based on the mismatch cost. The current event may be associated with at least one of: the known event, the unknown event and/or the another event, based on a largest number of tentative classification results in more than one sections of the first TSCI and corresponding more than sections of the second TSCI. For example, the current event may be associated with a particular known event if the mismatch cost points to the particular known event for N consecutive times (e.g. N=10). In another example, the current event may be associated with a particular known event if the percentage of mismatch cost within the immediate past N consecutive N pointing to the particular known event exceeds a certain threshold (e.g. >80%).

In another example, the current event may be associated with a known event that achieves smallest mismatch cost for the most times within a time period. The current event may be associated with a known event that achieves smallest overall mismatch cost, which is a weighted average of at least one mismatch cost associated with the at least one first sections. The current event may be associated with a particular known event that achieves smallest of another overall cost. The current event may be associated with the "unknown event" if none of the known events achieve mismatch cost lower than a first threshold T1 in a sufficient percentage of the at least one first section. The current event may also be associated with the "unknown event" if none of the events achieve an overall mismatch cost lower than a second threshold T2. The current event may be associated with at least one of: the known event, the unknown event and/or the another event, based on the mismatch cost and additional mismatch cost associated with at least one additional section of the first TSCI and at least one additional section of the second TSCI. The known events may comprise at least one of: a door closed event, door open event, window closed event, window open event, multi-state event, on-state event, off-state event, intermediate state event, continuous state event, discrete state event, human-present event, human-absent event, sign-of-life-present event, and/or a sign-of-life-absent event.

A projection for each CI may be trained using a dimension reduction method based on the training TSCI. The dimension reduction method may comprise at least one of: principal component analysis (PCA), PCA with different kernel, independent component analysis (ICA), Fisher linear discriminant, vector quantization, supervised learning, unsupervised learning, self-organizing maps, auto-encoder, neural network, deep neural network, and/or another method. The projection may be applied to at least one of: the training TSCI associated with the at least one event, and/or the current TSCI, for the classifier.

The classifier of the at least one event may be trained based on the projection and the training TSCI associated with the at least one event. The at least one current TSCI may be classified/categorized based on the projection and the current TSCI. The projection may be re-trained using at least one of: the dimension reduction method, and another dimension reduction method, based on at least one of: the training TSCI, at least one current TSCI before retraining the projection, and/or additional training TSCI. The another dimension reduction method may comprise at least one of: principal component analysis (PCA), PCA with different kernels, independent component analysis (ICA), Fisher linear discriminant, vector quantization, supervised learning, unsupervised learning, self-organizing maps, auto-encoder, neural network, deep neural network, and/or yet another method. The classifier of the at least one event may be re-trained based on at least one of: the re-trained projection, the training TSCI associated with the at least one events, and/or at least one current TSCI. The at least one current TSCI may be classified based on: the re-trained projection, the re-trained classifier, and/or the current TSCI.

Each CI may comprise a vector of complex values. Each complex value may be preprocessed to give the magnitude of the complex value. Each CI may be preprocessed to give a vector of non-negative real numbers comprising the magnitude of corresponding complex values. Each training TSCI may be weighted in the training of the projection. The projection may comprise more than one projected components. The projection may comprise at least one most significant projected component. The projection may comprise at least one projected component that may be beneficial for the classifier.

Channel/channel information/venue/spatial-temporal info/motion/object

The channel information (CI) may be associated with/may comprise signal strength, signal amplitude, signal phase, spectral power measurement, modem parameters (e.g. used in relation to modulation/ demodulation in digital communication systems such as WiFi, 4G/LTE), dynamic beamforming information, transfer function components, radio state (e.g. used in digital communication systems to decode digital data, baseband processing state, RF processing state, etc.), measurable variables, sensed data, coarse-grained/ fine-grained information of a layer (e.g. physical layer, data link layer, MAC layer, etc.), digital setting, gain setting, RF filter setting, RF front end switch setting, DC offset setting, DC correction setting, IQ compensation setting, effect(s) on the wireless signal by the environment (e.g. venue) during propagation, transformation of an input signal (the wireless signal transmitted by the Type 1 device) to an output signal (the wireless signal received by the Type 2 device), a stable behavior of the environment, a state profile, wireless channel measurements, received signal strength indicator (RSSI), channel state information (CSI), channel impulse response (CIR), channel frequency response (CFR), characteristics of frequency components (e.g. subcarriers) in a bandwidth, channel characteristics, channel filter response, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another channel information. Each CI may be associated with a time stamp, and/or an arrival time. A CSI can be used to equalize/undo/ minimize/reduce the multipath channel effect (of the transmission channel) to demodulate a signal similar to the one transmitted by the transmitter through the multipath channel. The CI may be associated with information associated with a frequency band, frequency signature, frequency phase, frequency amplitude, frequency trend, frequency characteristics, frequency-like characteristics, time domain element, frequency domain element, time-frequency domain element, orthogonal decomposition characteristics, and/or non-orthogonal decomposition characteristics of the signal through the channel. The TSCI may be a stream of wireless signals (e.g. CI).

The CI may be preprocessed, processed, postprocessed, stored (e.g. in local memory, portable/mobile memory, removable memory, storage network, cloud memory, in a volatile manner, in a non-volatile manner), retrieved, transmitted and/or received. One or more modem parameters and/or radio state parameters may be held constant. The modem parameters may be applied to a radio subsystem. The modem parameters may represent a radio state. A motion detection signal (e.g. baseband signal, and/or packet decoded/demodulated from the baseband signal, etc.) may be obtained by processing (e.g. down-converting) the first wireless signal (e.g. RF/WiFi/LTE/5G signal) by the radio subsystem using the radio state represented by the stored modem parameters. The modem parameters/radio state may be updated (e.g. using previous modem parameters or previous radio state). Both the previous and updated modem parameters/radio states may be applied in the radio subsystem in the digital communication system. Both the previous and updated modem parameters/radio states may be compared/ analyzed/ processed/ monitored in the task.

The channel information may also be modem parameters (e.g. stored or freshly computed) used to process the wireless signal. The wireless signal may comprise a plurality of probe signals. The same modem parameters may be used to process more than one probe signals. The same modem parameters may also be used to process more than one wireless signals. The modem parameters may comprise parameters that indicate settings or an overall configuration for the operation of a radio subsystem or a baseband subsystem of a wireless sensor device (or both). The modem parameters may include one or more of: a gain setting, an RF filter setting, an RF front end switch setting, a DC offset setting, or an IQ compensation setting for a radio subsystem, or a digital DC correction setting, a digital gain setting, and/or a digital filtering setting (e.g. for a baseband subsystem). The CI may also be associated with information associated with a time period, time signature, timestamp, time amplitude, time phase, time trend, and/or time characteristics of the signal. The CI may be associated with information associated with a time-frequency partition, signature, amplitude, phase, trend, and/or characteristics of the signal. The CI may be associated with a decomposition of the signal. The CI may be associated with information associated with a direction, angle of arrival (AoA), angle of a directional antenna, and/or a phase of the signal through the channel. The CI may be associated with attenuation patterns of the signal through the channel. Each CI may be associated with a Type 1 device and a Type 2 device. Each CI may be associated with an antenna of the Type 1 device and an antenna of the Type 2 device.

The CI may be obtained from a communication hardware (e.g. of Type 2 device, or Type 1 device) that is capable of providing the CI. The communication hardware may be a WiFi-capable chip/IC (integrated circuit), chip compliant with a 802.11 or 802.16 or another wireless/radio standard, next generation WiFi-capable chip, LTE-capable chip, 5G-capable chip, 6G/7G/8G-capable chip, Bluetooth-enabled chip, NFC (near field communication)-enabled chip, BLE (Bluetooth low power)-enabled chip, UWB chip, another communication chip (e.g. Zigbee, WiMax, mesh network), etc. The communication hardware computes the CI and stores the CI in a buffer memory and make the CI available for extraction. The CI may comprise data and/or at least one matrices related to channel state information (CSI). The at least one matrices may be used for channel equalization, and/or beam forming, etc. The channel may be associated with a venue. The attenuation may be due to signal propagation in the venue, signal propagating/reflection/ refraction/ diffraction through/at/around air (e.g. air of venue), refraction medium/reflection surface such as wall, doors, furniture, obstacles and/or barriers, etc. The attenuation may be due to reflection at surfaces and obstacles (e.g. reflection surface, obstacle) such as floor, ceiling, furniture, fixtures, objects, people, pets, etc. Each CI may be associated with a timestamp. Each CI may comprise N1 components (e.g. N1 frequency domain components in CFR, N1 time domain components in CIR, or N1 decomposition components). Each component may be associated with a component index. Each component may be a real, imaginary, or complex quantity, magnitude, phase, flag, and/or set. Each CI may comprise a vector or matrix of complex numbers, a set of mixed quantities, and/or a multi-dimensional collection of at least one complex numbers.

Components of a TSCI associated with a particular component index may form a respective component time series associated with the respective index. A TSCI may be divided into N1 component time series. Each respective component time series is associated with a respective component index. The characteristics/STI of the motion of the object may be monitored based on the component time series. In one example, one or more ranges of CI components (e.g. one range being from component 11 to component 23, a second range being from component 44 to component 50, and a third range having only one component) may be selected based on some criteria/cost function/signal quality metric (e.g. based on signal-to-noise ratio, and/or interference level) for further processing.

A component-wise characteristic of a component-feature time series of a TSCI may be computed. The component-wise characteristics may be a scalar (e.g. energy) or a function with a domain and a range (e.g. an autocorrelation function, transform, inverse transform). The characteristics/STI of the motion of the object may be monitored based on the component-wise characteristics. A total characteristics (e.g. aggregate characteristics) of the TSCI may be computed based on the component-wise characteristics of each component time series of the TSCI. The total characteristics may be a weighted average of the component-wise characteristics. The characteristics/STI of the motion of the object may be monitored based on the total characteristics. An aggregate quantity may be a weighted average of individual quantities.

The Type 1 device and Type 2 device may support WiFi, WiMax, 3G/beyond 3G, 4G/beyond 4G, LTE, LTE-A, 5G, 6G, 7G, Bluetooth, NFC, BLE, Zigbee, UWB, UMTS, 3GPP, GSM, EDGE, TDMA, FDMA, CDMA, WCDMA, TD-SCDMA, mesh network, proprietary wireless system, IEEE 802.11 standard, 802.15 standard, 802.16 standard, 3GPP standard, and/or another wireless system.

A common wireless system and/or a common wireless channel may be shared by the Type 1 transceiver and/or the at least one Type 2 transceiver. The at least one Type 2 transceiver may transmit respective signal contemporaneously (or: asynchronously, synchronously, sporadically, continuously, repeatedly, concurrently, simultaneously and/or temporarily) using the common wireless system and/or the common wireless channel. The Type 1 transceiver may transmit a signal to the at least one Type 2 transceiver using the common wireless system and/or the common wireless channel.

Each Type 1 device and Type 2 device may have at least one transmitting/receiving antenna. Each CI may be associated with one of the transmitting antenna of the Type 1 device and one of the receiving antenna of the Type 2 device. Each pair of a transmitting antenna and a receiving antenna may be associated with a link, a path, a communication path, signal hardware path, etc. For example, if the Type 1 device has M (e.g. 3) transmitting antennas, and the Type 2 device has N (e.g. 2) receiving antennas, there may be MxN (e.g. 3x2=6) links or paths. Each link or path may be associated with a TSCI.

The at least one TSCI may correspond to various antenna pairs between the Type 1 device and the Type 2 device. The Type 1 device may have at least one antenna. The Type 2 device may also have at least one antenna. Each TSCI may be associated with an antenna of the Type 1 device and an antenna of the Type 2 device. Averaging or weighted averaging over antenna links may be performed. The averaging or weighted averaging may be over the at least one TSCI. The averaging may optionally be performed on a subset of the at least one TSCI corresponding to a subset of the antenna pairs.

Timestamps of CI of a portion of a TSCI may be irregular and may be corrected so that corrected timestamps of time-corrected CI may be uniformly spaced in time. In the case of multiple Type 1 devices and/or multiple Type 2 devices, the corrected timestamp may be with respect to the same or different clock. An original timestamp associated with each of the CI may be determined. The original timestamp may not be uniformly spaced in time. Original timestamps of all CI of the particular portion of the particular TSCI in the current sliding time window may be corrected so that corrected timestamps of time-corrected CI may be uniformly spaced in time.

The characteristics and/or STI (e.g. motion information) may comprise: location, location coordinate, change in location, position (e.g. initial position, new position), position on map, height, horizontal location, vertical location, distance, displacement, speed, acceleration, rotational speed, rotational acceleration, direction, angle of motion, azimuth, direction of motion, rotation, path, deformation, transformation, shrinking, expanding, gait, gait cycle, head motion, repeated motion, periodic motion, pseudo-periodic motion, impulsive motion, sudden motion, fall-down motion, transient motion, behavior, transient behavior, period of motion, frequency of motion, time trend, temporal profile, temporal characteristics, occurrence, change, temporal change, change of CI, change in frequency, change in timing, change of gait cycle, timing, starting time, initiating time, ending time, duration, history of motion, motion type, motion classification, frequency, frequency spectrum, frequency characteristics, presence, absence, proximity, approaching, receding, identity/identifier of the object, composition of the object, head motion rate, head motion direction, mouth-related rate, eye-related rate, breathing rate, heart rate, tidal volume, depth of breath, inhale time, exhale time, inhale time to exhale time ratio, airflow rate, heart heat-to-beat interval, heart rate variability, hand motion rate, hand motion direction, leg motion, body motion, walking rate, hand motion rate, positional characteristics, characteristics associated with movement (e.g. change in position/location) of the object, tool motion, machine motion, complex motion, and/or combination of multiple motions, event, signal statistics, signal dynamics, anomaly, motion statistics, motion parameter, indication of motion detection, motion magnitude, motion phase, similarity score, distance score, Euclidean distance, weighted distance, $L\_1$ norm, $L\_2$ norm, $L\_k$ norm for k>2, statistical distance, correlation, correlation indicator, auto-correlation, covariance, auto-covariance, cross-covariance, inner product, outer product, motion signal transformation, motion feature, presence of motion, absence of motion, motion localization, motion identification, motion recognition, presence of object, absence of object, entrance of object, exit of object, a change of object, motion cycle, motion count, gait cycle, motion rhythm, deformation motion, gesture, handwriting, head motion, mouth motion, heart motion, internal organ motion, motion trend, size, length, area, volume, capacity, shape, form, tag, starting/initiating location, ending location, starting/initiating quantity, ending quantity, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, consumed quantity, unconsumed quantity, state, physical state, health state, well-being state, emotional state, mental state, another event, analytics, output responses, and/or another information. The characteristics and/or STI may be computed/monitored based on a feature computed from a CI or a TSCI (e.g. feature computation/extraction). A static segment or profile (and/or a dynamic segment/profile) may be identified /computed/analyzed/ monitored/ extracted/ obtained/ marked/ presented/ indicated/ highlighted/ stored/ communicated based on an analysis of the feature. The analysis may comprise a motion detection/movement assessment/presence detection. Computational workload may be shared among the Type 1 device, the Type 2 device and another processor.

The Type 1 device and/or Type 2 device may be a local device. The local device may be: a smart phone, smart device, TV, sound bar, set-top box, access point, router, repeater, wireless signal repeater/extender, remote control, speaker, fan, refrigerator, microwave, oven, coffee machine, hot water pot, utensil, table, chair, light, lamp, door lock, camera, microphone, motion sensor, security device, fire hydrant, garage door, switch, power adapter, computer, dongle, computer peripheral, electronic pad, sofa, tile, accessory, home device, vehicle device, office device, building device, manufacturing device, watch, glasses, clock, television, oven, air-conditioner, accessory, utility, appliance, smart machine, smart vehicle, internet-of-thing (IoT) device, internet-enabled device, computer, portable computer, tablet, smart house, smart office, smart building, smart parking lot, smart system, and/or another device.

Each Type 1 device may be associated with a respective identifier (e.g. ID). Each Type 2 device may also be associated with a respective identify (ID). The ID may comprise: numeral, combination of text and numbers, name, password, account, account ID, web link, web address, index to some information, and/or another ID. The ID may be assigned. The ID may be assigned by hardware (e.g. hardwired, via dongle and/or other hardware), software and/or firmware. The ID may be stored (e.g. in database, in memory, in server (e.g. hub device), in the cloud, stored locally, stored remotely, stored permanently, stored temporarily) and may be retrieved. The ID may be associated with at least one record, account, user, household, address, phone number, social security number, customer number, another ID, another identifier, timestamp, and/or collection of data. The ID and/or part of the ID of a Type 1 device may be made available to a Type 2 device. The ID may be used for registration, initialization, communication, identification, verification, detection, recognition, authentication, access control, cloud access, networking, social networking, logging, recording, cataloging, classification, tagging, association, pairing, transaction, electronic transaction, and/or intellectual property control, by the Type 1 device and/or the Type 2 device.

The object may be person, user, subject, passenger, child, older person, baby, sleeping baby, baby in vehicle, patient, worker, high-value worker, expert, specialist, waiter, customer in mall, traveler in airport/ train station/ bus terminal/ shipping terminals, staff/worker/customer service personnel in factory/ mall/ supermarket/ office/ workplace, serviceman in sewage/air ventilation system/lift well, lifts in lift wells, elevator, inmate, people to be tracked/ monitored, animal, plant, living object, pet, dog, cat, smart phone, phone accessory, computer, tablet, portable computer, dongle, computing accessory, networked devices, WiFi devices, IoT devices, smart watch, smart glasses, smart devices, speaker, keys, smart key, wallet, purse, handbag, backpack, goods, cargo, luggage, equipment, motor, machine, air conditioner, fan, air conditioning equipment, light fixture, moveable light, television, camera, audio and/or video equipment, stationary, surveillance equipment, parts, signage, tool, cart, ticket, parking ticket, toll ticket, airplane ticket, credit card, plastic card, access card, food packaging, utensil, table, chair, cleaning equipment/tool, vehicle, car, cars in parking facilities, merchandise in warehouse/ store/ supermarket/ distribution center, boat, bicycle, airplane, drone, remote control car/plane/ boat, robot, manufacturing device, assembly line, material/unfinished part/robot/wagon/ transports on factory floor, object to be tracked in airport/shopping mart/supermarket, non-object, absence of an object, presence of an object, object with form, object with changing form, object with no form, mass of fluid, mass of liquid, mass of gas/smoke, fire, flame, electromagnetic (EM) source, EM medium, and/or another object.

The object itself may be communicatively coupled with some network, such as WiFi, MiFi, 3G/ 4G/ LTE/ 5G/ 6G/ 7G, Bluetooth, NFC, BLE, WiMax, Zigbee, UMTS, 3GPP, GSM, EDGE, TDMA, FDMA, CDMA, WCDMA, TD-SCDMA, mesh network, adhoc network, and/or other network. The object itself may be bulky with AC power supply, but is moved during installation, cleaning, maintenance, renovation, etc. It may also be installed in moveable platform such as lift, pad, movable, platform, elevator, conveyor belt, robot, drone, forklift, car, boat, vehicle, etc. The object may have multiple parts, each part with different movement (e.g. change in position/location). For example, the object may be a person walking forward. While walking, his left hand and right hand may move in different direction, with different instantaneous speed, acceleration, motion, etc.

The wireless transmitter (e.g. Type 1 device), the wireless receiver (e.g. Type 2 device), another wireless transmitter and/or another wireless receiver may move with the object and/or another object (e.g. in prior movement, current movement and/or future movement. They may be communicatively coupled to one or more nearby device. They may transmit TSCI and/or information associated with the TSCI to the nearby device, and/or each other. They may be with the nearby device. The wireless transmitter and/or the wireless receiver may be part of a small (e.g. coin-size, cigarette box size, or even smaller), light-weight portable device. The portable device may be wirelessly coupled with a nearby device.

The nearby device may be smart phone, iPhone, Android phone, smart device, smart appliance, smart vehicle, smart gadget, smart TV, smart refrigerator, smart speaker, smart watch, smart glasses, smart pad, iPad, computer, wearable computer, notebook computer, gateway. The nearby device may be connected to a cloud server, local server (e.g. hub device) and/or other server via internet, wired internet connection and/or wireless internet connection. The nearby device may be portable. The portable device, the nearby device, a local server (e.g. hub device) and/or a cloud server may share the computation and/or storage for a task (e.g. obtain TSCI, determine characteristics/STI of the object associated with the movement (e.g. change in position/location) of the object, computation of time series of power (e.g. signal strength) information, determining/computing the particular function, searching for local extremum, classification, identifying particular value of time offset, denoising, processing, simplification, cleaning, wireless smart sensing task, extract CI from signal, switching, segmentation, estimate trajectory/path/track, process the map, processing trajectory/path/track based on environment models/constraints/limitations, correction, corrective adjustment, adjustment, map-based (or model-based) correction, detecting error, checking for boundary hitting, thresholding) and information (e.g. TSCI). The nearby device may/ may not move with the object. The nearby device may be portable/ not portable/ moveable/ non-moveable. The nearby device may use battery power, solar power, AC power and/or other power source. The nearby device may have replaceable/non-replaceable battery, and/or rechargeable/non-rechargeable battery. The nearby device may be similar to the object. The nearby device may have identical (and/or similar) hardware and/or software to the object. The nearby device may be a smart device, network enabled device, device with connection to WiFi/ 3G/ 4G/ 5G/ 6G/ Zigbee/ Bluetooth/ NFC/ UMTS/ 3GPP/ GSM/ EDGE/ TDMA/ FDMA/ CDMA/ WCDMA/ TD-SCDMA/ adhoc network/ other network, smart speaker, smart watch, smart clock, smart appliance, smart machine, smart equipment, smart tool, smart vehicle, internet-of-thing (IoT) device, internet-enabled device, computer, portable computer, tablet, and another device. The nearby device and/or at least one processor associated with the wireless receiver, the wireless transmitter, the another wireless receiver, the another wireless transmitter and/or a cloud server (in the cloud) may determine the initial STI of the object. Two or more of them may determine the initial spatial-temporal info jointly. Two or more of them may share intermediate information in the determination of the initial STI (e.g. initial position).

In one example, the wireless transmitter (e.g. Type 1 device, or Tracker Bot) may move with the object. The wireless transmitter may send the signal to the wireless receiver (e.g. Type 2 device, or Origin Register) or determining the initial STI (e.g. initial position) of the object. The wireless transmitter may also send the signal and/or another signal to another wireless receiver (e.g. another Type 2 device, or another Origin Register) for the monitoring of the motion (spatial-temporal info) of the object. The wireless receiver may also receive the signal and/or another signal from the wireless transmitter and/or the another wireless transmitter for monitoring the motion of the object. The location of the wireless receiver and/or the another wireless receiver may be known. In another example, the wireless receiver (e.g. Type 2 device, or Tracker Bot) may move with the object. The wireless receiver may receive the signal transmitted from the wireless transmitter (e.g. Type 1 device, or Origin Register) for determining the initial spatial-temporal info (e.g. initial position) of the object. The wireless receiver may also receive the signal and/or another signal from another wireless transmitter (e.g. another Type 1 device, or another Origin Register) for the monitoring of the current motion (e.g. spatial-temporal info) of the object. The wireless transmitter may also transmit the signal and/or another signal to the wireless receiver and/or the another wireless receiver (e.g. another Type 2 device, or another Tracker Bot) for monitoring the motion of the object. The location of the wireless transmitter and/or the another wireless transmitter may be known.

The venue may be a space such as a sensing area, room, house, office, property, workplace, hallway, walkway, lift, lift well, escalator, elevator, sewage system, air ventilations system, staircase, gathering area, duct, air duct, pipe, tube, enclosed space, enclosed structure, semi-enclosed structure, enclosed area, area with at least one wall, plant, machine, engine, structure with wood, structure with glass, structure with metal, structure with walls, structure with doors, structure with gaps, structure with reflection surface, structure with fluid, building, roof top, store, factory, assembly line, hotel room, museum, classroom, school, university, government building, warehouse, garage, mall, airport, train station, bus terminal, hub, transportation hub, shipping terminal, government facility, public facility, school, university, entertainment facility, recreational facility, hospital, pediatric/neonatal wards, seniors home, elderly care facility, geriatric facility, community center, stadium, playground, park, field, sports facility, swimming facility, track and/or field, basketball court, tennis court, soccer stadium, baseball stadium, gymnasium, hall, garage, shopping mart, mall, supermarket, manufacturing facility, parking facility, construction site, mining facility, transportation facility, highway, road, valley, forest, wood, terrain, landscape, den, patio, land, path, amusement park, urban area, rural area, suburban area, metropolitan area, garden, square, plaza, music hall, downtown facility, over-air facility, semi-open facility, closed area, train platform, train station, distribution center, warehouse, store, distribution center, storage facility, underground facility, space (e.g. above ground, outer-space) facility, floating facility, cavern, tunnel facility, indoor facility, open-air facility, outdoor facility with some walls/ doors/ reflective barriers, open facility, semi-open facility, car, truck, bus, van, container, ship/boat, submersible, train, tram, airplane, vehicle, mobile home, cave, tunnel, pipe, channel, metropolitan area, downtown area with relatively tall buildings, valley, well, duct, pathway, gas line, oil line, water pipe, network of interconnecting pathways/alleys/roads/tubes/cavities/ caves/pipe-like structure/air space/fluid space, human body, animal body, body cavity, organ, bone, teeth, soft tissue, hard tissue, rigid tissue, non-rigid tissue, blood/body fluid vessel, windpipe, air duct, den, etc. The venue may be indoor space, outdoor space, The venue may include both the inside and outside of the space. For example, the venue may include both the inside of a building and the outside of the building. For example, the venue can be a building that has one floor or multiple floors, and a portion of the building can be underground. The shape of the building can be, e.g., round, square, rectangular, triangle, or irregular-shaped. These are merely examples. The disclosure can be used to detect events in other types of venue or spaces.

The wireless transmitter (e.g. Type 1 device) and/or the wireless receiver (e.g. Type 2 device) may be embedded in a portable device (e.g. a module, or a device with the module) that may move with the object (e.g. in prior movement and/or current movement). The portable device may be communicatively coupled with the object using a wired connection (e.g. through USB, microUSB, Firewire, HDMI, serial port, parallel port, and other connectors) and/or a connection (e.g. Bluetooth, Bluetooth Low Energy (BLE), WiFi, LTE, NFC, ZigBee). The portable device may be a lightweight device. The portable may be powered by battery, rechargeable battery and/or AC power. The portable device may be very small (e.g. at sub-millimeter scale and/or sub-centimeter scale), and/or small (e.g. coin-size, card-size, pocket-size, or larger). The portable device may be large, sizable, and/or bulky (e.g. heavy machinery to be installed). The portable device may be a WiFi hotspot, access point, mobile WiFi (MiFi), dongle with USB/micro USB/ Firewire/ other connector, smartphone, portable computer, computer, tablet, smart device, internet-of-thing (IoT) device, WiFi-enabled device, LTE-enabled device, a smart watch, smart glass, smart mirror, smart antenna, smart battery, smart light, smart pen, smart ring, smart door, smart window, smart clock, small battery, smart wallet, smart belt, smart handbag, smart clothing/garment, smart ornament, smart packaging, smart paper/ book/ magazine/ poster/ printed matter/ signage/ display/ lighted system/ lighting system, smart key/ tool, smart bracelet/ chain/ necklace/ wearable/ accessory, smart pad/ cushion, smart tile/ block/ brick/ building material/ other material, smart garbage can/ waste container, smart food carriage/ storage, smart ball/ racket, smart chair/ sofa/ bed, smart shoe/ footwear/ carpet/ mat/ shoe rack, smart glove/ hand wear/ ring/ hand ware, smart hat/ headwear/ makeup/ sticker/ tattoo, smart mirror, smart toy, smart pill, smart utensil, smart bottle/food container, smart tool, smart device, IoT device, WiFi enabled device, network enabled device, 3G/4G/5G/6G enabled device, UMTS devices, 3GPP devices, GSM devices, EDGE devices, TDMA devices, FDMA devices, CDMA devices, WCDMA devices, TD-SCDMA devices, embeddable device, implantable device, air conditioner, refrigerator, heater, furnace, furniture, oven, cooking device, television/ set-top box (STB)/ DVD player/ audio player/ video player/ remote control, hi-fi, audio device, speaker, lamp/ light, wall, door, window, roof, roof tile/ shingle/ structure/ attic structure/ device/ feature/ installation/ fixtures, lawn mower/ garden tools/ yard tools/ mechanics tools/ garage tools/, garbage can/ container, 20-ft/40-ft container, storage container, factory/ manufacturing/ production device, repair tools, fluid container, machine, machinery to be installed, vehicle, cart, wagon, warehouse vehicle, car, bicycle, motorcycle, boat, vessel, airplane, basket/ box/ bag/ bucket/ container, smart plate/ cup/ bowl/ pot/ mat/ utensils/ kitchen tools/ kitchen devices/ kitchen accessories/ cabinets/ tables/ chairs/ tiles/ lights/ water pipes/ taps/ gas range/ oven/ dishwashing machine/ etc. The portable device may have a battery that may be replaceable, irreplaceable, rechargeable, and/or non-rechargeable. The portable device may be wirelessly charged. The portable device may be a smart payment card. The portable device may be a payment card used in parking lots, highways, entertainment parks, or other venues/facilities that need payment. The portable device may have an identity (ID)/identifier as described above.

An event may be monitored based on the TSCI. The event may be an object related event, such as fall-down of the object (e.g. an person and/or a sick person), rotation, hesitation, pause, impact (e.g. a person hitting a sandbag, door, window, bed, chair, table, desk, cabinet, box, another person, animal, bird, fly, table, chair, ball, bowling ball, tennis ball, football, soccer ball, baseball, basketball, volley ball), two-body action (e.g. a person letting go a balloon, catching a fish, molding a clay, writing a paper, person typing on a computer), car moving in a garage, person carrying a smart phone and walking around an airport/mall/government building/office/etc., autonomous moveable object/machine moving around (e.g. vacuum cleaner, utility vehicle, car, drone, self-driving car).

The task or the wireless smart sensing task may comprise: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, room sensing, tracking, multiple object tracking, indoor tracking, indoor position, indoor navigation, energy management, power transfer, wireless power transfer, object counting, car tracking in parking garage, activating a device/system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task. The task may be performed by the Type 1 device, the Type 2 device, another Type 1 device, another Type 2 device, a nearby device, a local server (e.g. hub device), edge server, a cloud server, and/or another device. The task may be based on TSCI between any pair of Type 1 device and Type 2 device. A Type 2 device may be a Type 1 device, and vice versa. A Type 2 device may play/perform the role (e.g. functionality) of Type 1 device temporarily, continuously, sporadically, simultaneously, and/or contemporaneously, and vice versa. A first part of the task may comprise at least one of: pre-processing, processing, signal conditioning, signal processing, post-processing, processing sporadically/ continuously/ simultaneously/ contemporaneously/ dynamically/ adaptive/ on-demand/ as-needed, calibrating, denoising, feature extraction, coding, encryption, transformation, mapping, motion detection, motion estimation, motion change detection, motion pattern detection, motion pattern estimation, motion pattern recognition, vital sign detection, vital sign estimation, vital sign recognition, periodic motion detection, periodic motion estimation, repeated motion detection/estimation, breathing rate detection, breathing rate estimation, breathing pattern detection, breathing pattern estimation, breathing pattern recognition, heart beat detection, heart beat estimation, heart pattern detection, heart pattern estimation, heart pattern recognition, gesture detection, gesture estimation, gesture recognition, speed detection, speed estimation, object locationing, object tracking, navigation, acceleration estimation, acceleration detection, fall-down detection, change detection, intruder (and/or illegal action) detection, baby detection, baby monitoring, patient monitoring, object recognition, wireless power transfer, and/or wireless charging.

A second part of the task may comprise at least one of: a smart home task, smart office task, smart building task, smart factory task (e.g. manufacturing using a machine or an assembly line), smart internet-of-thing (IoT) task, smart system task, smart home operation, smart office operation, smart building operation, smart manufacturing operation (e.g. moving supplies/parts/raw material to a machine/an assembly line), IoT operation, smart system operation, turning on a light, turning off the light, controlling the light in at least one of: a room, region, and/or the venue, playing a sound clip, playing the sound clip in at least one of: the room, the region, and/or the venue, playing the sound clip of at least one of: a welcome, greeting, farewell, first message, and/or a second message associated with the first part of the task, turning on an appliance, turning off the appliance, controlling the appliance in at least one of: the room, the region, and/or the venue, turning on an electrical system, turning off the electrical system, controlling the electrical system in at least one of: the room, the region, and/or the venue, turning on a security system, turning off the security system, controlling the security system in at least one of: the room, the region, and/or the venue, turning on a mechanical system, turning off a mechanical system, controlling the mechanical system in at least one of: the room, the region, and/or the venue, and/or controlling at least one of: an air conditioning system, heating system, ventilation system, lighting system, heating device, stove, entertainment system, door, fence, window, garage, computer system, networked device, networked system, home appliance, office equipment, lighting device, robot (e.g. robotic arm), smart vehicle, smart machine, assembly line, smart device, internet-of-thing (IoT) device, smart home device, and/or a smart office device.

The task may include: detect a user returning home, detect a user leaving home, detect a user moving from one room to another, detect/control/lock/unlock/open/ close/partially open a window/door/garage door/blind/curtain/panel/solar panel/sun shade, detect a pet, detect/monitor a user doing something (e.g. sleeping on sofa, sleeping in bedroom, running on treadmill, cooking, sitting on sofa, watching TV, eating in kitchen, eating in dining room, going upstairs/downstairs, going outside/coming back, in the rest room), monitor/detect location of a user/pet, do something (e.g. send a message, notify/report to someone) automatically upon detection, do something for the user automatically upon detecting the user, turn on/off/dim a light, turn on/off music/radio/home entertainment system, turn on/off/adjust/control TV/HiFi/set-top-box (STB)/ home entertainment system/smart speaker/smart device, turn on/off/adjust air conditioning system, turn on/off/adjust ventilation system, turn on/off/adjust heating system, adjust/control curtains/light shades, turn on/off/wake a computer, turn on/off/pre-heat/control coffee machine/hot water pot, turn on/off/control/preheat cooker/oven/microwave oven/another cooking device, check/adjust temperature, check weather forecast, check telephone message box, check mail, do a system check, control/adjust a system, check/control/arm/disarm security system/baby monitor, check/control refrigerator, give a report (e.g. through a speaker such as Google home, Amazon Echo, on a display/screen, via a webpage/email/messaging system/notification system).

For example, when a user arrives home in his car, the task may be to, automatically, detect the user or his car approaching, open the garage door upon detection, turn on the driveway/garage light as the user approaches the garage, turn on air conditioner/ heater/ fan, etc. As the user enters the house, the task may be to, automatically, turn on the entrance light, turn off driveway/garage light, play a greeting message to welcome the user, turn on the music, turn on the radio and tuning to the user's favorite radio news channel, open the curtain/blind, monitor the user's mood, adjust the lighting and sound environment according to the user's mood or the current/imminent event (e.g. do romantic lighting and music because the user is scheduled to eat dinner with girlfriend in 1 hour) on the user's daily calendar, warm the food in microwave that the user prepared in the morning, do a diagnostic check of all systems in the house, check weather forecast for tomorrow's work, check news of interest to the user, check user's calendar and to-do list and play reminder, check telephone answer system/messaging system/email and give a verbal report using dialog system/speech synthesis, remind (e.g. using audible tool such as speakers/HiFi/ speech synthesis/sound/voice/ music/song/sound field/ background sound field/ dialog system, using visual tool such as TV/entertainment system/ computer/ notebook/smart pad/display/light/color/brightness/patterns/symbols, using haptic tool/virtual reality tool/gesture/ tool, using a smart device/appliance/material/furniture/fixture, using web tool/server/ hub device/cloud server/fog server/edge server/home network/mesh network, using messaging tool/notification tool/communication tool/scheduling tool/email, using user interface/GUI, using scent/smell/ fragrance/taste, using neural tool/nervous system tool, using a combination) the user of his mother's birthday and to call her, prepare a report, and give the report (e.g. using a tool for reminding as discussed above). The task may turn on the air conditioner/heater/ventilation system in advance, or adjust temperature setting of smart thermostat in advance, etc. As the user moves from the entrance to the living room, the task may be to turn on the living room light, open the living room curtain, open the window, turn off the entrance light behind the user, turn on the TV and set-top box, set TV to the user's favorite channel, adjust an appliance according to the user's preference and conditions/states (e.g. adjust lighting and choose/play music to build a romantic atmosphere), etc.

Another example may be: When the user wakes up in the morning, the task may be to detect the user moving around in the bedroom, open the blind/curtain, open the window, turn off the alarm clock, adjust indoor temperature from night-time temperature profile to daytime temperature profile, turn on the bedroom light, turn on the restroom light as the user approaches the restroom, check radio or streaming channel and play morning news, turn on the coffee machine and preheat the water, turn off security system, etc. When the user walks from bedroom to kitchen, the task may be to turn on the kitchen and hallway lights, turn off the bedroom and restroom lights, move the music/message/reminder from the bedroom to the kitchen, turn on the kitchen TV, change TV to morning news channel, lower the kitchen blind and open the kitchen window to bring in fresh air, unlock backdoor for the user to check the backyard, adjust temperature setting for the kitchen, etc. Another example may be: When the user leaves home for work, the task may be to detect the user leaving, play a farewell and/or have-a-good-day message, open/close garage door, turn on/off garage light and driveway light, turn off/dim lights to save energy (just in case the user forgets), close/lock all windows/doors (just in case the user forgets), turn off appliance (especially stove, oven, microwave oven), turn on/arm the home security system to guard the home against any intruder, adjust air conditioning/heating/ventilation systems to "away-from-home" profile to save energy, send alerts/reports/updates to the user's smart phone, etc.

A motion may comprise at least one of: a no-motion, resting motion, non-moving motion, movement, change in position/location, deterministic motion, transient motion, fall-down motion, repeating motion, periodic motion, pseudo-periodic motion, periodic/repeated motion associated with breathing, periodic/repeated motion associated with heartbeat, periodic/repeated motion associated with living object, periodic/repeated motion associated with machine, periodic/repeated motion associated with man-made object, periodic/repeated motion associated with nature, complex motion with transient element and periodic element, repetitive motion, non-deterministic motion, probabilistic motion, chaotic motion, random motion, complex motion with non-deterministic element and deterministic element, stationary random motion, pseudo-stationary random motion, cyclo-stationary random motion, non-stationary random motion, stationary random motion with periodic autocorrelation function (ACF), random motion with periodic ACF for period of time, random motion that is pseudo-stationary for a period of time, random motion of which an instantaneous ACF has a pseudo-periodic/repeating element for a period of time, machine motion, mechanical motion, vehicle motion, drone motion, air-related motion, wind-related motion, weather-related motion, water-related motion, fluid-related motion, ground-related motion, change in electro-magnetic characteristics, sub-surface motion, seismic motion, plant motion, animal motion, human motion, normal motion, abnormal motion, dangerous motion, warning motion, suspicious motion, rain, fire, flood, tsunami, explosion, collision, imminent collision, human body motion, head motion, facial motion, eye motion, mouth motion, tongue motion, neck motion, finger motion, hand motion, arm motion, shoulder motion, body motion, chest motion, abdominal motion, hip motion, leg motion, foot motion, body joint motion, knee motion, elbow motion, upper body motion, lower body motion, skin motion, below-skin motion, subcutaneous tissue motion, blood vessel motion, intravenous motion, organ motion, heart motion, lung motion, stomach motion, intestine motion, bowel motion, eating motion, breathing motion, facial expression, eye expression, mouth expression, talking motion, singing motion, eating motion, gesture, hand gesture, arm gesture, keystroke, typing stroke, user-interface gesture, man-machine interaction, gait, dancing movement, coordinated movement, and/or coordinated body movement.

The heterogeneous IC of the Type 1 device and/or any Type 2 receiver may comprise low-noise amplifier (LNA), power amplifier, transmit-receive switch, media access controller, baseband radio, 2.4 GHz radio, 3.65 GHz radio, 4.9 GHz radio, 5 GHz radio, 5.9GHz radio, below 6GHz radio, below 60 GHz radio and/or another radio. The heterogeneous IC may comprise a processor, a memory communicatively coupled with the processor, and a set of instructions stored in the memory to be executed by the processor. The IC and/or any processor may comprise at least one of: general purpose processor, special purpose processor, microprocessor, multi-processor, multi-core processor, parallel processor, CISC processor, RISC processor, microcontroller, central processing unit (CPU), graphical processor unit (GPU), digital signal processor (DSP), application specific integrated circuit (ASIC), field programmable gate array (FPGA), embedded processor (e.g. ARM), logic circuit, other programmable logic device, discrete logic, and/or a combination. The heterogeneous IC may support broadband network, wireless network, mobile network, mesh network, cellular network, wireless local area network (WLAN), wide area network (WAN), and metropolitan area network (MAN), WLAN standard, WiFi, LTE, LTE-A, LTE-U, 802.11 standard, 802.11a, 802.11b, 802.11g, 802.11n, 802.11ac, 802.11ad, 802.11af, 802,11ah, 802.11ax, 802.11ay, mesh network standard, 802.15 standard, 802.16 standard, cellular network standard, 3G, 3.5G, 4G, beyond 4G, 4.5G, 5G, 6G, 7G, 8G, 9G, UMTS, 3GPP, GSM, EDGE, TDMA, FDMA, CDMA, WCDMA, TD-SCDMA, Bluetooth, Bluetooth Low-Energy (BLE), NFC, Zigbee, WiMax, and/or another wireless network protocol.

The processor may comprise general purpose processor, special purpose processor, microprocessor, microcontroller, embedded processor, digital signal processor, central processing unit (CPU), graphical processing unit (GPU), multi-processor, multi-core processor, and/or processor with graphics capability, and/or a combination. The memory may be volatile, non-volatile, random access memory (RAM), Read Only Memory (ROM), Electrically Programmable ROM (EPROM), Electrically Erasable Programmable ROM (EEPROM), hard disk, flash memory, CD-ROM, DVD-ROM, magnetic storage, optical storage, organic storage, storage system, storage network, network storage, cloud storage, edge storage, local storage, external storage, internal storage, or other form of non-transitory storage medium known in the art. The set of instructions (machine executable code) corresponding to the method steps may be embodied directly in hardware, in software, in firmware, or in combinations thereof. The set of instructions may be embedded, pre-loaded, loaded upon boot up, loaded on the fly, loaded on demand, pre-installed, installed, and/or downloaded.

The presentation may be a presentation in an audio-visual way (e.g. using combination of visual, graphics, text, symbols, color, shades, video, animation, sound, speech, audio, etc.), graphical way (e.g. using GUI, animation, video), textual way (e.g. webpage with text, message, animated text), symbolic way (e.g. emoticon, signs, hand gesture), or mechanical way (e.g. vibration, actuator movement, haptics, etc.).

Basic computation

Computational workload associated with the method is shared among the processor, the Type 1 heterogeneous wireless device, the Type 2 heterogeneous wireless device, a local server (e.g. hub device), a cloud server, and another processor.

An operation, pre-processing, processing and/or postprocessing may be applied to data (e.g. TSCI, autocorrelation, features of TSCI). An operation may be preprocessing, processing and/or postprocessing. The preprocessing, processing and/or postprocessing may be an operation. An operation may comprise preprocessing, processing, post-processing, scaling, computing a confidence factor, computing a line-of-sight (LOS) quantity, computing a non-LOS (NLOS) quantity, a quantity comprising LOS and NLOS, computing a single link (e.g. path, communication path, link between a transmitting antenna and a receiving antenna) quantity, computing a quantity comprising multiple links, computing a function of the operands, filtering, linear filtering, nonlinear filtering, folding, grouping, energy computation, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, interpolation, decimation, subsampling, upsampling, resampling, time correction, time base correction, phase correction, magnitude correction, phase cleaning, magnitude cleaning, matched filtering, enhancement, restoration, denoising, smoothing, signal conditioning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, feature extraction, decomposition, projection, orthogonal projection, non-orthogonal projection, over-complete projection, eigen-decomposition, singular value decomposition (SVD), principle component analysis (PCA), independent component analysis (ICA), grouping, sorting, thresholding, soft thresholding, hard thresholding, clipping, soft clipping, first derivative, second order derivative, high order derivative, convolution, multiplication, division, addition, subtraction, integration, maximization, minimization, least mean square error, recursive least square, constrained least square, batch least square, least absolute error, least mean square deviation, least absolute deviation, local maximization, local minimization, optimization of a cost function, neural network, recognition, labeling, training, clustering, machine learning, supervised learning, unsupervised learning, semi-supervised learning, comparison with another TSCI, similarity score computation, quantization, vector quantization, matching pursuit, compression, encryption, coding, storing, transmitting, normalization, temporal normalization, frequency domain normalization, classification, clustering, labeling, tagging, learning, detection, estimation, learning network, mapping, remapping, expansion, storing, retrieving, transmitting, receiving, representing, merging, combining, splitting, tracking, monitoring, matched filtering, Kalman filtering, particle filter, intrapolation, extrapolation, histogram estimation, importance sampling, Monte Carlo sampling, compressive sensing, representing, merging, combining, splitting, scrambling, error protection, forward error correction, doing nothing, time varying processing, conditioning averaging, weighted averaging, arithmetic mean, geometric mean, harmonic mean, averaging over selected frequency, averaging over antenna links, logical operation, permutation, combination, sorting, AND, OR, XOR, union, intersection, vector addition, vector subtraction, vector multiplication, vector division, inverse, norm, distance, and/or another operation. The operation may be the preprocessing, processing, and/or post-processing. Operations may be applied jointly on multiple time series or functions.

The function (e.g. function of operands) may comprise: scalar function, vector function, discrete function, continuous function, polynomial function, characteristics, feature, magnitude, phase, exponential function, logarithmic function, trigonometric function, transcendental function, logical function, linear function, algebraic function, nonlinear function, piecewise linear function, real function, complex function, vector-valued function, inverse function, derivative of function, integration of function, circular function, function of another function, one-to-one function, one-to-many function, many-to-one function, many-to-many function, zero crossing, absolute function, indicator function, mean, mode, median, range, statistics, histogram, variance, standard deviation, measure of variation, spread, dispersion, deviation, divergence, range, interquartile range, total variation, absolute deviation, total deviation, arithmetic mean, geometric mean, harmonic mean, trimmed mean, percentile, square, cube, root, power, sine, cosine, tangent, cotangent, secant, cosecant, elliptical function, parabolic function, hyperbolic function, game function, zeta function, absolute value, thresholding, limiting function, floor function, rounding function, sign function, quantization, piecewise constant function, composite function, function of function, time function processed with an operation (e.g. filtering), probabilistic function, stochastic function, random function, ergodic function, stationary function, deterministic function, periodic function, repeated function, transformation, frequency transform, inverse frequency transform, discrete time transform, Laplace transform, Hilbert transform, sine transform, cosine transform, triangular transform, wavelet transform, integer transform, power-of-2 transform, sparse transform, projection, decomposition, principle component analysis (PCA), independent component analysis (ICA), neural network, feature extraction, moving function, function of moving window of neighboring items of time series, filtering function, convolution, mean function, histogram, variance/standard deviation function, statistical function, short-time transform, discrete transform, discrete Fourier transform, discrete cosine transform, discrete sine transform, Hadamard transform, eigen-decomposition, eigenvalue, singular value decomposition (SVD), singular value, orthogonal decomposition, matching pursuit, sparse transform, sparse approximation, any decomposition, graph-based processing, graph-based transform, graph signal processing, classification, identifying a class/group/category, labeling, learning, machine learning, detection, estimation, feature extraction, learning network, feature extraction, denoising, signal enhancement, coding, encryption, mapping, remapping, vector quantization, lowpass filtering, highpass filtering, bandpass filtering, matched filtering, Kalman filtering, preprocessing, postprocessing, particle filter, FIR filtering, IIR filtering, autoregressive (AR) filtering, adaptive filtering, first order derivative, high order derivative, integration, zero crossing, smoothing, median filtering, mode filtering, sampling, random sampling, resampling function, downsampling, down-converting, upsampling, up-converting, interpolation, extrapolation, importance sampling, Monte Carlo sampling, compressive sensing, statistics, short term statistics, long term statistics, autocorrelation function, cross correlation, moment generating function, time averaging, weighted averaging, special function, Bessel function, error function, complementary error function, Beta function, Gamma function, integral function, Gaussian function, Poisson function, etc.

Machine learning, training, discriminative training, deep learning, neural network, continuous time processing, distributed computing, distributed storage, acceleration using GPU/DSP/coprocessor/multicore/multiprocessing may be applied to a step (or each step) of this disclosure.

A frequency transform may include Fourier transform, Laplace transform, Hadamard transform, Hilbert transform, sine transform, cosine transform, triangular transform, wavelet transform, integer transform, power-of-2 transform, combined zero padding and transform, Fourier transform with zero padding, and/or another transform. Fast versions and/or approximated versions of the transform may be performed. The transform may be performed using floating point, and/or fixed point arithmetic.

An inverse frequency transform may include inverse Fourier transform, inverse Laplace transform, inverse Hadamard transform, inverse Hilbert transform, inverse sine transform, inverse cosine transform, inverse triangular transform, inverse wavelet transform, inverse integer transform, inverse power-of-2 transform, combined zero padding and transform, inverse Fourier transform with zero padding, and/or another transform. Fast versions and/or approximated versions of the transform may be performed. The transform may be performed using floating point, and/or fixed point arithmetic.

A quantity/feature from a TSCI may be computed. The quantity may comprise statistic of at least one of: motion, location, map coordinate, height, speed, acceleration, movement angle, rotation, size, volume, time trend, pattern, one-time pattern, repeating pattern, evolving pattern, time pattern, mutually excluding patterns, related/correlated patterns, cause-and-effect, correlation, short-term/long-term correlation, tendency, inclination, statistics, typical behavior, atypical behavior, time trend, time profile, periodic motion, repeated motion, repetition, tendency, change, abrupt change, gradual change, frequency, transient, breathing, gait, action, event, suspicious event, dangerous event, alarming event, warning, belief, proximity, collision, power, signal, signal power, signal strength, signal intensity, received signal strength indicator (RSSI), signal amplitude, signal phase, signal frequency component, signal frequency band component, channel state information (CSI), map, time, frequency, time-frequency, decomposition, orthogonal decomposition, non-orthogonal decomposition, tracking, breathing, heart beat, statistical parameters, cardiopulmonary statistics/analytics (e.g. output responses), daily activity statistics/analytics, chronic disease statistics/analytics, medical statistics/analytics, an early (or instantaneous or contemporaneous or delayed) indication/suggestion/sign/indicator/verifier/ detection/symptom of a disease/condition/ situation, biometric, baby, patient, machine, device, temperature, vehicle, parking lot, venue, lift, elevator, spatial, road, fluid flow, home, room, office, house, building, warehouse, storage, system, ventilation, fan, pipe, duct, people, human, car, boat, truck, airplane, drone, downtown, crowd, impulsive event, cyclo-stationary, environment, vibration, material, surface, 3-dimensional, 2-dimensional, local, global, presence, and/or another measurable quantity/variable.

Sliding window/algorithm

Sliding time window may have time varying window width. It may be smaller at the beginning to enable fast acquisition and may increase over time to a steady-state size. The steady-state size may be related to the frequency, repeated motion, transient motion, and/or STI to be monitored. Even in steady state, the window size may be adaptively (and/or dynamically) changed (e.g. adjusted, varied, modified) based on battery life, power consumption, available computing power, change in amount of targets, the nature of motion to be monitored, etc.

The time shift between two sliding time windows at adjacent time instance may be constant/variable/locally adaptive/dynamically adjusted over time. When shorter time shift is used, the update of any monitoring may be more frequent which may be used for fast changing situations, object motions, and/or objects. Longer time shift may be used for slower situations, object motions, and/or objects.

The window width/size and/or time shift may be changed (e.g. adjusted, varied, modified) upon a user request/choice. The time shift may be changed automatically (e.g. as controlled by processor/ computer/server/hub device/cloud server) and/or adaptively (and/or dynamically).

At least one characteristics (e.g. characteristic value, or characteristic point) of a function (e.g. autocorrelation function, auto-covariance function, cross-correlation function, cross-covariance function, power spectral density, time function, frequency domain function, frequency transform) may be determined (e.g. by an object tracking server, the processor, the Type 1 heterogeneous device, the Type 2 heterogeneous device, and/or another device). The at least one characteristics of the function may include: a maximum, minimum, extremum, local maximum, local minimum, local extremum, local extremum with positive time offset, first local extremum with positive time offset, $n^{th}$ local extremum with positive time offset, local extremum with negative time offset, first local extremum with negative time offset, $n^{th}$ local extremum with negative time offset, constrained maximum, constrained minimum, constrained extremum, significant maximum, significant minimum, significant extremum, slope, derivative, higher order derivative, maximum slope, minimum slope, local maximum slope, local maximum slope with positive time offset, local minimum slope, constrained maximum slope, constrained minimum slope, maximum higher order derivative, minimum higher order derivative, constrained higher order derivative, zero-crossing, zero crossing with positive time offset, $n^{th}$ zero crossing with positive time offset, zero crossing with negative time offset, $n^{th}$ zero crossing with negative time offset, constrained zero-crossing, zero-crossing of slope, zero-crossing of higher order derivative, and/or another characteristics. At least one argument of the function associated with the at least one characteristics of the function may be identified. Some quantity (e.g. spatial-temporal information of the object) may be determined based on the at least one argument of the function.

A characteristics (e.g. characteristics of motion of an object in the venue) may comprise at least one of: an instantaneous characteristics, short-term characteristics, repetitive characteristics, recurring characteristics, history, incremental characteristics, changing characteristics, deviational characteristics, phase, magnitude, degree, time characteristics, frequency characteristics, time-frequency characteristics, decomposition characteristics, orthogonal decomposition characteristics, non-orthogonal decomposition characteristics, deterministic characteristics, probabilistic characteristics, stochastic characteristics, autocorrelation function (ACF), mean, variance, standard deviation, measure of variation, spread, dispersion, deviation, divergence, range, interquartile range, total variation, absolute deviation, total deviation, statistics, duration, timing, trend, periodic characteristics, repetition characteristics, long-term characteristics, historical characteristics, average characteristics, current characteristics, past characteristics, future characteristics, predicted characteristics, location, distance, height, speed, direction, velocity, acceleration, change of the acceleration, angle, angular speed, angular velocity, angular acceleration of the object, change of the angular acceleration, orientation of the object, angular of rotation, deformation of the object, shape of the object, change of shape of the object, change of size of the object, change of structure of the object, and/or change of characteristics of the object.

At least one local maximum and at least one local minimum of the function may be identified. At least one local signal-to-noise-ratio-like (SNR-like) parameter may be computed for each pair of adjacent local maximum and local minimum. The SNR-like parameter may be a function (e.g. linear, log, exponential function, monotonic function) of a fraction of a quantity (e.g. power, magnitude) of the local maximum over the same quantity of the local minimum. It may also be the function of a difference between the quantity of the local maximum and the same quantity of the local minimum. Significant local peaks may be identified or selected. Each significant local peak may be a local maximum with SNR-like parameter greater than a threshold T1 and/or a local maximum with amplitude greater than a threshold T2. The at least one local minimum and the at least one local minimum in the frequency domain may be identified/computed using a persistence-based approach.

A set of selected significant local peaks may be selected from the set of identified significant local peaks based on a selection criterion (e.g. a quality criterion, a signal quality condition). The characteristics/STI of the object may be computed based on the set of selected significant local peaks and frequency values associated with the set of selected significant local peaks. In one example, the selection criterion may always correspond to select the strongest peaks in a range. While the strongest peaks may be selected, the unselected peaks may still be significant (rather strong).

Unselected significant peaks may be stored and/or monitored as "reserved" peaks for use in future selection in future sliding time windows. As an example, there may be a particular peak (at a particular frequency) appearing consistently over time. Initially, it may be significant but not selected (as other peaks may be stronger). But in later time, the peak may become stronger and more dominant and may be selected. When it became "selected", it may be back-traced in time and made "selected" in the earlier time when it was significant but not selected. In such case, the back-traced peak may replace a previously selected peak in an early time. The replaced peak may be the relatively weakest, or a peak that appear in isolation in time (i.e. appearing only briefly in time).

In another example, the selection criterion may not correspond to select the strongest peaks in the range. Instead, it may consider not only the "strength" of the peak, but the "trace" of the peak - peaks that may have happened in the past, especially those peaks that have been identified for a long time.

For example, if a finite state machine (FSM) is used, it may select the peak(s) based on the state of the FSM. Decision thresholds may be computed adaptively (and/or dynamically) based on the state of the FSM.

A similarity score and/or component similarity score may be computed (e.g. by a server (e.g. hub device), the processor, the Type 1 device, the Type 2 device, a local server, a cloud server, and/or another device) based on a pair of temporally adjacent CI of a TSCI. The pair may come from the same sliding window or two different sliding windows. The similarity score may also be based on a pair of, temporally adjacent or not so adjacent, CI from two different TSCI. The similarity score and/or component similar score may be/comprise: time reversal resonating strength (TRRS), correlation, cross-correlation, auto-correlation, correlation indicator, covariance, cross-covariance, auto-covariance, inner product of two vectors, distance score, norm, metric, quality metric, signal quality condition, statistical characteristics, discrimination score, neural network, deep learning network, machine learning, training, discrimination, weighted averaging, preprocessing, denoising, signal conditioning, filtering, time correction, timing compensation, phase offset compensation, transformation, component-wise operation, feature extraction, finite state machine, and/or another score. The characteristics and/or STI may be determined/computed based on the similarity score.

Any threshold may be pre-determined, adaptively (and/or dynamically) determined and/or determined by a finite state machine. The adaptive determination may be based on time, space, location, antenna, path, link, state, battery life, remaining battery life, available power, available computational resources, available network bandwidth, etc.

A threshold to be applied to a test statistics to differentiate two events (or two conditions, or two situations, or two states), A and B, may be determined. Data (e.g. CI, channel state information (CSI), power parameter) may be collected under A and/or under B in a training situation. The test statistics may be computed based on the data. Distributions of the test statistics under A may be compared with distributions of the test statistics under B (reference distribution), and the threshold may be chosen according to some criteria. The criteria may comprise: maximum likelihood (ML), maximum aposterior probability (MAP), discriminative training, minimum Type 1 error for a given Type 2 error, minimum Type 2 error for a given Type 1 error, and/or other criteria (e.g. a quality criterion, signal quality condition). The threshold may be adjusted to achieve different sensitivity to the A, B and/or another event/condition/situation/state. The threshold adjustment may be automatic, semi-automatic and/or manual. The threshold adjustment may be applied once, sometimes, often, periodically, repeatedly, occasionally, sporadically, and/or on demand. The threshold adjustment may be adaptive (and/or dynamically adjusted). The threshold adjustment may depend on the object, object movement/location/ direction/action, object characteristics/ STI/size/ property/trait/habit/behavior, the venue, feature/ fixture/ furniture/barrier/ material/ machine/living thing/thing/object/boundary/ surface/ medium that is in/at/of the venue, map, constraint of the map (or environmental model), the event/state/ situation/condition, time, timing, duration, current state, past history, user, and/or a personal preference, etc.

A stopping criterion (or skipping or bypassing or blocking or pausing or passing or rejecting criterion) of an iterative algorithm may be that change of a current parameter (e.g. offset value) in the updating in an iteration is less than a threshold. The threshold may be 0.5, 1, 1.5, 2, or another number. The threshold may be adaptive (and/or dynamically adjusted). It may change as the iteration progresses. For the offset value, the adaptive threshold may be determined based on the task, particular value of the first time, the current time offset value, the regression window, the regression analysis, the regression function, the regression error, the convexity of the regression function, and/or an iteration number.

The local extremum may be determined as the corresponding extremum of the regression function in the regression window. The local extremum may be determined based on a set of time offset values in the regression window and a set of associated regression function values. Each of the set of associated regression function values associated with the set of time offset values may be within a range from the corresponding extremum of the regression function in the regression window.

The searching for a local extremum may comprise robust search, minimization, maximization, optimization, statistical optimization, dual optimization, constraint optimization, convex optimization, global optimization, local optimization an energy minimization, linear regression, quadratic regression, higher order regression, linear programming, nonlinear programming, stochastic programming, combinatorial optimization, constraint programming, constraint satisfaction, calculus of variations, optimal control, dynamic programming, mathematical programming, multi-objective optimization, multi-modal optimization, disjunctive programming, space mapping, infinite-dimensional optimization, heuristics, metaheuristics, convex programming, semidefinite programming, conic programming, cone programming, integer programming, quadratic programming, fractional programming, numerical analysis, simplex algorithm, iterative method, gradient descent, subgradient method, coordinate descent, conjugate gradient method, Newton's algorithm, sequential quadratic programming, interior point method, ellipsoid method, reduced gradient method, quasi-Newton method, simultaneous perturbation stochastic approximation, interpolation method, pattern search method, line search, non-differentiable optimization, genetic algorithm, evolutionary algorithm, dynamic relaxation, hill climbing, particle swarm optimization, gravitation search algorithm, simulated annealing, memetic algorithm, differential evolution, dynamic relaxation, stochastic tunneling, Tabu search, reactive search optimization, curve fitting, least square, simulation based optimization, variational calculus, and/or variant. The search for local extremum may be associated with an objective function, loss function, cost function, utility function, fitness function, energy function, and/or an energy function.

Regression may be performed using regression function to fit sampled data (e.g. CI, feature of CI, component of CI) or another function (e.g. autocorrelation function) in a regression window. In at least one iteration, a length of the regression window and/or a location of the regression window may change. The regression function may be linear function, quadratic function, cubic function, polynomial function, and/or another function.

The regression analysis may minimize at least one of: error, aggregate error, component error, error in projection domain, error in selected axes, error in selected orthogonal axes, absolute error, square error, absolute deviation, square deviation, higher order error (e.g. third order, fourth order), robust error (e.g. square error for smaller error magnitude and absolute error for larger error magnitude, or first kind of error for smaller error magnitude and second kind of error for larger error magnitude), another error, weighted sum (or weighted mean) of absolute/square error (e.g. for wireless transmitter with multiple antennas and wireless receiver with multiple antennas, each pair of transmitter antenna and receiver antenna form a link), mean absolute error, mean square error, mean absolute deviation, and/or mean square deviation. Error associated with different links may have different weights. One possibility is that some links and/or some components with larger noise or lower signal quality metric may have smaller or bigger weight.), weighted sum of square error, weighted sum of higher order error, weighted sum of robust error, weighted sum of the another error, absolute cost, square cost, higher order cost, robust cost, another cost, weighted sum of absolute cost, weighted sum of square cost, weighted sum of higher order cost, weighted sum of robust cost, and/or weighted sum of another cost.

The regression error determined may be an absolute error, square error, higher order error, robust error, yet another error, weighted sum of absolute error, weighted sum of square error, weighted sum of higher order error, weighted sum of robust error, and/or weighted sum of the yet another error.

The time offset associated with maximum regression error (or minimum regression error) of the regression function with respect to the particular function in the regression window may become the updated current time offset in the iteration.

A local extremum may be searched based on a quantity comprising a difference of two different errors (e.g. a difference between absolute error and square error). Each of the two different errors may comprise an absolute error, square error, higher order error, robust error, another error, weighted sum of absolute error, weighted sum of square error, weighted sum of higher order error, weighted sum of robust error, and/or weighted sum of the another error.

The quantity may be compared with a reference data or a reference distribution, such as an F-distribution, central F-distribution, another statistical distribution, threshold, threshold associated with probability/histogram, threshold associated with probability/histogram of finding false peak, threshold associated with the F-distribution, threshold associated the central F-distribution, and/or threshold associated with the another statistical distribution.

The regression window may be determined based on at least one of: the movement (e.g. change in position/location) of the object, quantity associated with the object, the at least one characteristics and/or STI of the object associated with the movement of the object, estimated location of the local extremum, noise characteristics, estimated noise characteristics, signal quality metric, F-distribution, central F-distribution, another statistical distribution, threshold, preset threshold, threshold associated with probability/histogram, threshold associated with desired probability, threshold associated with probability of finding false peak, threshold associated with the F-distribution, threshold associated the central F-distribution, threshold associated with the another statistical distribution, condition that quantity at the window center is largest within the regression window, condition that the quantity at the window center is largest within the regression window, condition that there is only one of the local extremum of the particular function for the particular value of the first time in the regression window, another regression window, and/or another condition.

The width of the regression window may be determined based on the particular local extremum to be searched. The local extremum may comprise first local maximum, second local maximum, higher order local maximum, first local maximum with positive time offset value, second local maximum with positive time offset value, higher local maximum with positive time offset value, first local maximum with negative time offset value, second local maximum with negative time offset value, higher local maximum with negative time offset value, first local minimum, second local minimum, higher local minimum, first local minimum with positive time offset value, second local minimum with positive time offset value, higher local minimum with positive time offset value, first local minimum with negative time offset value, second local minimum with negative time offset value, higher local minimum with negative time offset value, first local extremum, second local extremum, higher local extremum, first local extremum with positive time offset value, second local extremum with positive time offset value, higher local extremum with positive time offset value, first local extremum with negative time offset value, second local extremum with negative time offset value, and/or higher local extremum with negative time offset value.

A current parameter (e.g. time offset value) may be initialized based on a target value, target profile, trend, past trend, current trend, target speed, speed profile, target speed profile, past speed trend, the motion or movement (e.g. change in position/location) of the object, at least one characteristics and/or STI of the object associated with the movement of object, positional quantity of the object, initial speed of the object associated with the movement of the object, predefined value, initial width of the regression window, time duration, value based on carrier frequency of the signal, value based on subcarrier frequency of the signal, bandwidth of the signal, amount of antennas associated with the channel, noise characteristics, signal h metric, and/or an adaptive (and/or dynamically adjusted) value. The current time offset may be at the center, on the left side, on the right side, and/or at another fixed relative location, of the regression window.

In the presentation, information may be displayed with a map (or environmental model) of the venue. The information may comprise: location, zone, region, area, coverage area, corrected location, approximate location, location with respect to (w.r.t.) a map of the venue, location w.r.t. a segmentation of the venue, direction, path, path w.r.t. the map and/or the segmentation, trace (e.g. location within a time window such as the past 5 seconds, or past 10 seconds; the time window duration may be adjusted adaptively (and/or dynamically); the time window duration may be adaptively (and/or dynamically) adjusted w.r.t. speed, acceleration, etc.), history of a path, approximate regions/zones along a path, history/ summary of past locations, history of past locations of interest, frequently-visited areas, customer traffic, crowd distribution, crowd behavior, crowd control information, speed, acceleration, motion statistics, breathing rate, heart rate, presence/absence of motion, presence/absence of people or pets or object, presence/absence of vital sign, gesture, gesture control (control of devices using gesture), location-based gesture control, information of a location-based operation, identity (ID) or identifier of the respect object (e.g. pet, person, self-guided machine/device, vehicle, drone, car, boat, bicycle, self-guided vehicle, machine with fan, air-conditioner, TV, machine with movable part), identification of a user (e.g. person), information of the user, location/speed/acceleration/direction/motion/gesture/gesture control/ motion trace of the user, ID or identifier of the user, activity of the user, state of the user, sleeping/resting characteristics of the user, emotional state of the user, vital sign of the user, environment information of the venue, weather information of the venue, earthquake, explosion, storm, rain, fire, temperature, collision, impact, vibration, event, door-open event, door-close event, window-open event, window-close event, fall-down event, burning event, freezing event, water-related event, wind-related event, air-movement event, accident event, pseudo-periodic event (e.g. running on treadmill, jumping up and down, skipping rope, somersault, etc.), repeated event, crowd event, vehicle event, gesture of the user (e.g. hand gesture, arm gesture, foot gesture, leg gesture, body gesture, head gesture, face gesture, mouth gesture, eye gesture, etc.).

The location may be 2-dimensional (e.g. with 2D coordinates), 3-dimensional (e.g. with 3D coordinates). The location may be relative (e.g. w.r.t. a map or environmental model) or relational (e.g. halfway between point A and point B, around a corner, up the stairs, on top of table, at the ceiling, on the floor, on a sofa, close to point A, a distance R from point A, within a radius of R from point A, etc.). The location may be expressed in rectangular coordinate, polar coordinate, and/or another representation.

The information (e.g. location) may be marked with at least one symbol. The symbol may be time varying. The symbol may be flashing and/or pulsating with or without changing color/intensity. The size may change over time. The orientation of the symbol may change over time. The symbol may be a number that reflects an instantaneous quantity (e.g. vital sign/ breathing rate/heart rate/gesture/state/status/action/motion of a user, temperature, network traffic, network connectivity, status of a device/machine, remaining power of a device, status of the device, etc.). The rate of change, the size, the orientation, the color, the intensity and/or the symbol may reflect the respective motion. The information may be presented visually and/or described verbally (e.g. using prerecorded voice, or voice synthesis). The information may be described in text. The information may also be presented in a mechanical way (e.g. an animated gadget, a movement of a movable part).

The user-interface (UI) device may be a smart phone (e.g. iPhone, Android phone), tablet (e.g. iPad), laptop (e.g. notebook computer), personal computer (PC), device with graphical user interface (GUI), smart speaker, device with voice/audio/speaker capability, virtual reality (VR) device, augmented reality (AR) device, smart car, display in the car, voice assistant, voice assistant in a car, etc.

The map (or environmental model) may be 2-dimensional, 3-dimensional and/or higher-dimensional. (e.g. a time varying 2D/3D map/environmental model) Walls, windows, doors, entrances, exits, forbidden areas may be marked on the map or the model. The map may comprise floor plan of a facility. The map or model may have one or more layers (overlays). The map/model may be a maintenance map/model comprising water pipes, gas pipes, wiring, cabling, air ducts, crawl-space, ceiling layout, and/or underground layout. The venue may be segmented/subdivided/zoned/grouped into multiple zones/ regions/geographic regions/ sectors/ sections/ territories/ districts/ precincts/ localities/ neighborhoods/ areas/ stretches/expanse such as bedroom, living room, storage room, walkway, kitchen, dining room, foyer, garage, first floor, second floor, rest room, offices, conference room, reception area, various office areas, various warehouse regions, various facility areas, etc. The segments/regions/areas may be presented in a map/model. Different regions may be color-coded. Different regions may be presented with a characteristic (e.g. color, brightness, color intensity, texture, animation, flashing, flashing rate, etc.). Logical segmentation of the venue may be done using the at least one heterogeneous Type 2 device, or a server (e.g. hub device), or a cloud server, etc.

Here is an example of the disclosed system, apparatus, and method. Stephen and his family want to install the disclosed wireless motion detection system to detect motion in their 2000 sqft two-storey town house in Seattle, Washington. Because his house has two storeys, Stephen decided to use one Type 2 device (named A) and two Type 1 devices (named B and C) in the ground floor. His ground floor has predominantly three rooms: kitchen, dining room and living room arranged in a straight line, with the dining room in the middle. The kitchen and the living rooms are on opposite end of the house. He put the Type 2 device (A) in the dining room, and put one Type 1 device (B) in the kitchen and the other Type 1 device (C) in the living room. With this placement of the devices, he is practically partitioning the ground floor into 3 zones (dining room, living room and kitchen) using the motion detection system. When motion is detected by the AB pair and the AC pair, the system would analyze the motion information and associate the motion with one of the 3 zones.

When Stephen and his family go out on weekends (e.g. to go for a camp during a long weekend), Stephen would use a mobile phone app (e.g. Android phone app or iPhone app) to turn on the motion detection system. When the system detects motion, a warning signal is sent to Stephen (e.g. an SMS text message, an email, a push message to the mobile phone app, etc.). If Stephen pays a monthly fee (e.g. $10/month), a service company (e.g. security company) will receive the warning signal through wired network (e.g. broadband) or wireless network (e.g. home WiFi, LTE, 3G, 2.5G, etc.) and perform a security procedure for Stephen (e.g. call him to verify any problem, send someone to check on the house, contact the police on behalf of Stephen, etc.). Stephen loves his aging mother and cares about her well-being when she is alone in the house. When the mother is alone in the house while the rest of the family is out (e.g. go to work, or shopping, or go on vacation), Stephen would turn on the motion detection system using his mobile app to ensure the mother is ok. He then uses the mobile app to monitor his mother's movement in the house. When Stephen uses the mobile app to see that the mother is moving around the house among the 3 regions, according to her daily routine, Stephen knows that his mother is doing ok. Stephen is thankful that the motion detection system can help him monitor his mother's well-being while he is away from the house.

On a typical day, the mother would wake up at around 7 AM. She would cook her breakfast in the kitchen for about 20 minutes. Then she would eat the breakfast in the dining room for about 30 minutes. Then she would do her daily exercise in the living room, before sitting down on the sofa in the living room to watch her favorite TV show. The motion detection system enables Stephen to see the timing of the movement in each of the 3 regions of the house. When the motion agrees with the daily routine, Stephen knows roughly that the mother should be doing fine. But when the motion pattern appears abnormal (e.g. there is no motion until 10 AM, or she stayed in the kitchen for too long, or she remains motionless for too long, etc.), Stephen suspects something is wrong and would call the mother to check on her. Stephen may even get someone (e.g. a family member, a neighbor, a paid personnel, a friend, a social worker, a service provider) to check on his mother.

At some time, Stephen feels like repositioning the Type 2 device. He simply unplugs the device from the original AC power plug and plug it into another AC power plug. He is happy that the wireless motion detection system is plug-and-play and the repositioning does not affect the operation of the system. Upon powering up, it works right away.

Sometime later, Stephen is convinced that our wireless motion detection system can really detect motion with very high accuracy and very low alarm, and he really can use the mobile app to monitor the motion in the ground floor. He decides to install a similar setup (i.e. one Type 2 device and two Type 1 devices) in the second floor to monitor the bedrooms in the second floor. Once again, he finds that the system set up is extremely easy as he simply needs to plug the Type 2 device and the Type 1 devices into the AC power plug in the second floor. No special installation is needed. And he can use the same mobile app to monitor motion in the ground floor and the second floor. Each Type 2 device in the ground floor/second floor can interact with all the Type 1 devices in both the ground floor and the second floor. Stephen is happy to see that, as he doubles his investment in the Type 1 and Type 2 devices, he has more than double the capability of the combined systems.

According to various embodiments, each CI (CI) may comprise at least one of: channel state information (CSI), frequency domain CSI, frequency representation of CSI, frequency domain CSI associated with at least one sub-band, time domain CSI, CSI in domain, channel response, estimated channel response, channel impulse response (CIR), channel frequency response (CFR), channel characteristics, channel filter response, CSI of the wireless multipath channel, information of the wireless multipath channel, timestamp, auxiliary information, data, meta data, user data, account data, access data, security data, session data, status data, supervisory data, household data, identity (ID), identifier, device data, network data, neighborhood data, environment data, real-time data, sensor data, stored data, encrypted data, compressed data, protected data, and/or another CI. In one embodiment, the disclosed system has hardware components (e.g. wireless transmitter/receiver with antenna, analog circuitry, power supply, processor, memory) and corresponding software components. According to various embodiments of the present teaching, the disclosed system includes Bot (referred to as a Type 1 device) and Origin (referred to as a Type 2 device) for vital sign detection and monitoring. Each device comprises a transceiver, a processor and a memory.

The disclosed system can be applied in many cases. In one example, the Type 1 device (transmitter) may be a small WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. In one example, the Type 2 (receiver) may be a WiFi-enabled device resting on the table. It may also be a WiFi-enabled television (TV), set-top box (STB), a smart speaker (e.g. Amazon echo), a smart refrigerator, a smart microwave oven, a mesh network router, a mesh network satellite, a smart phone, a computer, a tablet, a smart plug, etc. The Type 1 device and Type 2 devices may be placed in/near a conference room to count people. The Type 1 device and Type 2 devices may be in a well-being monitoring system for older adults to monitor their daily activities and any sign of symptoms (e.g. dementia, Alzheimer's disease). The Type 1 device and Type 2 device may be used in baby monitors to monitor the vital signs (breathing) of a living baby. The Type 1 device and Type 2 devices may be placed in bedrooms to monitor quality of sleep and any sleep apnea. The Type 1 device and Type 2 devices may be placed in cars to monitor well-being of passengers and driver, detect any sleeping of driver and detect any babies left in a car. The Type 1 device and Type 2 devices may be used in logistics to prevent human trafficking by monitoring any human hidden in trucks and containers. The Type 1 device and Type 2 devices may be deployed by emergency service at disaster area to search for trapped victims in debris. The Type 1 device and Type 2 devices may be deployed in an area to detect breathing of any intruders. There are numerous applications of wireless breathing monitoring without wearables.

Hardware modules may be constructed to contain the Type 1 transceiver and/or the Type 2 transceiver.

The hardware modules may be sold to/used by variable brands to design, build and sell final commercial products. Products using the disclosed system and/or method may be home/office security products, sleep monitoring products, WiFi products, mesh products, TV, STB, entertainment system, HiFi, speaker, home appliance, lamps, stoves, oven, microwave oven, table, chair, bed, shelves, tools, utensils, torches, vacuum cleaner, smoke detector, sofa, piano, fan, door, window, door/window handle, locks, smoke detectors, car accessories, computing devices, office devices, air conditioner, heater, pipes, connectors, surveillance camera, access point, computing devices, mobile devices, LTE devices, 3G/4G/5G/6G devices, UMTS devices, 3GPP devices, GSM devices, EDGE devices, TDMA devices, FDMA devices, CDMA devices, WCDMA devices, TD-SCDMA devices, gaming devices, eyeglasses, glass panels, VR goggles, necklace, watch, waist band, belt, wallet, pen, hat, wearables, implantable device, tags, parking tickets, smart phones, etc.

The summary may comprise: analytics, output response, selected time window, subsampling, transform, and/or projection. The presenting may comprise presenting at least one of: monthly/weekly/daily view, simplified/detailed view, cross-sectional view, small/large form-factor view, color-coded view, comparative view, summary view, animation, web view, voice announcement, and another presentation related to the periodic/repetition characteristics of the repeating motion.

A Type 1/Type 2 device may be an antenna, a device with antenna, a device with a housing (e.g. for radio, antenna, data/signal processing unit, wireless IC, circuits), device that has interface to attach/connect to/link antenna, device that is interfaced to/attached to/connected to/linked to another device/system/computer/phone/network/data aggregator, device with a user interface(UI)/graphical UI/display, device with wireless transceiver, device with wireless transmitter, device with wireless receiver, internet-of-thing (IoT) device, device with wireless network, device with both wired networking and wireless networking capability, device with wireless integrated circuit (IC), Wi-Fi device, device with Wi-Fi chip (e.g. 802.11a/b/g/n/ac/ax standard compliant), Wi-Fi access point (AP), Wi-Fi client, Wi-Fi router, Wi-Fi repeater, Wi-Fi hub, Wi-Fi mesh network router/hub/AP, wireless mesh network router, adhoc network device, wireless mesh network device, mobile device (e.g. 2G/2.5G/3G/3.5G/4G/LTE/ 5G/6G/7G, UMTS, 3GPP, GSM, EDGE, TDMA, FDMA, CDMA, WCDMA, TD-SCDMA), cellular device, base station, mobile network base station, mobile network hub, mobile network compatible device, LTE device, device with LTE module, mobile module (e.g. circuit board with mobile-enabling chip (IC) such as Wi-Fi chip, LTE chip, BLE chip), Wi-Fi chip (IC), LTE chip, BLE chip, device with mobile module, smart phone, companion device (e.g. dongle, attachment, plugin) for smart phones, dedicated device, plug-in device, AC-powered device, battery-powered device, device with processor/memory/set of instructions, smart device/gadget/items: clock, stationary, pen, user-interface, paper, mat, camera, television (TV), set-top-box, microphone, speaker, refrigerator, oven, machine, phone, wallet, furniture, door, window, ceiling, floor, wall, table, chair, bed, night-stand, air-conditioner, heater, pipe, duct, cable, carpet, decoration, gadget, USB device, plug, dongle, lamp/light, tile, ornament, bottle, vehicle, car, AGV, drone, robot, laptop, tablet, computer, harddisk, network card, instrument, racket, ball, shoe, wearable, clothing, glasses, hat, necklace, food, pill, small device that moves in the body of creature (e.g. in blood vessels, in lymph fluid, digestive system), and/or another device. The Type 1 device and/or Type 2 device may be communicatively coupled with: the internet, another device with access to internet (e.g. smart phone), cloud server (e.g. hub device), edge server, local server, and/or storage. The Type 1 device and/or the Type 2 device may operate with local control, can be controlled by another device via a wired/wireless connection, can operate automatically, or can be controlled by a central system that is remote (e.g. away from home).

In one embodiment, a Type B device may be a transceiver that may perform as both Origin (a Type 2 device, a Rx device) and Bot (a Type 1 device, a Tx device), i.e., a Type B device may be both Type 1 (Tx) and Type 2 (Rx) devices (e.g. simultaneously or alternately), for example, mesh devices, a mesh router, etc. In one embodiment, a Type A device may be a transceiver that may only function as Bot (a Tx device), i.e., Type 1 device only or Tx only, e.g., simple IoT devices. It may have the capability of Origin (Type 2 device, Rx device), but somehow it is functioning only as Bot in the embodiment. All the Type A and Type B devices form a tree structure. The root may be a Type B device with network (e.g. internet) access. For example, it may be connected to broadband service through a wired connection (e.g. Ethernet, cable modem, ADSL/HDSL modem) connection or a wireless connection (e.g. LTE, 3G/4G/5G, WiFi, Bluetooth, microwave link, satellite link, etc.). In one embodiment, all the Type A devices are leaf node. Each Type B device may be the root node, non-leaf node, or leaf node.

Type 1 device (transmitter, or Tx) and Type 2 device (receiver, or Rx) may be on same device (e.g. RF chip/IC) or simply the same device. The devices may operate at high frequency band, such as 28GHz, 60GHz, 77GHz, etc. The RF chip may have dedicated Tx antennas (e.g. 32 antennas) and dedicated Rx antennas (e.g. another 32 antennas).

One Tx antenna may transmit a wireless signal (e.g. a series of probe signal, perhaps at 100Hz). Alternatively, all Tx antennas may be used to transmit the wireless signal with beamforming (in Tx), such that the wireless signal is focused in certain direction (e.g. for energy efficiency or boosting the signal to noise ratio in that direction, or low power operation when "scanning" that direction, or low power operation if object is known to be in that direction).

The wireless signal hits an object (e.g. a living human lying on a bed 4 feet away from the Tx/Rx antennas, with breathing and heart beat) in a venue (e.g. a room). The object motion (e.g. lung movement according to breathing rate, or blood-vessel movement according to heart beat) may impact/modulate the wireless signal. All Rx antennas may be used to receive the wireless signal.

Beamforming (in Rx and/or Tx) may be applied (digitally) to "scan" different directions. Many directions can be scanned or monitored simultaneously. With beamforming, "sectors" (e.g. directions, orientations, bearings, zones, regions, segments) may be defined related to the Type 2 device (e.g. relative to center location of antenna array). For each probe signal (e.g. a pulse, an ACK, a control packet, etc.), a channel information or CI (e.g. channel impulse response/CIR, CSI, CFR) is obtained/computed for each sector (e.g. from the RF chip). In breathing detection, one may collect CIR in a sliding window (e.g. 30 sec, and with 100Hz sounding/probing rate, one may have 3000 CIR over 30 sec).

The CIR may have many taps (e.g. N1 components/taps). Each tap may be associated with a time lag, or a time-of-flight (tof, e.g. time to hit the human 4 feet away and back). When a person is breathing in a certain direction at a certain distance (e.g. 4ft), one may search for the CIR in the "certain direction". Then one may search for the tap corresponding to the "certain distance". Then one may compute the breathing rate and heart rate from that tap of that CIR.

One may consider each tap in the sliding window (e.g. 30 second window of "component time series") as a time function (e.g. a "tap function", the "component time series"). One may examine each tap function in search of a strong periodic behavior (e.g. corresponds to breathing, perhaps in the range of 10bpm to 40bpm).

The Type 1 device and/or the Type 2 device may have external connections/links and/or internal connections/links. The external connections (e.g. connection 1110) may be associated with 2G/2.5G/3G/3.5G/4G/LTE/ 5G/6G/7G/NBIoT, UWB, WiMax, Zigbee, 802.16 etc. The internal connections (e.g., 1114A and 1114B, 1116, 1118, 1120) may be associated with WiFi, an IEEE 802.11 standard, 802.11a/b/g/n/ac/ad/af/ag/ah/ai/aj/aq/ax/ay, Bluetooth, Bluetooth 1.0/1.1/1.2/2.0/2.1/3.0/4.0/4.1/ 4.2/5, BLE, mesh network, an IEEE 802.16/1/1a/1b/2/2a/a/b/c/d/e/f/g/h/i/j/k/l/m/n/o/p/ standard.

The Type 1 device and/or Type 2 device may be powered by battery (e.g. AA battery, AAA battery, coin cell battery, button cell battery, miniature battery, bank of batteries, power bank, car battery, hybrid battery, vehicle battery, container battery, non-rechargeable battery, rechargeable battery, NiCd battery, NiMH battery, Lithium ion battery, Zinc carbon battery, Zinc chloride battery, lead acid battery, alkaline battery, battery with wireless charger, smart battery, solar battery, boat battery, plane battery, other battery, temporary energy storage device, capacitor, fly wheel).

Any device may be powered by DC or direct current (e.g. from battery as described above, power generator, power convertor, solar panel, rectifier, DC-DC converter, with various voltages such as 1.2V, 1.5V, 3V, 5V, 6V, 9V, 12V, 24V, 40V, 42V, 48V, 110V, 220V, 380V, etc.) and may thus have a DC connector or a connector with at least one pin for DC power.

Any device may be powered by AC or alternating current (e.g. wall socket in a home, transformer, invertor, shorepower, with various voltages such as 100V, 110V, 120V, 100-127V, 200V, 220V, 230V, 240V, 220-240V, 100-240V, 250V, 380V, 50Hz, 60Hz, etc.) and thus may have an AC connector or a connector with at least one pin for AC power. The Type 1 device and/or the Type 2 device may be positioned (e.g. installed, placed, moved to) in the venue or outside the venue.

For example, in a vehicle (e.g. a car, truck, lorry, bus, special vehicle, tractor, digger, excavator, teleporter, bulldozer, crane, forklift, electric trolley, AGV, emergency vehicle, freight, wagon, trailer, container, boat, ferry, ship, submersible, airplane, air-ship, lift, mono-rail, train, tram, rail-vehicle, railcar, etc.), the Type 1 device and/or Type 2 device may be an embedded device embedded in the vehicle, or an add-on device (e.g. aftermarket device) plugged into a port in the vehicle (e.g. OBD port/socket, USB port/socket, accessory port/socket, 12V auxiliary power outlet, and/or 12V cigarette lighter port/socket).

For example, one device (e.g. Type 2 device) may be plugged into 12V cigarette lighter/accessory port or OBD port or the USB port (e.g. of a car/truck/vehicle) while the other device (e.g. Type 1 device) may be plugged into 12V cigarette lighter/accessory port or the OBD port or the USB port. The OBD port and/or USB port can provide power, signaling and/or network (of the car/truck/vehicle). The two devices may jointly monitor the passengers including children/babies in the car. They may be used to count the passengers, recognize the driver, detect presence of passenger in a particular seat/position in the vehicle.

In another example, one device may be plugged into 12V cigarette lighter/accessory port or OBD port or the USB port of a car/truck/vehicle while the other device may be plugged into 12V cigarette lighter/accessory port or OBD port or the USB port of another car/truck/vehicle.

In another example, there may be many devices of the same type A (e.g. Type 1 or Type 2) in many heterogeneous vehicles/portable devices/smart gadgets (e.g. automated guided vehicle/AGV, shopping/luggage/moving cart, parking ticket, golf cart, bicycle, smart phone, tablet, camera, recording device, smart watch, roller skate, shoes, jackets, goggle, hat, eye-wear, wearable, Segway, scooter, luggage tag, cleaning machine, vacuum cleaner, pet tag/collar/wearable/implant), each device either plugged into 12V accessory port/OBD port/USB port of a vehicle or embedded in a vehicle. There may be one or more device of the other type B (e.g. B is Type 1 if A is Type 2, or B is Type 2 if A is Type 1) installed at locations such as gas stations, street lamp post, street corners, tunnels, multi-storey parking facility, scattered locations to cover a big area such as factory/ stadium/ train station/ shopping mall/construction site. The Type A device may be located, tracked or monitored based on the TSCI.

The area/venue may have no local connectivity, e.g., broadband services, WiFi, etc. The Type 1 and/or Type 2 device may be portable. The Type 1 and/or Type 2 device may support plug and play.

Pairwise wireless links may be established between many pairs of devices, forming the tree structure. In each pair (and the associated link), a device (second device) may be a non-leaf (Type B). The other device (first device) may be a leaf (Type A or Type B) or non-leaf (Type B). In the link, the first device functions as a bot (Type 1 device or a Tx device) to send a wireless signal (e.g. probe signal) through the wireless multipath channel to the second device. The second device may function as an Origin (Type 2 device or Rx device) to receive the wireless signal, obtain the TSCI and compute a "linkwise analytics" based on the TSCI.

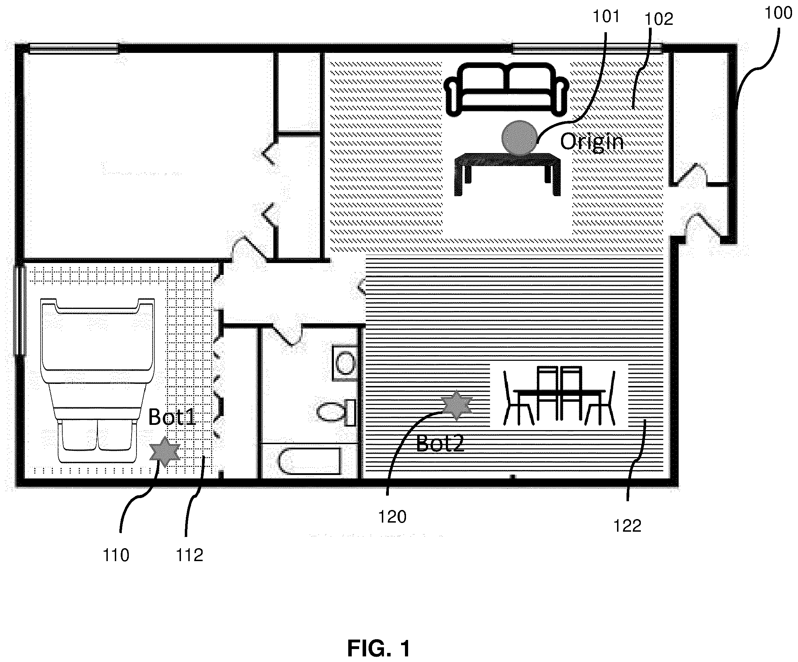

FIG. 1 illustrates an exemplary scenario where object motion is detected based on channel state information in a venue, according to one embodiment of the present teaching. For example, as shown in FIG. 1, in a 2-bedroom apartment 100, Origin 101 may be placed in the living-room area 102, Bot 1 110 may be placed in a bedroom1-area 112, and Bot 2 120 may be placed in the dining-room area 122. Each of Bot 1 110 and Bot 2 120 can transmit a wireless signal to the Origin 101, which can obtain channel information of a wireless multipath channel based on the wireless signal. The Origin 101, by itself or through a third device like a motion detector, can compute motion information based on the channel information and detect object motion/activity based on the motion information. That is, the Origin 101, by itself or through a third device like a motion detector, can detect object motion/activity based on wireless signals transmitted by Bot 1 110 and/or Bot 2 120.

If object motion/activity is detected based on wireless signals transmitted by both Bot 1 110 and Bot 2 120, the activity/motion or the object (e.g. person/user) may be in the living-room area 102. If object motion/activity is detected based only on wireless signals transmitted by Bot 1 110, the activity/motion or the object (e.g. person/user) may be in the bedroom-1 area 112. If object motion/activity is detected based only on wireless signals transmitted by Bot 2 120, the activity/motion or the object (e.g. person/user) may be in the dining-room area 122. If object motion/activity cannot be detected based on wireless signals transmitted by either Bot 1 110 or Bot 2 120, then it may be determined that nobody and no object is in the apartment 100. The corresponding area where the activity/motion/person/user is detected may be marked with a predetermined pattern.

In some embodiments, Bot(s) and Origin(s) of a wireless monitoring system may be placed at different positions, e.g. based on position of the power source and/or position of the object to be monitored. For example, in a vehicle wireless monitoring system including a Bot (or a transmitter) and an Origin (or a receiver), each of the transmitter and the receiver may be placed at different positions inside or attached to the vehicle.

In some embodiments, Bot(s) and Origin(s) may also be utilized in a wireless monitoring system for monitoring an object or detecting an event related to a vehicle. The wireless monitoring system may be referred to as a car presence detection (CPD) system or vehicle wireless monitoring system.

In some embodiments, Bot(s) and Origin(s) may also be utilized in a wireless monitoring system for monitoring an object or detecting an event to trigger an assistance device or a digital assistance system, e.g. a smart speaker or a smart assistant, such as Google home, Amazon Alexa, etc. With the outcome of a wireless monitoring system, it is possible to automatically trigger and/or adjust the operation of a digital assistance system, e.g., turn on or adjust the operation of the digital assistance system upon motion detection, motion disappearance, motion localization, etc. The wireless monitoring system together with an assistance device may be referred to as an automatic assistant system.

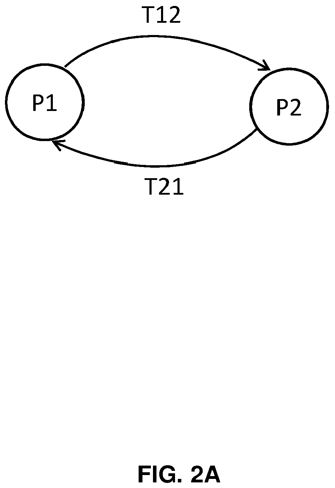

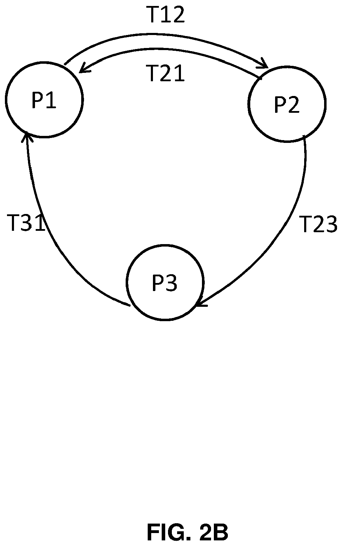

A wireless monitoring system including Bot(s) and Origin(s) may enter different operation modes, e.g. an inactive mode, hibernation mode, sleep mode, standby mode, low-power mode, OFF mode and/or power-down mode. Exemplary transitions between the system operation modes are shown in FIG. 2A and FIG. 2B. As shown in FIG. 2A, a system may first operate on mode 1 with a parameter P1. Upon some triggering event T12, the system may transit to operation mode 2 with parameter P2. Then, upon another triggering event T21, the system may transit back to operation mode 1. As shown in FIG. 2B, there may exist another operation mode 3 with a parameter P3. In one embodiment, a system operates currently on mode 2. Upon some triggering event T23, the system may transit to operation mode 3. Then, upon another triggering event T31, the system may transit back to operation mode 1.

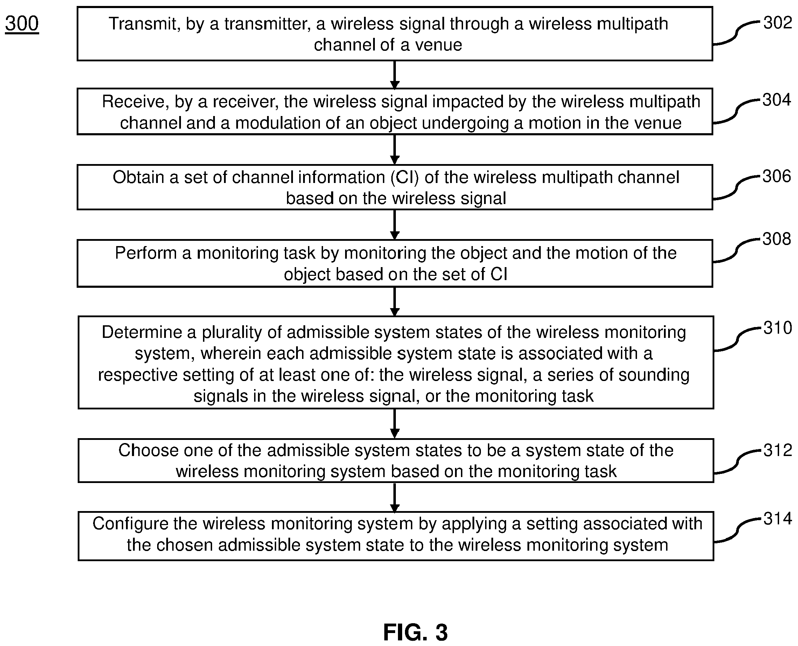

FIG. 3 illustrates a flow chart of an exemplary method 300 of a wireless monitoring system, according to some embodiments of the present teaching. At operation 302, a transmitter, e.g. on a Bot, transmits a wireless signal through a wireless multipath channel of a venue. At operation 304, a receiver, e.g. on an Origin, receives the wireless signal that is impacted by the wireless multipath channel and a modulation of an object undergoing a motion in the venue. At operation 306, a set of channel information (CI) of the wireless multipath channel is obtained based on the wireless signal. At operation 308, based on the set of CI, a monitoring task is performed to monitor the object and the motion of the object. At operation 310, a plurality of admissible system states of the wireless monitoring system is determined. Each admissible system state is associated with a respective setting of at least one of: the wireless signal, a series of sounding signals in the wireless signal, or the monitoring task. One of the admissible system states is chosen at operation 312 to be a system state of the wireless monitoring system based on the monitoring task. At operation 314, the wireless monitoring system is configured by applying a setting associated with the chosen admissible system state to the wireless monitoring system. The order of the operations in FIG. 3 may be changed according to various embodiments of the present teaching.

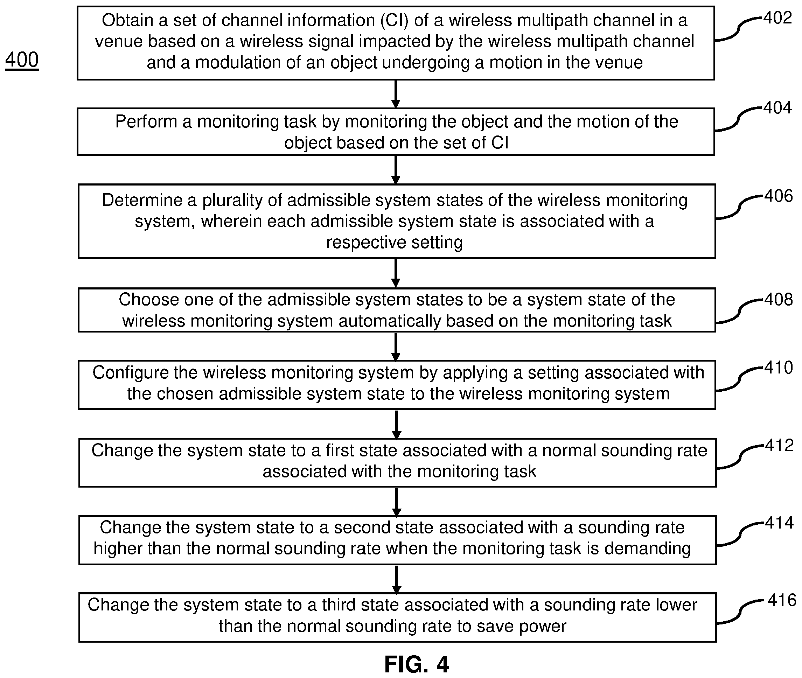

FIG. 4 illustrates a flow chart of another exemplary method 400 of a wireless monitoring system, according to some embodiments of the present teaching. At operation 402, a set of channel information (CI) of a wireless multipath channel in a venue is obtained based on a wireless signal that is impacted by the wireless multipath channel and a modulation of an object undergoing a motion in the venue. At operation 404, based on the set of CI, a monitoring task is performed to monitor the object and the motion of the object. At operation 406, a plurality of admissible system states of the wireless monitoring system is determined. Each admissible system state is associated with a respective setting. One of the admissible system states is chosen at operation 408 to be a system state of the wireless monitoring system automatically based on the monitoring task. At operation 410, the wireless monitoring system is configured by applying a setting associated with the chosen admissible system state to the wireless monitoring system. Optionally at operation 412, the system state is changed to a first state associated with a normal sounding rate associated with the monitoring task. Optionally at operation 414, the system state is changed to a second state associated with a sounding rate higher than the normal sounding rate when the monitoring task is demanding. Optionally at operation 416, the system state is changed to a third state associated with a sounding rate lower than the normal sounding rate to save power. The order of the operations in FIG. 4 may be changed according to various embodiments of the present teaching.

Humanoid mannequins may mimic human activities as testing subjects for WiFi Sensing. Wireless sensing has brought many benefits to people's daily life. But involving human subject in testing for wireless sensing and monitoring applications may pose potential health risks or inconvenience/dependency, as the test process and the process on regulation may be long and costly. There may also exist liability issues due to potential occupational injury. A duplicable/repeatable/scalable testing process is in great need because they can reduce time for product development and commercialization and create standardized test protocols for wireless sensing industry.

There are examples of using replacement subjects for testing. For example, a Specific Absorption Rate (SAR) testing is the radiofrequency (RF) dosimetry quantification of the magnitude and distribution of absorbed electromagnetic energy within biological objects that are exposed to RF fields.

A Specific Anthropomorphic Mannequin (SAM) is a phantom composed of specific materials that simulate the dielectric properties of human body. The conductivity and permittivity of the human body is mimicked with a liquid solution of, sugar, salt, water and other ingredients. Different compositions of the solution may be used for different frequencies, for example, Wi-Fi or 5G.

From the human body standpoint of view, a SAM can mimic the radio absorption, and that radio absorption dosage can be used to estimate the effect to the body. However, from the wireless sensing standpoint of view, the absorption of a SAM could mimic the actual interaction, given the similar size and shape of human beings or pets, with the radio signals (e.g. WiFi multipath), and potentially could be used as a test subject that replaces a human subject, in the WiFi Sensing testing.

An exemplary approach using replacement subject is described below. First, one can select a radio frequency band of interest, e.g. WiFi 5GHz band (5.250-5.350 GHz, 5.470-5.725 GHz). Second, the SAM is used for this frequency band. A material RF response can be represented by complex permittivity $\varepsilon_r = \varepsilon'_r + j\varepsilon''_r$. Different sizes of shape may be tested such as human adult, child, infant, pets, etc. They may be stationary, or with movable parts (knee) or active-moving parts that are controlled by robotic means (e.g. a chest movement). In one embodiment, materials (e.g. coating or infill) can be applied to a mannequin for customization. One may utilize a humanoid robot, or robotic parts in some approaches. SAM can be from fashion industry, car industry, or medical industry.

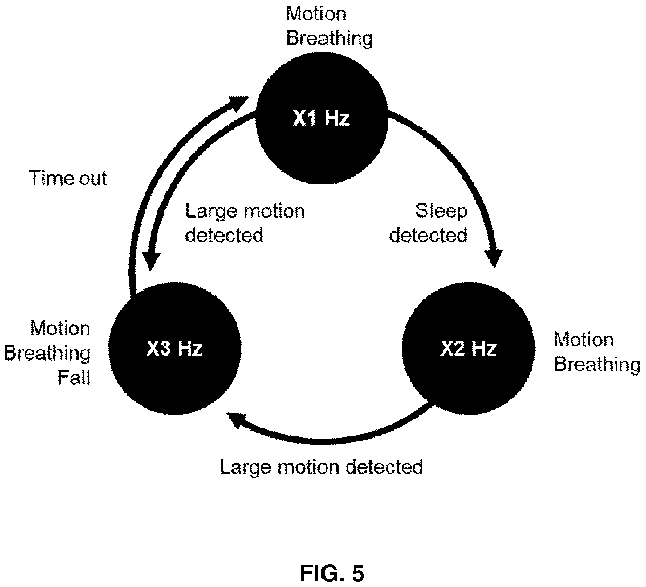

A wireless monitoring system may be in any one of a plurality of admissible system states, where each of the admissible system states is associated with a respective setting of at least one of: a wireless signal, a series of sounding signals in the wireless signal, or a monitoring task. At a given time, the system operates in a system state chosen from the admissible system states. For example, FIG. 5 illustrates a system state transition process of a wireless monitoring system, according to some embodiments of the present disclosure. The wireless monitoring system related to FIG. 5 can operate in different system states, where each system state corresponds to sounding signals at a different frequency.

In one embodiment, the wireless monitoring system of FIG. 5 may be utilized to monitor a wellness of a person, e.g. by performing daily activity, sleep monitoring, and/or fall detection. The wireless monitoring system may have a default state with a frequency of X1 Hz sounding signal, to search for motion or breathing activity. This default frequency is chosen to have a good performance, e.g. high enough detection rate, when no one is at home, or in a state where the system is expected to experience in most frequent situations.

When a triggering event happens, the system transfers from one state to another. For example, when a large motion is detected and certain criteria are met, the system changes its sounding signal frequency to X3 Hz to enter another state, where X3 > X1. In this new state, the system can standby to detect a fall event, in addition to motion and breathing detection. When certain time-out condition is met, e.g. after a predetermined period without a fall event detection, the system switches back to the default state with X1 Hz sounding signals.

When the system engine is at a sleep stage, the system can either stay at the default X1 Hz state or switch to a X2 Hz state, as shown in FIG. 5, where X2 > X1. The X1 Hz state enables the system to perform normal sleep monitoring with X1 Hz sounding signals, where a sleep apnea can only be detected when it lasts for more than a first time period T1. The X2 Hz state enables the system to perform normal sleep monitoring with X2 Hz sounding signals, where a sleep apnea can be detected whenever it lasts for more than a second time period T2, where T2 is shorter than T1. When a large motion or motion pattern is detected (e.g. rolling toward the edge of the bed), the system switches to the X3 Hz state to stand by for fall event from the bed, where X3 > X2.

In some embodiments, the system can use the X3 Hz sounding signal as a default and constant frequency, such that no frequency switch happens upon any triggering event. In case a triggering event happens, the system engine may just perform downsampling and use an X1 Hz component for motion and breathing detection.

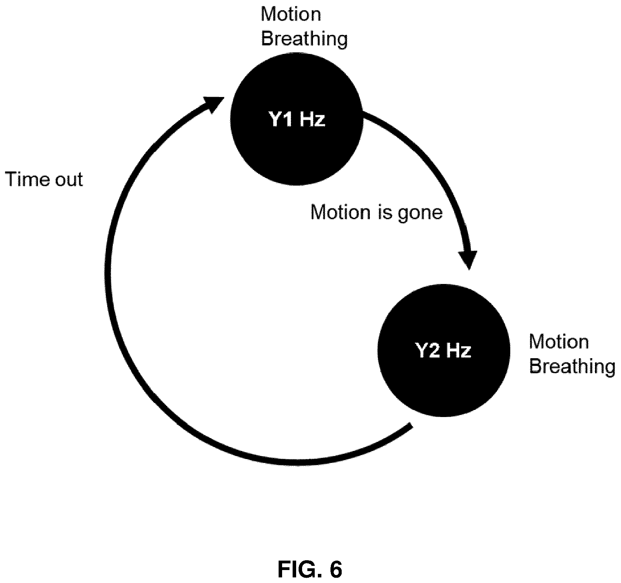

FIG. 6 illustrates another system state transition process of a wireless monitoring system, according to some embodiments of the present disclosure. The wireless monitoring system related to FIG. 6 can operate in different system states, where each system state corresponds to sounding signals at a different frequency. In one embodiment, the wireless monitoring system of FIG. 6 may be utilized to detect a presence of an object in a home or space, and/or monitor a motion of the object. For example, the system may be a home monitoring or public space monitoring system, to ensure security.

The system according to FIG. 6 may have a default state with a frequency of Y1 Hz sounding signal, to detect a motion in the space. An alert is sent from the system when a motion is detected. After the motion dies away, the system may stay at the Y1 Hz state for breathing detection or may switch to a Y2 Hz state for finer resolution or shorter no-breathing window, where Y2 > Y1. In one embodiment, the Y2 Hz state enables the system to performing wireless monitoring using a Y2 Hz sounding signal, to detect motions in a scenario when an intruder is trying not to move but intends to stay in that space, or when people stay in the mall, museum, or a public restroom after it closes its business of the day. When certain time-out condition is met, e.g. after a predetermined period without motion detection, the system switches back to the default state with Y1 Hz sounding signals.

In other embodiments, a system can be designed to alternate between multiple states, instead of having one single default state. For example, the system of FIG. 6 may stay in the Y1 Hz state for S1 seconds, then switch to the Y2 Hz state for S2 seconds, and then switch back to the Y1 Hz.

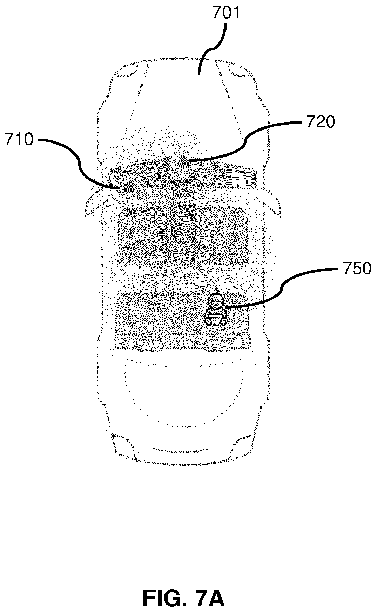

FIGS. 7A-7C illustrate different positions for a transmitter and a receiver in a vehicle wireless monitoring system, according to some embodiments of the present disclosure. As shown in FIG. 7A, a vehicle wireless monitoring system may be used to monitor and track an object (e.g. a baby or child 750) in the car 701. In the example shown in FIG. 7A, a wireless receiver of the vehicle wireless monitoring system may be placed at position 710 in front of a driver seat of the car 701. In some embodiments, the wireless receiver may serve as a smart car telematics monitor or a hub of other in-car devices. In some embodiments, the wireless receiver may include a processor or a wireless AI engine, and connect to a cloud server based on LTE or 5G.

In the example shown in FIG. 7A, a wireless transmitter of the vehicle wireless monitoring system may be placed at position 720, which may be located at the dashboard or front window of the car 701. In some embodiments, the wireless transmitter may serve as a high-quality car front dash cam to record a streaming video, e.g. upon a request from the wireless AI engine in the wireless receiver. In some embodiments, the wireless transmitter located at the position 720 may connect to the wireless receiver located at the position 710, and perform in-car wireless sensing based on Wi-Fi signals. In some embodiments, the wireless transmitter is plugged into a 12V outlet of the car 701 for charging. In some embodiments, the wireless transmitter is wired to a battery box of the car 701 for charging.

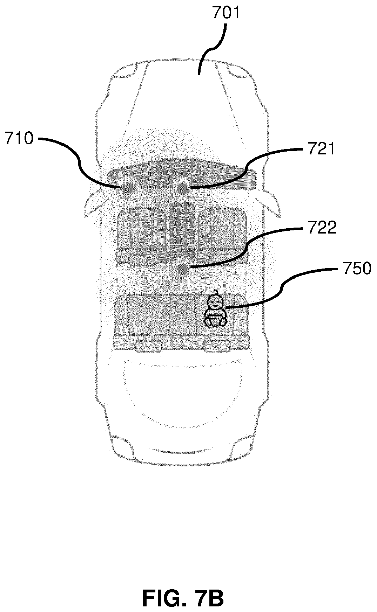

FIG. 7B illustrates other positions for transmitter and receiver in a vehicle wireless monitoring system, according to some embodiments of the present disclosure. In the example shown in FIG. 7B, while a wireless receiver of the vehicle wireless monitoring system is still placed at position 710 in front of the driver seat of the car 701, a wireless transmitter of the vehicle wireless monitoring system may be placed at position 721 or position 722, which may be located where a 12V outlet is available. When the wireless AI engine in the wireless receiver can only host one transmitter for Wi-Fi sensing, one of the position 721 and position 722 may be chosen to place the wireless transmitter. In some embodiments, the wireless transmitter in this case may be a high-speed USB-C charger that plugs into the car 12V outlet and has a battery in it. In some embodiments, the wireless transmitter located at the position 721 or position 722 may connect to the wireless receiver located at the position 710, and perform in-car wireless sensing and monitoring.

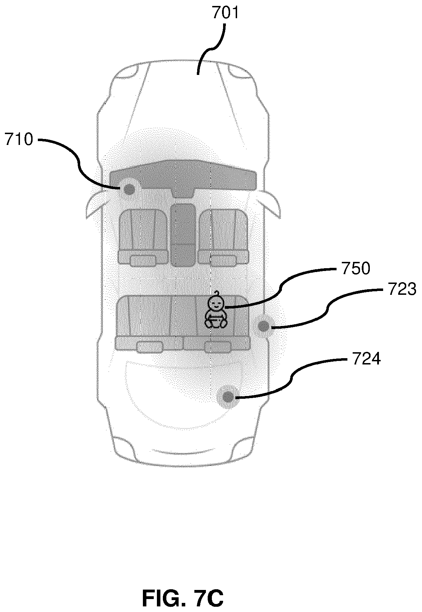

FIG. 7C illustrates yet other positions for transmitter and receiver in a vehicle wireless monitoring system, according to some embodiments of the present disclosure. In the example shown in FIG. 7C, while a wireless receiver of the vehicle wireless monitoring system is still placed at position 710 in front of the driver seat of the car 701, a wireless transmitter of the vehicle wireless monitoring system may be placed at position 723 or position 724, which may be located where the baby or child 750 is in the line-of-sight of the wireless transmitter and the wireless receiver. When the wireless AI engine in the wireless receiver can only host one transmitter for Wi-Fi sensing, one of the position 723 and position 724 may be chosen to place the wireless transmitter. In some embodiments, the wireless transmitter in this case may be a dedicated transmitter that has a battery therein and/or has a solar panel to recharge the transmitter. In some embodiments, the wireless transmitter is attached to the window of the car 701 by a suction cup. With the suction cup, the wireless transmitter can be attached to various and flexible locations of the car 701. In some embodiments, the wireless transmitter located at the position 723 or position 724 may connect to the wireless receiver located at the position 710, and perform in-car wireless sensing and monitoring. In some very rare case, a user may need to take down the wireless transmitter to recharge it through its USB port. In that case, the user will get a low-battery notification from the app on the transmitter.

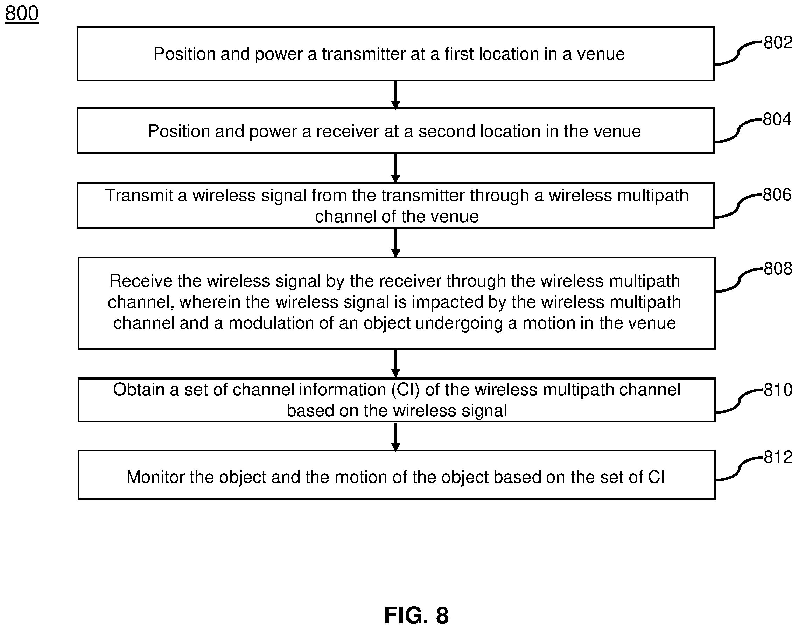

FIG. 8 illustrates a flow chart of an exemplary method 800 of a wireless monitoring system, according to some embodiments of the present teaching. At operation 802, a transmitter, e.g. on a Bot, of the wireless monitoring system is positioned and powered at a first location in a venue. At operation 804, a receiver, e.g. on an Origin, of the wireless monitoring system is positioned and powered at a second location in the venue. At operation 806, a wireless signal is transmitted from the transmitter through a wireless multipath channel of the venue. At operation 808, the wireless signal is received by the receiver through the wireless multipath channel. The wireless signal is impacted by the wireless multipath channel and a modulation of an object undergoing a motion in the venue. At operation 810, a set of channel information (CI) of the wireless multipath channel is obtained based on the wireless signal. At operation 812, the object and the motion of the object are monitored based on the set of CI. The order of the operations in FIG. 8 may be changed according to various embodiments of the present teaching.

In an example of a vehicle wireless monitoring system, a security function and a safety function may run at the same time. For security concern, the system may monitor the inside of a car via wireless sensing (or camera). For safety concern, the system may monitor the outside of a car via camera, radar, lidar, etc., when driving (in case of traffic accident) and when parked (in case of a hit and run). For safety concern, the system may monitor the car itself, e.g., by a sensor, a gyro, or an accelerometer, which is inside any of the transmitter or receiver of a wireless device. When being parked, the system may monitor the car to detect any event like: window smashed, break-in theft, hit and run, etc.

In another example, every time when the car is turned off, the system may perform WiFi sensing to see any motion or breathing signals to check if a child or a pet is left unintentionally. The system may send alert notification to the user if such an event is detected or go to a deep sleep mode. When the car is parked in the deep sleep mode, at an event of the car being hit by another car, or its window got smashed, the system may wake up again, perform WiFi sensing again to see if there's any break-in event. When the transmitter is a dash cam, it may also wake up and record a video for a time period. The idea can be extended to other wireless monitoring scenario in indoors.

In another example, smart devices such as smart speakers or virtual assistant artificial intelligence (AI) may be triggered by some event detected by the wireless monitoring system, such as by the Mimamori, or other well-being monitoring and security applications. For instance, Alexa may be triggered with a fall-down detection without anyone asking Alexa first. Below are some example scenarios when a smart speaker Alexa is triggered by wireless monitoring.

Scenario 1 (when motion is detected during security mode):

    1. Alexa: Hi Steve, is it you? Can you give me your three passwords?
    2a. Steve (who is the Home owner): Dog, Eat, Pizza.
    3a. Alexa: Welcome back home, Steve. I'll now enter into Mimamori mode.

Scenario 2 (when motion is detected during security mode):

    1. Alexa: Hi Steve, is it you? Can you give me your three passwords?
    2b. Intruder: what? I don't know. Open Sesame!
    3b. Alexa: Intruder! Intruder! I've taken your picture and sent it to the owner and CSP Security Center. Depart immediately! (also sends alert/photos to CSP and Steve)
    4b. Alexa: I see you're still there. You've now entered in the living room. I've called for the police. Depart immediately. (sends additional alert/photos to CSP and Steve)

Scenario 3 (in Mimamori mode, detects when Steve wakes up)

    1. Alexa: Good morning, Steve. Your sleeping score was 49 last night. Try to get some nap today. Would you like to hear today's news or weather first?

2a. Steve: Weather.
3a. Alexa: Today's weather is ....
2b. Steve: ...

Scenario 4 (no motion is detected for a while or a fall down is detected)

    3b. Alexa: Steve, are you feeling OK? Should I call for help?
    4b. Steve: (Quiet)
    5. Alexa: I've noticed your caregiver to call you. If you can't respond, she will be heading here. (activate surveillance camera)

Scenario 5 (a sudden motion is detected in a car)

    1. Alexa: Steve, what happened? Should I call 911 or a roadside assistance?
    2a. Steve: (Quiet for a while)
    3a. Alexa: You did not respond in time. To be safe, I will call 911 in ten seconds unless you say anything before that. Ten, Nine, Eight, Seven, Six, Five, Four, Three, Two, One, Calling 911.
    4a. Alexa: I've called 911. An ambulance is coming to help you. (activate surveillance camera)

Scenario 6 (a sudden motion is detected in a car)

    1. Alexa: Steve, what happened? Should I call 911 or a roadside assistance?
    2b. Steve: I am stuck in snow. I need roadside assistance.
    3b. Alexa: You said you want me to call for roadside assistance. Is that correct? Say Yes or No.
    4b. Steve: Yes.
    5b. Alexa: I've called for roadside assistance. A towing car is coming to help you. (activate surveillance camera)

Scenario 7 (a sudden motion is detected in a car)

    1. Alexa: Steve, what happened? Should I call 911 or a roadside assistance?
    2c. Steve: No, I am fine.
    3c. Alexa: You said you are fine. Is that correct? Say Yes or No.
    4c. Steve: Yes.
    5c. Alexa: I am very happy to know that. Have a safe driving, Steve.

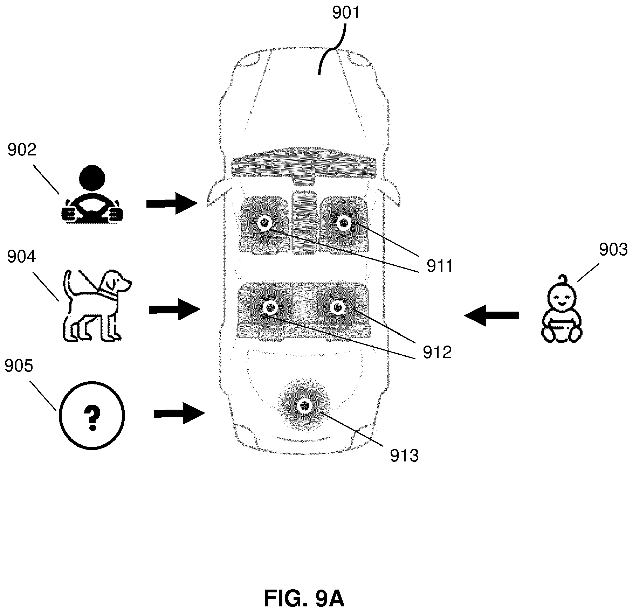

FIG. 9A illustrates an occupant awareness function of a vehicle wireless monitoring system, according to some embodiments of the present disclosure. As shown in FIG. 9A, a vehicle wireless monitoring system may be used to monitor and track an object related to a car 901. The object may be any one of: a driver 902 in the car 901, a baby or child 903 in the car 901, a pet 904 in the car 901, an unknown object 905 in the car 901, etc. For example, based on wireless signals transmitted between Bot(s) and Origin(s) of the vehicle wireless monitoring system, the system can identify a motion of an object in the car 901 (e.g. in the front seats 911, back seats 912, trunk 913 of the car 901), or a motion of an object in a proximity of the car 901. In one embodiment, the system can identify a motion, a gesture, and/or a breathing of a driver 902 at a front seat 911 in the car 901. In another embodiment, the system can identify a subtle motion and a breathing of a baby or child 903 at a back seat 912 in the car 901. In yet another embodiment, the system can identify a motion and a breathing of a dog 904 at a back seat 912 in the car 901. In a different embodiment, the system can identify a motion of an unknown object 905 within the trunk 913 of the car 901.

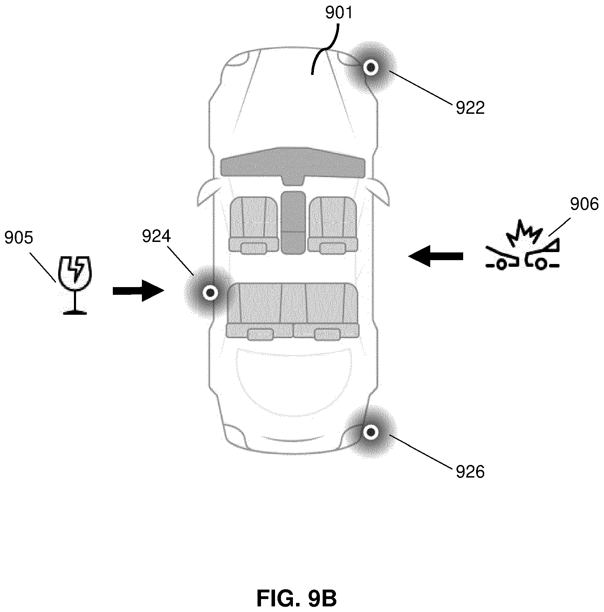

FIG. 9B illustrates a tampering awareness function of a vehicle wireless monitoring system, according to some embodiments of the present disclosure. As shown in FIG. 9B, a vehicle wireless monitoring system may be used to monitor and detect an event related to the car 901. The event may be any one of: a window breakage 905, a hit and run 906, or any other abnormal motion of the car 901. For example, based on wireless signals transmitted between Bot(s) and Origin(s) of the vehicle wireless monitoring system, the system can identify tampering, shaking, or other abnormal motions of the car 901, which may indicate an event or accident. In one embodiment, the system can detect a window breakage 905 at the back passenger side window 924 of the car 901. In another embodiment, the system can detect a hit and run event 906, based on a detection of an abnormal tampering or motion at the front corner 922 and/or the back corner 926 of the car 901.

In some embodiments, an Origin of the vehicle wireless monitoring system may be a wireless receiver serving as a smart car telematics monitor or a hub of other in-car devices. In some embodiments, the wireless receiver may include a processor or a wireless AI engine, and connect to a cloud server based on LTE or 5G. In some embodiments, a Bot of the vehicle wireless monitoring system may be a wireless transmitter serving as a high-quality car front dash cam to record a streaming video, e.g. upon a request from the wireless AI engine in the wireless receiver. In some embodiments, a Bot of the vehicle wireless monitoring system may be a high-speed USB-C charger that plugs into the car 12V outlet and has a battery in it. In some embodiments, a Bot of the vehicle wireless monitoring system may be a dedicated transmitter that has a battery therein and/or has a solar panel to recharge the transmitter. In some embodiments, the wireless transmitter is attached to a window of the car 901 by a suction cup. In some embodiments, the wireless transmitter is wirelessly connected to the wireless receiver to perform in-car wireless sensing and monitoring.

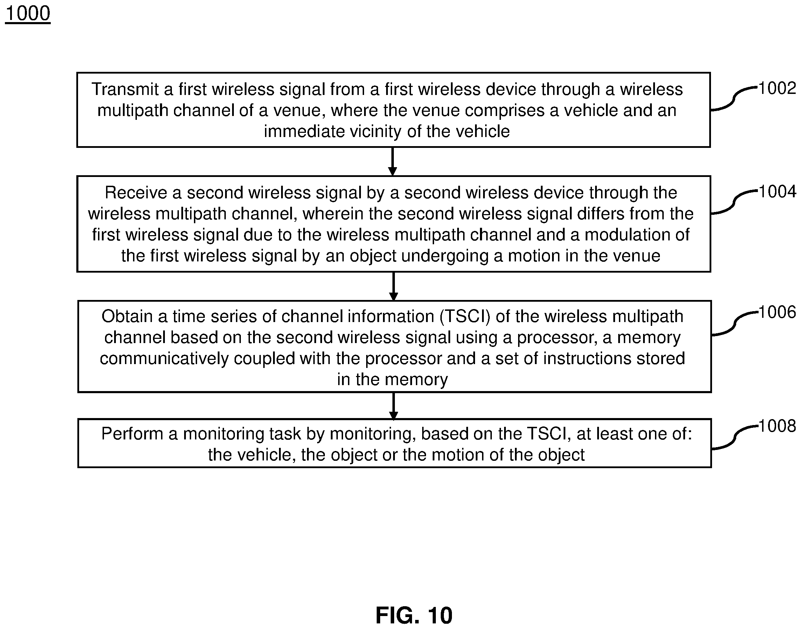

FIG. 10 illustrates a flow chart of an exemplary method 1000 of a vehicle wireless monitoring system, according to some embodiments of the present teaching. At operation 1002, a first wireless signal is transmitted from a first wireless device through a wireless multipath channel of a venue. The venue comprises a vehicle and an immediate vicinity of the vehicle. For example, the venue comprises a neighborhood area around the vehicle, where a motion of an object can impact a wireless signal transmitted from a Bot to an Origin of the vehicle wireless monitoring system. This ensures detection and monitoring of any object or event near the vehicle, as well as inside the vehicle. At operation 1004, a second wireless signal is received by a second wireless device through the wireless multipath channel. The second wireless signal differs from the first wireless signal due to the wireless multipath channel and a modulation of the first wireless signal by an object undergoing a motion in the venue. At operation 1006, a time series of channel information (TSCI) of the wireless multipath channel is obtained based on the second wireless signal using a processor, a memory communicatively coupled with the processor and a set of instructions stored in the memory. At operation 1008, a monitoring task is performed by monitoring, based on the TSCI, at least one of: the vehicle, the object or the motion of the object. The order of the operations in FIG. 10 may be changed according to various embodiments of the present teaching.

In one embodiment, each time when a car is turned off, a vehicle wireless monitoring system, e.g. a CPD system, will perform WiFi sensing to see any motion or breathing signals in the car. In most cases, this performs a double-checking to determine whether a child or a pet is left unintentionally in the car. The system sends an alert notification to the user if such or similar event is detected. Then the system goes to a deep sleep mode.

In another embodiment, when the car is parked and when the system is in the deep sleep mode, an accident or an event may happen. For example, at an event of the car being hit by another car, or its window gets smashed, the system will automatically wake up again. The system performs WiFi sensing again to see if there is any break-in event. If the Bot or the Origin is connected to or coupled to a camera (e.g. a dash camera or monitor) of the car, the camera will also wake up to record a video for a predetermined time period, e.g. 10 seconds. The system will send an alert notification to the user if such event is detected. Then the system goes to a deep sleep mode again.

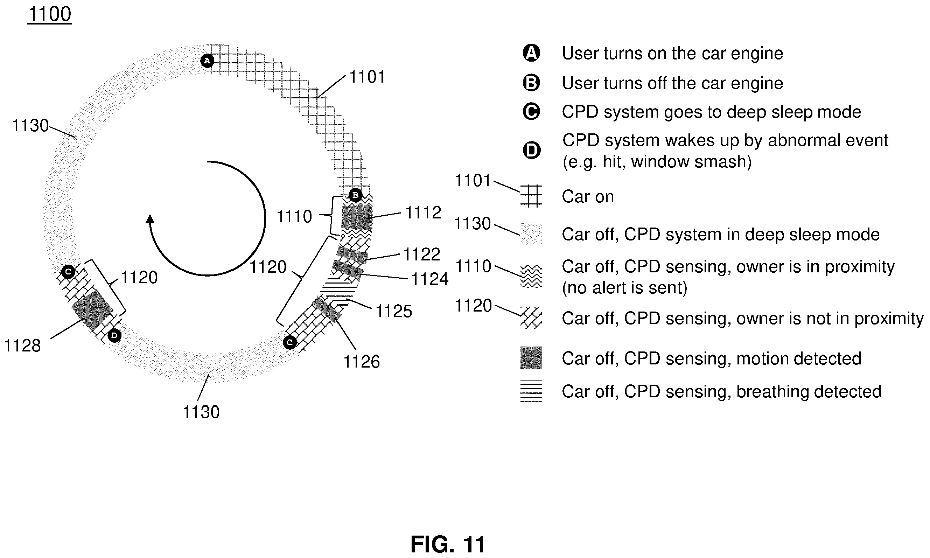

FIG. 11 illustrates an exemplary state flow 1100 of a vehicle wireless monitoring system, e.g. a car presence detection (CPD) system, according to some embodiments of the present teaching. For example, at phase point A, the user turns on the car engine to start the car, and the user turns off the car engine to stop the car at phase point B. As such, the car is on from phase point A to phase point B; and the car is off from phase point B to next phase point A. When the car is on, the vehicle wireless monitoring system may be in a car-on state 1101 to detect any abnormal motion in the trunk or outside the car. When the car is off, the vehicle wireless monitoring system may enter different states in various scenarios. While the CPD system usually performs the car presence detection as to be discussed below after the car engine is turned off, the CPD system may also perform the car presence detection before the car engine is turned off in some embodiments.

In the example shown in FIG. 11, at phase point B, the vehicle wireless monitoring system enters a first state 1110 to perform CPD sensing, when the car is off but the user (owner or driver) is still in proximity of the car. During the first state 1110, even if a motion 1112 is detected, the system will not send the user any alert. This sensing but no alert state 1110 may last for a predetermined time period, or until the motion level inside and/or around the car is below a predetermined threshold. The time period and threshold may also be dynamically adjusted based on number or frequency of events detected during the state 1110.

Then, the system enters a second state 1120 to perform CPD sensing, when the car is off and the user (owner or driver) is not in proximity of the car. During the second state 1120, for each motion 1122, 1124, 1126 being detected, the system will send the user an alert; and for any breathing 1125 being detected, the system will also send the user an alert. This sensing with alert state 1120 may last for a predetermined time period, or until the motion level inside and/or around the car is below a predetermined threshold. The time period and threshold may also be dynamically adjusted based on number or frequency of events detected during the state 1120.

Then, the system enters a third state 1130 at phase point C, where the car is off and the CPD system goes into a deep sleep mode. During the third state 1130, the CPD system may be woken up, e.g. at phase point D, by an abnormal event, e.g. a hit, a window smash, etc., to again enter the second state 1120 to perform CPD sensing with alert, when the car is off and the user (owner or driver) is not in proximity of the car. In this case, for a motion 1128 being detected, the system will send the user an alert during the second state 1120. Then again, the system enters the third state 1130 at phase point C, where the car is off and the CPD system goes into a deep sleep mode again. Finally, when the user turns on the car engine again, the system enters the car-on state 1101 again.

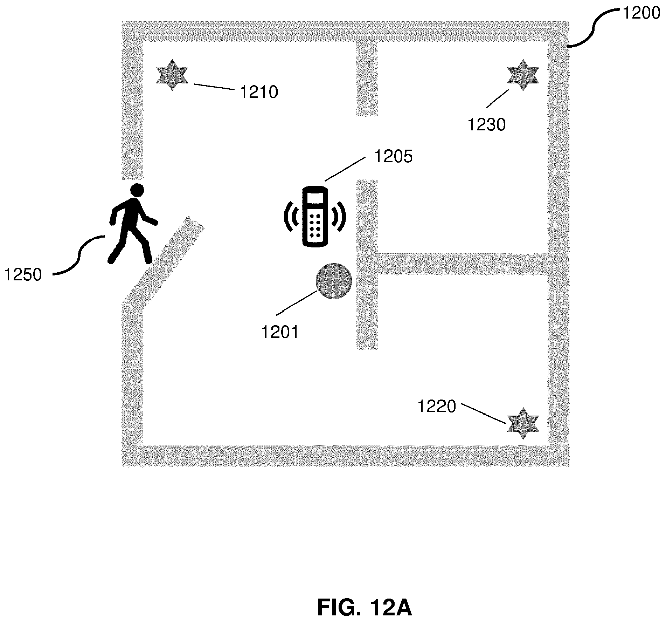

FIG. 12A illustrates an exemplary function of an automatic assistant system, according to some embodiments of the present disclosure. As shown in FIG. 12A, an automatic assistant system may be used to detect and monitor a person entering a house 1200. The person may be any one of: an illegitimate user like intruder or thief, a legitimate user like the house owner or house resident. For example, based on wireless signals transmitted between Bots 1210, 1220, 1230 and Origin 1201 of the automatic assistant system, the system can identify a motion of an object 1250 entering the house 1200. In one embodiment, the system includes an assistance device 1205 communicatively coupled to the Origin 1201. The assistance device 1205 may or may not be physically coupled to the Origin 1201.

Based on the detection and/or monitoring of the object motion, the assistance device 1205 can try to communicate with the object (person 1250), and/or automatically generate an assistance based on the communication (or attempt of communication, same below). In one example, after the assistance device 1205 determines that the person 1250 is the house owner based on the communication, the assistance device 1205 may turn on light in the house automatically. In another example, after the assistance device 1205 determines that the person 1250 is an intruder based on the communication, the assistance device 1205 may turn on an alarm and/or call 911 or other predetermined numbers automatically for help.

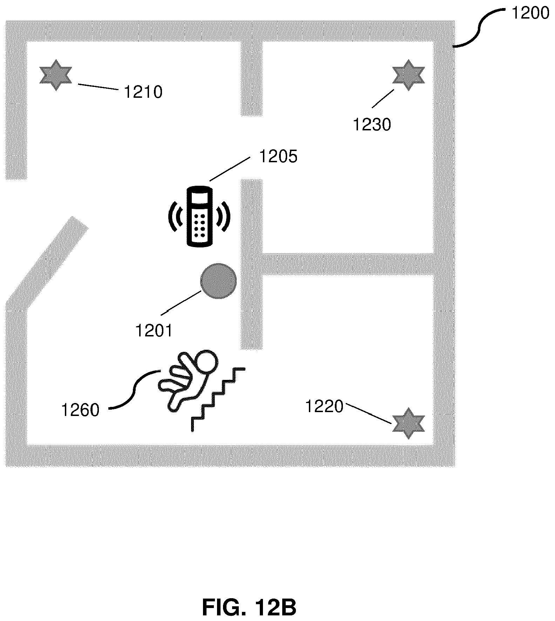

FIG. 12B illustrates another exemplary function of an automatic assistant system, according to some embodiments of the present disclosure. As shown in FIG. 12B, the automatic assistant system may also be used to detect and monitor a person's sudden motion, e.g. a fall down, in the house 1200. The person 1260 may be the house owner or a house resident. For example, based on wireless signals transmitted between Bots 1210, 1220, 1230 and Origin 1201 of the automatic assistant system, the system can identify a fall down of the person 1260. Based on the detection of the fall down, the assistance device 1205 can try to communicate with the person 1260, and/or automatically generate an assistance based on the communication. In one example, after the assistance device 1205 determines that the person 1260 does not need help based on the communication, the assistance device 1205 may turn on more light or adjust temperature of the house based on a predetermined configuration. In another example, after the assistance device 1205 determines that the person 1260 has fainted and/or needs help immediately based on the communication, the assistance device 1205 may call 911 or other predetermined numbers automatically for help.

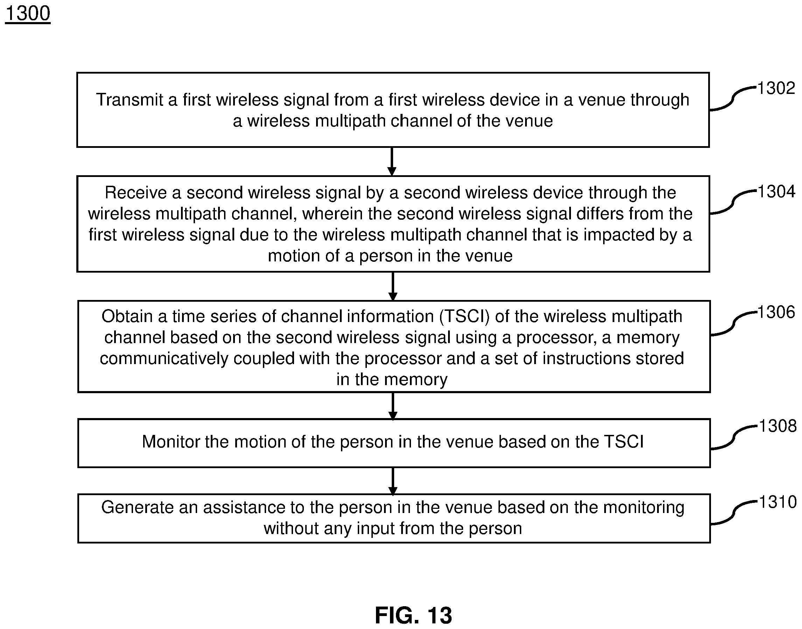

FIG. 13 illustrates a flow chart of an exemplary method 1300 for triggering an assistance device based on wireless monitoring, according to some embodiments of the present teaching. At operation 1302, a first wireless signal is transmitted from a first wireless device in a venue through a wireless multipath channel of the venue. At operation 1304, a second wireless signal is received by a second wireless device through the wireless multipath channel. The second wireless signal differs from the first wireless signal due to the wireless multipath channel that is impacted by a motion of a person in the venue. At operation 1306, a time series of channel information (TSCI) of the wireless multipath channel is obtained based on the second wireless signal using a processor, a memory communicatively coupled with the processor and a set of instructions stored in the memory. At operation 1308, the motion of the person in the venue is monitored based on the TSCI. At operation 1310, an assistance to the person in the venue is generated based on the monitoring without any input from the person. The order of the operations in FIG. 13 may be changed according to various embodiments of the present teaching.

In one example, smart devices such as smart speakers or virtual assistant artificial intelligence (AI) may be triggered by some event detected by the wireless monitoring system disclosed herein. In one embodiment, the wireless monitoring system may include Origin Wireless's Mimamori, or other well-being monitoring and security applications.

In some embodiments, the wireless monitoring system may be integrated into a smart speaker, e.g. Amazon Echo or Amazon Alexa. In some embodiments, motion monitoring may be a skill of the smart speaker in collaboration with the wireless monitoring system. The wireless monitoring system may monitor the motion and communicate analytics to the smart speaker directly. In some embodiments, the wireless monitoring system may monitor the motion and send level-1 analytics to a device, which may be a local device or a cloud device that will perform additional processing and send some level-2 analytics to the smart speaker.

In some embodiments, a user may give verbal commands to the smart speaker, which will forward the commands to the wireless monitoring system. The wireless monitoring system may use wireless sensing to monitor the user's motion and to refine the user's commands. The wireless monitoring system may also adjust system parameters or do a supplementary action, e.g. "change volume", "play next song", "repeat current song", "turn on the light", based on the detected user motion.

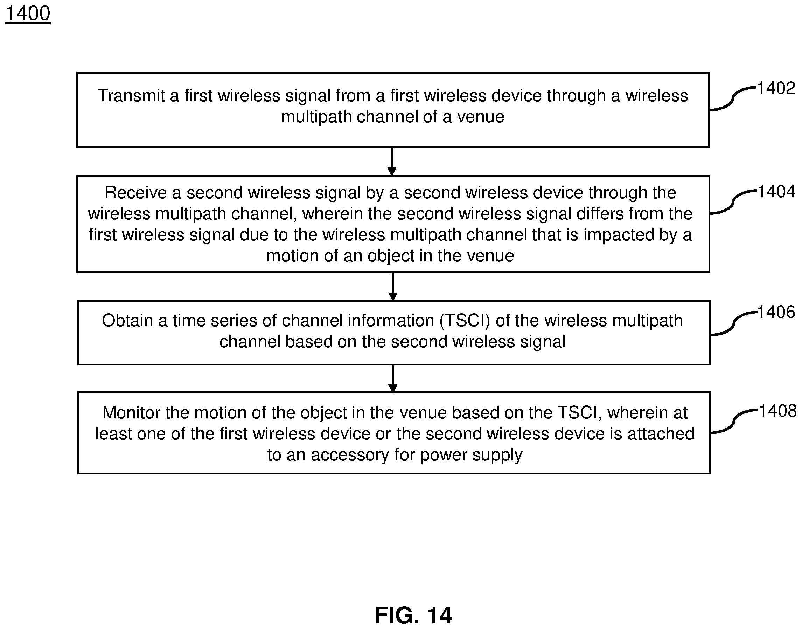

FIG. 14 illustrates a flow chart of an exemplary method 1400 for wireless monitoring with flexible power supply, according to some embodiments of the present teaching. At operation 1402, a first wireless signal is transmitted from a first wireless device through a wireless multipath channel of a venue. At operation 1404, a second wireless signal is received by a second wireless device through the wireless multipath channel. The second wireless signal differs from the first wireless signal due to the wireless multipath channel that is impacted by a motion of an object in the venue. At operation 1406, a time series of channel information (TSCI) of the wireless multipath channel is obtained based on the second wireless signal, e.g. using a processor, a memory communicatively coupled with the processor and a set of instructions stored in the memory. At operation 1408, the motion of the object in the venue is monitored based on the TSCI, where at least one of the first wireless device or the second wireless device is attached to an accessory for power supply. The order of the operations in FIG. 14 may be changed according to various embodiments of the present teaching.

Some embodiments are related to design/plug/stand/transformer/accessories of Type 1 and Type 2 devices. In one embodiment, a Type 1 or Type 2 device is a desk-top design (rest on a surface, with power cord) or a plug-in design (with built-in plug, transformer). In one embodiment, there is an accessory (no power) to help the desk-top design to be mounted on wall. There is no electrical connection to the Type 1 or Type 2 device. The accessory has power - transformer, prong, and a connector to the Type 1 or Type 2 device. In another embodiment, the Type 1 or Type 2 device has an integrated (or convertible) design such that it can sit on desk-top and can plug into wall power socket. It has retractable prongs, built-in transform, and a socket for a power cable (power cable to connect to wall power socket). In another embodiment, the Type 1 or Type 2 device has interchanging plug (with international plug/pin configurations).

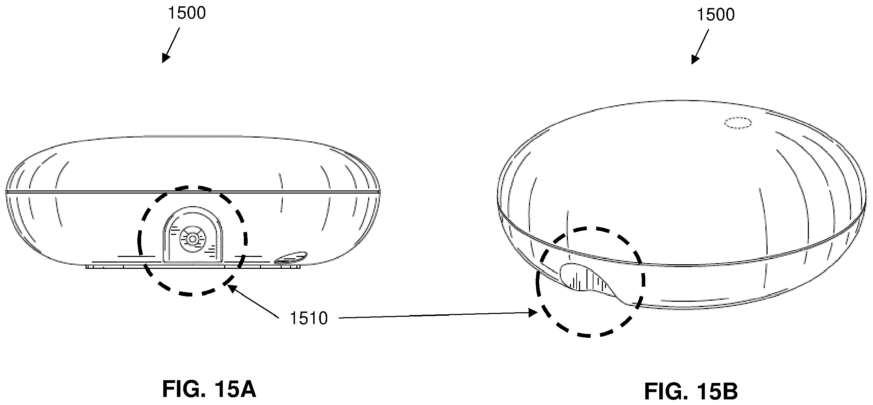

FIG. 15A and FIG. 15B illustrate an exemplary device 1500 with a power supply design, according to some embodiments of the present teaching. The device 1500 shown in FIG. 15A and FIG. 15B corresponds to a desk-top design for a Type 1 or Type 2 device. That is, the device 1500 can be either a Bot or an Origin. The device 1500 can rest on a surface like a desk-top, and has an interface 1510 to be connected to a power cord for power supply.

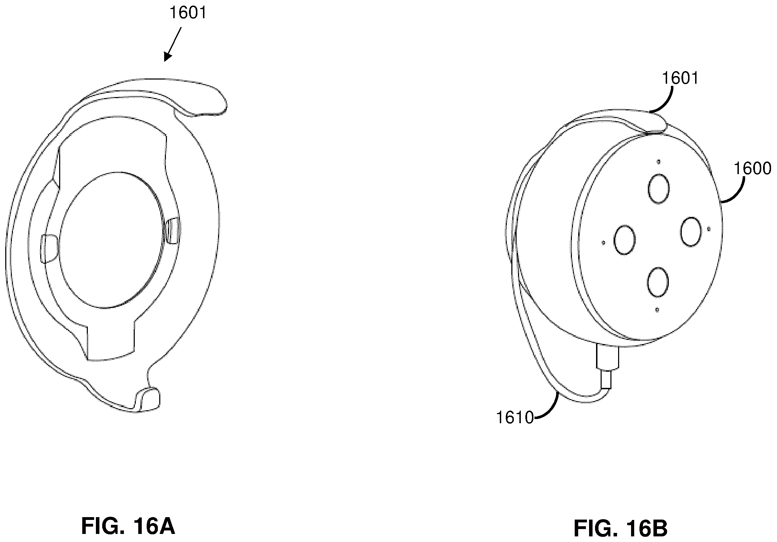

FIG. 16A illustrates an exemplary accessory 1601 for mounting a device on a wall, according to some embodiments of the present teaching. FIG. 16B illustrates an exemplary device 1600 coupled to the accessory 1601 shown in FIG. 16A, according to some embodiments of the present teaching. In some embodiments, the device 1600 may correspond to a desk-top design for a Type 1 or Type 2 device, i.e. either a Bot or an Origin. In some embodiments, the device 1600 corresponds to an intelligent virtual assistant (IVA) or an intelligent personal assistant (IPA), like a smart speaker, that comprises a Bot or an Origin.

The accessory 1601 in this embodiment can help the desk-top design 1600 to be mounted on a wall. The accessory 1601 does not provide any power and has no power supply interface. As such, the accessory 1601 has no electrical connection to the device 1600. As shown in FIG. 16B, the device 1600 may be powered via a power cord 1610.

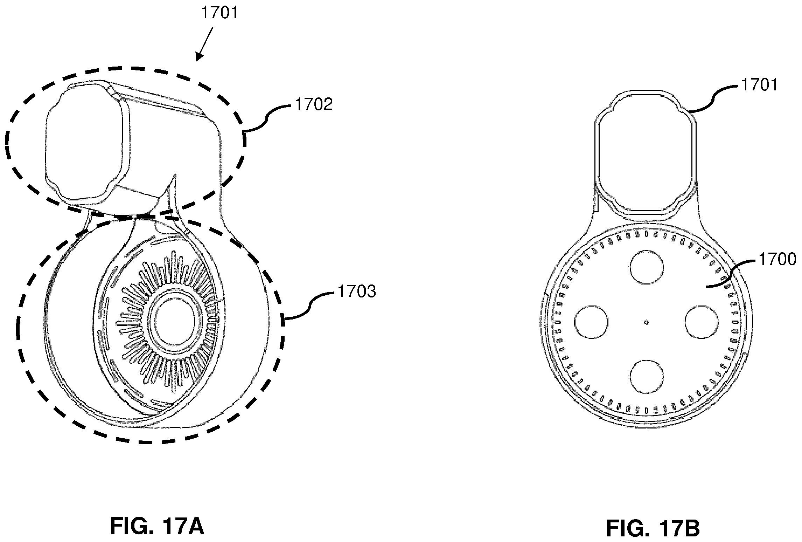

FIG. 17A illustrates an exemplary accessory 1701 for mounting and connecting a device to a power socket, according to some embodiments of the present teaching. FIG. 17B illustrates an exemplary device 1700 coupled to the accessory 1701 shown in FIG. 17A, according to some embodiments of the present teaching. In some embodiments, the device 1700 may correspond to a desk-top design for a Type 1 or Type 2 device, i.e. either a Bot or an Origin. In some embodiments, the device 1700 corresponds to an intelligent virtual assistant (IVA) or an intelligent personal assistant (IPA), like a smart speaker, that comprises a Bot or an Origin.

The accessory 1701 in this embodiment includes a function portion 1702 and a frame portion 1703. While the frame portion 1703 can fit and hold a device, e.g. the device 1700, the portion 1702 may contain: power plugs or prongs to plug into a power socket for power supply, a built-in power transformer, and/or a connector to electrically connect the device to the power socket, for supplying power to the device.

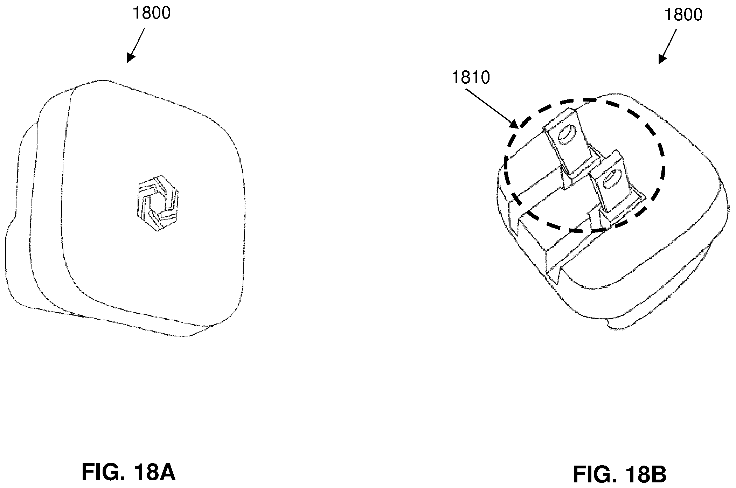

FIG. 18A and FIG. 18B illustrate another exemplary device 1800 with a power supply design, according to some embodiments of the present teaching. The device 1800 shown in FIG. 18A and FIG. 18B corresponds to a plug-in design for a Type 1 or Type 2 device. That is, the device 1800 can be either a Bot or an Origin. The device 1800 can be plugged into a socket, e.g. a wall socket, via the plugs 1810 for power supply. As shown in FIG. 18B, since the plugs 1810 are foldable, the device 1800 can be converted to a desk-top design to rest on a surface as well. In some embodiments, the device 1800 includes both a built-in plug and a power transformer.

In some embodiments, a Type 1 or Type 2 device can have an integrated or convertible design such that it can both sit on a surface and plug into a wall power socket. It may have retractable prongs, a built-in power transformer, and an interface for a power cable to connect to a wall power socket. That is, the Type 1 or Type 2 device can be utilized as either a plug-in design or a desk-top design.

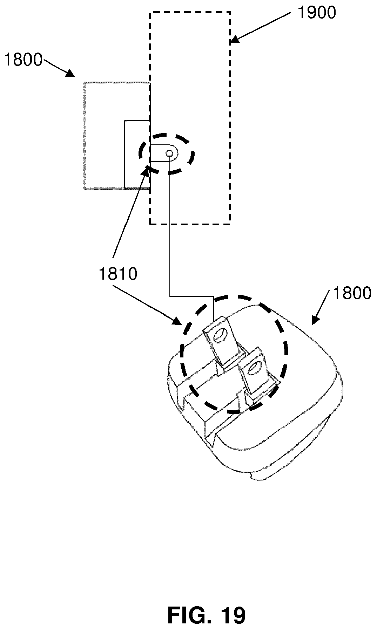

FIG. 19 illustrates a scenario when an integrated or convertible device 1800 is utilized as a plug-in design, according to some embodiments of the present teaching. As shown in FIG. 19, when being utilized as a plug-in design, the prongs or pins 1810 of the device 1800 are unfolded and extending into a socket on a wall 1900 for power supply to the device 1800. There is no need for the device 1800 to have any cable accessory in this scenario, to form an Origin or a Bot.

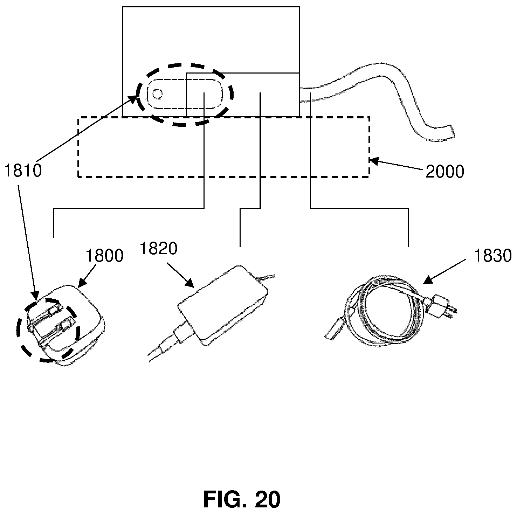

FIG. 20 illustrates a scenario when an integrated or convertible device 1800 is utilized as a desk-top design, according to some embodiments of the present teaching. As shown in FIG. 20, when being utilized as a desk-top design, the prongs or pins 1810 of the device 1800 are folded back in the device 1800 and unused. The device 1800 is sitting on a desk 2000, and being powered by a cable accessory including e.g. an AC/DC adapter 1820 and a power cable 1830. In this scenario, the device 1800, together with the AC/DC adapter 1820 and the power cable 1830 forms an Origin or a Bot.

In some embodiments, to prevent a scenario that both the pins 1810 and the power cable 1830 are inserted to power outlets, a mechanism may be configured to set one of the power inputs to have a higher priority. As such, when both the pins 1810 and the power cable 1830 are inserted or plugged in, the power input with the higher priority (e.g. the pins 1810) can trigger a block, to prevent the other power input (e.g. the power cable 1830) to be electrically connected for double charging.

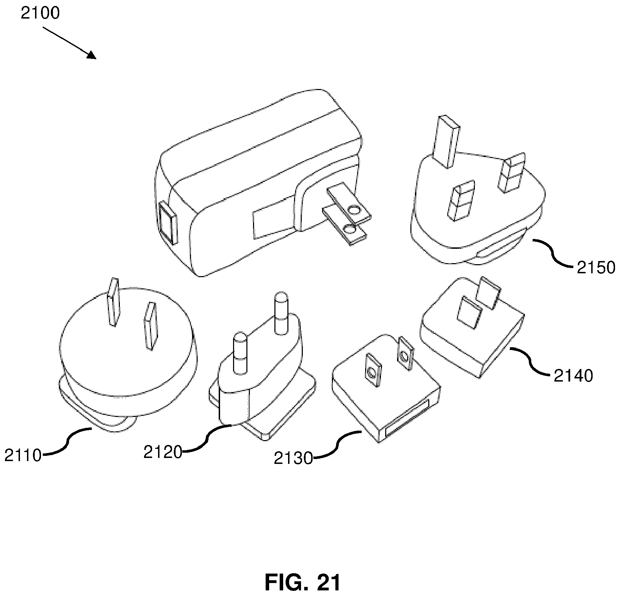

FIG. 21 illustrates an exemplary device 2100 with interchanging plugs for power supply, according to some embodiments of the present teaching. The device 2100 shown in FIG. 21 corresponds to a plug-in design for a Type 1 or Type 2 device. That is, the device 2100 can be either a Bot or an Origin. As shown in FIG. 21, the plugs of the device 2100 can be changed to any of other plug/pin configurations 2110, 2120, 2130, 2140, 2150, to fit different sockets for power supply.

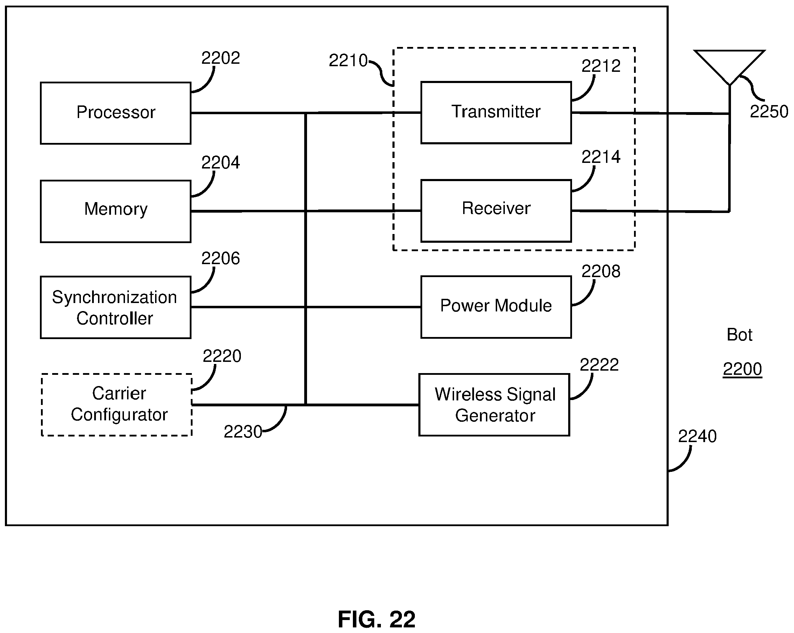

FIG. 22 illustrates an exemplary block diagram of a first wireless device, e.g. a Bot 2200, of a wireless monitoring system, according to one embodiment of the present teaching. The Bot 2200 is an example of a device that can be configured to implement the various methods described herein. As shown in FIG. 22, the Bot 2200 includes a housing 2240 containing a processor 2202, a memory 2204, a transceiver 2210 comprising a transmitter 2212 and receiver 2214, a synchronization controller 2206, a power module 2208, an optional carrier configurator 2220 and a wireless signal generator 2222.

In this embodiment, the processor 2202 controls the general operation of the Bot 2200 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 2204, which can include both read-only memory (ROM) and random access memory (RAM), can provide instructions and data to the processor 2202. A portion of the memory 2204 can also include non-volatile random access memory (NVRAM). The processor 2202 typically performs logical and arithmetic operations based on program instructions stored within the memory 2204. The instructions (a.k.a., software) stored in the memory 2204 can be executed by the processor 2202 to perform the methods described herein. The processor 2202 and the memory 2204 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 2210, which includes the transmitter 2212 and receiver 2214, allows the Bot 2200 to transmit and receive data to and from a remote device (e.g., an Origin or another Bot). An antenna 2250 is typically attached to the housing 2240 and electrically coupled to the transceiver 2210. In various embodiments, the Bot 2200 includes (not shown) multiple transmitters, multiple receivers, and multiple transceivers. In one embodiment, the antenna 2250 is replaced with a multi-antenna array 2250 that can form a plurality of beams each of which points in a distinct direction. The transmitter 2212 can be configured to wirelessly transmit signals having different types or functions, such signals being generated by the processor 2202. Similarly, the receiver 2214 is configured to receive wireless signals having different types or functions, and the processor 2202 is configured to process signals of a plurality of different types.

The Bot 2200 in this example may serve as Bot 1 110 or Bot 2 120 in FIG. 1 for detecting object motion in a venue. For example, the wireless signal generator 2222 may generate and transmit, via the transmitter 2212, a wireless signal through a wireless multipath channel impacted by a motion of an object in the venue. The wireless signal carries information of the channel. Because the channel was impacted by the motion, the channel information includes motion information that can represent the motion of the object. As such, the motion can be indicated and detected based on the wireless signal. The generation of the wireless signal at the wireless signal generator 2222 may be based on a request for motion detection from another device, e.g. an Origin, or based on a system pre-configuration. That is, the Bot 2200 may or may not know that the wireless signal transmitted will be used to detect motion.

The synchronization controller 2206 in this example may be configured to control the operations of the Bot 2200 to be synchronized or un-synchronized with another device, e.g. an Origin or another Bot. In one embodiment, the synchronization controller 2206 may control the Bot 2200 to be synchronized with an Origin that receives the wireless signal transmitted by the Bot 2200. In another embodiment, the synchronization controller 2206 may control the Bot 2200 to transmit the wireless signal asynchronously with other Bots. In another embodiment, each of the Bot 2200 and other Bots may transmit the wireless signals individually and asynchronously.

The carrier configurator 2220 is an optional component in Bot 2200 to configure transmission resources, e.g. time and carrier, for transmitting the wireless signal generated by the wireless signal generator 2222. In one embodiment, each CI of the time series of CI has one or more components each corresponding to a carrier or sub-carrier of the transmission of the wireless signal. The detection of the motion may be based on motion detections on any one or any combination of the components.

The power module 2208 can include a power source such as one or more batteries, and a power regulator, to provide regulated power to each of the above-described modules in FIG. 22. In some embodiments, if the Bot 2200 is coupled to a dedicated external power source (e.g., a wall electrical outlet), the power module 2208 can include a transformer and a power regulator.

The various modules discussed above are coupled together by a bus system 2230. The bus system 2230 can include a data bus and, for example, a power bus, a control signal bus, and/or a status signal bus in addition to the data bus. It is understood that the modules of the Bot 2200 can be operatively coupled to one another using any suitable techniques and mediums.

Although a number of separate modules or components are illustrated in FIG. 22, persons of ordinary skill in the art will understand that one or more of the modules can be combined or commonly implemented. For example, the processor 2202 can implement not only the functionality described above with respect to the processor 2202, but also implement the functionality described above with respect to the wireless signal generator 2222. Conversely, each of the modules illustrated in FIG. 22 can be implemented using a plurality of separate components or elements.

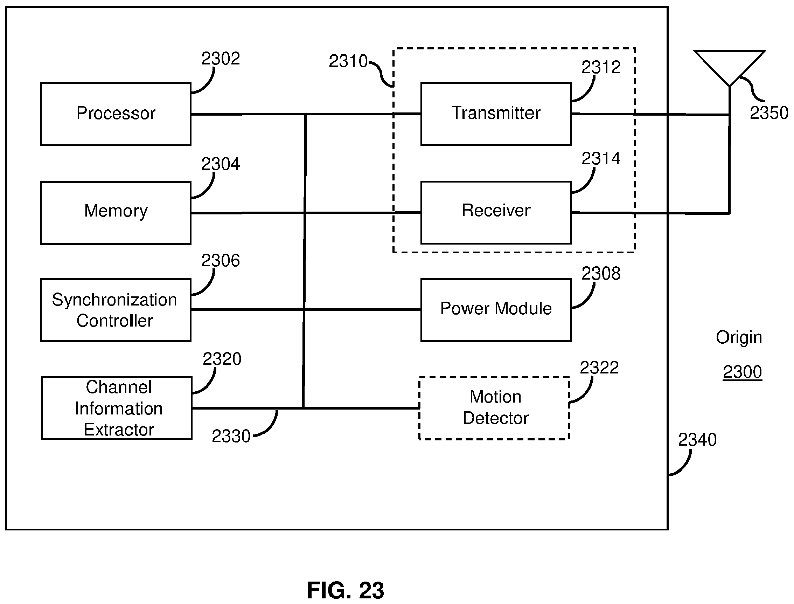

FIG. 23 illustrates an exemplary block diagram of a second wireless device, e.g. an Origin 2300, of a wireless monitoring system, according to one embodiment of the present teaching. The Origin 2300 is an example of a device that can be configured to implement the various methods described herein. The Origin 2300 in this example may serve as Origin 101 in FIG. 1 for detecting object motion in a venue. As shown in FIG. 23, the Origin 2300 includes a housing 2340 containing a processor 2302, a memory 2304, a transceiver 2310 comprising a transmitter 2312 and a receiver 2314, a power module 2308, a synchronization controller 2306, a channel information extractor 2320, and an optional motion detector 2322.

In this embodiment, the processor 2302, the memory 2304, the transceiver 2310 and the power module 2308 work similarly to the processor 302, the memory 304, the transceiver 310 and the power module 308 in the Bot 2200. An antenna 2350 or a multi-antenna array 2350 is typically attached to the housing 2340 and electrically coupled to the transceiver 2310.

The Origin 2300 may be a second wireless device that has a different type from that of the first wireless device (e.g. the Bot 2200). In particular, the channel information extractor 2320 in the Origin 2300 is configured for receiving the wireless signal through the wireless multipath channel impacted by the motion of the object in the venue, and obtaining a time series of channel information (CI) of the wireless multipath channel based on the wireless signal. The channel information extractor 2320 may send the extracted CI to the optional motion detector 2322 or to a motion detector outside the Origin 2300 for detecting object motion in the venue.

The motion detector 2322 is an optional component in the Origin 2300. In one embodiment, it is within the Origin 2300 as shown in FIG. 23. In another embodiment, it is outside the Origin 2300 and in another device, which may be a Bot, another Origin, a cloud server, a fog server, a local server, and an edge server. The optional motion detector 2322 may be configured for detecting the motion of the object in the venue based on motion information related to the motion of the object. The motion information associated with the first and second wireless devices is computed based on the time series of CI by the motion detector 2322 or another motion detector outside the Origin 2300.

The synchronization controller 2306 in this example may be configured to control the operations of the Origin 2300 to be synchronized or un-synchronized with another device, e.g. a Bot, another Origin, or an independent motion detector. In one embodiment, the synchronization controller 2306 may control the Origin 2300 to be synchronized with a Bot that transmits a wireless signal. In another embodiment, the synchronization controller 2306 may control the Origin 2300 to receive the wireless signal asynchronously with other Origins. In another embodiment, each of the Origin 2300 and other Origins may receive the wireless signals individually and asynchronously. In one embodiment, the optional motion detector 2322 or a motion detector outside the Origin 2300 is configured for asynchronously computing respective heterogeneous motion information related to the motion of the object based on the respective time series of CI.

The various modules discussed above are coupled together by a bus system 2330. The bus system 2330 can include a data bus and, for example, a power bus, a control signal bus, and/or a status signal bus in addition to the data bus. It is understood that the modules of the Origin 2300 can be operatively coupled to one another using any suitable techniques and mediums.

Although a number of separate modules or components are illustrated in FIG. 23, persons of ordinary skill in the art will understand that one or more of the modules can be combined or commonly implemented. For example, the processor 2302 can implement not only the functionality described above with respect to the processor 2302, but also implement the functionality described above with respect to the channel information extractor 2320. Conversely, each of the modules illustrated in FIG. 23 can be implemented using a plurality of separate components or elements.

In one embodiment, in addition to the Bot 2200 and the Origin 2300, the system may also comprise: a third wireless device, e.g. another Bot, configured for transmitting an additional heterogeneous wireless signal through an additional wireless multipath channel impacted by the motion of the object in the venue, and a fourth wireless device, e.g. another Origin, that has a different type from that of the third wireless device. The fourth wireless device may be configured for: receiving the additional heterogeneous wireless signal through the additional wireless multipath channel impacted by the motion of the object in the venue, and obtaining a time series of additional channel information (CI) of the additional wireless multipath channel based on the additional heterogeneous wireless signal. The additional CI of the additional wireless multipath channel is associated with a different protocol or configuration from that associated with the CI of the wireless multipath channel. For example, the wireless multipath channel is associated with LTE, while the additional wireless multipath channel is associated with Wi-Fi. In this case, the optional motion detector 2322 or a motion detector outside the Origin 2300 is configured for detecting the motion of the object in the venue based on both the motion information associated with the first and second wireless devices and additional motion information associated with the third and fourth wireless devices computed by at least one of: an additional motion detector and the fourth wireless device based on the time series of additional CI.

In some embodiments, the present teaching discloses how to qualify a wireless system for achieving wireless sensing and how to distribute wireless sensing capability of IoT in a wireless mesh network (WMN).

An example of wireless sensing system is one that utilizes WiFi channel state information (CSI), as WiFi is one of the most popular wireless technologies in nowadays. An 802.11 sensing, or WiFi sensing, is the use of 802.11 signals to sense (e.g. detect) events/changes in the environment. It can be utilized with signal processing and machine learning.

In one embodiment, a wireless transmitter (Tx) transmits an 802.11 signal to a wireless receiver (Rx) in a multipath-rich venue. The 802.11 signal bounces back and forth in the venue generating lots of multipaths. Although undesirable to communications, the bouncing of the 802.11 signal effectively "scan" or "sense" the venue. By monitoring the multipaths (e.g. through CSI), the disclosed system can detect target events and changes in the venue. This disclosed motion detection method does not require a line-of-sight (LOS) between the transmitter and the receiver, and can work in both LOS and Non-LOS (NLOS) situations. In most cases, the transmitter and the receiver are not required to be a wearable device. This provides new functionalities for 802.11-enabled devices (e.g. TV, speaker, router, IoT devices) and facilities (stadiums, halls, rooms, warehouse, factory); and provides new industry-wide business opportunities for all 802.11 related companies (components/ devices/services). The disclosed system does not need any dedicated hardware.

A passive infra-red (PIR) motion sensor may only work in a LOS scenario, and does not support machine learning. It needs many (e.g. 6) PIR sensors to cover an entire house. A video camera based on motion sensing may only work in a LOS scenario, and is intensive in terms of memory and computation. The video monitoring or recording intrudes human privacy. In contrast, a 802.11 sensing can work in both LOS and NLOS scenarios; only need 1 pair of transmitter and receiver to cover an entire house; can support machine learning; and has a much lower storage requirement and computation requirement compared to video camera based on motion sensing. In addition, there is no video to intrude privacy in the 802.11 sensing.

The 802.11 sensing can be applied in many scenarios: e.g. motion detection for intruder detection, security, smart IoT; breathing monitoring for sleep monitoring, well-being, caregiving; locationing/tracking for smart factory, indoor GPS companion, traffic planning; fall detection for older adults, accident detection, caregiving; child detection in hot cars for smart cars, accident prevention; presence/proximity detection for conference room, convenience, smart IoT; human identification for user identification, personalization, smart IoT; gesture recognition for smart office; and activity recognition for user interface. Many of these applications do not need a wearable device and can work in a contactless mode, and does not need video or a LOS requirement.

The 802.11 sensing can give business opportunities to service providers, device manufacturers (e.g. manufacturers of smart home/IoT devices, consumer electronics, computing devices, home appliance, lighting, accessories), and component providers. For example, the disclosed method can provide a new wave of "802.11 sensing" services, firmware, software and/or devices regarding daily living, safety, lifestyle, convenience, personalization, caregiving, digital health, etc., in a traditional mode (e.g. broadband, mobile, streaming, cable) or a new mode (e.g. smart device makers).

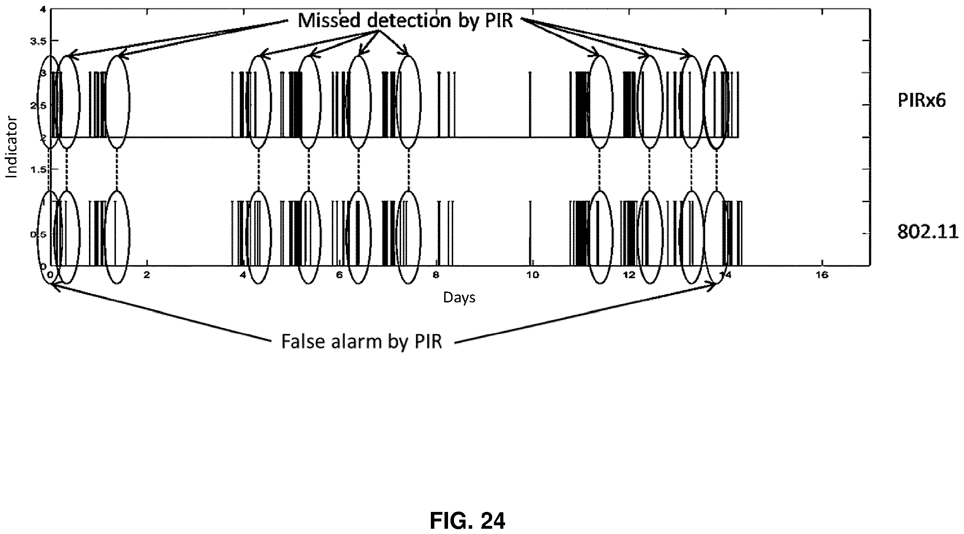

FIG. 24 shows exemplary performances of motion detections based on passive infrared (PIR) sensing and WiFi sensing, according to some embodiments of the present teaching. In a long-term side-by-side comparison with PIR, in a test house covered by 6 professionally installed PIRs and a pair of 802.11 Tx/Rx), 802.11 motion sensing performs better than the PIRs. As shown in FIG. 24, the PIR sensing and the 802.11 sensing have similar false alarm rates, while the 802.11 sensing has a better detection rate than the PIR sensing.

In a multi-night side-by-side comparison with other breathing sensors (pressure sensor, radar sensor, with PSG being ground truth), 802.11 breathing monitoring (contactless) outperforms pressure sensor and radar sensor, in terms of: stage (awake/REM/NREM) detection rate, and median (abs) error. In walking experiment along paths in buildings, 802.11 tracking (tracking based on 802.11 signals) shows high tracking accuracy, with an average (abs) tracking error being less than 20-30 cm, in a NLOS operation.

The bouncing of 802.11 signals creates multipaths which effectively scan or sense the environment, including any object motions, events and changes. The multipaths can be captured in channel state information (CSI). In 802.11 sensing, various signal processing/machine learning algorithms and systems may be applied to obtain and analyze CSI to achieve various tasks, regarding motions/events/changes, e.g. a motion detection by detecting change in CSI, a breathing detection by detecting cyclic behavior of CSI, a locationing by CSI recognition. Standardization may be needed for the systems regarding CSI generation, timing, accuracy, consistency, protocol, etc. Interface may also be standardized. Some 802.11 sensing demos use periodic probing/CSI generation at 1/10/100/1000Hz, with sounding overhead less than 0.1% of available data bandwidth at 10Hz. A protocol can be determined to control the generation of CSI, repetition rate, accuracy of timing, antenna selection and probing for 802.11 sensing, with CSI consistency, precision and format.

With standardized wireless sensing, devices from different manufacturers and different service providers can communicate with each other to estimate the CSI for wireless sensing in a venue, based on a qualification process as described herein. A database of qualified devices is maintained to include devices that have already been qualified for estimating CSI and performing a wireless sensing based on the CSI. Each qualified device in the database can access information related to any other qualified device in the database.

In one example, when the wireless environment of the venue becomes more complicated, e.g. due to more people entering the venue, a qualification test can be performed regarding a new device in the venue to add more qualified devices to improve wireless sensing accuracy. The qualification test may be performed based on a qualification criterion related to one or more CSI samples obtained using the new device and a qualified device in the database. For example, the new device is determined to be qualified when a CSI obtained from a wireless signal transmitted between the new device and the qualified device is good enough or better than a predetermined threshold. In another example, the new device is determined to be qualified when two CSIs obtained from wireless signals transmitted at two different times between the new device and the qualified device are close enough, e.g. when a similarity score between the two CSIs is greater than a first threshold, or when a distance score between the two CSIs is less than a second threshold.

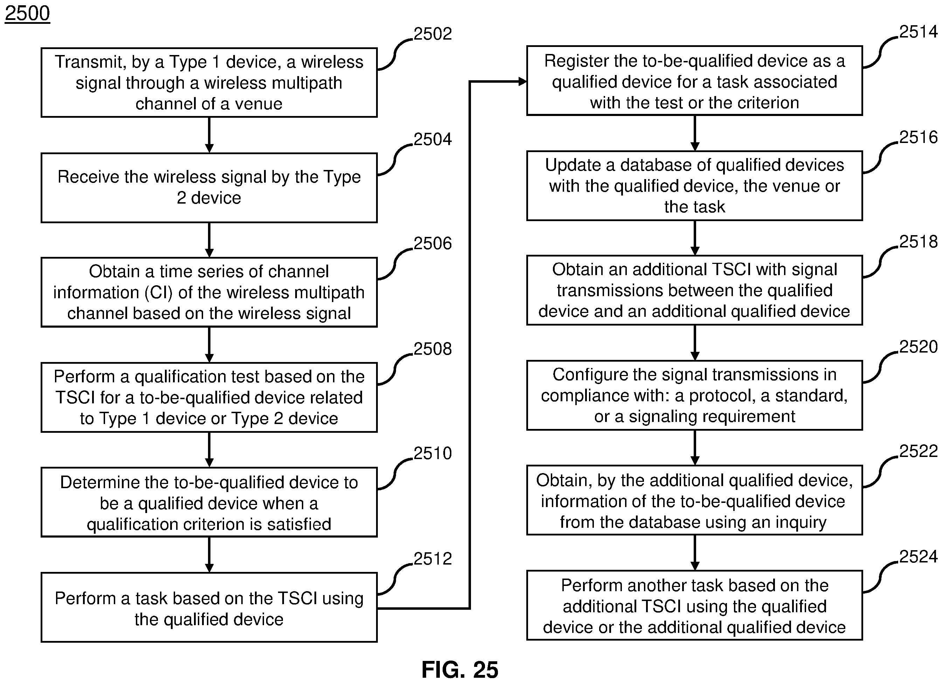

FIG. 25 illustrates a flow chart of an exemplary method 2500 of a qualified wireless sensing system, according to some embodiments of the present teaching. At operation 2502, a wireless signal is transmitted by a Type 1 device through a wireless multipath channel of a venue. At operation 2504, the wireless signal is received by the Type 2 device. At operation 2506, a time series of channel information (CI) of the wireless multipath channel is obtained based on the wireless signal. At operation 2508, a qualification test is performed based on the TSCI for a to-be-qualified device related to Type 1 device or Type 2 device. At operation 2510, the to-be-qualified device is determined to be a qualified device when a qualification criterion is satisfied. At operation 2512, a task is performed based on the TSCI using the qualified device. A to-be-qualified device may be a previously or currently qualified device that needs a re-qualification. For example, the qualified device may be re-qualified (1) after a power down and power up cycle, or (2) after some wireless network disruption/failure/traffic condition/jam, or (3) after some internet disruption/failure/traffic condition/jam, or (4) upon receiving a request/command/ control from a device (e.g. some Type 1 device, some Type 2 device, some device in the venue, some server, or some user device), or (5) periodically, regularly, sporadically, irregularly, upon request, or in some condition, or (6) a change in the task (e.g. task initiation, task termination, new task, more than one simultaneous tasks, task modification, spontaneous events, timed events, scheduled events, planned events, time-out). Multiple to-be-qualified devices may be qualified simultaneously, contemporaneously, independently, dependently, collaboratively, individually, or jointly.

At operation 2514, the to-be-qualified device is registered as a qualified device for a task associated with the test or the criterion. At operation 2516, a database of qualified devices is updated with the qualified device, the venue or the task. At operation 2518, an additional TSCI is obtained with signal transmissions between the qualified device and an additional qualified device. At operation 2520, the signal transmissions are configured in compliance with: a protocol, a standard, or a signaling requirement. At operation 2522, information of the to-be-qualified device is obtained from the database using an inquiry by the additional qualified device. At operation 2524, another task is performed based on the additional TSCI using the qualified device or the additional qualified device. The order of the operations in FIG. 25 may be changed in various embodiments of the present teaching.

A device may be "qualified" if the CSI satisfies a criterion. A qualified wireless system may be a standard-compliant wireless system, or a system that operates in a way defined by a standard. For example, a Type 2 device is qualified (e.g. compliant to a standard, or satisfy a requirement of a standard such as WiFi, 4G/5G/6G/7G/8G) if a first CI and a second CI are "close" to each other when there is no change (e.g. no object motion) in the venue. Type 1 device may be transmitter (Tx, or "Bot"). Type 2 device may be receiver (Rx, or "Origin"). A Type 1 device may be a Type 2 device, and vice versa.

The following numbered clauses provide implementation examples for configuring a wireless monitoring system by selecting and/or setting a system state from a number of admissible system states.

Clause 1. A method of configuring a wireless monitoring system, comprising: transmitting a wireless signal from a Type1 heterogeneous wireless device through a wireless multipath channel of a venue; receiving the wireless signal by a Type2 heterogeneous wireless device through the wireless multipath channel, wherein the received wireless signal differs from the transmitted wireless signal due to the wireless multipath channel of the venue and a modulation of the wireless signal by an object undergoing a motion in the venue; obtaining a set of channel information (CI) of the wireless multipath channel based on the received wireless signal using a processor, a memory and a set of instructions; performing a monitoring task by monitoring the object and the motion of the object based on the set of CI; determining a number of admissible system states of the wireless monitoring system, each admissible system state associated with a respective setting of at least one of: the wireless signal, a signaling in the wireless signal, a series of sounding signals in the wireless signal, a timing of the sounding signals in the wireless signal, a sounding frequency of the sounding signals, a frame type of the wireless signal, a field of the frame type of the wireless signal, a generation of the wireless signal by the Type1 device, a transmission of the wireless signal by the Type1 device, a reception of the wireless signal by the Type2 device, a processing of the wireless signal by the Type2 device, a coordination of the Type1 device and the Type2 device regarding the transmission of the wireless signal, a coordination with other devices regarding the transmission of the wireless signal, the set of CI, the obtaining of the set of CI of the wireless multipath channel based on the received wireless signal, the monitoring task of the object, a customization of the monitoring task, a computation for the monitoring task, a computation for monitoring the object based on the CI; choosing a system state to be one of the admissible system states based on the monitoring task; and configuring the wireless monitoring system by applying a setting associated with the chosen admissible system state to the wireless monitoring system.

Clause 2. The method of configuring the wireless monitoring system of clause 1, further comprising: choosing the system state to be the chosen admissible system state automatically based on at least one of: at least one of: a negotiation, a handshake, or a coordination, between at least two of: the Type1 device, the Type2 device, a server, another Type1 device or another Type2 device, at least one of: a constraint, a requirement and a condition of the monitoring task, at least one of: a command, a request, a coordination, and a planning of a server, a testing procedure, or an optimization criterion.

Clause 3. The method of configuring the wireless monitoring system of clause 1 or clause 2, further comprising: performing a testing procedure associated with the monitoring task; transmitting a testing wireless signal from a testing Type1 heterogeneous wireless device through a testing wireless multipath channel of a testing venue; receiving the testing wireless signal by a testing Type2 heterogeneous wireless device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; obtaining a set of testing channel information (CI) of the testing wireless multipath channel based on the received testing wireless signal using a testing processor, a testing memory and a set of testing instructions; performing the testing procedure by monitoring the testing object and the testing motion of the testing object based on the set of testing CI; and choosing the system state to be the chosen admissible system states automatically based on the testing procedure.

Clause 4. The method of configuring the wireless monitoring system of clause 3, further comprising: wherein the testing Type1 device comprises at least one of: the Type1 device, another Type1 device, the Type2 device, another Type2 device and another wireless device; wherein the testing Type2 device comprises at least one of: the Type1 device, another Type1 device, the Type2 device, another Type2 device and another wireless device; wherein the testing venue comprises at least one of: the venue, the venue in a testing condition, the venue in at least one candidate operating condition, the venue in at least one candidate manifestation, the venue in at least one candidate expression, the venue without the object, the venue with at least one of: the object, or a testing object similar to the object, the venue with the object or the testing object in at least one target expression to be monitored in the monitoring task, and the venue with the object or the testing object performing at least one target motion to be monitored in the monitoring task; positioning the testing Type1 device at least one candidate location in the testing venue, one of the candidate location being location of the Type1 device; positioning the testing Type2 device at least one candidate location in the testing venue, one of the candidate location being location of the Type2 device; positioning the testing Type1 device at least one candidate orientation in the testing venue, one of the candidate orientation being orientation of the Type1 device; and positioning the testing Type2 device at least one candidate orientation in the testing venue, one of the candidate orientation being orientation of the Type2 device.

Clause 5. The method of configuring the wireless monitoring system of clauses 3-4, further comprising: wherein the testing object comprises at least one of: the object, the object performing the motion, the object performing at least one target motion to be monitored in the monitoring task, a testing object similar to the object, a testing object with similar wireless footprint as the object, a testing object with similar wireless signature as the object, a testing object with similar wireless signature as the object with respect to the CI, a testing object with similar CI as the object, a testing object with similar physical appearance as the object, a testing object with similar physical structure as the object, a testing object with moveable parts similar to the object, a testing object capable of performing motions similar to the object, a testing object performing the motion, and a testing object performing at least one target motion to be monitored in the monitoring task; wherein the testing motion comprises at least one of: the motion of the object, a testing motion similar to the motion of the object, a part of the motion of the object, a partial testing motion similar to the part of the motion of the object, the motion of part of the object, a partial testing motion similar to the motion of the part of the object, the motion of moveable parts of the object, a testing motion of at least one moveable parts similar to the motion of corresponding moveable parts of the object, a part of the motion of moveable parts of the object, a partial testing motion similar to the part of the motion of corresponding moveable parts, the motion of moveable parts of part of the object, a testing motion of at least one moveable parts similar to the motion of corresponding moveable parts of the part of the object, and a target motion to be monitored in the monitoring task.

Clause 6. The method of configuring the wireless monitoring system of clauses 3-5, further comprising: wherein the testing wireless signal comprises at least one candidate wireless signal, one of the candidate wireless signal being the wireless signal; wherein each candidate wireless signal is associated with at least one of: at least one transmitting antenna, at least one receiving antenna, a carrier frequency, a modulation, a signal constellation, a signal bandwidth, a frequency band, a frequency aggregation, a frequency hopping, a signaling, a signal format, a protocol, a standard, a series of sounding signals, a choice of sounding signals, a sounding frequency, a sounding rate, a sounding period, a sounding timing, a sounding timing regularity, a management frame, a control frame, a data frame, a management package, a control packet, a data packet, a frame control field, a field of a frame, a frame header, and a frame body.

Clause 7. The method of configuring the wireless monitoring system of clauses 3-6, further comprising: choosing the system state to be the chosen admissible system states automatically based on an optimization criterion associated with the testing procedure and the monitoring of the testing object based on the set of testing CI.

Clause 8. The method of configuring the wireless monitoring system of clauses 1-7: wherein the wireless signal comprises a series of sounding signals based on a protocol, wherein each admissible system state and its associated setting, are associated with at least one of: a timing, a lapse, a rate, a sounding rate, a sounding rhythm, a signal strength, a signal modulation, a carrier frequency, a frequency band, a frequency bandwidth, a frequency hopping, a transmit antenna, a receive antenna, a choice of the sounding signal, a choice of the CI, a monitoring functionality, a functionality level, and a functionality parameter, of at least one of: the Type1 device, the Type2 device, the coordination of the Type1 device and the Type2 device, the series of sounding signals, the set of CI and the monitoring of the object.

Clause 9. The method of configuring the wireless monitoring system of clauses 1-8, further comprising: applying the setting by configuring at least one of: the Type1 device, the Type2 device, the other devices, an integrated circuit (IC) of the Type1 device, an IC of the Type2 device, an IC of one of the other devices, the coordination between any of: the Type1 device, the Type2 device and the other devices, the wireless signal, the signaling in the wireless signal, the sounding signals in the wireless signal, the timing or sounding frequency of the sounding signals, the transmission, at least one of: the reception, the generation or the processing, of the wireless signal, the set of CI, the obtaining of the set of CI, and the monitoring of the object, based on the system state.

Clause 10. The method of configuring the wireless monitoring system of clause 9, further comprising: configuring the Type1 device indirectly by configuring the Type2 device.

Clause 11. The method of configuring the wireless monitoring system of clause 10: wherein the wireless signal comprises the series of sounding signals in response to a series of triggering wireless signals from the Type2 device based on a protocol, each sounding signal being a triggered response to a triggering signal from the Type2 device based on the protocol, configuring at least one of: the triggered response, the series of sounding signals, and the transmission of the series of sounding signals, from the Type1 device indirectly by configuring the series of triggering signals transmitted by the Type2 device.

Clause 12. The method of configuring the wireless monitoring system of clause 11: configuring at least one of: a timing, a lapse, a rate, a sounding rate, a sounding rhythm, a signal strength, a signal modulation, a carrier frequency, a frequency band, a frequency bandwidth, a frequency hopping, an antenna, and a choice of the sounding signal, of the series of sounding signals of the Type1 device indirectly by configuring at least one of: a timing, a sounding rate, a sounding rhythm, a signal strength, a signal modulation, a carrier frequency, a frequency band, a frequency bandwidth, a frequency hopping, an antenna, and a choice of the sounding signal, of the series of triggering signals transmitted by the Type2 device.

Clause 13. The method of configuring the wireless monitoring system of clauses 9-12: configuring the Type2 device indirectly by configuring the Type1 device.

Clause 14. The method of configuring the wireless monitoring system of clause 13: wherein the wireless signal comprises a series of sounding signals , configuring at least one of: the Type2 device, an extraction of the set of CI from the received wireless signal, and the set of CI, indirectly by configuring at least one of: a timing, a sounding rate, a sounding rhythm, a signal strength, a signal modulation, a carrier frequency, a frequency band, a frequency bandwidth, a frequency hopping, an antenna, and a choice of the sounding signal, of the Type1 device.

Clause 15. The method of configuring the wireless monitoring system of clauses 1-14, further comprising at least one of: changing the system state to be another one of the admissible system states, or updating a setting associated with a particular admissible system state based on a change in at least one of: the Type1 device, the Type2 device, the wireless signal, the signaling, the sounding signals, the timing, the sounding frequency, the frame type, the field, the generation, the transmission, the reception, the processing, the coordination, the set of CI, the obtaining, the customization, the computation, the wireless multipath channel, and the venue.

Clause 16. The method of configuring the wireless monitoring system of clause 15, further comprising: changing the system state based on at least one of: a finite state machine (FSM), a trigger of state transition of the FSM, a criterion, an event, a condition, a schedule, a request, a requirement, an optimization, a goal, an operation, a discovery, a sensor reading, a status change, a trigger from another device, a time-out, a timing, a monitoring functionality, a functionality requirement, a computation requirement, a memory requirement, a sounding requirement, a functionality setting, a sensitivity setting, a resolution setting, a detection, a recognition, a monitoring, a monitored condition, a monitoring state, a monitored situation, a monitored quantity, a shared resource, a shared resource constraint, a resource management, a network congestion of the wireless multipath channel, an interference of the wireless multipath channel, another sensor, another sensor in the Type1 device, another sensor in the Type2 device, a power management, a heat management, a computation management, a memory management, a power on, a power off, a power efficiency consideration, a heat consideration, a network consideration, a traffic consideration of the wireless multipath channel, a usage consideration, a user consideration, a power saving, a heat reduction, a traffic congestion, a traffic optimization, a new condition of the monitoring task, a new stage of the monitoring task, a change of the monitoring task, a change of the object, an appearance of the object, a disappearance of the object, a change of the motion of the object, a change of the venue, a change of the wireless multipath channel, a change of the Type1 device, a change of the Type2 device, a situation of the venue, a situation of the wireless multipath channel, a situation of the Type1 device, a situation of the Type2 device, a new motion of the object to be monitored, a new monitoring task, or a new object to be monitored.

Clause 17. The method of configuring the wireless monitoring system of clauses 15-16, further comprising: wherein the wireless signal comprises a series of sounding signals based on a protocol, wherein a sounding rate is associated with the series of sounding signals, changing the system state to a first state associated with a normal sounding rate associated with the monitoring task; changing the system state to a second state associated with a sounding rate higher than the normal rate when the monitoring task becomes demanding, changing the system state to a third state associated with a sounding rate lower than the normal rate to save power.

Clause 18. The method of configuring the wireless monitoring system of clauses 15-17, further comprising: performing a first set of at least one monitoring task, wherein performing any monitoring task comprises monitoring a respective object and a corresponding motion of the respective object based on the set of CI; choosing the system state to be a first state based on the first set of monitoring task; performing a second set of at least one monitoring task instead of the first set of monitoring task; and changing the system state from the first state to a second state based on the second set of monitoring task.

Clause 19. The method of configuring the wireless monitoring system of clause 18, further comprising: wherein there are more than one monitoring tasks, comprising a default task and at least one on-demand task; choosing the system state to a first state associated with a first setting associated with the default monitoring task; changing the system state to a second state associated with a second setting associated with an on-demand task; changing the system state back to the first state after the on-demand task.

Clause 20. A method of configuring a wireless monitoring system, comprising: transmitting a wireless signal from a Type1 heterogeneous wireless device through a wireless multipath channel of a venue; receiving the wireless signal by a Type2 heterogeneous wireless device through the wireless multipath channel, wherein the received wireless signal differs from the transmitted wireless signal due to the wireless multipath channel of the venue and a modulation of the wireless signal by an object undergoing a motion in the venue; obtaining a set of channel information (CI) of the wireless multipath channel based on the received wireless signal using a processor, a memory and a set of instructions; performing a monitoring task by monitoring the object and the motion of the object based on the set of CI; determining a number of admissible system states of the wireless monitoring system, each admissible system state associated with a respective setting; and choosing a system state to be one of the admissible system states automatically based on the monitoring task; configuring the wireless monitoring system by applying the setting associated with the chosen admissible system state to at least one of: the Type1 device, the Type2 device, another Type1 device, another Type2 device, a server, a user device, an integrated circuit (IC) of a device, a coordination between at least two devices, the wireless signal, a signaling in the wireless signal, a series of sounding signals in the wireless signal, the timing or sounding frequency of the sounding signals, the transmission, at least one of: reception, generation or processing, of the wireless signal, the set of CI, the obtaining of the set of CI, and the monitoring of the object, based on the system state.

Clause 21. The method of configuring the wireless monitoring system of clause 20, comprising: choosing the system state to be the chosen admissible system state automatically based on at least one of: at least one of: a negotiation, a handshake, or a coordination, between at least two of: the Type1 device, the Type2 device, a server, another Type1 device or another Type2 device, at least one of: a constraint, a requirement and a condition of the monitoring task, at least one of: a command, a request, a coordination, and a planning of a server, a testing procedure, or an optimization criterion.

Clause 22. The method of configuring the wireless monitoring system of clauses 20-21, comprising: performing a testing procedure associated with the monitoring task; transmitting a testing wireless signal from a testing Type1 heterogeneous wireless device through a testing wireless multipath channel of a testing venue; receiving the testing wireless signal by a testing Type2 heterogeneous wireless device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; obtaining a set of testing channel information (CI) of the testing wireless multipath channel based on the received testing wireless signal using a testing processor, a testing memory and a set of testing instructions; performing the testing procedure by monitoring the testing object and the testing motion of the testing object based on the set of testing CI; and choosing the system state to be the chosen admissible system states automatically based on the testing procedure and an associated optimization criterion.

Clause 23. The method of configuring the wireless monitoring system of clauses 20-22, further comprising at least one of: wherein the wireless signal comprises a series of sounding signals based on a protocol, wherein a sounding rate is associated with the series of sounding signals, changing the system state to a first state associated with a normal sounding rate associated with the monitoring task; changing the system state to a second state associated with a sounding rate higher than the normal rate when the monitoring task becomes demanding; or changing the system state to a third state associated with a sounding rate lower than the normal rate to save power.

Clause 24. The method of configuring the wireless monitoring system of clauses 20-23, further comprising: performing a first set of at least one monitoring task, wherein performing any monitoring task comprises monitoring a respective object and a corresponding motion of the respective object based on the set of CI; choosing the system state to be a first state based on the first set of monitoring task; performing a second set of at least one monitoring task instead of the first set of monitoring task; and changing the system state from the first state to a second state based on the second set of monitoring task.

Clause 25. A wireless monitoring system, comprising: a Type1 heterogeneous wireless device which is configured to transmit a wireless signal through a wireless multipath channel of a venue; a Type2 heterogeneous wireless device which is configured using a processor, a memory and a set of instructions to: receive the wireless signal through the wireless multipath channel, wherein the received wireless signal differs from the transmitted wireless signal due to the wireless multipath channel of the venue and a modulation of the wireless signal by an object undergoing a motion in the venue, obtain a set of channel information (CI) of the wireless multipath channel based on the received wireless signal, perform a monitoring task by monitoring the object and the motion of the object based on the set of CI, wherein a number of admissible system states of the wireless monitoring system is being determined, each admissible system state associated with a respective setting of at least one of: the wireless signal, a signaling in the wireless signal, a series of sounding signals in the wireless signal, a timing of the sounding signals in the wireless signal, a sounding frequency of the sounding signals, a frame type of the wireless signal, a field of the frame type of the wireless signal, a generation of the wireless signal by the Type1 device, a transmission of the wireless signal by the Type1 device, a reception of the wireless signal by the Type2 device, a processing of the wireless signal by the Type2 device, a coordination of the Type1 device and the Type2 device regarding the transmission of the wireless signal, a coordination with other devices regarding the transmission of the wireless signal, the set of CI, the obtaining of the set of CI of the wireless multipath channel based on the received wireless signal, the monitoring task of the object, a customization of the monitoring task, a computation for the monitoring task, a computation for monitoring the object based on the CI, wherein a system state is chosen to be one of the admissible system states based on the monitoring task, wherein the wireless monitoring system is configured by applying a setting associated with the chosen admissible system state to at least one of: the Type1 device, the Type2 device, another Type1 device, another Type2 device, a server, a user device, an integrated circuit (IC) of a device, a coordination between at least two devices, the wireless signal, a signaling in the wireless signal, a series of sounding signals in the wireless signal, the timing or sounding frequency of the sounding signals, the transmission, at least one of: reception, generation or processing, of the wireless signal, the set of CI, the obtaining of the set of CI, and the monitoring of the object, based on the system state.

Clause 26. The wireless monitoring system of clause 25, wherein: the system state is chosen to be the chosen admissible system state based on at least one of: at least one of: a negotiation, a handshake, or a coordination, between at least two of: the Type1 device, the Type2 device, a server, another Type1 device or another Type2 device, at least one of: a constraint, a requirement and a condition of the monitoring task, at least one of: a command, a request, a coordination, and a planning of a server, a testing procedure, or an optimization criterion.

Clause 27. The wireless monitoring system of clauses 25-26, wherein: a testing procedure is performed associated with the monitoring task; a testing wireless signal is transmitted from a testing Type1 heterogeneous wireless device through a testing wireless multipath channel of a testing venue; the testing wireless signal is received by a testing Type2 heterogeneous wireless device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; a set of testing channel information (CI) of the testing wireless multipath channel is obtained based on the received testing wireless signal using a testing processor, a testing memory and a set of testing instructions; the testing procedure is performed by monitoring the testing object and the testing motion of the testing object based on the set of testing CI; and the system state is chosen to be the chosen admissible system states based on the testing procedure and an associated optimization criterion.

Clause 28. The wireless monitoring system of clauses 25-27, wherein: the system state is changed to another one of the admission system states by applying a setting based on at least one of: a finite state machine (FSM), a trigger of state transition of the FSM, a criterion, an event, a condition, a schedule, a request, a requirement, an optimization, a goal, an operation, a discovery, a sensor reading, a status change, a trigger from another device, a time-out, a timing, a monitoring functionality, a functionality requirement, a computation requirement, a memory requirement, a sounding requirement, a functionality setting, a sensitivity setting, a resolution setting, a detection, a recognition, a monitoring, a monitored condition, a monitoring state, a monitored situation, a monitored quantity, a shared resource, a shared resource constraint, a resource management, a network congestion of the wireless multipath channel, an interference of the wireless multipath channel, another sensor, another sensor in the Type1 device, another sensor in the Type2 device, a power management, a heat management, a computation management, a memory management, a power on, a power off, a power efficiency consideration, a heat consideration, a network consideration, a traffic consideration of the wireless multipath channel, a usage consideration, a user consideration, a power saving, a heat reduction, a traffic congestion, a traffic optimization, a new condition of the monitoring task, a new stage of the monitoring task, a change of the monitoring task, a change of the object, an appearance of the object, a disappearance of the object, a change of the motion of the object, a change of the venue, a change of the wireless multipath channel, a change of the Type1 device, a change of the Type2 device, a situation of the venue, a situation of the wireless multipath channel, a situation of the Type1 device, a situation of the Type2 device, a new motion of the object to be monitored, a new monitoring task, or a new object to be monitored.

Clause 29. The wireless monitoring system of clauses 25-28, wherein: a setting associated with a particular admissible system state is updated based on a change in at least one of: the Type1 device, the Type2 device, the another Type1 device, the another Type2 device, the server, the user device, the IC, the coordination between the at least two devices, the wireless signal, the signaling, the sounding signals, the timing, the sounding frequency, the frame type, the field, at least one of: the generation, the transmission, the reception, or the processing of the wireless signal, the set of CI, the obtaining, the customization, the computation, the wireless multipath channel, and the venue.

Clause 30. A Type2 heterogeneous wireless device of a wireless monitoring system, comprising: a wireless receiver; a processor communicatively coupled with the wireless receiver; a memory communicatively coupled with the processor; a set of instructions stored in the memory which, when executed by the processor, causes the Type2 heterogeneous wireless device to: receive a wireless signal through a wireless multipath channel of a venue, wherein the wireless signal is transmitted by a Type1 heterogeneous wireless device through the wireless multipath channel, wherein the received wireless signal differs from the transmitted wireless signal due to the wireless multipath channel of the venue and a modulation of the wireless signal by an object undergoing a motion in the venue, obtain a set of channel information (CI) of the wireless multipath channel based on the received wireless signal, perform a monitoring task by monitoring the object and the motion of the object based on the set of CI, wherein a number of admissible system states of the wireless monitoring system are determined, each admissible system state associated with a respective setting of at least one of: the wireless signal, a signaling in the wireless signal, a series of sounding signals in the wireless signal, a timing of the sounding signals in the wireless signal, a sounding frequency of the sounding signals, a frame type of the wireless signal, a field of the frame type of the wireless signal, a generation of the wireless signal by the Type1 device, a transmission of the wireless signal by the Type1 device, a reception of the wireless signal by the Type2 device, a processing of the wireless signal by the Type2 device, a coordination of the Type1 device and the Type2 device regarding the transmission of the wireless signal, a coordination with other devices regarding the transmission of the wireless signal, the set of CI, the obtaining of the set of CI of the wireless multipath channel based on the received wireless signal, the monitoring task of the object, a customization of the monitoring task, a computation for the monitoring task, a computation for monitoring the object based on the CI; wherein a system state is chosen to be one of the admissible system states based on the monitoring task; wherein the wireless monitoring system is configured by applying a setting associated with the chosen admissible system state to at least one of: the Type1 device, the Type2 device, another Type1 device, another Type2 device, a server, a user device, an integrated circuit (IC) of a device, a coordination between at least two devices, the wireless signal, a signaling in the wireless signal, a series of sounding signals in the wireless signal, the timing or sounding frequency of the sounding signals, the transmission, at least one of: reception, generation or processing, of the wireless signal, the set of CI, the obtaining of the set of CI, and the monitoring of the object, based on the system state.

Clause 31. A method of configuring the wireless monitoring system, comprising: transmitting a wireless signal from a Type1 heterogeneous wireless device through a wireless multipath channel of a venue; receiving the wireless signal by a Type2 heterogeneous wireless device through the wireless multipath channel, wherein the received wireless signal differs from the transmitted wireless signal due to the wireless multipath channel of the venue and a modulation of the wireless signal by an object in the venue; obtaining a set of channel information (CI) of the wireless multipath channel based on the received wireless signal using a processor, a memory communicatively coupled with the processor and a set of instructions stored in the memory; monitoring the object based on the set of CI; estimating the monitoring of the object in a reproducible manner by monitoring a mechanical replacement object in place of the object using the same system in the same way.

Clause 32. The method of configuring the wireless monitoring system of clauses 130, comprising: replacing the object with the mechanical replacement object by removing the object and positioning the mechanical replacement object at the same location in the same way in the venue; transmitting a second wireless signal from the Type1 heterogeneous wireless device through the wireless multipath channel of the venue; receiving the second wireless signal by the Type2 heterogeneous wireless device through the wireless multipath channel, wherein the received second wireless signal differs from the transmitted second wireless signal due to the wireless multipath channel of the venue and a modulation of the second wireless signal by the replacement object in the venue; obtaining a second set of channel information (CI) of the wireless multipath channel based on the received second wireless signal using the processor, the memory communicatively coupled with the processor and the set of instructions stored in the memory; monitoring the mechanical replacement object based on the second set of CI.

Clause 33. The method of configuring the wireless monitoring system of clause 1 or clause 11: wherein the mechanical replacement object comprises at least one of: a mechanical structure to support a mechanical covering, a mechanical structure with a similar shape as the object, a mechanical structure with a similar surface as the object, a mechanical structure with a similar surface texture as the object, a mechanical structure with a similar reflective surface as the object, a mechanical structure with a similar skeleton as the object, a mechanical structure with a similar structure as the object, a mechanical structure with a similar cavity as the object, a mechanical covering with a similar wireless property as a covering of the object, a mechanical covering at a structure with a similar wireless property as a corresponding structure of the object, a mechanical covering at a surface with a similar wireless property as a corresponding surface of the object, a mechanical covering at a skeleton with a similar wireless property as a corresponding skeleton of the object, a mechanical covering at a cavity with a similar wireless property as a corresponding cavity of the object, a mechanical covering at a surface of the mechanical replacement object to amplify wireless reflection, a movable mechanism capable of make a similar motion as the object, a mechanical covering with a similar wireless property as the object in their respective motion, a material with similar wireless property as human flesh, and another wireless characteristics.

Clause 34. The method of configuring the wireless monitoring system of clauses 1-33: wherein the object is a living object (e.g. human, pet); wherein the mechanical replacement object comprises at least one of: a specific anthropomorphic mannequin (SAM), a mechanical doll with movable chest to mimic breathing, a mannequin with a covering with similar monitoring characteristics of the object in the wireless multipath channel, a mannequin with a covering with similar monitoring characteristics of the object in the wireless multipath channel with respect to the set of CI, a mannequin with a covering to mimic wireless property of the object in the wireless multipath channel, a mannequin with a covering to mimic radio reflection of the object, a mannequin with a covering to mimic radio refraction of the object, a mannequin with a covering to mimic radio absorption of the object, a mannequin with a covering to mimic radio transmission through the object, a mannequin with a covering to mimic radio propagation through the object, a mannequin with moveable chest to mimic breathing, a mannequin with moveable joints, a mannequin with moveable limbs, a mannequin with moveable head, a mannequin with moveable mouth, a mannequin with moveable hands, a mannequin with moveable fingers, a mannequin with moveable legs, a mannequin with moveable feet, a mannequin with moveable bones, a mannequin with moveable muscles, a mannequin with liquid content, a robot that can mimic at least one of: human motion, human gait, human gesture, animal motion, animal gait, animal gesture, and another mechanical imitation of the object.

Clause 35. The method of configuring the wireless monitoring system of clauses 1-34: wherein the mechanical replacement object comprises at least one of: a mechanical adult male, a mechanical adult female, a mechanical older adult, a mechanical adult with strong build, a mechanical adult with medium build, a mechanical adult with small build, a mechanical boy, a mechanical girl, a mechanical baby, a mechanical limb, a mechanical hand, a mechanical arm, a mechanical leg, a mechanical foot, a mechanical torso, a mechanical head, a mechanical upper body, a mechanical lower body, a mechanical joint, a mechanical body, a mechanical animal, a mechanical pet, a mechanical cat, a mechanical dog, a mechanical vehicle, a mechanical vehicle replica, and another mechanical replica.

Clause 36. The method of configuring the wireless monitoring system of clauses 1-35, comprising: computing a transformation of the monitoring of the mechanical replacement object to estimate the monitoring of the object.

Clause 37. The method of configuring the wireless monitoring system of clause 1, comprising: wherein the transformation is associated with at least one of: a model, a material of the mechanical replacement object, a property of the mechanical replacement object.

Clause 38. The method of configuring the wireless monitoring system of clauses 1-37, comprising: wherein the received wireless signal differs from the transmitted wireless signal further due to a modulation of the wireless signal by a motion of an object in the venue; monitoring the motion of the object based on the set of CI; estimating the monitoring of the motion of the object in a reproducible manner by monitoring a similar motion of the mechanical replacement object in place of the motion of the object using the same system.

Clause 39. The method of configuring the wireless monitoring system of clauses 1-38, comprising: computing a transformation of the monitoring of the motion of mechanical replacement object to the monitoring of the motion of the object.

Clause 40. The method of configuring the wireless monitoring system of clause 1, comprising: wherein the transformation is associated with at least one of: a model, a model of the venue, a model of the object, a model of the mechanical replacement object, a model of motion of the object, a model of motion of the mechanical replacement object, a material of the mechanical replacement object, a property of the mechanical replacement object, a robotic characteristics of the mechanical replacement object, and a characteristics of a mechanical movement of the mechanical replacement object.

Clause 41. A method of configuring the wireless monitoring system, comprising: transmitting a wireless signal from a Type1 heterogeneous wireless device through a wireless multipath channel of a venue; receiving the wireless signal by a Type2 heterogeneous wireless device through the wireless multipath channel, wherein the received wireless signal differs from the transmitted wireless signal due to the wireless multipath channel of the venue and a modulation of the wireless signal by a replacement object in the venue, wherein the replacement object is a mechanical replacement of an object in the venue; obtaining a set of channel information (CI) of the wireless multipath channel based on the received wireless signal using a processor, a memory communicatively coupled with the processor and a set of instructions stored in the memory; estimating a monitoring of the object by the wireless monitoring system by monitoring the replacement object in the venue in a reproducible manner based on the set of CI.

Clause 42. The method of configuring the wireless monitoring system of clause 7, comprising: wherein the received wireless signal differs from the transmitted wireless signal further due to a modulation of the wireless signal by a motion of the object in the venue; estimating a monitoring of a motion of the object by the wireless monitoring system by monitoring a similar motion of the replacement object in the venue in a reproducible manner based on the set of CI; estimating a monitoring of a motion of the object in a reproducible manner by monitoring the same motion of the mechanical replacement object in place of the motion of the object using the same system.

Clause 43. The method of configuring the wireless monitoring system of clause 4, further comprising: wherein the testing Type1 device comprises at least one of: the Type1 device, another Type1 device, the Type2 device, another Type2 device and another wireless device; wherein the testing Type2 device comprises at least one of: the Type1 device, another Type1 device, the Type2 device, another Type2 device and another wireless device; positioning the testing Type1 device at least one candidate location in the testing venue, one of the candidate location being location of the Type1 device; positioning the testing Type2 device at least one candidate location in the testing venue, one of the candidate location being location of the Type2 device; positioning the testing Type1 device at least one candidate orientation in the testing venue, one of the candidate orientation being orientation of the Type1 device; positioning the testing Type2 device at least one candidate orientation in the testing venue, one of the candidate orientation being orientation of the Type2 device; wherein the testing object comprises at least one of: the object, a testing object similar to the object, a testing object with similar wireless footprint as the object, a testing object with similar wireless signature as the object, a testing object with similar wireless signature as the object with respect to the CI, a testing object with similar CI as the object, a testing object with moveable joints similar to the object, a testing object capable of performing motions of the object, a human, a human-like mannequin, a mannequin with similar wireless footprint as the human, a mannequin with similar wireless signature as the human, a mannequin with similar wireless signature as the human with respect to the CI, a mannequin with similar CI as the human, a mannequin with moveable joints similar to the human, a mannequin capable of performing motions of the human, a part of the human, a human-like mannequin, a mannequin mimicking the human, a mannequin mimicking the part of the human, a mannequin with similar wireless footprint as the human, a mannequin with similar wireless signature as the human, a mannequin with similar wireless signature as the human with respect to the CI, a mannequin with similar CI as the human, a mannequin with moveable joints similar to the human, a mannequin capable of performing motions of the human, moving the test object such that at least one of: a testing object with similar motion behavior as the object, a testing object undergoing a similar motion as the object; wherein the testing venue comprises at least one of: the venue, the venue in a testing condition, the venue in at least one candidate operating condition, the venue in at least one candidate manifestation, the venue in at least one candidate expression, the venue without the object, the venue with the object in at least one candidate expression, the venue with the testing object similar to the object wherein the testing wireless signal comprises at least one candidate wireless signal, one of the candidate wireless signal being the wireless signal; wherein the testing wireless multipath channel comprises at least one of: the wireless multipath channel or other admissible wireless channel; wherein the testing venue comprises the venue or another.

Clause P1. A method/system/software/device of a wireless monitoring system, comprising: transmitting a wireless signal from a Type 1 heterogeneous wireless device through a wireless multipath channel of a venue; receiving the wireless signal by a Type 2 heterogeneous wireless device through the wireless multipath channel, wherein the received wireless signal differs from the transmitted wireless signal due to the wireless multipath channel of the venue and a modulation of the wireless signal by an object in the venue; obtaining a set of channel information (CI) of the wireless multipath channel based on the received wireless signal using a processor, a memory communicatively coupled with the processor and a set of instructions stored in the memory; monitoring the object based on the set of CI; determining a number of admissible system states each associated with a respective system setting of at least one of: the wireless signal, the transmission of the wireless signal by the Type 1 device, the reception of the wireless signal by the Type 2 device, a coordination of the Type 1 device and the Type 2 device regarding the transmission of the wireless signal, the set of CI, the obtaining of the set of CI of the wireless multipath channel, and the monitoring of the object; and setting a system state of the wireless monitoring system to be one of the admissible system states by applying the system setting associated with the admissible system state to the wireless monitoring system.

Clause P2. The method/system/software/device of the wireless monitoring system of Clause P1, further comprising: applying the system setting by configuring at least one of: the Type 1 device, the Type 2 device, the coordination of the Type 1 device and the Type 2 device, the wireless signal, the transmission and reception of the wireless signal, the set of CI, the obtaining of the set of CI, and the monitoring of the object, based on the system setting.

Clause P3. The method/system/software/device of the wireless monitoring system of Clauses P1-P2: configuring the Type 1 device indirectly by configuring the Type 2 device.

Clause P4. The method/system/software/device of the wireless monitoring system of Clause P3: wherein the wireless signal comprises a series of sounding signals in responses to a series of triggering wireless signals from the Type 2 device based on a protocol, each sounding signal being a triggered response to a triggering signal from the Type 2 device based on the protocol, configuring at least one of: the triggered response, the series of sounding signals, and the transmission of the series of sounding signals, from the Type 1 device indirectly by configuring the series of triggering signal transmitted by the Type 2 device.

Clause P5. The method/system/software/device of the wireless monitoring system of Clause P4: configuring at least one of: a timing, a lapse, a sounding rate, a sounding rhythm, a signal strength, a signal modulation, a carrier frequency, a frequency band, a frequency bandwidth, a frequency hopping, an antenna, and a choice of the sounding signal, of the series of sounding signals by the Type 1 device indirectly by configuring at least one of: a timing, a sounding rate, a sounding rhythm, a signal strength, a signal modulation, a carrier frequency, a frequency band, a frequency bandwidth, a frequency hopping, an antenna, and a choice of the sounding signal, of the series of triggering signal transmitted by the Type 2 device.

Clause P6. The method/system/software/device of the wireless monitoring system of Clauses P1-P5: configuring the Type 2 device indirectly by configuring the Type 1 device.

Clause P7. The method/system/software/device of the wireless monitoring system of Clauses P1-P6: wherein the wireless signal comprises a series of sounding signals , configuring at least one of: the Type 2 device, an extraction of the set of CI from the received wireless signal, and the set of CI, indirectly by configuring at least one of: a timing, a sounding rate, a sounding rhythm, a signal strength, a signal modulation, a carrier frequency, a frequency band, a frequency bandwidth, a frequency hopping, an antenna, and a choice of the sounding signal, of the Type 1 device.

Clause P8. The method/system/software/device of the wireless monitoring system of Clauses P1-P7: wherein the wireless signal comprises a series of sounding signals based on a protocol, wherein at least one of: an admissible system state, and a system setting, is associated with at least one of: a timing, a rate, a sounding rate, a sounding rhythm, a signal strength, a signal modulation, a carrier frequency, a frequency band, a frequency bandwidth, a frequency hopping, a transmit antenna, a receive antenna, a choice of the sounding signal, a choice of the CI, a monitoring functionality, a functionality level, a functionality parameter, of at least one of: the Type 1 device, the Type 2 device, the coordination of the Type 1 device and the Type 2 device, the series of sounding signals, the set of CI and the monitoring of the object.

Clause P9. The method/system/software/device of the wireless monitoring system of Clauses P1-P8:

wherein the set of CI comprises at least one of: a channel state information (CSI), a channel impulse response (CIR), a channel frequency response (CFR), a received signal strength indicator (RSSI), an angle of arrival (AoA), a time of arrival (ToF) and another channel information.

Clause P10. The method/system/software/device of the wireless monitoring system of Clauses P1-P9: wherein a CI is associated with a transmitter antenna of the Type 1 device and a receive antenna of the Type 2 device.

Clause P11. The method/system/software/device of the wireless monitoring system of Clauses P1-P10, further comprising: changing the system state to be another admissible system state by applying the system setting associated with the another admissible system state to the wireless monitoring system.

Clause P12. The method/system/software/device of the wireless monitoring system of Clause P11, further comprising: changing the system state based on at least one of: a finite state machine (FSM), a trigger of state transition of the FSM, a criterion, an event, a condition, a schedule, a request, a requirement, an optimization, a goal, an operation, a discovery, a sensor reading, a status change, a trigger from another device, a time-out, a timing, a monitoring functionality, a functionality requirement, a computation requirement, a memory requirement, a sounding requirement, a functionality setting, a sensitivity setting, a resolution setting, a detection, a recognition, a monitoring, a monitored condition, a monitoring state, a monitored situation, a monitored quantity, a shared resource, a shared resource constraint, a resource management, a network congestion of the wireless multipath channel, an interference of the wireless multipath channel, another sensor, another sensor in the Type 1 device, another sensor in the Type 2 device, a power management, a heat management, a computation management, a memory management, a power on, a power off, a power efficiency consideration, a heat consideration, a network consideration, a traffic consideration of the wireless multipath channel, a usage consideration, a user consideration, a power saving, a heat reduction, a traffic congestion, a traffic optimization, and another trigger.

Clause P13. The method/system/software/device of the wireless monitoring system of Clauses P1-P12, further comprising: wherein the wireless signal comprises a series of sounding signals based on a protocol, changing at least one of: a timing, a lapse, a rate, a sounding rate, a sounding rhythm, a signal strength, a signal modulation, a carrier frequency, a frequency band, a frequency bandwidth, a frequency hopping, a transmit antenna, a receive antenna, a choice of the sounding signal, a choice of the CI, a monitoring functionality, a functionality level, a functionality parameter, of at least one of: the Type 1 device, the Type 2 device, the coordination of the Type 1 device and the Type 2 device, the series of sounding signals, the set of CI and the monitoring of the object, by changing at least one of: the system state and the system setting.

Clause P14. The method/system/software/device of the wireless monitoring system of Clauses P1-P13, further comprising: wherein the wireless signal comprises a series of sounding signals based on a protocol, wherein a sounding rate is associated with the series of sounding signals, changing the system state to a first state associated with a normal sounding rate associated with the monitoring of the object; changing the system state to a second state associated with a sounding rate higher than the normal rate when the monitoring of the object becomes demanding, changing the system state to a third state associated with a sounding rate lower than the normal rate to save power.

Clause P15. The method/system/software/device of the wireless monitoring system of Clauses P1-P14: wherein there is at least one monitoring task, comprising at least one of: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, breathing tracking, human breathing detection, human breathing recognition, human breathing estimation, breathing detection, breathing tracking, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, motion categorization, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing estimation, human biometrics detection, human biometric recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, model-based processing/correction, irregularity detection, locationing, motion localization, room sensing, tracking, multiple object tracking, indoor tracking, indoor position, indoor navigation, energy management, power transfer, wireless power transfer, object counting, car tracking in parking garage, activating a device or a system (e.g. security system, access system, alarm, siren, speaker, television, entertaining system, camera, heater/air-conditioning (HVAC) system, ventilation system, lighting system, gaming system, coffee machine, cooking device, cleaning device, housekeeping device), geometry estimation, augmented reality, wireless communication, data communication, signal broadcasting, networking, coordination, administration, encryption, protection, cloud computing, other processing and/or other task.

Clause P16. The method/system/software/device of the wireless monitoring system of Clauses P14-P15, further comprising: wherein there are at least one monitoring task; changing the system state to a state associated with a system setting associated with one of the monitoring task.

Clause P17. The method/system/software/device of the wireless monitoring system of Clauses P14-P16, further comprising: wherein there are at least one monitoring task; changing the system state to a state associated with a system setting associated with at least one of the following monitoring task: motion detection, presence detection, home monitoring, public space monitoring, periodic motion monitoring, transient motion monitoring, breathing monitoring, heart beat monitoring, vital sign monitoring, counting, well-being monitoring, sleep monitoring, daily activity monitoring, apnea detection, medical condition detection, fall-down detection, speed measuring, a gait recognition task, a motion recognition task, a radio biometric task, security event detection, suspicious event detection, intruder detection, locationing, tracking, navigation, motion localization, distance estimation, angle estimation, material determination, object determination, child presence detection in vehicle, driver recognition, driver sleepiness detection, radio frequency imaging, posture recognition, keystroke recognition, handwriting recognition, and another task.

Clause P18. The method/system/software/device of the wireless monitoring system of Clauses P1-P17, further comprising: wherein there are more than one monitoring tasks, comprising a default task and at least one on-demand task; setting the system state to a first state associated with a first setting associated with the default monitoring task; changing the system state to a second state associated with a second setting associated with an on-demand task; changing the system state back to the first state after the on-demand task.

Clause P19. The method/system/software/device of the wireless monitoring system of Clauses P1-P18, further comprising: wherein there are more than one monitoring states associated with the monitoring of the object based on the set of CSI; setting the system state based on the monitoring state.

Clause P20. The method/system/software/device of the wireless monitoring system of Clauses P16-P19, further comprising: setting the system state based on a current monitoring state; changing the system state to a second state associated with a new monitoring state.

Clause P21. A method/system/software/device of a wireless monitoring system, comprising: transmitting a wireless signal from a Type 1 heterogeneous wireless device through a wireless multipath channel of a venue; receiving the wireless signal by a Type 2 heterogeneous wireless device through the wireless multipath channel, wherein the received wireless signal differs from the transmitted wireless signal due to the wireless multipath channel of the venue and a modulation of the wireless signal by an object in the venue; obtaining a set of channel information (CI) of the wireless multipath channel based on the received wireless signal using a processor, a memory communicatively coupled with the processor and a set of instructions stored in the memory; monitoring the object based on the set of CI; estimating the monitoring of the object in a reproducible manner by monitoring a mechanical replacement object in place of the object using the same system in the same way.

Clause P22. The method/system/software/device of a wireless monitoring system of Clauses P1-P20, comprising: replacing the object with the mechanical replacement object by removing the object and positioning the mechanical replacement object at the same location in the same way in the venue; transmitting a second wireless signal from the Type 1 heterogeneous wireless device through the wireless multipath channel of the venue; receiving the second wireless signal by the Type 2 heterogeneous wireless device through the wireless multipath channel, wherein the received second wireless signal differs from the transmitted second wireless signal due to the wireless multipath channel of the venue and a modulation of the second wireless signal by the replacement object in the venue; obtaining a second set of channel information (CI) of the wireless multipath channel based on the received second wireless signal using the processor, the memory communicatively coupled with the processor and the set of instructions stored in the memory; monitoring the mechanical replacement object based on the second set of CI.

Clause P23. The method/system/software/device of a wireless monitoring system of Clause P1 or Clause P11: wherein the mechanical replacement object comprises at least one of: a mechanical structure to support a mechanical covering, a mechanical structure with a similar shape as the object, a mechanical structure with a similar surface as the object, a mechanical structure with a similar surface texture as the object, a mechanical structure with a similar reflective surface as the object, a mechanical structure with a similar skeleton as the object, a mechanical structure with a similar structure as the object, a mechanical structure with a similar cavity as the object, a mechanical covering with a similar wireless property as a covering of the object, a mechanical covering at a structure with a similar wireless property as a corresponding structure of the object, a mechanical covering at a surface with a similar wireless property as a corresponding surface of the object, a mechanical covering at a skeleton with a similar wireless property as a corresponding skeleton of the object, a mechanical covering at a cavity with a similar wireless property as a corresponding cavity of the object, a mechanical covering at a surface of the mechanical replacement object to amplify wireless reflection, a movable mechanism capable of make a similar motion as the object, a mechanical covering with a similar wireless property as the object in their respective motion, a material with similar wireless property as human flesh, and another wireless characteristics.

Clause P24. The method/system/software/device of a wireless monitoring system of Clauses P1-P23: wherein the object is a living object (e.g. human, pet); wherein the mechanical replacement object comprises at least one of: a specific anthropomorphic mannequin (SAM), a mechanical doll with movable chest to mimic breathing, a mannequin with a covering with similar monitoring characteristics of the object in the wireless multipath channel, a mannequin with a covering with similar monitoring characteristics of the object in the wireless multipath channel with respect to the set of CI, a mannequin with a covering to mimic wireless property of the object in the wireless multipath channel, a mannequin with a covering to mimic radio reflection of the object, a mannequin with a covering to mimic radio refraction of the object, a mannequin with a covering to mimic radio absorption of the object, a mannequin with a covering to mimic radio transmission through the object, a mannequin with a covering to mimic radio propagation through the object, a mannequin with moveable chest to mimic breathing, a mannequin with moveable joints, a mannequin with moveable limbs, a mannequin with moveable head, a mannequin with moveable mouth, a mannequin with moveable hands, a mannequin with moveable fingers, a mannequin with moveable legs, a mannequin with moveable feet, a mannequin with moveable bones, a mannequin with moveable muscles, a mannequin with liquid content, a robot that can mimic at least one of: human motion, human gait, human gesture, animal motion, animal gait, animal gesture, and another mechanical imitation of the object.

Clause P25. The method/system/software/device of a wireless monitoring system of Clauses P1-P24: wherein the mechanical replacement object comprises at least one of: a mechanical adult male, a mechanical adult female, a mechanical older adult, a mechanical adult with strong build, a mechanical adult with medium build, a mechanical adult with small build, a mechanical boy, a mechanical girl, a mechanical baby, a mechanical limb, a mechanical hand, a mechanical arm, a mechanical leg, a mechanical foot, a mechanical torso, a mechanical head, a mechanical upper body, a mechanical lower body, a mechanical joint, a mechanical body, a mechanical animal, a mechanical pet, a mechanical cat, a mechanical dog, a mechanical vehicle, a mechanical vehicle replica, and another mechanical replica.

Clause P26. The method/system/software/device of a wireless monitoring system of Clauses P1-P25, comprising: computing a transformation of the monitoring of the mechanical replacement object to estimate the monitoring of the object.

Clause P27. The method/system/software/device of a wireless monitoring system of Clauses P1-P26, comprising: wherein the transformation is associated with at least one of: a model, a material of the mechanical replacement object, a property of the mechanical replacement object.

Clause P28. The method/system/software/device of a wireless monitoring system of Clauses P1-P27, comprising: wherein the received wireless signal differs from the transmitted wireless signal further due to a modulation of the wireless signal by a motion of an object in the venue; monitoring the motion of the object based on the set of CI; estimating the monitoring of the motion of the object in a reproducible manner by monitoring a similar motion of the mechanical replacement object in place of the motion of the object using the same system.

Clause P29. The method/system/software/device of a wireless monitoring system of Clauses P1-P28, comprising: computing a transformation of the monitoring of the motion of mechanical replacement object to the monitoring of the motion of the object.

Clause P30. The method/system/software/device of a wireless monitoring system of Clause P1, comprising: wherein the transformation is associated with at least one of: a model, a model of the venue, a model of the object, a model of the mechanical replacement object, a model of motion of the object, a model of motion of the mechanical replacement object, a material of the mechanical replacement object, a property of the mechanical replacement object, a robotic characteristics of the mechanical replacement object, and a characteristics of a mechanical movement of the mechanical replacement object.

Clause P31. A method/system/software/device of a wireless monitoring system, comprising: transmitting a wireless signal from a Type 1 heterogeneous wireless device through a wireless multipath channel of a venue; receiving the wireless signal by a Type 2 heterogeneous wireless device through the wireless multipath channel, wherein the received wireless signal differs from the transmitted wireless signal due to the wireless multipath channel of the venue and a modulation of the wireless signal by a replacement object in the venue, wherein the replacement object is a mechanical replacement of an object in the venue; obtaining a set of channel information (CI) of the wireless multipath channel based on the received wireless signal using a processor, a memory communicatively coupled with the processor and a set of instructions stored in the memory; estimating a monitoring of the object by the wireless monitoring system by monitoring the replacement object in the venue in a reproducible manner based on the set of CI.

Clause P32. The method/system/software/device of a wireless monitoring system of Clause P7, comprising: wherein the received wireless signal differs from the transmitted wireless signal further due to a modulation of the wireless signal by a motion of the object in the venue; estimating a monitoring of a motion of the object by the wireless monitoring system by monitoring a similar motion of the replacement object in the venue in a reproducible manner based on the set of CI; estimating a monitoring of a motion of the object in a reproducible manner by monitoring the same motion of the mechanical replacement object in place of the motion of the object using the same system.

The following numbered clauses provide implementation examples for positioning and powering a wireless monitoring system.

Clause A1. A method of positioning and powering a wireless monitoring system, comprising: positioning and powering a Type1 heterogeneous wireless device at a first location in a venue; positioning and powering a Type2 heterogeneous wireless device at a second location in a venue; transmitting a wireless signal from the Type1 heterogeneous wireless device through a wireless multipath channel of a venue; receiving the wireless signal by the Type2 heterogeneous wireless device through the wireless multipath channel, wherein the received wireless signal differs from the transmitted wireless signal due to the wireless multipath channel of the venue and a modulation of the wireless signal by an object undergoing a motion in the venue; obtaining a set of channel information (CI) of the wireless multipath channel based on the received wireless signal using a processor, a memory communicatively coupled with the processor and a set of instructions stored in the memory; monitoring at least one of: the object and a motion of the object, based on the set of CI.

Clause A2. The method of positioning and powering the wireless monitoring system of Clause A1, further comprising: wherein the Type1 device is part of a first target device at the first location, and the Type2 device is part of a second target device at the second location; wherein each of the first target device and the second target device comprises at least one of: a power supply unit, a power management unit, a power transfer unit, an energy storage unit, a power generation unit and an energy harvesting unit; powering each of the Type1 device and the Type2 device based on at least one of: the respective power supply unit, the respective power management unit, the respective power transfer unit, the respective energy storage unit, the respective power generation unit and the respective energy harvesting unit, of the respective target device.

Clause A3. The method of positioning and powering the wireless monitoring system of Clause A2, further comprising: powering one of the first and second target device by the respective energy storage unit of the respective target device which can be charged by at least one of: the respective energy harvesting unit or an external power source; charging the energy storage unit by the energy harvesting unit such that the target device does not need frequent charging of the energy storage unit by the external power source.

Clause A4. The method of positioning and powering the wireless monitoring system of Clause A3, further comprising: wherein the respective location of the target device is not near the external power source; removing the energy storage unit of the target device from the respective location; repositioning the energy storage unit to a third location where the external power source is located; connecting the energy storage unit to the external power source using a connector; charging the energy storage unit by the external power source; repositioning the energy storage unit back to the respective location.

Clause A5. The method of positioning and powering the wireless monitoring system of Clauses A2-A4, further comprising: positioning each of the Type1 and Type2 devices by securing the respective target devices to its respective location based on a respective attachment feature, where the respective attachment feature comprises at least one of: a locking mechanism, bayonet coupling, screw coupling, push-pull coupling, plug-and-socket coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, weight, friction, fastener, dual-lock fastener, self-mating fastener, reclosable fastener, and another attachment mechanism.

Clause A6. The method of positioning and powering the wireless monitoring system of Clause A5: wherein the respective attachment feature of the respective target device is for attaching the respective target device to at least one of: a surface in the venue, smooth surface, glass surface, metal surface, wood surface, plastic surface, tiled surface, hard surface, soft surface, rigid surface, flexible surface, elastic surface, structure, fixture, window, vehicle window, vehicle side window, vehicle back window, vehicle front window, door, vehicle door, wall, ceiling, vehicle ceiling, furniture, shelf, cabinet, table, chair, refrigerator, lighting, appliance, utensil, accessory, peripheral, smart device, IoT device, at least one matching attachment feature in the venue, at least one matching attachment feature of another device in the venue, and the venue.

Clause A7. The method of positioning and powering the wireless monitoring system of Clauses A5-A6, further comprising: securing the respective target device to a respective location by attaching the respective attachment feature of the respective target device to a matching attachment feature at the location.

Clause A8. The method of positioning and powering the wireless monitoring system of Clause A7, further comprising: securing a target device to a power socket at the respective location by inserting a power plug of the target device into the power socket.

Clause A9. The method of positioning and powering the wireless monitoring system of Clause A8, further comprising: powering the target device based on the power plug and the power socket.

Clause A10. The method of positioning and powering the wireless monitoring system of Clauses A2-A9, further comprising: transferring energy between two of: the Type1 device, the Type2 device, any target device, any power supply unit, any power management unit, any power transfer unit, any energy storage unit, any power generation unit, any energy harvesting unit, an external power unit, an external power source and an external power sink.

Clause A11. The method of positioning and powering the wireless monitoring system of Clause A10, further comprising: transferring the energy in at least one of: wired or wireless manner.

Clause A12. The method of positioning and powering the wireless monitoring system of Clauses A10-A11, further comprising: supplying energy from at least one of: any power generation unit, any power supply unit, any energy harvesting unit, the external power source, and the external power unit, to at least one of: any power supply unit, any power management unit, any power transfer unit, any energy storage unit, and an external power sink.

Clause A13. The method of positioning and powering the wireless monitoring system of Clauses A10-A12, further comprising: charging the energy storage unit using energy from at least one of: the power generation unit, the energy harvesting unit, and an external power source.

Clause A 14. The method of positioning and powering the wireless monitoring system of Clause A13, further comprising: charging the energy storage unit based on at least one of: a plan, a strategy, a time table, an event, a trigger, a condition, a status, a state, a stage, a percentage of charging, a degree of remaining charge, a protection mechanism association with the energy storage unit, a status associated with the venue, the set of CI, an analysis of the set of CI, the monitoring of the object based on the set of CI, the monitoring of the motion of the object based on the set of CI, a motion of the target device, a null-motion status of the target device, an in-motion status of the target device, a task performed by the target device, a motion of the venue, a null-motion status of the venue, an in-motion status of the venue, and a task associated with the venue.

Clause A15. The method of positioning and powering the wireless monitoring system of Clauses A13-A14, further comprising at least one of: charging the energy storage unit using energy from at least one of:

the power generation unit and the energy harvesting unit, in a first charging mode; charging the energy storage unit using energy from at least one of: the power supply unit, the power management unit, the power transfer unit, an external power unit, and an external power source, in a second charging mode; or charging the energy storage unit using energy from at least one of: the power generation unit and the energy harvesting unit, and energy from at least one of: the power supply unit, the power management unit, the power transfer unit, the external power unit or the external power source, in a third charging mode.

Clause A16. The method of positioning and powering the wireless monitoring system of Clauses A1-A15, further comprising: determining the first and second locations in the venue to install the first and second target devices respectively based on a criterion.

Clause A17. The method of positioning and powering the wireless monitoring system of Clause A16, further comprising: determining a first relative positioning of the Type1 device with respect to the first target device at the first location in the venue, and a second relative positioning of the Type2 device with respect to the second target device at the second location in the venue, based on another criterion.

Clause A18. The method of positioning and powering the wireless monitoring system of Clause A17, wherein: at least one of: the criterion or the another criterion, is based on at least one of: a signal strength of the wireless signal, characteristics of the wireless signal, wireless connection between the Type1 device and the Type2 device, spatial relationship between the Type1 device and the Type2 device, characteristics of the wireless multipath channel, characteristics of the set of CI, the monitoring of at least one of: the object and the motion of the object based on the set of CI, effectiveness of the monitoring, spatial consideration associated with the monitor, coverage consideration associated with the monitor and the location, effectiveness of at least one of: the power generation unit and the energy harvesting unit, availability of light for recharging a battery with a solar panel, environmental factor associated with the use of the energy harvesting unit to harvest energy from the environment in the venue to charge the energy storage unit, availability and suitability of a surface in the venue for attaching the target device using an attaching feature of the target device, ease of attaching the target device, ease of removing the target device to charge the energy storage unit, and another consideration.

Clause A19. The method of positioning and powering the wireless monitoring system of Clauses A16-A18, further comprising: performing a testing procedure associated with the monitoring of the at least one of: the object and the motion of the object based on the set of CI; positioning a testing Type1 heterogeneous wireless device at least one candidate first locations in a testing venue; positioning a testing Type2 heterogeneous wireless device at least one candidate second locations in the testing venue; transmitting a testing wireless signal from the testing Type1 device through a testing wireless multipath channel of a testing venue; receiving the testing wireless signal by the testing Type2 device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; obtaining a set of testing channel information (CI) of the testing wireless multipath channel based on the received testing wireless signal using a testing processor, a testing memory and a set of testing instructions; performing the testing procedure by monitoring the testing object and the testing motion of the testing object based on the set of testing CI; choosing the first and second locations among the at least one respective candidate first locations and respective candidate second locations as the best locations with respect to the criterion based on the testing procedure.

Clause A20. The method of positioning and powering the wireless monitoring system of Clause A19, further comprising: determining a first relative positioning of the Type1 device with respect to the first target device at the first location in the venue, and a second relative positioning of the Type2 device with respect to the second target device at the second location in the venue, based on another criterion and the testing procedure.

Clause A21. The method of positioning and powering the wireless monitoring system of Clauses A19-A20, further comprises at least one of: wherein the testing Type1 device comprises at least one of: the Type1 device, another Type1 device, the Type2 device, another Type2 device and another wireless device; wherein the testing Type2 device comprises at least one of: the Type1 device, another Type1 device, the Type2 device, another Type2 device and another wireless device; wherein the testing venue comprises at least one of: the venue, the venue in a testing condition, the venue in at least one candidate operating condition, the venue in at least one candidate manifestation, the venue in at least one candidate expression, the venue without the object, the venue with at least one of: the object, or a testing object similar to the object, the venue with the object or the testing object in at least one target expression to be monitored in the monitoring task, and the venue with the object or the testing object performing at least one target motion to be monitored in the monitoring task; wherein the testing object comprises at least one of: the object, the object performing the motion, the object performing at least one target motion to be monitored in the monitoring task, a testing object similar to the object, a testing object with similar wireless footprint as the object, a testing object with similar wireless signature as the object, a testing object with similar wireless signature as the object with respect to the CI, a testing object with similar CI as the object, a testing object with similar physical appearance as the object, a testing object with similar physical structure as the object, a testing object with moveable parts similar to the object, a testing object capable of performing motions similar to the object, a testing object performing the motion, and a testing object performing at least one target motion to be monitored in the monitoring task; wherein the testing motion comprises at least one of: the motion of the object, a testing motion similar to the motion of the object, a part of the motion of the object, a partial testing motion similar to the part of the motion of the object, the motion of part of the object, a partial testing motion similar to the motion of the part of the object, the motion of moveable parts of the object, a testing motion of at least one moveable parts similar to the motion of corresponding moveable parts of the object, a part of the motion of moveable parts of the object, a partial testing motion similar to the part of the motion of corresponding moveable parts, the motion of moveable parts of part of the object, a testing motion of at least one moveable parts similar to the motion of corresponding moveable parts of the part of the object, and a target motion to be monitored in the monitoring task; wherein the testing wireless signal comprises at least one candidate wireless signal, one of the candidate wireless signal being the wireless signal; wherein each candidate wireless signal is associated with at least one of: at least one transmitting antenna, at least one receiving antenna, a carrier frequency, a modulation, a signal constellation, a signal bandwidth, a frequency band, a frequency aggregation, a frequency hopping, a signaling, a signal format, a protocol, a standard, a series of sounding signals, a choice of sounding signals, a sounding frequency, a sounding rate, a sounding period, a sounding timing, a sounding timing regularity, a management frame, a control frame, a data frame, a management package, a control packet, a data packet, a frame control field, a field of a frame, a frame header, and a frame body.

Clause A22. A method of positioning and powering a wireless monitoring system, comprising: positioning a Type1 heterogeneous wireless device at a first location in a venue, positioning a Type2 heterogeneous wireless device at a second location in a venue, wherein the Type1 device is part of a first target device at the first location, and the Type2 device is part of a second target device at the second location, wherein each of the first target device and the second target device comprises at least one of: a power supply unit, a power management unit, a power transfer unit, an energy storage unit, a power generation unit and an energy harvesting unit; powering each of the Type1 device and the Type2 device based on at least one of: the respective power supply unit, the respective power management unit, the respective power transfer unit, the respective energy storage unit, the respective power generation unit and the respective energy harvesting unit, of the respective target device; transmitting a wireless signal from the Type1 heterogeneous wireless device through a wireless multipath channel of a venue; receiving the wireless signal by the Type2 heterogeneous wireless device through the wireless multipath channel, wherein the received wireless signal differs from the transmitted wireless signal due to the wireless multipath channel of the venue and a modulation of the wireless signal by an object undergoing a motion in the venue; obtaining a set of channel information (CI) of the wireless multipath channel based on the received wireless signal using a processor, a memory communicatively coupled with the processor and a set of instructions stored in the memory; monitoring at least one of: the object and a motion of the object, based on the set of CI.

Clause A23. The method of positioning and powering the wireless monitoring system of Clause A22, further comprising: powering one of the first and second target device by the respective energy storage unit of the respective target device which can be charged by at least one of: the respective energy harvesting unit or an external power source; charging the energy storage unit by the energy harvesting unit such that the target device does not need frequent charging of the energy storage unit by the external power source.

Clause A24. The method of positioning and powering the wireless monitoring system of Clauses A22-A23, further comprising: determining the first and second locations in the venue to install the first and second target devices respectively based on a criterion; performing a testing procedure associated with the monitoring of the at least one of: the object and the motion of the object based on the set of CI; positioning a testing Type1 heterogeneous wireless device at least one candidate first locations in a testing venue; positioning a testing Type2 heterogeneous wireless device at least one candidate second locations in the testing venue; transmitting a testing wireless signal from the testing Type1 device through a testing wireless multipath channel of a testing venue; receiving the testing wireless signal by the testing Type2 device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; obtaining a set of testing channel information (CI) of the testing wireless multipath channel based on the received testing wireless signal using a testing processor, a testing memory and a set of testing instructions; performing the testing procedure by monitoring the testing object and the testing motion of the testing object based on the set of testing CI; choosing the first and second locations among the at least one respective candidate first locations and respective candidate second locations as the best locations with respect to the criterion based on the testing procedure.

Clause A25. The method of positioning and powering the wireless monitoring system of Clauses A22-A24, further comprising: positioning each of the Type1 and Type2 devices by securing the respective target device to its respective location based on a respective attachment feature, where the respective attachment feature comprises at least one of: a locking mechanism, bayonet coupling, screw coupling, push-pull coupling, plug-and-socket coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, weight, friction, fastener, dual-lock fastener, self-mating fastener, reclosable fastener, and another attachment mechanism; and attaching the respective attachment feature of the respective target device to a matching attachment feature at the respective location.

Clause A26. A wireless monitoring system, comprising: a Type1 heterogeneous wireless device being positioned at a first location in a venue; a Type2 heterogeneous wireless device being positioned at a second location in the venue; a first target device at the first location comprising the Type1 device; a second target device at the second location comprising the Type2 device; wherein each of the first target device and the second target device comprises at least one of: a power supply unit, a power management unit, a power transfer unit, an energy storage unit, a power generation unit and an energy harvesting unit; wherein each of the Type1 device and the Type2 device is powered based on at least one of: the respective power supply unit, the respective power management unit, the respective power transfer unit, the respective energy storage unit, the respective power generation unit and the respective energy harvesting unit, of the respective target device; wherein the Type1 device is configured to transmit a wireless signal through a wireless multipath channel of the venue; wherein the Type2 device is configured to receive the wireless signal through the wireless multipath channel; wherein the received wireless signal differs from the transmitted wireless signal due to the wireless multipath channel of the venue and a modulation of the wireless signal by an object undergoing a motion in the venue; wherein a set of channel information (CI) of the wireless multipath channel is obtained based on the received wireless signal; wherein at least one of: the object and a motion of the object, is monitored based on the set of CI.

Clause A27. The he wireless monitoring system of Clause A26, further comprising: powering one of the first and second target device by the respective energy storage unit of the respective target device which can be charged by at least one of: the respective energy harvesting unit or an external power source; charging the energy storage unit by the energy harvesting unit such that the target device does not need frequent charging of the energy storage unit by the external power source.

Clause A28. The method of positioning and powering the wireless monitoring system of Clauses A26-A27, further comprising: determining the first and second locations in the venue to install the Type1 and the Type2 devices respectively based on a criterion; performing a testing procedure associated with the monitoring of the at least one of: the object and the motion of the object based on the set of CI; positioning a testing Type1 heterogeneous wireless device at least one candidate first locations in a testing venue; positioning a testing Type2 heterogeneous wireless device at least one candidate second locations in the testing venue; transmitting a testing wireless signal from the testing Type1 device through a testing wireless multipath channel of a testing venue; receiving the testing wireless signal by the testing Type2 device through the testing wireless multipath channel, wherein the received testing wireless signal differs from the transmitted testing wireless signal due to the testing wireless multipath channel of the testing venue and a modulation of the testing wireless signal by a testing object undergoing a testing motion in the testing venue; obtaining a set of testing channel information (CI) of the testing wireless multipath channel based on the received testing wireless signal using a testing processor, a testing memory and a set of testing instructions; performing the testing procedure by monitoring the testing object and the testing motion of the testing object based on the set of testing CI; choosing the first and second locations among the at least one respective candidate first locations and respective candidate second locations as the best locations with respect to the criterion based on the testing procedure.

Clause A29. The method of positioning and powering the wireless monitoring system of Clauses A26-A28, further comprising: positioning each of the Type1 and Type2 devices by securing the respective target device to its respective location based on a respective attachment feature, where the respective attachment feature comprises at least one of: a locking mechanism, bayonet coupling, screw coupling, push-pull coupling, plug-and-socket coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, weight, friction, fastener, dual-lock fastener, self-mating fastener, reclosable fastener, and another attachment mechanism; and attaching the respective attachment feature of the respective target device to a matching attachment feature at the respective location.

Clause A30. A Type2 heterogeneous wireless device of a wireless monitoring system, comprising: a wireless receiver; a processor communicatively coupled with the wireless receiver; a memory communicatively coupled with the processor; a set of instructions stored in the memory which, when executed by the processor, causes the Type2 device to: receive a wireless signal through a wireless multipath channel of a venue, wherein the wireless signal is transmitted from a Type1 heterogeneous wireless device of the wireless monitoring system positioned at a first location of the venue, wherein the Type2 device is positioned at a second location in the venue, wherein the Type1 device is part of a first target device of the system at the first location, wherein the Type2 device is part of a second target device of the system at the second location, wherein a test procedure is performed to determine the first and second locations to install the first and second target devices respectively based on a criterion, wherein each of the first target device and the second target device comprises at least one of: a power supply unit, a power management unit, a power transfer unit, an energy storage unit, a power generation unit and an energy harvesting unit, wherein each of the Type1 device and the Type2 device is powered based on at least one of: the respective power supply unit, the respective power management unit, the respective power transfer unit, the respective energy storage unit, the respective power generation unit and the respective energy harvesting unit, of the respective target device, wherein each of the first and second target devices is powered based on its respective location, wherein the received wireless signal differs from the transmitted wireless signal due to the wireless multipath channel of the venue and a modulation of the wireless signal by an object undergoing a motion in the venue, obtaining a set of channel information (CI) of the wireless multipath channel based on the received wireless signal, wherein at least one of: the object and a motion of the object, is monitored based on the set of CI.

Clause A31. The method of positioning and powering the wireless monitoring system of Clauses A1-A30, wherein at least one of: the power comprises at least one of: electrical energy, magnetic energy, chemical energy, mechanical energy, thermal/heat energy, wind energy, light energy, gravitational energy, potential energy, kinetic energy, or nuclear energy; the power supply unit comprises at least one of: battery, car battery, regenerative braking, AC power supply, rectifier, power converter/regulator, transformer, power supply in computer system, power supply in electronic circuitry; the power management unit comprises at least one of: power rectifier, power converter, power regulator, transformer, surge protection, voltage conversion, voltage/current regulator or converter; the power transfer unit comprises at least one of: at least one of: cables, wires or connectors for wired power transfer, at least one of: magnetic coupling, electrical coupling, electro-magnetic coupling, or wireless coupling, for wireless power transfer; the energy storage unit comprises at least one of: battery, rechargeable battery, capacitor, inductor, fly wheel, fuel cell, or thermal reservoir; the power generation unit comprises at least one of: generator, alternator, solar panel, regenerative braking, or wind turbine; and the energy harvesting unit comprises at least one of: generator, alternator, solar panel, regenerative braking, wind turbine , a transducer that converts light energy to electrical energy, a transducer that converts mechanical energy to electrical energy, a transducer that converts heat energy to electrical energy, a transducer that converts another form of energy to electrical energy, or a conversion subsystem that convert the another form of energy to electrical energy.

Clause A32. The method of positioning and powering the wireless monitoring system of Clauses A2-A31, further comprising: powering each of the first and second target devices based on its respective location which is at least one of: fixed, flexible, relocatable, near an external power source, far from the external power source, or with no external power source nearby.

Clause BP1. A method/system/software/device of a wireless monitoring system, comprising: transmitting a wireless signal from a Type 1 heterogeneous wireless device through a wireless multipath channel of a venue; receiving the wireless signal by a Type 2 heterogeneous wireless device through the wireless multipath channel, wherein the received wireless signal differs from the transmitted wireless signal due to the wireless multipath channel of the venue and a modulation of the wireless signal by an object in the venue; obtaining a set of channel information (CI) of the wireless multipath channel based on the received wireless signal using a processor, a memory communicatively coupled with the processor and a set of instructions stored in the memory; monitoring at least one of: the object and a motion of the object, based on the set of CI; wherein a target device comprises at least one of: a power supply unit, a power management unit, a power transfer unit, an energy storage unit, a power generation unit and an energy harvesting unit, wherein the target device comprises at least one of: the Type 1 device, and the Type 2 device.

Clause BP2. The method/system/software/device of the wireless monitoring system of Clause BP1, further comprising: powering the target device with energy from at least one of: the power supply unit, the power management unit, the power transfer unit, the energy storage unit, the power generation unit, the energy harvesting unit, an external power unit, and an external power source.

Clause BP3. The method/system/software/device of the wireless monitoring system of Clauses BP1-BP2, further comprising: transferring energy between two of: the power supply unit, the power management unit, the power transfer unit, the energy storage unit, the power generation unit, the energy harvesting unit, an external power unit, an external power source and an external power sink.

Clause BP4. The method/system/software/device of the wireless monitoring system of Clauses BP1-BP3, further comprising: supplying energy from at least one of: the power generation unit, the energy harvesting unit, an external power source, and an external power unit, to at least one of: the power supply unit, the power management unit, the power transfer unit, the energy storage unit, and an external power sink.

Clause BP5. The method/system/software/device of the wireless monitoring system of Clauses BP1-BP4, further comprising: charging the energy storage unit using energy from at least one of: the power generation unit and the energy harvesting unit.

Clause BP6. The method/system/software/device of the wireless monitoring system of Clauses BP1-BP5, further comprising: charging the energy storage unit based on at least one of: a plan, a strategy, a time table, an event, a trigger, a condition, a status, a state, a stage, a percentage of charging, a protection mechanism association with the energy storage unit, a status associated with the venue, the set of CI, an analysis of the set of CI, the monitoring of the object based on the set of CI, the monitoring of the motion of the object based on the set of CI, a motion of the target device, a null-motion status of the target device, an in-motion status of the target device, a task performed by the target device, a motion of the venue, a null-motion status of the venue, an in-motion status of the venue, and a task associated with the venue.

Clause BP7. The method/system/software/device of the wireless monitoring system of Clauses BP1-BP6, further comprising: charging the energy storage unit using energy from at least one of: the power generation unit and the energy harvesting unit, in a first charging mode; charging the energy storage unit using energy from at least one of the power supply unit, the power management unit, the power transfer unit, an external power unit, and an external power source, in a second charging mode; charging the energy storage unit using energy from at least one of: the power generation unit and the energy harvesting unit, and energy from at least one of the power supply unit, the power management unit, the power transfer unit, in a third charging mode.

Clause BP8. The method/system/software/device of the wireless monitoring system of Clauses BP1-BP7: wherein the power generation unit comprises at least one of: a solar panel, a transducer that converts light energy to electrical energy, a transducer that converts mechanical energy to electrical energy, a transducer that converts heat energy to electrical energy, a transducer that converts another form of energy to electrical energy, and a conversion subsystem that convert the another form of energy to electrical energy.

Clause BP9. The method/system/software/device of the wireless monitoring system of Clauses BP1-BP8: wherein the target device comprises an attachment feature for attaching the target device to at least one of: a surface in the venue, smooth surface, glass surface, metal surface, wood surface, plastic surface, tiled surface, hard surface, soft surface, rigid surface, flexible surface, elastic surface, structure, fixture, window, vehicle window, vehicle side window, vehicle back window, vehicle front window, door, vehicle door, wall, ceiling, vehicle ceiling, furniture, shelf, cabinet, table, chair, refrigerator, lighting, appliance, utensil, accessory, peripheral, smart device, IoT device, at least one matching attachment feature in the venue, at least one matching attachment feature of another device in the venue, and the venue.

Clause BP10. The method/system/software/device of the wireless monitoring system of Clause BP9: wherein the attachment feature comprises at least one of: a locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, and another attachment mechanism.

Clause BP11. The method/system/software/device of the wireless monitoring system of Clauses BP1-BP10, further comprising: determining a location in the venue to install the target device; attaching the target device to the location based on an attachment feature.

Clause BP12. The method/system/software/device of the wireless monitoring system of Clause BP11, further comprising: determining the location based on at least one of: a signal strength of the wireless signal, characteristics of the wireless signal, wireless connection between the Type 1 device and the Type 2 device, spatial relationship between the Type 1 device and the Type 2 device, characteristics of the wireless multipath channel, characteristics of the set of CI, the monitoring of at least one of: the object and the motion of the object based on the set of CI, effectiveness of the monitoring, spatial consideration associated with the monitor, coverage consideration associated with the monitor and the location, effectiveness of at least one of: the power generation unit and the energy harvesting unit, availability of light for recharging a battery with a solar panel, environmental factor associated with the use of the energy harvesting unit to harvest energy from the environment in the venue to charge the energy storage unit, availability and suitability of a surface in the venue for attaching the target device using an attaching feature of the target device, ease of attaching the target device, ease of removing the target device to charge the energy storage unit, and another consideration.

Clause BP13. A method/system/software/device of a vehicle wireless monitoring system, comprising: transmitting a wireless signal from a Type 1 heterogeneous wireless device in a vehicle through a wireless multipath channel of a venue, the venue comprising the vehicle and an immediate neighborhood of the vehicle; receiving the wireless signal by a Type 2 heterogeneous wireless device in the vehicle through the wireless multipath channel, wherein the received wireless signal differs from the transmitted wireless signal due to the wireless multipath channel of the venue; obtaining a time series of channel information (TSCI) of the wireless multipath channel based on the received wireless signal using a processor, a memory communicatively coupled with the processor and a set of instructions stored in the memory; and monitoring the vehicle based on the set of TSCI.

Clause BP14. A method/system/software/device of a vehicle wireless monitoring system: wherein the wireless signal comprises at least one of: wireless local area network (WLAN) signal, WWAN signal, WPAN signal, WBAN signal, WiFi signal, WiFi 4/5/6/7/8 signal, IEEE 802.11 signal, IEEE 802.11n/ac/ax/be signal, cellular communication signal, 3G/4G/LTE/5G/6G/7G/8G signal, IEEE 802.15 signal, IEEE 802.16 signal, Bluetooth signal, Bluetooth Low Energy (BLE) signal, RFID signal, Zigbee signal, UWB signal, WiMax signal, unicast signal, multicast signal, broadcast signal, laser signal, LIDAR signal, radar signal, light signal, infra-red signal, ultra-violet signal, acoustic signal, ultrasound signal, radio signal, electromagnetic (EM) wave, microwave signal, millimeter wave (mmWave) signal, radio frequency (RF) signal with a carrier frequency higher than 100kHz, and another wireless signal.

Clause BP15. The method/system/software/device of a vehicle wireless monitoring system of Clauses BP1-BP14, comprising: monitoring at least one of: an interior space, an exterior space and a structure, of the vehicle based on the TSCI; wherein the interior space comprises at least one of: cabin, trunk, hood, storage space, compartments, trailer, container, cargo bay, gas tank, fuel tank, oil bag; wherein the exterior space comprises at least one of: a garage, a space within a distance from the vehicle, parking facility in which the vehicle stops and parks, area around the vehicle that another vehicle may approach, stop and/or park, instantaneous time-varying area around the vehicle as the vehicle moves, section of a street in which the vehicle moves, trailer, container, cargo bay, towed object, attached object, carried object, front space, rear space, left space, right space, air paths through or around vehicle, space above the vehicle, and space below; wherein the structure comprises at least one of: vehicle chassis, body, lights, plates, partitions, window, door, tailgate, wall, roof, sheet metal, panels, bumpers, fenders, wheels, tires, pipes, engines, pumps, engine bay, hood, trunk, cabin, trailer, container, cargo bay, gas tank, fuel tank, lubrication oil bay, lubrication line, fuel line, seat, panel, and any mechanical parts of the vehicle.

Clause BP16. The method/system/software/device of a vehicle wireless monitoring system of Clauses BP1-BP15, comprising: monitoring by performing at least one of: presence detection, presence detection in storage space (e.g. trunk, hood, trailer, container, cargo bay), human presence detection, child presence detection, pet presence detection, intruder presence detection, foreign object presence detection, detection of child left by parents after the car engine stops, motion detection, child motion detection, motion recognition, activity recognition, sleep detection, vibration detection, window breaking detection, breathing detection, driver recognition, vehicle customization based on driver recognition, passenger recognition, passenger locationing, passenger counting, driver attention monitoring, driver alertness monitoring, driver sleepiness detection, security monitoring, intrusion detection, intruder detection, detection of outsiders (e.g. thieves) reaching inside vehicle through an opening (e.g. window), detection of foreign object entering the vehicle through the opening, tire pressure monitoring, pedestrian detection, cyclist detection, blind spot monitoring, rear cross traffic detection, lane departure detection, lane keeping detection, lane centering detection, parking space detection, parking detection, proximity detection, traffic sign recognition, collision of the vehicle with another object, hit-and-run, accident, imminent danger detection, collision avoidance, and another monitoring of the interior space.

Clause BP17. The method/system/software/device of a vehicle wireless monitoring system of Clauses BP1-BP16, comprising: generating/performing/triggering a response based on the monitoring, wherein the response comprises at least one of: accident avoidance, emergency stop, evasive maneuvering, active anti-lock braking, active traction control, electronic stability control, dynamic stability control, vehicle stability assist, active handling, safety belt adjustment, brake assist, active head restraints, camera activation, backup camera activation, sensor activation, LIDAR activation, radar activation, active park assist, parking assist system, automatic high beam, adaptive cruise control (ACC), active cruise control, pedestrian detection warning (PD), cyclist warning, rear cross-traffic warning (RCTW), blind-spot warning (BSW), forward-collision warning (FCW), lane departure warning (LDW), lane centering assist (LCA), automatic emergency braking (AEB), rear AEB (RAEB), city AEB (CAED), high-speed AEB (HAEB), lane keeping assist (LKA), alert generation, airbag deployment, selective airbag deployment, night vision, speed control, accelerating, decelerating, driver attention arousal measures, driver focus arousal measures, audio control, audio volume control, playing upbeat music, playing warning message, engaging dialogue with driver, fresh air control, air speed control, air volume control, air direction control, temperature control, window control, air conditioning control, lighting control, tinting control, vehicle suspension control, seat customization, driver seat adjustment, driving position customization, steering column customization, passenger seat adjustment, seat control, mirror customization, mirror control, air conditioning customization, air conditioning control, audio-visual customization, audio-visual control, lighting control, generating warning, communicating warning to a remote entity (e.g.

using WiFi, 3G/4G/LTE/5G, SMS, etc.), communicative verbal warning to driver, passenger, and/or intruder (e.g. voice generating in smart speaker using smart assistant such as Amazon Alexa, Google Home, Microsoft, Apple Siri, Samsung or other), communicate visual warning on video display, and another response.

Clause BP18. The method/system/software/device of a vehicle wireless monitoring system of Clauses BP1-BP17, comprising: monitoring a security of the vehicle based on the TSCI.

Clause BP19. The method/system/software/device of a vehicle wireless monitoring system of Clauses BP1-BP18, comprising: associating a safety event/security event/structure integrity event of the vehicle with a characteristics of the TSCI; detecting the safety event/security event/structure integrity event of the vehicle by recognizing the characteristics of the TSCI, wherein the safety event/security event/structure integrity event comprises at least one of: window left half open, window not fully closed, door not locked, window breaking, unauthorized opening of door, unauthorized entry of an intruder, intruder motion in the trunk of vehicle, intruder motion in the cabin of vehicle, intruder reaching in to at least one of: steal, damage, sabotage, collision, sabotage of vehicle, damage of outer surface of vehicle, hit-and-run, baby left in vehicle, young child left in vehicle, pet left in vehicle, people walking by, people peeping through vehicle windows, vehicle too close, breathing detected in vehicle, motion detected in vehicle, and another security event.

Clause BP20. The method/system/software/device of a vehicle wireless monitoring system of Clauses BP3-BP19, comprising: training a security model of the characteristics of the TSCI associated with the security event; detecting the security event based on the security model.

Clause BP21. The method/system/software/device of a vehicle wireless monitoring system of Clauses BP4-BP20, comprising: training the security model based on a training TSCI collected during a training period in which the security event occurs.

Clause BP22. The method/system/software/device of a vehicle wireless monitoring system of Clauses BP2-BP21, comprising: start monitoring the security of the vehicle based on at least one of: an arming the vehicle wireless monitoring system, a parking status of the vehicle, a stopping status of the vehicle, a turning-off of an engine of the vehicle, a turning-off of headlight of the vehicle, a brake release by a driver of the vehicle, a departure of the driver from the vehicle by opening and closing the driver door, a departure of a passenger from the vehicle by opening and closing of a passenger door, a departure of the driver's smart phone, an absence of a paired device, a lack of motion inside the vehicle for a period of time, and another condition.

Clause BP23. The method/system/software/device of a vehicle wireless monitoring system of Clauses BP2-BP22, comprising: stop or pause monitoring the security of the vehicle based on at least one of: a disarming the vehicle wireless monitoring system, a non-parking status of the vehicle, an in-motion status of the vehicle, a turning-on of an engine of the vehicle, a turning-on of headlight of the vehicle, a brake depression by a driver of the vehicle, an arrival of the driver from the vehicle by opening and closing the driver door, an arrival of a passenger from the vehicle by opening and closing of a passenger door, an arrival of the driver's smart phone, a presence of a paired device, a presence of motion inside the vehicle for a period of time, and another condition.

Clause BP24. The method/system/software/device of a vehicle wireless monitoring system of Clauses BP1-BP23, comprising: monitoring a window breaking event of the vehicle based on the set of TSCI.

Clause BP25. The method/system/software/device of a vehicle wireless monitoring system of Clauses BP1-BP24: wherein at least one of: the Type 1 device and the Type 2 device, is physically connected to the vehicle based on at least one of: a USB port, a cigarette lighter port, a OBD port, an Ethernet point, a network point, another connector port, and an attachment unit of the Type 1 or Type 2 device.

Clause BP26. The method/system/software/device of a vehicle wireless monitoring system of Clauses BP1-BP25: wherein at least one of: the Type 1 device and the Type 2 device, is integrated into a vehicle electronic subsystem.

Clause BP27. The method/system/software/device of a vehicle wireless monitoring system of Clause BP1: wherein at least one of: the Type 1 device and the Type 2 device, is communicatively coupled to an in-car electronic subsystem based on a WiFi system, in-car Bluetooth system, in-car BLE system, in-car Zigbee system.

The following numbered clauses provide implementation examples for detecting and monitoring an object by a vehicle wireless monitoring system. The object may be a driver, a passenger, a pet, a baby, a pedestrian, an intruder, or another vehicle.

Clause B1. A Type2 heterogeneous wireless device of a vehicle wireless monitoring system, comprising: a wireless receiver; a processor communicatively coupled with the wireless receiver; a memory communicatively coupled with the processor; a set of instructions stored in the memory which, when executed by the processor, cause the Type2 heterogeneous wireless device in a venue to perform: receiving a wireless signal through a wireless multipath channel of the venue, wherein the venue comprises a vehicle and an immediate neighborhood of the vehicle, wherein the wireless signal is transmitted from a Type1 heterogeneous wireless device of the vehicle wireless monitoring system in the venue, wherein the received wireless signal differs from the transmitted wireless signal due to the wireless multipath channel of the venue and a modulation of the wireless signal by an object undergoing a motion in the venue, obtaining a time series of channel information (TSCI) of the wireless multipath channel based on the received wireless signal, and performing a monitoring task by monitoring at least one of: the vehicle, the object and the motion of the object, based on the TSCI.

Clause B2. The Type2 device of the vehicle wireless monitoring system of clause B1, wherein the set of instructions further cause the Type2 device to perform: monitoring at least one of: an interior space, an exterior space and a structure, of the vehicle based on the TSCI; wherein the interior space comprises at least one of: cabin, trunk, hood, storage space, compartments, trailer, container, cargo bay, gas tank, fuel tank, and oil bag; wherein the exterior space comprises at least one of: a garage, a space within a distance from the vehicle, parking facility in which the vehicle stops and parks, area around the vehicle that another vehicle may approach, stop or park, instantaneous time-varying area around the vehicle as the vehicle moves, section of a street in which the vehicle moves, trailer, container, cargo bay, towed object, attached object, carried object, front space, rear space, left space, right space, air paths through or around vehicle, space above the vehicle, and space below; wherein the structure comprises at least one of: vehicle chassis, body, lights, plates, partitions, window, door, tailgate, wall, roof, sheet metal, panels, bumpers, fenders, wheels, tires, pipes, engines, pumps, engine bay, hood, trunk, cabin, trailer, container, cargo bay, gas tank, fuel tank, lubrication oil bay, lubrication line, fuel line, seat, panel, or any mechanical parts of the vehicle.

Clause B3. The Type2 device of the vehicle wireless monitoring system of clause B2, wherein the set of instructions further cause the Type2 device to perform: monitoring by performing at least one of the following based on the TSCI: presence detection, presence detection in storage space, human presence detection, child presence detection, pet presence detection, foreign object presence detection, detection of child left by parents after the car engine stops, motion detection, child motion detection, motion recognition, activity recognition, sleep detection, vibration detection, window breaking detection, breathing detection, driver recognition, vehicle customization based on driver recognition, driver attention monitoring, driver alertness monitoring, driver sleepiness detection, passenger recognition, passenger locationing, passenger counting, security monitoring, intrusion detection, intruder detection, intruder presence detection, detection of outsiders reaching inside vehicle through an opening, detection of foreign object entering the vehicle through the opening, tire pressure monitoring, pedestrian detection, cyclist detection, blind spot monitoring, rear cross traffic detection, lane departure detection, lane keeping detection, lane centering detection, parking space detection, parking detection, proximity detection, traffic sign recognition, imminent danger detection, collision avoidance, accident, hit-and-run, collision of the vehicle with another object, or another monitoring of the interior space.

Clause B4. The Type2 device of the vehicle wireless monitoring system of clause B3, wherein the set of instructions further cause the Type2 device to perform: computing at least one spatial-temporal information (STI) of at least one of: the vehicle, the object and the motion of the object, based on the TSCI; and monitoring the vehicle, the object and the motion of the object based on the at least one STI, wherein an STI comprises at least one of: motion localization, location, location coordinate, change in location, position, position on map, height, horizontal location, vertical location, distance, displacement, speed, velocity, acceleration, rotational displacement, rotational speed, rotational acceleration, direction, angle of motion, angle of azimuth, angle of elevation, direction of motion, rotation, path, starting location, initiating location, ending location, size, length, area, volume, capacity, shape, form, tag, motion classification, motion identification, motion recognition, motion type, repeated motion, periodic motion, pseudo-periodic motion, impulsive motion, sudden motion, fall-down motion, transient motion, deformation, transformation, shrinking, expanding, behavior, motion trend, starting quantity, initiating quantity, ending quantity, consumed quantity, unconsumed quantity, signal statistics, signal dynamics, anomaly, transient behavior, period of motion, frequency of motion, timing of motion, time trend, temporal profile, temporal characteristics, occurrence, change, temporal change, change of CI, change in frequency, change in timing, change of gait cycle, timing, starting time, initiating time, ending time, duration, history of motion, frequency, frequency spectrum, frequency characteristics, presence, absence, proximity, approaching, receding, identity, identifier of the object, composition of the object, deformation motion, head motion, head motion direction, mouth motion, heart motion, internal organ motion, hand motion, hand motion direction, leg motion, body motion, handwriting, gesture, gait, gait cycle, tool motion, machine motion, complex motion, combination of multiple motions, head motion rate, mouth-related rate, eye-related rate, hand motion rate, walking rate, motion rhythm, motion cycle, cycle period, frequency, rate, breathing rate, heart rate, tidal volume, depth of breath, inhale time, exhale time, inhale time to exhale time ratio, airflow rate, heart heat-to-beat interval, heart rate variability, gait cycle, motion statistics, motion parameter, motion feature, indication of motion detection, motion magnitude, motion phase, motion count, positional characteristics, characteristics associated with movement of the object, motion signal transformation, presence of motion, absence of motion, presence of object, absence of object, entrance of object, exit of object, a change of object, event, fall-down event, security event, accident event, home event, office event, factory event, warehouse event, manufacturing event, assembly line event, maintenance event, car-related event, navigation event, tracking event, door event, door-open event, door-close event, window event, window-open event, window-close event, repeatable event, one-time event, state, physical state, health state, well-being state, emotional state, mental state, or stage.

Clause B5. The Type2 device of the vehicle wireless monitoring system of clause B4, wherein the set of instructions further cause the Type2 device to perform: computing an analytics based on the at least one STI; and monitoring the vehicle, the object and the motion of the object based on the analytics; wherein computing the analytics comprises at least one of: processing the at least one STI, analyzing the at least one STI, thresholding the at least one STI based on a threshold, classifying the at least one STI based on a classifier, classifying using a neural network with input comprising the at least one STI, or computing at least one of: a degree of motion, a change, a non-change, an occurrence, an indication, an event occurrence, a security event, an identification, a verification, an authentication, a detection, an estimation, a recognition, a classification, a counting, a locationing, a tracking, a guidance, a navigation, a presence, a proximity, a state, a stage, a sleep stage, a well-being state, a health condition, a behavior, an activity, a trend, a gesture, a sign, a keystroke, an emotion, a timing, a duration, a location, an irregularity, a deviation, or an alert, based on the at least one STI.

Clause B6. The Type2 device of the vehicle wireless monitoring system of clauses B4-B5, wherein the set of instructions further cause the Type2 device to perform: computing a time series of features of the TSCI; and computing an STI based on the time series of features of the TSCI; wherein each feature comprises at least one of: a quantity, Boolean, label, scalar, vector, matrix, data structure, set, collection, CI, magnitude of CI, phase of CI, magnitude square of CI, function of a sliding window of CI, component of CI, function of components of a sliding window of CI, energy computation, correlation, autocorrelation, autocorrelation function (ACF), cross correlation, correlation between two CI, correlation between two vectors of CI, correlation between two windows of CI, correlation between components of two windows of CI, correlation between two windows of CI aligned and mapped, correlations between two windows of CI aligned using dynamic time warping (DTW), correlation coefficient, correlation indicator, feature of ACF, local maximum, local minimum, zero crossing, inner product, dot product, outer product, covariance, auto-covariance, cross covariance, discrimination score, time reversal resonance strength (TRRS), distance score, Euclidean distance, absolute distance, L-1 distance, L-2 distance, L-k distance, graph distance, metric, norm, L-1 norm, L-2 norm, L-k norm, distance measure between two CI, distance measure between two vectors of CI, distance measure between two windows of CI, distance measure between components of two windows of CI, distance measure between two windows of CI aligned and mapped, distance measure between two windows of CI aligned using DTW, moving average, weighted average, median, mode, mean, variance, standard deviation, variation, derivative, slope, total variation, absolute variation, square variation, spread, dispersion, variability, deviation, absolute deviation, square deviation, total deviation, divergence, range, interquartile range, skewness, kurtosis, L-moment, coefficient of variation, quartile coefficient of dispersion, mean absolute difference, Gini coefficient, relative mean difference, median absolute deviation, average absolute deviation, distance standard deviation, coefficient of dispersion, entropy, variance-to-mean ratio, maximum-to-minimum ratio, variation measure, regularity measure, similarity measure, similarity score, likelihood, probability distribution function, sample distribution, moment generating function, expected value, expected function, transformation, frequency spectrum, feature of spectrum, frequency characteristics, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, measure of repeatedness, measure of periodicity, measure of impulsiveness, measure of sudden-ness, measure of recurrence, frequency, rate, period, timing, duration, change, temporal change, frequency change, statistical change, temporal change, event occurrence, event statistics, feature extraction, decomposition, dimension reduction ,projection, orthogonal projection, non-orthogonal projection, over-complete projection, eigen-decomposition, singular value decomposition (SVD), principal component analysis (PCA), independent component analysis (ICA), thresholding, soft thresholding, hard thresholding, clipping, and soft clipping.

Clause B7. The Type2 device of the vehicle wireless monitoring system of clauses B1-B6: wherein the TSCI is preprocessed based on at least one of: filtering, linear filtering, nonlinear filtering, lowpass filtering, bandpass filtering, highpass filtering, median filtering, rank filtering, quartile filtering, percentile filtering, mode filtering, finite impulse response (FIR) filtering, infinite impulse response (IIR) filtering, moving average (MA) filtering, autoregressive (AR) filtering, autoregressive moving averaging (ARMA) filtering, selective filtering, adaptive filtering, matched filtering, interpolation, decimation, subsampling, upsampling, resampling, time correction, time base correction, folding, grouping, energy computation, denoising, smoothing, signal conditioning, phase correction, magnitude correction, phase cleaning, magnitude cleaning, enhancement, restoration, spectral analysis, linear transform, nonlinear transform, inverse transform, frequency transform, inverse frequency transform, Fourier transform (FT), discrete time FT (DTFT), discrete FT (DFT), fast FT (FFT), wavelet transform, Laplace transform, Hilbert transform, Hadamard transform, trigonometric transform, sine transform, cosine transform, DCT, power-of-2 transform, sparse transform, graph-based transform, graph signal processing, fast transform, a transform combined with zero padding, cyclic padding, padding, zero padding, transformation, and mapping.

Clause B8. The Type2 device of the vehicle wireless monitoring system of clauses B1-B7, wherein the set of instructions further cause the Type2 device to perform: generating a response based on the monitoring, wherein the response comprises at least one of: generating warning, generating a presentation, communicating warning to a remote device, generating the presentation on the remote device, communicating verbal warning in the vehicle to at least one of: the driver, a passenger, an outsider, and an intruder, communicating visual warning on an in-vehicle visual display, driver attention arousal measures, driver focus arousal measures, audio-visual control, audio volume control, playing upbeat music, playing warning message, engaging dialogue with driver, fresh air control, air speed control, air volume control, air direction control, temperature control, window control, air conditioning control, lighting control, tinting control, vehicle suspension control, seat customization, driver seat adjustment, driving position customization, steering column customization, passenger seat adjustment, seat control, mirror customization, mirror control, air conditioning customization, audio-visual customization, speed control, accelerating, decelerating, accident avoidance, emergency stop, evasive maneuvering, active anti-lock braking, active traction control, electronic stability control, dynamic stability control, vehicle stability assist, active handling, safety belt adjustment, brake assist, active head restraints, camera activation, backup camera activation, sensor activation, LIDAR activation, radar activation, active park assist, parking assist system, automatic high beam, adaptive cruise control (ACC), active cruise control, pedestrian detection warning (PD), cyclist warning, rear cross-traffic warning (RCTW), blind-spot warning (BSW), forward-collision warning (FCW), lane departure warning (LDW), lane centering assist (LCA), automatic emergency braking (AEB), rear AEB (RAEB), city AEB (CAED), high-speed AEB (HAEB), lane keeping assist (LKA), alert generation, airbag deployment, selective airbag deployment, night vision, and another response.

Clause B9. The Type2 device of the vehicle wireless monitoring system of clauses B1-B8, wherein the set of instructions further cause the Type2 device to perform: preprocessing the TSCI; computing a time series of features of the TSCI, each feature being a feature of a first sliding time window of the preprocessed TSCI; computing a time series of STI based on the time series of features, each STI based on a second sliding time window of the time series of features; computing a time series of analytics based on the time series of STI, each analytics based on a third sliding time window of the time series of STI; monitoring the at least one of: the vehicle, the object and the motion of the object, based on at least one of: the time series of features, the time series of STI and the time series of analytics; and generating a response based on the monitoring.

Clause B10. The Type2 device of the vehicle wireless monitoring system of clauses B2-B9, wherein the set of instructions further cause the Type2 device to perform monitoring a security of the vehicle based on the TSCI, which comprises at least one of: (1) monitoring the security of the exterior space of the vehicle which comprises at least one of: detection of suspicious activity in the exterior space, detection of presence of moving object, detection of a person approaching the vehicle, detection of a person in the exterior space loitering around the vehicle, detection of a person in the exterior space peeping into the vehicle through a window, detection of a person in the exterior space damaging the vehicle, detection of a person force-entering the vehicle, or detection of a person in the exterior space force-opening a door or a window of the vehicle; (2) monitoring the security of the interior space of the vehicle which comprises at least one of: detection of suspicious activity in the interior space, detection of presence of a moving object, detection of an outsider reaching inside vehicle through a window, detection of a foreign object entering the vehicle through a window, intrusion detection, intruder presence detection, intruder tracking, detection of presence of intruder in the interior space when the vehicle is parked, detection of presence of living object, detection of presence of children in back seat, front seat, trunk, or storage space, or detection of presence of pet; or (3) monitoring the security of the structure of the vehicle when the vehicle is parked or in motion which comprises at least one of: detection of window being broken when parked, detection of door open when parked, detection of hit-and-run when parked, detection of collision, or detection of structural damage.

Clause B 11. The Type2 device of the vehicle wireless monitoring system of clauses B2-B 10, wherein the set of instructions further cause the Type2 device to perform monitoring the driver and passengers of the vehicle based on the TSCI, which comprises at least one of: driver monitoring, driver presence detection, driver identification, driver verification, driver activity monitoring, driver preference monitoring, driver well-being monitoring, driver vital sign monitoring, driver breathing monitoring, driver heart rate monitoring, driver alertness monitoring, driver drowsiness detection, driver distraction detection, driver entrance to vehicle, driver exit from vehicle, passenger monitoring, passenger presence detection, baby detection, child detection, pet detection, passenger locationing, passenger counting, passenger recognition, passenger activity monitoring, passenger preference monitoring, passenger well-being monitoring, passenger breathing monitoring, passenger heart beat monitoring, passenger vital sign monitoring, passenger sleeping detection, passenger entrance to vehicle, passenger exit from vehicle, and driver-passenger interaction monitoring.

Clause B12. The Type2 device of the vehicle wireless monitoring system of clauses B1-B11, wherein the set of instructions further cause the Type2 device to perform: pausing the monitoring task when a low-activity condition is determined in the monitoring task; entering a low-power mode; awakening from the low-power mode triggered by a signal; performing the monitoring task; pausing the monitoring task again when the low-activity condition is determined again in the monitoring task; entering the low-power mode again.

Clause B 13. The Type2 device of the vehicle wireless monitoring system of clauses B1-B12, wherein the set of instructions further cause the Type2 device to perform: associating an event of the vehicle with a characteristics of the TSCI, wherein the event comprises at least one of: a safety monitoring event, a security monitoring event, structure integrity monitoring event, a driver monitoring event, a passenger monitoring event, and an intruder monitoring event; detecting the event of the vehicle by recognizing the characteristics of the TSCI.

Clause B14. The Type2 device of the vehicle wireless monitoring system of clause B13: wherein the event comprises at least one of: window opened, window half-open, window closed, window almost-closed, window broken, door opened, door half-opened, door closed, door almost-closed, door not locked, door deformed, unauthorized opening of door, unauthorized entry of an intruder, driver presence, driver motion, driver sleepy, driver distracted, passenger presence, passenger motion, intruder presence, intruder motion, intruder motion in the trunk of vehicle, intruder motion in the cabin of vehicle, intruder reaching in to at least one of: steal, damage, and sabotage, collision, sabotage of vehicle, damage of outer surface of vehicle, hit-and-run, baby left in vehicle, young child left in vehicle, pet left in vehicle, people walking by, people peeping through vehicle windows, vehicle too close, breathing detected in vehicle, motion detected in vehicle, and another security event.

Clause B15. The Type2 device of the vehicle wireless monitoring system of clauses B9-B14, wherein the set of instructions further cause the Type2 device to perform: associating an event of the vehicle with a characteristics of at least one of: the TSCI, the time series of features, the time series of STI and the time series of analytics, wherein the event comprises at least one of: a safety event, a security event, structure integrity event, a driver event, a passenger event, and an intruder event; and detecting the event of the vehicle by recognizing the characteristics of the TSCI.

Clause B 16. The Type2 device of the vehicle wireless monitoring system of clause B15, wherein the set of instructions further cause the Type2 device to perform: training a model of the event based on the characteristics of at least one of: a training TSCI, a time series of training features computed based on the training TSCI, a time series of training STI computed based on the training features, and a time series of training analytics computed based on the training STI, wherein the training TSCI of a training wireless multipath channel of a training venue is obtained from a training wireless signal transmitted from a training Type1 device in the training venue to a training Type2 device in the training venue during a training time period; and detecting the event based on the model, and at least one of: the TSCI, the time series of features, the time series of STI and the time series of analytics.

Clause B 17. The Type2 device of the vehicle wireless monitoring system of clauses B 1-B 16, wherein the set of instructions further cause the Type2 device to perform: starting, stopping or pausing a sub-task of the monitoring task based on at least one of: an arming or disarming the vehicle wireless monitoring system, a parking status or a non-parking status of the vehicle, a stopping status or an in-motion status of the vehicle, a turning-on or a turning-off of an engine of the vehicle, a turning-on or turning off of a headlight of the vehicle, a brake release or a brake depression by a driver of the vehicle, an opening or a closing of a door, an opening or a closing of a window, an opening or a closing of at least one of: a driver door, a passenger door, a vehicle trunk door, a cover of a vehicle hood, a door of a cargo bay, a door of a trailer, a door of a container, a door of a storage space, and a cover of a fuel tank, an entrance or an exit of the driver with associated opening and closing of the driver door, an entrance or an exit of a passenger with associated opening and closing of a passenger door, an entrance or an exit of the driver's smart phone, an entrance or an exit of the passenger's smart phone, a presence or an absence of a paired device, a pairing or an unpairing of a previously paired device, an interaction with a part of the vehicle, wherein the part of the vehicle comprises at least one of: a USB port, a cigarette lighter port, a OBD port, a headphone port, an Ethernet point, a network point of vehicle network, a user-interface, a touch-sensitive screen, a button, a lever, a control, a vent, a radio, a vehicle entertainment system, an air conditioner, a vehicle climate control system, a vehicle communication system, a vehicle Wi-Fi system, a vehicle Bluetooth system, a seat, a window, a door, a cover, a wiper, a lighting, a mirror, a steering wheel, a wheel, a tire, a moveable part of the vehicle, and an attachment unit of the Type 1 or Type 2 device, a lack of motion inside the vehicle for a period of time, a presence of motion inside the vehicle for a period of time, and another condition.

Clause B18. The Type2 device of the vehicle wireless monitoring system of clauses B1-B17: wherein at least one of: the Type 1 device and the Type 2 device, is at least one of: physically attached to or physically supported by the vehicle and based on at least one of: the USB port, the cigarette lighter port, the OBD port, the Ethernet point, the network point, and the attachment unit of the Type 1 or Type 2 device; wherein the Type1 device and the Type2 device are at different locations in the vehicle.

Clause B19. The Type2 device of the vehicle wireless monitoring system of clause B18: wherein at least one of: the Type 1 device and the Type 2 device, is integrated into a vehicle subsystem.

Clause B20. The Type2 device of the vehicle wireless monitoring system of clauses B1-B19: wherein at least one of: the Type 1 device and the Type 2 device, is at least one of: communicatively coupled to, or powered by the vehicle based on at least one of: the USB port, the cigarette lighter port, the OBD port, the Ethernet point, the network point, the vehicle network, the vehicle Wi-Fi system, the vehicle Bluetooth system, a vehicle BLE system, a vehicle Zigbee system, the vehicle communication system, an in-vehicle electronic subsystem, hard-wiring, and the attachment unit of the Type 1 or Type 2 device, wherein the Type1 device and the Type2 device are at the same location in the vehicle.

Clause B21. The Type2 device of the vehicle wireless monitoring system of clauses B 1-B20, wherein the set of instructions further cause the Type2 device to perform: receiving another wireless signal through another wireless multipath channel of the venue, wherein the another wireless signal is transmitted from another Type1 heterogeneous wireless device of the system, wherein the received another wireless signal differs from the transmitted another wireless signal due to the another wireless multipath channel of the venue and a modulation of the another wireless signal by the object undergoing the motion in the venue, obtaining another time series of channel information (TSCI) of the another wireless multipath channel based on the received another wireless signal, performing the monitoring task individually by monitoring at least one of: the vehicle, the object and the motion of the object, based on the another TSCI, and performing the monitoring task jointly by monitoring at least one of: the vehicle, the object and the motion of the object, based jointly on the TSCI and the another TSCI.

Clause B22. The Type2 device of the vehicle wireless monitoring system of clauses B1-B21: wherein another Type2 heterogeneous wireless device in the venue is configured to perform: receiving the wireless signal through the wireless multipath channel of the venue, wherein the wireless signal received by the another Type2 device differs from the transmitted wireless signal due to the wireless multipath channel of the venue and another modulation of the wireless signal by the object undergoing the motion in the venue, obtaining another time series of channel information (TSCI) of the wireless multipath channel based on the wireless signal received by the another Type2 device, perform the monitoring task individually by monitoring at least one of: the vehicle, the object and the motion of the object, based on the another TSCI; wherein the monitoring task is performed jointly by monitoring at least one of: the vehicle, the object and the motion of the object, based jointly on the TSCI and the another TSCI.

Clause B23. A method of a vehicle wireless monitoring system, comprising: transmitting a wireless signal from a Type1 heterogeneous wireless device in a venue through a wireless multipath channel of the venue, the venue comprising a vehicle and an immediate neighborhood of the vehicle; receiving the wireless signal by a Type2 heterogeneous wireless device in the venue through the wireless multipath channel, wherein the received wireless signal differs from the transmitted wireless signal due to the wireless multipath channel of the venue and a modulation of the wireless signal by an object undergoing a motion in the venue; obtaining a time series of channel information (TSCI) of the wireless multipath channel based on the received wireless signal using a processor, a memory communicatively coupled with the processor and a set of instructions stored in the memory; and performing a monitoring task by monitoring at least one of: the vehicle, the object and the motion of the object, based on the TSCI.

Clause B24. The method of the vehicle wireless monitoring system of clause B23, further comprising: preprocessing the TSCI; computing a time series of features of the TSCI, each feature being a feature of a first sliding time window of the preprocessed TSCI; computing a time series of STI based on the time series of features, each STI based on a second sliding time window of the time series of features; computing a time series of analytics based on the time series of STI, each analytics based on a third sliding time window of the time series of STI; monitoring the at least one of: the vehicle, the object and the motion of the object, based on at least one of: the time series of features, the time series of STI and the time series of analytics; and generating a response based on the monitoring.

Clause B25. The method of the vehicle wireless monitoring system of clause B24, comprising: associating an event of the vehicle with a characteristics of at least one of: the TSCI, the time series of features, the time series of STI and the time series of analytics, wherein the event comprises at least one of: a safety event, a security event, structure integrity event, a driver event, a passenger event, and an intruder event; training a model of the event based on the characteristics of at least one of: a training TSCI, a time series of training features computed based on the training TSCI, a time series of training STI computed based on the training features, and a time series of training analytics computed based on the training STI, wherein the training TSCI of a training wireless multipath channel of a training venue is obtained from a training wireless signal transmitted from a training Type1 device in the training venue to a training Type2 device in the training venue during a training time period; and detecting the event of the vehicle by recognizing the characteristics of the TSCI based on the model.

Clause B26. The method of the vehicle wireless monitoring system of clauses B23-B25, further comprising: monitoring at least one of: an interior space, an exterior space and a structure, of the vehicle based on the TSCI; and monitoring by performing at least one of the following based on the TSCI: presence detection, presence detection in storage space, human presence detection, child presence detection, pet presence detection, foreign object presence detection, detection of child left by parents after the car engine stops, motion detection, child motion detection, motion recognition, activity recognition, sleep detection, vibration detection, window breaking detection, breathing detection, driver recognition, vehicle customization based on driver recognition, driver attention monitoring, driver alertness monitoring, driver sleepiness detection, passenger recognition, passenger locationing, passenger counting, security monitoring, intrusion detection, intruder detection, intruder presence detection, detection of outsiders reaching inside vehicle through an opening, detection of foreign object entering the vehicle through the opening, tire pressure monitoring, pedestrian detection, cyclist detection, blind spot monitoring, rear cross traffic detection, lane departure detection, lane keeping detection, lane centering detection, parking space detection, parking detection, proximity detection, traffic sign recognition, imminent danger detection, collision avoidance, accident, hit-and-run, collision of the vehicle with another object, or another monitoring of the interior space.

Clause B27. The method of the vehicle wireless monitoring system of clause B26, comprising at least one of: (1) monitoring a security of the vehicle based on the TSCI, comprising at least one of: (1a) monitoring the security of the exterior space of the vehicle which comprises at least one of: detection of suspicious activity in the exterior space, detection of presence of moving object, detection of a person approaching the vehicle, detection of a person in the exterior space loitering around the vehicle, detection of a person in the exterior space peeping into the vehicle through a window, detection of a person in the exterior space damaging the vehicle, detection of a person force-entering the vehicle, or detection of a person in the exterior space force-opening a door or a window of the vehicle, (1b) monitoring the security of the interior space of the vehicle which comprises at least one of: detection of suspicious activity in the interior space, detection of presence of a moving object, detection of an outsider reaching inside vehicle through a window, detection of a foreign object entering the vehicle through a window, intrusion detection, intruder presence detection, intruder tracking, detection of presence of intruder in the interior space when the vehicle is parked, detection of presence of living object, detection of presence of children in back seat, front seat, trunk, or storage space, or detection of presence of pet, or (1c) monitoring the security of the structure of the vehicle when the vehicle is parked or in motion which comprises at least one of: detection of window being broken when parked, detection of door open when parked, detection of hit-and-run when parked, detection of collision, or detection of structural damage; or (2) monitoring the driver and passengers of the vehicle based on the TSCI, comprising at least one of: (2a) driver monitoring, driver presence detection, driver identification, driver verification, driver activity monitoring, driver preference monitoring, driver well-being monitoring, driver vital sign monitoring, driver breathing monitoring, driver heart rate monitoring, driver alertness monitoring, driver drowsiness detection, driver distraction detection, driver entrance to vehicle, driver exit from vehicle, (2b) passenger monitoring, passenger presence detection, baby detection, child detection, pet detection, passenger locationing, passenger counting, passenger recognition, passenger activity monitoring, passenger preference monitoring, passenger well-being monitoring, passenger breathing monitoring, passenger heart beat monitoring, passenger vital sign monitoring, passenger sleeping detection, passenger entrance to vehicle, passenger exit from vehicle, and (2c) driver-passenger interaction monitoring.

Clause B28. The method of the vehicle wireless monitoring system of clauses B23-B27, comprising: starting, stopping or pausing a sub-task of the monitoring task based on at least one of: an arming or disarming the vehicle wireless monitoring system, a parking status or a non-parking status of the vehicle, a stopping status or an in-motion status of the vehicle, a turning-on or a turning-off of an engine of the vehicle, a turning-on or turning off of a headlight of the vehicle, a brake release or a brake depression by a driver of the vehicle, an opening or a closing of a door, an opening or a closing of a window, an opening or a closing of at least one of: a driver door, a passenger door, a vehicle trunk door, a cover of a vehicle hood, a door of a cargo bay, a door of a trailer, a door of a container, a door of a storage space, and a cover of a fuel tank, an entrance or an exit of the driver with associated opening and closing of the driver door, an entrance or an exit of a passenger with associated opening and closing of a passenger door, an entrance or an exit of the driver's smart phone, an entrance or an exit of the passenger's smart phone, a presence or an absence of a paired device, a pairing or an unpairing of a previously paired device, an interaction with a part of the vehicle, wherein the part of the vehicle comprises at least one of: a USB port, a cigarette lighter port, a OBD port, a headphone port, an Ethernet point, a network point of vehicle network, a user-interface, a touch-sensitive screen, a button, a lever, a control, a vent, a radio, a vehicle entertainment system, an air conditioner, a vehicle climate control system, a vehicle communication system, a vehicle Wi-Fi system, a vehicle Bluetooth system, a seat, a window, a door, a cover, a wiper, a lighting, a mirror, a steering wheel, a wheel, a tire, a moveable part of the vehicle, and an attachment unit of the Type 1 or Type 2 device, a lack of motion inside the vehicle for a period of time, a presence of motion inside the vehicle for a period of time, and another condition; pausing the monitoring task when a low-activity condition is determined in the monitoring task; entering a low-power mode; awakening from the low-power mode triggered by a signal; performing the monitoring task; pausing the monitoring task again when the low-activity condition is determined again in the monitoring task; and entering the low-power mode again.

Clause B29. A Type1 heterogeneous wireless device of a vehicle wireless monitoring system, comprising: a wireless transmitter; a processor communicatively coupled with the wireless transmitter; a memory communicatively coupled with the processor; a set of instructions stored in the memory which, when executed by the processor, cause the Type1 device in a venue to perform: transmitting a wireless signal through a wireless multipath channel of the venue, wherein the venue comprises a vehicle and an immediate neighborhood of the vehicle, wherein the wireless signal is received by a Type2 heterogeneous wireless device of the vehicle wireless monitoring system in the venue, wherein the received wireless signal differs from the transmitted wireless signal due to the wireless multipath channel of the venue and a modulation of the wireless signal by an object undergoing a motion in the venue, wherein a time series of channel information (TSCI) of the wireless multipath channel is obtained based on the received wireless signal, wherein a monitoring task is performed by monitoring at least one of: the vehicle, the object and the motion of the object, based on the TSCI.

Clause B30. A vehicle wireless monitoring system, comprising: a Type1 heterogeneous wireless device in a venue configured to transmit a wireless signal through a wireless multipath channel of the venue, wherein the venue comprises a vehicle and an immediate neighborhood of the vehicle; and a Type2 heterogeneous wireless device in the venue configured to: receive the wireless signal through the wireless multipath channel of the venue, wherein the received wireless signal differs from the transmitted wireless signal due to the wireless multipath channel of the venue and a modulation of the wireless signal by an object undergoing a motion in the venue, obtain a time series of channel information (TSCI) of the wireless multipath channel based on the received wireless signal, and perform a monitoring task by monitoring at least one of: the vehicle, the object and the motion of the object, based on the TSCI.

The following numbered clauses provide implementation examples for providing automatic assistance based on wireless monitoring.

Clause C1. A method/system/software/device of a digital assistant system, comprising: transmitting a wireless signal from a Type 1 heterogeneous wireless device through a wireless multipath channel of a venue, wherein the wireless multipath channel is impacted by a motion of an object in the venue, receiving the wireless signal by a Type 2 heterogeneous wireless device through the wireless multipath channel, wherein the received wireless signal differs from the transmitted wireless signal due to the wireless multipath channel of the venue; obtaining a time series of channel information (TSCI) of the wireless multipath channel based on the received wireless signal using a processor, a memory communicatively coupled with the processor and a set of instructions stored in the memory; and monitoring the motion of the object in the venue based on the TSCI; and generating an assistance for the object in the venue based on the monitoring.

Clause C2. The method/system/software/device of the digital assistant system of Clause C1, further comprising: generating the assistance based on a skill of the system.

In some embodiments, the digital assistant system may detect that a user is doing exercise at a certain rhythm; and a skill of the system may enable the system to find or suggest an upbeat music that matches the rhythm of the user. In some embodiments, the system may detect that the user is slowing down and becoming sleepy; and a skill of the system may enable the system to do something to keep the user awake, e.g. to increase speaker volume, play upbeat background music, engage conversation with user, control air conditioner or fan to increase or reduce air flow or air temperature, adjust lighting to make it brighter, etc. In some embodiments, the system may detect that the user is sleeping; and a skill of the system may enable the system to put home appliance on low-power or standby mode, to dim the light, to engage a security system, or to ensure a door of a house or garage is closed or locked, etc.

Clause C3. The method/system/software/device of the digital assistant system of Clause C2, further comprising: generating the assistance actively without any user request.

Clause C4. The method/system/software/device of the digital assistant system of Clauses C2-C3, further comprising: generating the assistance based on a user request.

Clause C5. The method/system/software/device of the digital assistant system of Clauses C2-C4, further comprising: acquiring a new skill of the system; generating a new assistance based on the new skill of the system.

Clause C6. The method/system/software/device of the digital assistant system of Clauses C2-C5, further comprising: updating the skill of the system.

Clause C7. The method/system/software/device of the digital assistant system of Clauses C2-C6, further comprising: installing the skill of the system.

Clause C8. The method/system/software/device of the digital assistant system of Clauses C2-C7, further comprising: wherein the assistance is associated with another device; controlling the another device based on the skill.

Clause C9. The method/system/software/device of the digital assistant system of Clauses C2-C8, further comprising: wherein the assistance is associated with a service of another device; controlling the service of the another device based on the skill.

Clause C10. The method/system/software/device of the digital assistant system of Clauses C1-C9, further comprising: generating the assistance based on at least one of: checking at least one of: information source, information service, digital service, skill store, service store, information store, information provider, service provider, skill provider, information hub, information server, cloud server, fog server, edge server, local server, hub device, information requested by a user of the system, information of interest to user, weather information, news, news related to user, daily news briefing, user's to-do lists, user's calendars, user's upcoming events, events of interest to the user, user's connected accounts, user's telephone messages, user's email accounts, user's messaging accounts, information of another user associated with the user, information associated with the motion, and another information relevant to the user, tuning to at least one of: a content source, content service, preferred source, favorite source, usual source, random source, designated source, news source, music source, social media source, station, channel, web site, and another networked source, controlling at least one of: a smart system, smart device, smart service, lighting system, speaker system, air conditioning system, heating system, water heating system, ventilation system, entertainment system, music system, recording system, home security system, sound system, media system, haptic system, scent, smell, fragrance, taste, virtual reality system, augmented reality system, background music, camera, video recorder, another sensor, lamp, radio, television, appliance, device, equipment, fixture, oven, stove, coffee machine, microwave oven, car, garage, door, window, curtain, blind, computer, monitor, printer, and another smart device, adjusting at least one of: service setting, lighting settings, lighting source, brightness, color, animation, signs, symbols, lighting effects, audio settings, speaker settings, volume, sound effects, music genre, background music, intensity setting, temperature settings, fan speed, flow settings, haptic settings, and another settings, presenting at least one of: standard message, scripted message, dynamically generated message, message generated based on the monitoring of the motion of the object, interactive message, audible message, verbal message, voice synthesized message, visual message, text message, animated message, greeting message, welcome message, reporting, briefing, daily briefing, regular briefing, timed briefing, news, headlines, topical news, news of interest, music, media, reminder, reminder associated with at least one of: user's calendar, user's to-do list, and another user's calendar, status report, house status, office status, building status, facility status, motion status of user, motion analytics, past record of analytics of user, historical record of analytics of user, trend of user, location status, warning, alarm, verbal warning, audible warning, visual warning, animated warning, summary, and another presentation, generating a presentation in at least one of: smart device, smart device with a speaker, smart device with a display, smart device with a user-interface (UI), networked device, Wi-Fi enabled device, 4G-enabled device, 5G-enabled device, 6G-enabled device, 7G-enabled device, Bluetooth-enabled device, BLE enabled device, Zigbee-enabled device, internet-of-things (IoT) device, smart phone, tablet, speaker, TV, thermostat, watch, glasses, accessories, haptic device, remote device, supervisor device, caregiver device, emergency service device, and another device, downloading a skill, acquiring a skill, installing a skill, adopting a skill, optimizing the skill, applying a skill, updating a skill, learning a skill, training a skill, developing a skill, and another action.

Clause C11. The method/system/software/device of the digital assistant system of Clauses C1-C10, further comprising: generating the assistance based on at least one of: a localization, a presence, a proximity, a movement, a danger, and a behavior of the object in the venue.

Clause C12. The method/system/software/device of the digital assistant system of Clause C11, further comprising: generating a message based on the at least one of: localization, presence, proximity, movement, danger, and behavior, of the object in the venue.

Clause C13. The method/system/software/device of the digital assistant system of Clause C12: wherein the message comprises at least one of: a welcome message, a warning message, an affirmative message, an informative message, an interactive message, a probing message, a question, and a message with multiple options.

Clause C14. The method/system/software/device of the digital assistant system of Clauses C11-C13, further comprising: computing the at least one of: localization, presence, proximity, movement, danger, and behavior, of the object in the venue based on the TSCI.

Clause C15. The method/system/software/device of the digital assistant system of Clauses C1-C14, further comprising: generating the assistance based on at least one of: an identity, a state, a sleep quality, a breathing rate, a heart rate, a vital sign, and a daily routine, of the object in the venue.

Clause C16. The method/system/software/device of the digital assistant system of Clause C15, further comprising: generating a message based on the at least one of: identity, state, sleep quality, breathing rate, heart rate, vital sign, and daily routine, of the object in the venue.

Clause C17. The method/system/software/device of the digital assistant system of Clause C16: wherein the message comprises at least one of: a welcome message, a warning message, an affirmative message, an informative message, an interactive message, a probing message, a question, and a message with multiple options.

Clause C18. The method/system/software/device of the digital assistant system of Clauses C15-C17, further comprising: computing the at least one of: identity, state, sleep quality, breathing rate, heart rate, vital sign, and daily routine, of the object in the venue based on the TSCI.

Clause C19. The method/system/software/device of the digital assistant system of Clauses C1-C18, further comprising: wherein there are more than one Type 1 devices each transmitting a respective wireless signal through a respective wireless multipath channel; monitoring the motion of the object in the venue jointly based on more than one TSCI, each TSCI obtained based on the respective wireless signal received by the Type 2 device; generating the assistance jointly based on the monitoring jointly.

Clause C20. The method/system/software/device of the digital assistant system of Clauses C1-C19, further comprising: wherein there are more than one Type 2 devices each receiving the wireless signal through the wireless multipath channel; monitoring the motion of the object in the venue jointly based on more than one TSCI, each TSCI obtained based on the wireless signal received by the respective Type 2 device; generating the assistance jointly based on the monitoring jointly.

Clause C21. The method/system/software/device of the digital assistant system of Clauses C1-C20, further comprising: wherein the Type 2 device comprises the Type 1 device.

Clause C22. The method/system/software/device of the digital assistant system of Clauses C1-C21, further comprising: where the object is at least one of: a living being, person, pet, animal, movable device, movable platform, robot, drone, and automated guided vehicle (AGV); monitoring a security of the venue in which the object is at least one of: an illegitimate user, unauthorized user, intruder, thief, legitimate user, authorized user, registered user, recognizable user, allowed user, user capable of communication, user capable of verbal communication, and another type of user.

Clause C23. The method/system/software/device of the digital assistant system of Clauses C1-C22, further comprising: communicating with the object based on the monitoring of the motion of the object; recognizing that the object is at least one of: the legitimate user, the authorized user, the registered user, the recognizable user, the allowed user, the illegitimate user, the unauthorized user, the intruder, and the thief; customizing the assistance based on the recognizing.

Clause C24. The method/system/software/device of the digital assistant system of Clauses C1-C23, further comprising: communicating a probing query to the object based on at least one of: the monitoring of the motion of the object, a predefined communication mechanism for user verification, user verification query generated based on a user data, user challenge, user probe, predefined script, query generation system, dialogue system, password checking, two-factor authentication, two-step verification, multi-factor authentication, and multi-step verification; and recognizing the object based on at least one of: a response from the object, response to query, verbal response, gesture response, motion response, movement response, timing of the response, pace of the response, punctuation of the response, biometric associated with the response, voice signature associated with the verbal response, signature gesture, signature motion, signature movement, structure of the response, prosody characteristics associated with the verbal response, grammatical structure associated with the response, gesture associated with gesture response, motion associated with motion response, movement associated with movement response, successful response to query, failed response to query, and a lack of response.

Clause C25. The method/system/software/device of the digital assistant system of Clauses C1-C24: wherein the wireless signal comprises at least one of: wireless local area network (WLAN) signal, WWAN signal, WPAN signal, WBAN signal, WiFi signal, WiFi 4/5/6/7/8 signal, IEEE 802.11 signal, IEEE 802.11n/ac/ax/be signal, cellular communication signal, 3G/4G/LTE/5G/6G/7G/8G signal, IEEE 802.15 signal, IEEE 802.16 signal, Bluetooth signal, Bluetooth Low Energy (BLE) signal, RFID signal, Zigbee signal, UWB signal, WiMax signal, unicast signal, multicast signal, broadcast signal, laser signal, LIDAR signal, radar signal, light signal, infra-red signal, ultra-violet signal, acoustic signal, ultrasound signal, radio signal, electromagnetic (EM) wave, microwave signal, millimeter wave (mmWave) signal, radio frequency (RF) signal with a carrier frequency higher than 100kHz, and another wireless signal.

Clause C26. The method/system/software/device of the digital assistant system of Clauses C1-C25, further comprising: monitoring the motion of the object based on at least one of: at least one of: a detection, recognition, training, verification, classifying, monitoring, tracking, counting, locationing, localization, navigation, guidance, filtering, processing, preprocessing, postprocessing, correction, activation, accessing, application, analysis, deduction, inference, observation, summarization, decision, and conclusion, of a target, and computing at least one of: occurrence, co-occurrence, relationship, analytics, parameter, characteristics, feature, representation, frequency, trend, statistics, state, status, stage, condition, situation, indicator, transition, change, timing, classification, and information, of the target; wherein the target comprises at least one of: intruder, people, user, human, child, baby, older adult, patient, pet, animal, object, material, tool, machine, device, vehicle, car, defect, fault, motion, movement, motion sequence, event, presence, proximity, activity, daily activity, behavior, phenomenon, history, trend, variation, change, regularity, irregularity, repetitiveness, periodic motion, repeated motion, stationary motion, cyclo-stationary motion, regular motion, breathing, heartbeat, vital sign, gait, vibration, at least one of: motion, feature, cycle, and characteristics, of at least one of: body parts, hand, elbow, arm, leg, foot, limbs, head, waist, wrist, and eye, during at least one of: walking, running, exercise, locomotion, activity, and man-machine interaction, transient motion, impulsive motion, sudden motion, fall-down, danger, life threat, window breaking, user-interface, gesture, hand sign, handwriting, keystroke, facial expression, facial feature, emotion, body feature, body language, dancing movement, rhythmic movement, periodic motion, health, well-being, health condition, sleep, sleep stage, biometric, security, safety, intrusion, event, suspicious event, suspicious motion, alarm, alert, siren, location, distance, speed, acceleration, angle, angular speed, angular acceleration, locationing, map, geometry estimation, map learning, energy management, power transfer, wireless power transfer, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, augmented reality, wireless communication, data communication, signal broadcasting, networking, coordination, administration, encryption, protection, cloud computing, and another target.

Clause C27. The method/system/software/device of the digital assistant system of Clauses C1-C26, comprising: associating an event with a characteristics of the TSCI; detecting the event by recognizing the characteristics of the TSCI.

Clause C28. The method/system/software/device of the digital assistant system of Clause C27: wherein the event comprises at least one of: all entrance and exit doors closed, front door partially open, front door fully open, back door partially open, back door fully open, more than one of the entrance and exit doors open, garage door closed, garage door partially open, garage door fully open, all windows closed, one of the windows partially open, one of the windows fully open, a particular one of the windows partially open, a particular one of the windows fully open, a number of the windows open, a particular number of the windows open, no motion in house, motion in house, motion at entrance area, motion in kitchen, motion in dining room, motion in living room, motion in first rest room, motion in second rest room, motion in first bedroom, motion in second bedroom, motion in ground floor, motion in second floor, motion in basement, motion in stairs, an entrance, an entrance through garage, an entrance through front door, an entrance through back door, a daily activity, a typical activity, an atypical activity, a regular activity, an irregular activity, a usual activity, an unusual activity, a danger, a fall-down, an exit, an exit through garage, an exit through front door, an exit through back door, a suspicious exit, a suspicious behavior, a suspicious activity, a user in first bedroom sleeping, the user in first bedroom sleeping in rapid-eye-movement (REM) sleep, the user in first bedroom sleeping in non-REM (NREM) sleep, the user in first bedroom awake from sleep, a user in kitchen cooking, a user in living room watching TV, a user in second bedroom doing homework, and another event.

Clause C29. The method/system/software/device of the digital assistant system of Clauses C27-C28, comprising: training a model of the characteristics of the TSCI associated with the event; detecting the event based on the model.

Clause C30. The method/system/software/device of the digital assistant system of Clause C29, comprising: training the model based on a training TSCI collected during a training period in which the event occurs.

Clause C31. The method/system/software/device of the digital assistant system of Clauses C1-C30, comprising: monitoring the motion of the object with at least one of: a regular monitoring setting with regular functionality in a regular mode, a high-alert monitoring setting with elevated functionality in a high-alert mode, a maximum monitoring setting with maximum functionality in a max-alert mode, a low-alert monitoring setting with reduced functionality in a low-alert mode, and a standby monitoring setting with minimal functionality in a power-saving mode.

Clause C32. The method/system/software/device of the digital assistant system of Clause C31: wherein a monitoring setting comprises at least one of: a signaling setting, a signal setting, a channel setting, a bandwidth setting, a channel switching setting, a timing setting, a signal strength setting, a channel information feature setting, a monitoring algorithm setting, a monitoring sensitivity setting, a processor setting, a memory setting, a software setting, a priority setting, a hardware acceleration setting, a clock setting, a synchronization setting, a network setting, a power setting, a heat management setting, a setting for the Type 1 device, a setting for the Type 2 device, a setting for the wireless signal, a setting for the wireless multipath channel, a setting for obtaining the TSCI, and a setting for the monitoring the motion of the object.

Clause C33. The method/system/software/device of the digital assistant system of Clauses C31-C32, comprising: changing from at least one of: the low-alert mode, and the power-saving, to the regular mode based on a detection of motion.

Clause C34. The method/system/software/device of the digital assistant system of Clauses C31-C33, comprising: changing to at least one of: the regular mode, the low-alert mode, and the high-alert mode, based on a user selection.

Clause C35. The method/system/software/device of the digital assistant system of Clauses C31-C34, comprising: changing to the power-saving mode based on an extended period of no-activity.

Clause C36. The method/system/software/device of the digital assistant system of Clauses C31-C35, comprising: changing to at least one of: the high-alert mode, and the max-alert mode based on a detection of at least one of: a danger, an intrusion, a fall-down, and another significant event.

The following numbered clauses provide implementation examples for power supply design for a wireless monitoring system or device.

Clause D1. A method/system/software/device of a wireless monitoring system, comprising: transmitting a wireless signal from a Type 1 heterogeneous wireless device through a wireless multipath channel of a venue, wherein the wireless multipath channel is impacted by a motion of an object in the venue, receiving the wireless signal by a Type 2 heterogeneous wireless device through the wireless multipath channel, wherein the received wireless signal differs from the transmitted wireless signal due to the wireless multipath channel of the venue; obtaining a time series of channel information (TSCI) of the wireless multipath channel based on the received wireless signal using a processor, a memory communicatively coupled with the processor and a set of instructions stored in the memory; and monitoring the motion of the object in the venue based on the TSCI, wherein at least one of: the Type 1 device, and the Type 2 device is attached to an accessory.

Clause D2. The method/system/software/device of the wireless monitoring system of Clause D1: wherein the accessory has no power source.

Clause D3. The method/system/software/device of the wireless monitoring system of Clauses D1-D2: wherein the device attached to the accessory is powered by connecting to a power cord which is connected to a power plug with protruding pins to be inserted into a power socket of a power source; wherein the accessory to house at least one of: the device, the power cord, the power plug, and a special space-saving short power cord.

Clause D4. The method/system/software/device of the wireless monitoring system of Clause D3: wherein the power plug comprises a transformer to convert alternating current (AC) to direct current (DC).

Clause D5. The method/system/software/device of the wireless monitoring system of Clauses D3-D4: wherein the power plug comprises a computer bus socket; wherein the power cord comprises a computer bus plug to connect to the computer bus socket of the power plug.

Clause D6. The method/system/software/device of the wireless monitoring system of Clause D5: wherein power is transmitted in at least one power pin of the computer bus.

Clause D7. The method/system/software/device of the wireless monitoring system of Clauses D3-D6: wherein the power plug comprises a USB socket; wherein the power cord comprises a USB plug to connect to the USB socket of the power plug.

Clause D8. The method/system/software/device of the wireless monitoring system of Clauses D3-D7: wherein the power plug comprises a firewire socket; wherein the power cord comprises a firewire plug to connect to the firewire socket of the power plug.

Clause D9. The method/system/software/device of the wireless monitoring system of Clauses D3-D8: wherein the power plug comprises a lightning socket; wherein the power cord comprises a lightning plug to connect to the lightning socket of the power plug.

Clause D10. The method/system/software/device of the wireless monitoring system of Clauses D3-D9: wherein the device comprises a computer bus socket; wherein the power cord comprises a computer bus plug to connect to the computer bus socket of the device.

Clause D11. The method/system/software/device of the wireless monitoring system of Clause D10: wherein power is transmitted in at least one power pin of the computer bus.

Clause D12. The method/system/software/device of the wireless monitoring system of Clauses D3-D11: wherein the device comprises a USB socket; wherein the power cord comprises a USB plug to connect to the USB socket of the device.

Clause D13. The method/system/software/device of the wireless monitoring system of Clauses D3-D12: wherein the device comprises a firewire socket; wherein the power cord comprises a firewire plug to connect to the firewire socket of the device.

Clause D14. The method/system/software/device of the wireless monitoring system of Clauses D3-D13: wherein the device comprises a lightning socket; wherein the power cord comprises a lightning plug to connect to the lightning socket of the device.

Clause D15. The method/system/software/device of the wireless monitoring system of Clauses D3-D14: wherein the power plug has a port to house an interchangeable component selected from a set of interchangeable components compliant with a set of prevailing standards, each interchangeable component comprising a respective number of protruding pins positioned and shaped according to a respective standard.

Clause D16. The method/system/software/device of the wireless monitoring system of Clause D15: wherein the set of prevailing standards comprise at least one of: an AU standard, China standard, EU standard, IT standard, IN standard, UK standard, US standard, International Electrotechnical Commission (IEC) standard, IEC Type A, Type B, Type C, Type D, Type E, Type F, Type G, Type H, Type I, Type J, Type K, Type L, Type M, Type N, and another standard. In some embodiments, Type I for Australia, Type A, C, I for China, Type C or F for EU, Type C, F, L for Italy, Type C, D, M for India, Type G for UK, Type A or B for US.

Clause D17. The method/system/software/device of the wireless monitoring system of Clauses D3-D16: wherein the device, the power plug and the power cord are housed in the accessory in such a way that the protruding pins of the power plug are exposed and are inserted into the power socket of the power source.

Clause D18. The method/system/software/device of the wireless monitoring system of Clause D17: wherein the power cord is replaced by the special space-saving short power cord to save space in the housing.

Clause D19. The method/system/software/device of the wireless monitoring system of Clauses D17-D18: wherein the housing has a cord-management feature to organize the power cord such that the power cord is tidy when at least partially housed in the housing.

Clause D20. The method/system/software/device of the wireless monitoring system of Clauses D17-D19: wherein, by being inserted into the power socket, the power plug supports the weight of the accessory housing the device, the power plug and the power cord.

Clause D21. The method/system/software/device of the wireless monitoring system of Clauses D3-D20: wherein the housing is such that the power plug can be positioned relatively in more than one user-selectable ways.

Clause D22. The method/system/software/device of the wireless monitoring system of Clauses D3-D21: wherein the housing is such that the power plug can be positioned relatively in one of: a horizontal way and a vertical way.

Clause D23. The method/system/software/device of the wireless monitoring system of Clauses D3-D22: wherein the housing is such that the accessory and the device housed inside can be positioned relatively in more than one user-selectable ways.

Clause D24. The method/system/software/device of the wireless monitoring system of Clauses D3-D23: wherein the housing is such that the accessory and the device housed inside can be positioned relatively in one of: a horizontal way and a vertical way.

Clause D25. The method/system/software/device of the wireless monitoring system of Clauses D1-D24: wherein the at least one of: the Type 1 device and the Type 2 device, is attached to the accessory based on at least one of: a locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, resting on top by at least one of: gravity, weight, and friction, and another attachment mechanism.

Clause D26. The method/system/software/device of the wireless monitoring system of Clauses D3-D25: wherein the accessory is attached to at least one of: a surface, another object and another device, based on at least one of: the protruding pin of a power plug of the device being inserted into the power socket of the power source, a base structure of the accessory resting on the surface, locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, resting on top by at least one of: gravity, weight, and friction, and another attachment mechanism.

Clause D27. The method/system/software/device of the wireless monitoring system of Clause D26: wherein the surface comprises at least one of: a structural surface, decorative surface, external surface, internal surface, wood surface, metal surface, glass surface, plastic surface, rubber surface, fabric, leather surface, rock surface, concrete surface, cement surface, construction material surface, tree, vegetation, lamp-post, postbox, fence, board, column, frame, stairs, wall, exterior wall, interior wall, door, door frame, window, ceiling, floor, platform, patio, desk top, table top, counter top, appliance surface, refrigerator surface, shelf surface, rigid surface, semi-rigid surface, non-rigid surface, hard surface, soft surface, non-moveable surface, moveable surface, and another surface.

Clause D28. The method/system/software/device of the wireless monitoring system of Clauses D3-D27, comprising: wherein the accessory to house the at least one of: the device, the power cord, the power plug, and the special space-saving short power cord, using at least one of: a frame, case, casing, rigid casing, soft casing, cavity, enclosure, housing, container, holder, sheath, jacket, fitting, capsule, integument, shell, skin, covering, structure, socket, and another housing structure.

Clause D29. The method/system/software/device of the wireless monitoring system of Clause D28, comprising: wherein the at least one of: a frame, case, casing, rigid casing, soft casing, cavity, enclosure, housing, container, holder, sheath, jacket, fitting, capsule, integument, shell, skin, covering, structure, socket, and another housing structure, is shaped based on a shape of the at least one of: the device, the power cord, the power plug, and the special space-saving short power cord.

Clause D30. The method/system/software/device of the wireless monitoring system of Clauses D28-D29, comprising: wherein the at least one of: a frame, case, casing, rigid casing, soft casing, cavity, enclosure, housing, container, holder, sheath, jacket, fitting, capsule, integument, shell, skin, covering, structure, socket, and another housing structure, has at least one of: a form factor, size, dimension, weight distribution and shape, based on at least one of: a respective form factor, respective size, respective dimension, respective weight distribution and respective shape, of the at least one of: the device, the power cord, the power plug, and the special space-saving short power cord.

Clause D31. The method/system/software/device of the wireless monitoring system of Clauses D3-D30, comprising: wherein the accessory to house the device but not the power plug; wherein the accessory has at least one of: an opening and a space, through which the power cord is connected to the device; wherein the power plug connected to the power cord is a distance away from the accessory and is inserted into the power socket of the power source.

Clause D32. The method/system/software/device of the wireless monitoring system of Clauses D27-D31, comprising: wherein the accessory has at least one structural feature such that the accessory and the device housed inside have multiple user-selectable resting postures when attached on the surface.

Clause D33. The method/system/software/device of the wireless monitoring system of Clauses D27-D32, comprising: wherein the accessory has at least one flat accessory surface such that the accessory and the device housed inside have multiple user-selectable resting postures when resting on the surface.

Clause D34. The method/system/software/device of the wireless monitoring system of Clauses D1-D33: wherein the accessory has a power source comprising at least one of: an AC power source, DC power source, the device, use-once power source, reusable power source, rechargeable power source, battery, rechargeable battery, non-rechargeable battery, replaceable battery, irreplaceable battery, solar power source, solar panel, chemical power source, thermal energy storage, capacitor, inductor, flywheel, generator, compressed air, energy storage, and another power source.

Clause D35. The method/system/software/device of the wireless monitoring system of Clause D34: wherein the device when not attached to the accessory is powered by connecting to a device power cord which is connected to a device power plug with protruding pins to be inserted into a power socket of a power source; wherein the device when attached to the accessory is powered by connecting to at least one of: the device power cord and a special space-saving device power cord, which is connected to the accessory; wherein the accessory to house at least one of: the device, the device power cord, the device power plug, and the special space-saving short device power cord. In one embodiment, the accessory has its own power cord and power plug. Power plug has protruding pins that are inserted into power socket (e.g. wall power outlet) of power source. Transformer may be in power plug, or accessory to convert AC to DC. In another embodiment, the accessory has built-in power plug with protruding pins that are inserted into power socket (i.e. no power cord). Accessory is "mounted" on the wall based on the protruding pins inserted into power socket. The protruding pin is supporting the weight of the accessory (with device housed).

Clause D36. The method/system/software/device of the wireless monitoring system of Clause D35: wherein the accessory has an AC power source; wherein the accessory is powered by connecting to an accessory power cord which is connected to an accessory power plug with protruding pins to be inserted into a power socket of the AC power source.

Clause D37. The method/system/software/device of the wireless monitoring system of Clause D36: wherein the accessory power plug comprises a transformer to convert AC to DC.

Clause D38. The method/system/software/device of the wireless monitoring system of Clauses D36-D37: wherein the accessory power plug comprises a computer bus socket; wherein the accessory power cord comprises a computer bus plug to connect to the computer bus socket of the accessory power plug.

Clause D39. The method/system/software/device of the wireless monitoring system of Clause D38: wherein power is transmitted in at least one power pin of the computer bus.

Clause D40. The method/system/software/device of the wireless monitoring system of Clauses D36-D39: wherein the accessory power plug comprises a USB socket; wherein the accessory power cord comprises a USB plug to connect to the USB socket of the accessory power plug.

Clause D41. The method/system/software/device of the wireless monitoring system of Clauses D36-D40: wherein the accessory power plug comprises a firewire socket; wherein the accessory power cord comprises a firewire plug to connect to the firewire socket of the accessory power plug.

Clause D42. The method/system/software/device of the wireless monitoring system of Clauses D36-D41: wherein the accessory power plug comprises a lightning socket; wherein the accessory power cord comprises a lightning plug to connect to the lightning socket of the accessory power plug.

Clause D43. The method/system/software/device of the wireless monitoring system of Clauses D36-D42: wherein the accessory comprises a computer bus socket; wherein the accessory power cord comprises a computer bus plug to connect to the computer bus socket of the accessory.

Clause D44. The method/system/software/device of the wireless monitoring system of Clause D43: wherein power is transmitted in at least one power pin of the computer bus.

Clause D45. The method/system/software/device of the wireless monitoring system of Clauses D36-D44: wherein the accessory comprises a USB socket; wherein the accessory power cord comprises a USB plug to connect to the USB socket of the accessory.

Clause D46. The method/system/software/device of the wireless monitoring system of Clauses D36-D45: wherein the accessory comprises a firewire socket; wherein the accessory power cord comprises a firewire plug to connect to the firewire socket of the accessory.

Clause D47. The method/system/software/device of the wireless monitoring system of Clauses D36-D46: wherein the accessory comprises a lightning socket; wherein the accessory power cord comprises a lightning plug to connect to the lightning socket of the accessory.

Clause D48. The method/system/software/device of the wireless monitoring system of Clauses D36-D47: wherein the accessory power plug has a port to house an interchangeable component selected from a set of interchangeable components compliant with a set of prevailing standards, each interchangeable component comprising a respective number of protruding pins positioned and shaped according to a respective standard.

Clause D49. The method/system/software/device of the wireless monitoring system of Clause D48: wherein the set of prevailing standards comprise at least one of: an AU standard, China standard, EU standard, IT standard, IN standard, UK standard, US standard, International Electrotechnical Commission (IEC) standard, IEC Type A, Type B, Type C, Type D, Type E, Type F, Type G, Type H, Type I, Type J, Type K, Type L, Type M, Type N, and another standard.

Clause D50. The method/system/software/device of the wireless monitoring system of Clauses D36-D49: wherein the accessory is attached to at least one of: a surface, another object and another device, based on an attachment mechanism.

Clause D51. The method/system/software/device of the wireless monitoring system of Clauses D36-D50: wherein the accessory power plug is attachable to the accessory based on an attachment mechanism.

Clause D52. The method/system/software/device of the wireless monitoring system of Clause D51: wherein the attachment mechanism comprises at least one of: a locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, resting on top by at least one of: gravity, weight, and friction, and another attachment mechanism.

Clause D53. The method/system/software/device of the wireless monitoring system of Clauses D51-D52: wherein, when the accessory power plug is attached to the accessory, the accessory is powered by connecting the accessory to the accessory power plug using at least one of: the accessory power cord, a special space-saving short accessory power cord, a direct connector on the accessory, and a direct connector on the accessory power plug.

Clause D54. The method/system/software/device of the wireless monitoring system of Clause D53: wherein the accessory has a cord-management feature to organize the accessory power cord such that the accessory power cord is tidy when the accessory power plug is attached to the accessory.

Clause D55. The method/system/software/device of the wireless monitoring system of Clauses D53-D54: wherein the direct connector on the accessory is covered when the accessory power plug is detached from the accessory; wherein the direct connector on the accessory is exposed when the accessory power plug is attached to the accessory.

Clause D56. The method/system/software/device of the wireless monitoring system of Clause D55: wherein a cover of the direct connector on the accessory is opened based on an automatic mechanism when the accessory power plug is attached to the accessory; wherein the cover is closed based on the automatic mechanism when the accessory power plug is detached from the accessory.

Clause D57. The method/system/software/device of the wireless monitoring system of Clauses D55-D56: wherein a cover of the direct connector on the accessory is opened based on a manual mechanism when a user activates the manual mechanism; wherein the cover is closed based on the manual mechanism when the user deactivates the manual mechanism.

Clause D58. The method/system/software/device of the wireless monitoring system of Clauses D53-D57: wherein the direct connector on the accessory power plug is covered when the accessory power plug is detached from the accessory; wherein the direct connector on the accessory power plug is exposed when the accessory power plug is attached to the accessory.

Clause D59. The method/system/software/device of the wireless monitoring system of Clause D58: wherein a cover of the direct connector on the accessory power plug is opened based on an automatic mechanism when the accessory power plug is attached to the accessory; wherein the cover is closed based on the automatic mechanism when the accessory power plug is detached from the accessory.

Clause D60. The method/system/software/device of the wireless monitoring system of Clauses D58-D59: wherein a cover of the direct connector on the accessory power plug is opened based on a manual mechanism when a user activates the manual mechanism; wherein the cover is closed based on the manual mechanism when the user deactivates the manual mechanism.

Clause D61. The method/system/software/device of the wireless monitoring system of Clauses D51-D60: wherein the accessory power plug is attached to the accessory in more than one ways.

Clause D62. The method/system/software/device of the wireless monitoring system of Clauses D51-D61: wherein the accessory power plug is attached to the accessory in more than one ways such that the accessory and the accessory power plug, can be positioned relatively in more than one user-selectable ways.

Clause D63. The method/system/software/device of the wireless monitoring system of Clauses D51-D62: wherein the accessory power plug is attached to the accessory in more than one ways such that the accessory and the accessory power plug can be positioned relatively in one of: a horizontal way and a vertical way.

Clause D64. The method/system/software/device of the wireless monitoring system of Clauses D51-D63: wherein the accessory attached to the accessory power plug is attached to at least one of: a surface, another object and another device, based on the protruding pins of the accessory power plug being inserted into the power socket of the power source on the surface, the another object and the another device.

Clause D65. The method/system/software/device of the wireless monitoring system of Clause D64: wherein the surface comprises at least one of: a structural surface, decorative surface, external surface, internal surface, wood surface, metal surface, glass surface, plastic surface, rubber surface, fabric, leather surface, rock surface, concrete surface, cement surface, construction material surface, tree, vegetation, lamp-post, postbox, fence, board, column, frame, stairs, wall, exterior wall, interior wall, door, door frame, window, ceiling, floor, platform, patio, desk top, table top, counter top, appliance surface, refrigerator surface, shelf surface, rigid surface, semi-rigid surface, non-rigid surface, hard surface, soft surface, non-moveable surface, moveable surface, and another surface.

Clause D66. The method/system/software/device of the wireless monitoring system of Clauses D51-D65, comprising: wherein the accessory to house the accessory power plug using at least one of: a frame, case, casing, rigid casing, soft casing, cavity, enclosure, housing, container, holder, sheath, jacket, fitting, capsule, integument, shell, skin, covering, structure, socket, and another housing structure.

Clause D67. The method/system/software/device of the wireless monitoring system of Clause D66, comprising: wherein the at least one of: a frame, case, casing, rigid casing, soft casing, cavity, enclosure, housing, container, holder, sheath, jacket, fitting, capsule, integument, shell, skin, covering, structure, socket, and another housing structure, is shaped based on a shape of the accessory power plug.

Clause D68. The method/system/software/device of the wireless monitoring system of Clauses D66-D67, comprising: wherein the at least one of: a frame, case, casing, rigid casing, soft casing, cavity, enclosure, housing, container, holder, sheath, jacket, fitting, capsule, integument, shell, skin, covering, structure, socket, and another housing structure, has at least one of: a form factor, size, dimension, weight distribution and shape, based on at least one of: a respective form factor, respective size, respective dimension, respective weight distribution and respective shape, of the accessory power plug.

Clause D69. The method/system/software/device of the wireless monitoring system of Clauses D51-D68: wherein, by being inserted into the power socket, the accessory power plug supports the weight of the accessory housing the device.

Clause D70. The method/system/software/device of the wireless monitoring system of Clauses D34-D69: wherein the accessory has an AC power source; wherein the accessory comprises an integrated accessory power plug with protruding pins; wherein the accessory is powered by inserting the protruding pins of the integrated accessory power plug into the power socket of the AC power source.

Clause D71. The method/system/software/device of the wireless monitoring system of Clause D70: wherein, by having the protruding pins inserted into the power socket, the integrated accessory power plug supports the weight of the accessory housing the device.

Clause D72. The method/system/software/device of the wireless monitoring system of Clauses D70-D71: wherein the protruding pins of the integrated accessory power plug are retractable.

Clause D73. The method/system/software/device of the wireless monitoring system of Clause D72: wherein the retractable protruding pins of the integrated accessory power plug are exposed based on a manual mechanism when a user activates the manual mechanism; wherein the protruding pins are retracted based on the manual mechanism when the user deactivates the manual mechanism.

Clause D74. The method/system/software/device of the wireless monitoring system of Clauses D70-D73: wherein the accessory is attached to at least one of: a surface, another object and another device, based on the protruding pins of the integrated accessory power plug being inserted into the power socket of the power source on the surface, the another object and the another device.

Clause D75. The method/system/software/device of the wireless monitoring system of Clauses D70-D74: wherein at least one of: the integrated accessory power plug, and the protruding pins of the integrated accessory power plug, has more than one positionings such that the accessory has more than one positionings.

Clause D76. The method/system/software/device of the wireless monitoring system of Clause D75: wherein the more than one positionings of the accessory are selected manually by a user based on a manual selection mechanism.

Clause D77. The method/system/software/device of the wireless monitoring system of Clauses D75-D76: wherein the more than one positionings of the accessory comprise a horizontal positioning and a vertical positioning.

Clause D78. The method/system/software/device of the wireless monitoring system of Clauses D70-D77: wherein the device attached to the accessory is powered by connecting electrically to and receiving power from the accessory based on at least one of: a power cord of the device, and a special space-saving short power cord.

Clause D79. The method/system/software/device of the wireless monitoring system of Clauses D70-D78: wherein the accessory to house at least one of: the device, a device power cord of the device, a device power plug of the device, and a special space-saving short device power cord, using at least one of: a frame, case, casing, rigid casing, soft casing, cavity, enclosure, housing, container, holder, sheath, jacket, fitting, capsule, integument, shell, skin, covering, structure, socket, and another housing structure.

Clause D80. The method/system/software/device of the wireless monitoring system of Clause D79: wherein the at least one of: a frame, case, casing, rigid casing, soft casing, cavity, enclosure, housing, container, holder, sheath, jacket, fitting, capsule, integument, shell, skin, covering, structure, socket, and another structure, is shaped based on a shape of the at least one of: the device, the device power cord, the device power plug, and the special space-saving short device power cord.

Clause D81. The method/system/software/device of the wireless monitoring system of Clauses D79-D80: wherein the at least one of: a frame, case, casing, rigid casing, soft casing, cavity, enclosure, housing, container, holder, sheath, jacket, fitting, capsule, integument, shell, skin, covering, structure, socket, and another structure, has at least one of: a form factor, size, dimension, weight distribution and shape, based on at least one of: a respective form factor, respective size, respective dimension, respective weight distribution and respective shape, of the at least one of: the device, the device power cord, the device power plug, and the special space-saving short device power cord.

Clause D82. The method/system/software/device of the wireless monitoring system of Clauses D70-D81: wherein the integrated accessory power plug is detachable.

Clause D83. The method/system/software/device of the wireless monitoring system of Clause D82: wherein the detachable integrated accessory power plug comprises a standalone power plug connected to an accessory power cord which is connected to the accessory.

Clause D84. The method/system/software/device of the wireless monitoring system of Clauses D82-D83: wherein the standalone accessory power plug has a transformer to convert AC to DC.

Clause D85. The method/system/software/device of the wireless monitoring system of Clauses D70-D884: wherein the integrated accessory power plug is interchangeable.

Clause D86. The method/system/software/device of the wireless monitoring system of Clause D85: wherein integrated accessory power plug is replaced by a detachable accessory power plug connected to an accessory power cord which is connected to the accessory.

Clause D87. The method/system/software/device of the wireless monitoring system of Clauses D70-D86: wherein the accessory has a locking port for interchangeable components; wherein the integrated accessory power plug has a locking structure that fits into the locking port such that the integrated accessory power plug is secured relative to the accessory.

Clause D88. The method/system/software/device of the wireless monitoring system of Clause D87: wherein the integrated accessory power plug is replaced by a detachable accessory power plug.

Clause D89. The method/system/software/device of the wireless monitoring system of Clause D88: wherein the detachable accessory power plug comprises a stand-alone accessory power plug connected to an accessory power cord terminated with the locking structure that fits into the locking port.

Clause D90. The method/system/software/device of the wireless monitoring system of Clause D89: wherein the integrated accessory power plug is unlocked and removed from the locking port; wherein the locking structure of the detachable accessory power plug is inserted into and locked in the locking port.

Clause D91. The method/system/software/device of the wireless monitoring system of Clause D90: wherein at least one of: the integrated accessory power plug, and the locking structure of the detachable accessory power plug, is unlocked manually when a user releases the locking port.

Clause D92. The method/system/software/device of the wireless monitoring system of Clause D91: wherein at least one of: the integrated accessory power plug, and the locking structure of the detachable accessory power plug, is locked automatically when the respective locking structure is inserted into the locking port.

Clause D93. The method/system/software/device of the wireless monitoring system of Clauses D91-D92: wherein at least one of: the integrated accessory power plug, and the locking structure of the detachable accessory power plug, is locked manually after the respective locking structure is inserted into the locking port.

Clause D94. The method/system/software/device of the wireless monitoring system of Clauses D90-D93: wherein the protruding pins of the integrated accessory power plug is detached from the power socket of the power source; wherein at least two protruding pins of the detachable accessory power plug are inserted into the power socket of the power source.

Clause D95. The method/system/software/device of the wireless monitoring system of Clauses D90-D94: wherein the accessory with the locking structure of the detachable accessory power plug locked in the locking port is attached to at least one of: a surface, another object and another device, based on an attachment mechanism.

Clause D96. The method/system/software/device of the wireless monitoring system of Clauses D90-D95: wherein the accessory with the locking structure of the detachable accessory power plug locked in the locking port rests by at least one of: weight, gravity, and friction, on a surface based on at least one flat surface at a base of the accessory.

Clause D97. The method/system/software/device of the wireless monitoring system of Clauses D90-D96: wherein the locking structure of the detachable accessory power plug is unlocked and removed from the locking port; wherein the integrated accessory power plug is inserted into and locked in the locking port.

Clause D98. The method/system/software/device of the wireless monitoring system of Clauses D70-D97: wherein the accessory has a locking port to house an interchangeable component selected from a set of interchangeable components compliant with a set of prevailing standards, each interchangeable component comprising a respective number of protruding pins positioned and shaped according to a respective standard.

Clause D99. The method/system/software/device of the wireless monitoring system of Clause D98: wherein the set of prevailing standards comprise at least one of: an AU standard, China standard, EU standard, IT standard, IN standard, UK standard, US standard, International Electrotechnical Commission (IEC) standard, IEC Type A, Type B, Type C, Type D, Type E, Type F, Type G, Type H, Type I, Type J, Type K, Type L, Type M, Type N, and another standard. In one embodiment, there is no accessory, and the device has (1) built-in power plug (with transformer), (2) built-in power plug with retractable pin (save space), (3) built-in power plug with interchangeable pins (similar to international adapter), (4) detachable power plug (transformer NOT detached), (5) detachable power plug with retractable pin, (6) detachable power plug with interchangeable pins.

Clause D100. A method/system/software/device of a wireless monitoring system, comprising: transmitting a wireless signal from a Type 1 heterogeneous wireless device through a wireless multipath channel of a venue, wherein the wireless multipath channel is impacted by a motion of an object in the venue, receiving the wireless signal by a Type 2 heterogeneous wireless device through the wireless multipath channel, wherein the received wireless signal differs from the transmitted wireless signal due to the wireless multipath channel of the venue; obtaining a time series of channel information (TSCI) of the wireless multipath channel based on the received wireless signal using a processor, a memory communicatively coupled with the processor and a set of instructions stored in the memory; and monitoring the motion of the object in the venue based on the TSCI, wherein at least one of: the Type 1 device, and the Type 2 device comprises an integrated power plug with protruding pins, wherein the device is powered by inserting the protruding pins of the integrated accessory power plug into the power socket of the power source.

Clause D101. The method/system/software/device of the wireless monitoring system of Clause D100: wherein, by having the protruding pins inserted into the power socket, the integrated power plug supports the weight of the device.

Clause D102. The method/system/software/device of the wireless monitoring system of Clause D100: wherein the protruding pins of the integrated power plug are retractable.

Clause D103. The method/system/software/device of the wireless monitoring system of Clause D102: wherein the retractable protruding pins of the integrated power plug are exposed based on a manual mechanism when a user activates the manual mechanism; wherein the retractable protruding pins are retracted based on the manual mechanism when the user deactivates the manual mechanism.

Clause D104. The method/system/software/device of the wireless monitoring system of Clauses D102-D103: wherein the device with the retractable protruding pins retracted is attached to at least one of: a surface, another object and another device, based on an attachment mechanism; wherein the attachment mechanism comprises at least one of: a locking mechanism, bayonet coupling, screw coupling, push-pull coupling, breakaway coupling, push-and-press-to-release coupling, coupling locked by screw, push-push locked coupling, magnetic coupling, electro-magnet, magnet, attachable mechanism, detachable mechanism, linking mechanism, binding mechanism, coupling, connector, mechanical holder, suction feature, suction cup, peg, clip, staple, ring, pin, hook, loop, snap-lock hook, snap-on hook, bracket, hanger, mount, chain, track-and-trolley, screw, nut-and-screw, nut-and-bolt, velcro, hook-and-loop, adhesive, pressure sensitive adhesive (PSA), self-adhesive tape, adhesive tape, double-side adhesive tape, sticky tape, fastener, dual-lock fastener, self-mating fastener, reclosable fastener, resting on top by at least one of: gravity, weight, and friction, and another attachment mechanism.

Clause D105. The method/system/software/device of the wireless monitoring system of Clauses D102-D104: wherein the device with the retractable protruding pins exposed is attached to at least one of:

a surface, another object and another device, based on the protruding pins of the integrated power plug being inserted into the power socket of the power source on the surface, the another object and the another device.

Clause D106. The method/system/software/device of the wireless monitoring system of Clauses D100-D105: wherein at least one of: the integrated power plug, and the protruding pins of the integrated power plug, has more than one positionings such that the device has more than one positionings.

Clause D107. The method/system/software/device of the wireless monitoring system of Clause D106: wherein the more than one positionings of the device are selected manually by a user based on a manual selection mechanism.

Clause D108. The method/system/software/device of the wireless monitoring system of Clauses D106-D107: wherein the more than one positionings of the device comprise a horizontal positioning and a vertical positioning.

Clause D109. The method/system/software/device of the wireless monitoring system of Clauses D100-D108: wherein the integrated power plug is detachable.

Clause D110. The method/system/software/device of the wireless monitoring system of Clause D109: wherein the detachable integrated power plug comprises a standalone power plug connected to a power cord which is connected to the device.

Clause D111. The method/system/software/device of the wireless monitoring system of Clauses D109-D110: wherein the standalone power plug has a transformer to convert AC to DC.

Clause D112. The method/system/software/device of the wireless monitoring system of Clauses D109-D111: wherein there is a transformer in the device to convert AC to DC; wherein the transformer is in the device but not in the standalone power plug.

Clause D113. The method/system/software/device of the wireless monitoring system of Clauses D100-D112: wherein the integrated power plug is interchangeable.

Clause D114. The method/system/software/device of the wireless monitoring system of Clause D113: wherein integrated power plug is replaced by a detachable power plug connected to a device power cord which is connected to the device.

Clause D115. The method/system/software/device of the wireless monitoring system of Clauses D100-D114: wherein the device has a locking port for interchangeable parts; wherein the integrated power plug has a locking structure that fits into the locking port such that the integrated power plug is secured relative to the device.

Clause D116. The method/system/software/device of the wireless monitoring system of Clause D115: wherein the integrated power plug is replaced by a detachable power plug.

Clause D117. The method/system/software/device of the wireless monitoring system of Clause D116: wherein the detachable power plug comprises a stand-alone power plug connected to a power cord terminated with the locking structure that fits into the locking port.

Clause D118. The method/system/software/device of the wireless monitoring system of Clause D117: wherein the integrated power plug is unlocked and removed from the locking port; wherein the locking structure of the detachable power plug is inserted into and locked in the locking port.

Clause D119. The method/system/software/device of the wireless monitoring system of Clause D118: wherein at least one of: the integrated power plug, and the locking structure of the detachable power plug, is unlocked manually when a user releases the locking port.

Clause D120. The method/system/software/device of the wireless monitoring system of Clause D119: wherein at least one of: the integrated power plug, and the locking structure of the detachable power plug, is locked automatically when the respective locking structure is inserted into the locking port.

Clause D121. The method/system/software/device of the wireless monitoring system of Clauses D119-D120: wherein at least one of: the integrated power plug, and the locking structure of the detachable power plug, is locked manually after the respective locking structure is inserted into the locking port.

Clause D122. The method/system/software/device of the wireless monitoring system of Clauses D118-D121: wherein the protruding pins of the integrated power plug is detached from the power socket of the power source; wherein at least two protruding pins of the detachable power plug are inserted into the power socket of the power source.

Clause D123. The method/system/software/device of the wireless monitoring system of Clauses D118-D122: wherein the device with the locking structure of the detachable power plug locked in the locking port is attached to at least one of: a surface, another object and another device, based on an attachment mechanism.

Clause D124. The method/system/software/device of the wireless monitoring system of Clauses D118-D123: wherein the device with the locking structure of the detachable power plug locked in the locking port rests by at least one of: weight, gravity, and friction, on a surface based on at least one flat surface at a base of the device.

Clause D125. The method/system/software/device of the wireless monitoring system of Clauses D118-D124: wherein the locking structure of the detachable power plug is unlocked and removed from the locking port; wherein the integrated power plug is inserted into and locked in the locking port.

Clause D126. The method/system/software/device of the wireless monitoring system of Clauses D100-D125: wherein the device has a locking port to house an interchangeable component selected from a set of interchangeable components compliant with a set of prevailing standards, each interchangeable component comprising a respective number of protruding pins positioned and shaped according to a respective standard.

Clause D127. The method/system/software/device of the wireless monitoring system of Clause D126: wherein the set of prevailing standards comprise at least one of: an AU standard, China standard, EU standard, IT standard, IN standard, UK standard, US standard, International Electrotechnical Commission (IEC) standard, IEC Type A, Type B, Type C, Type D, Type E, Type F, Type G, Type H, Type I, Type J, Type K, Type L, Type M, Type N, and another standard.

Clause D128. The method/system/software/device of the wireless monitoring system of Clauses D110-D127: wherein protruding pins of the standalone power plug are retractable.

Clause D129. The method/system/software/device of the wireless monitoring system of Clauses D100-D128: wherein the standalone power plug has a locking port to house an interchangeable component selected from a set of interchangeable components compliant with a set of prevailing standards, each interchangeable component comprising a respective number of protruding pins positioned and shaped according to a respective standard.

Clause D130. The method/system/software/device of the wireless monitoring system of Clause D129: wherein the set of prevailing standards comprise at least one of: an AU standard, China standard, EU standard, IT standard, IN standard, UK standard, US standard, International Electrotechnical Commission (IEC) standard, IEC Type A, Type B, Type C, Type D, Type E, Type F, Type G, Type H, Type I, Type J, Type K, Type L, Type M, Type N, and another standard.

Clause D131. The method/system/software/device of the wireless monitoring system of Clauses D35-D130, comprising: wherein the device to house the device but not the device power plug; wherein the device has at least one of: an opening and a space, through which the device power cord is connected to the device; wherein the device power plug connected to the device power cord is a distance away from the device and is inserted into the power socket of the power source.

Clause D132. The method/system/software/device of the wireless monitoring system of Clauses D30-D131, comprising: wherein the device has at least one structural feature such that the device and the device housed inside have multiple user-selectable resting postures.

Clause D133. The method/system/software/device of the wireless monitoring system of Clauses D29-D132, comprising: wherein the device has at least one flat surface such that the device and the device housed inside have multiple user-selectable resting postures, wherein the device comprises a transformer to convert alternating current (AC) to direct current (DC). An accessory with no power source, an accessory with an power source, an accessory with the power source to power at least one of: the device, and another device, an accessory connected to at least one of: the power source, the device, the another device, and none of these, an accessory with a connection to at least one of: the power source, the device, and the another device, an accessory with an electrical connection to at least one of: the power source, the device, and the another device, an accessory with a communication connection to at least one of: the power source, the device, and the another device, an accessory with a transformer, an accessory with a transformer to convert alternate current (AC) energy to direct current (DC) energy, an accessory with a transformer to convert a DC energy to another DC energy, an accessory with a transformer positioned to stabilize the accessory with the device attached, an accessory with a weight positioned to stabilize the accessory with the device attached, an accessory with a shape to stabilize the accessory with the device attached, an accessory with a structure to stabilize the accessory with the device attached, an accessory to house the device, an accessory to house a power plug of the device, an accessory to house a power cord of the device, an accessory to house the device, the power plug and the power cord, an accessory to house the device and the power plug with the device and the power plug connected with , an accessory to house the power plug of the device so that the power plug can be attached wall power outlet, an accessory to house the device using at least one of: a frame, case, casing, rigid casing, soft casing, cavity, enclosure, housing, container, holder, sheath, jacket, fitting, capsule, integument, shell, skin, covering, structure, socket, and another structure, an accessory to accommodate the device, an accessory to carry the device, an accessory to support the device, an accessory to support the weight of the device, an accessory with no electrical connection with the device, an accessory with an electrical connection with the device, an accessory with an electrical connection with the device using a special cable, an accessory with an electrical connection with the device using a short cable, an accessory with an electrical connection with the device using a connector, an accessory with at least one locking mechanism between the device and the accessory, an accessory with at least one locking mechanism between the accessory and a surface, an accessory communicatively connected with the device.

Clause D134. A method/system/software/device of a wireless monitoring system, comprising: transmitting a wireless signal from a Type 1 heterogeneous wireless device through a wireless multipath channel of a venue, wherein the wireless multipath channel is impacted by a motion of an object in the venue, receiving the wireless signal by a Type 2 heterogeneous wireless device through the wireless multipath channel, wherein the received wireless signal differs from the transmitted wireless signal due to the wireless multipath channel of the venue; obtaining a time series of channel information (TSCI) of the wireless multipath channel based on the received wireless signal using a processor, a memory communicatively coupled with the processor and a set of instructions stored in the memory; and monitoring the motion of the object in the venue based on the TSCI, wherein at least one of: the Type 1 device, and the Type 2 device is attached to an accessory.

In various embodiments of the present teaching, an exemplary method of a qualified wireless system is disclosed in the following clauses.

Clause E1. A method of a qualified wireless system, comprising: transmitting a wireless signal from a Type 1 heterogeneous wireless device to a Type 2 heterogeneous wireless device through a wireless multipath channel of a venue; receiving the wireless signal by a Type 2 heterogeneous wireless device; obtaining a time series of channel information (CI) of the wireless multipath channel based on the wireless signal using a processor of the Type 2 device, a memory communicatively coupled with the process and a set of instructions stored in the memory; and making the TSCI available for a task, wherein at least one of: the Type 1 device, a module of the Type 1 device, an integrated circuit (IC) of the Type 1 device, the Type 2 device, a module of the Type 2 device, and an IC of the Type 2 device, is qualified if a respective qualification criterion is satisfied.

Clause E2. The method of the qualified wireless system of Clause E1: wherein the Type 1 device and the Type 2 device are placed at two different locations in the venue.

Clause E3. The method of the qualified wireless system of Clauses E1-E2: wherein the Type 1 device and the Type 2 device are collocated, being placed at the similar locations in the venue.

Clause E4. The method of the qualified wireless system of Clause E3: wherein the Type 1 device and the Type 2 device are the same device.

Clause E5. The method of the qualified wireless system of Clauses E1-E4: wherein there are more than one pairs of Type 1 device and Type 2 device in the venue, each respective Type 2 device of a pair receiving a respective wireless signal asynchronously from the respective Type 1 device of the pair and obtaining asynchronously a respective TSCI; wherein the Type 1 device and the Type 2 device of a first pair are collocated; wherein the Type 1 device and the Type 2 device of a second pair are placed at two different locations in the venue.

Clause E6. The method of the qualified wireless system of Clauses E1-E5: associating at least one of: the Type 1 device and the Type 2 device, with an identifier (ID).

Clause E7. The method of the qualified wireless system of Clause E6: wherein the ID comprises at least one of: a name, a number, an alphanumeric ID, a string of text, numbers and symbols, a file, a database, an item of the database, a pointer to the item, a link to a webpage, a link to a storage, a MAC address, an IP address, a network address, a network ID, a domain ID, a web ID, an internet ID, a mobile network ID, a LAN ID, a platform ID, a software ID, a software application ID, an administration ID, a supervision ID a hardware ID, a device ID, a device profile, a hardware component ID, a computer ID, a processor ID, a storage ID, a process ID, a serial number, a task ID, a class, a class information, a category, a category information, a performance information, a capability information, a policy information, a pair ID of the Type 1 device and the Type 2 device, a pair profile, a link ID, a link profile, an antenna ID, an antenna profile, a system ID, a user, a customer, a supervisor, super-user, an administrator, a guardian, a service, an account, a password, a service account, a user account, a user profile, a user name, a user password, a user information, a user ID, a service provider, a service profile, a manufacturer, a sales channel, a vendor, a retailer, a distribution channel, a content channel, an Apple ID, an Amazon ID, a Samsung ID, a Google ID, a Facebook ID, a Microsoft ID, a company ID, a service ID, a service provider ID, a service ID, an access ID, a hash of another ID, a user association, a user grouping, an account privilege, a user history, a task, a task ID, a task information, a task requirement, a user associated with the task, a physical address, a physical location, a home, a household, an office, a company, a school, a warehouse, a store, a factory, a station, a stadium, a hall, an enclosure, a venue, a site, a district, a zone, a region, an area, a proximity, a neighborhood, a map, a map location, a location-based information, a street, a city, a county, a state, a province, a precinct, a prefecture, a country, a continent, a zip code, a postal code, a GPS coordinate, another code, a phone number, a payment card information, a grouping, a classification, a category, and another ID.

Clause E8. The method of the qualified wireless system of Clauses E6-E7, further comprising: sharing the ID between any two of: the Type 1 device, the Type 2 device, another wireless heterogeneous device and a user device.

Clause E9. The method of the qualified wireless system of Clause E8, further comprising: sharing the ID based on at last one of: a standard, a WiFi standard, a WLAN standard, a mesh network standard, an IEEE standard, an IEEE 802 standard, an IEEE 802.11 standard, an IEEE 802.15 standard, an IEEE 802.16 standard, a WiFi Alliance specification, a 3GPP standard, a mobile communication standard, a cellular communication standard, 3G/4G/LTE/5G/6G/7G/8G, an international standard, a national standard, an industry standard, a de facto standard, a protocol, a handshake, an enquiry, a response, an acknowledge, a database, another format, another channel, another exchange and another mechanism.

Clause E10. The method of the qualified wireless system of Clauses E6-E9: wherein the ID is time-varying. How the ID varies over time. Standardization.

Clause E11. The method of the qualified wireless system of Clause E10: wherein the time-varying ID varies over time based on at least one of: a standard, a protocol, an established protocol, an interoperable protocol, a specification, a requirement, a qualification requirement, the qualification criterion, a protocol agreed by the Type 1 device and the Type 2 device, a timing agreed by the Type 1 device and the Type 2 device, a timing based on at least one of: the standard and the protocol, a strategy, a time table, a user setting, a user request, a control by a server, the Type 1 device, the Type 2 device, another device, the server, a control signal communicated between two of: the Type 1 device, the Type 2 device, the another device, the server, another Type 1 device, another Type 2 device, a situation, a condition of the wireless multipath channel, another criterion, and another mechanism.

Clause E12. The method of the qualified wireless system of Clauses E1-E11, further comprising: transmitting a first part of the wireless signal by the Type 1 device using at least one of: a first carrier frequency, a first channel, a first antenna, and a first group of antennas, of the Type 1 device; and transmitting a second part of the wireless signal by the Type 1 device using at least one of: a second carrier frequency, a second channel, a second antenna, and a second group of antennas, of the Type 1 device.

Clause E13. The method of the qualified wireless system of Clause E12, further comprising: wherein the first part and the second part of the wireless signal are transmitted by the Type 1 device in at least one of the following manner: coordinated, un-coordinated, independent, together, un-separated, separated, simultaneous, contemporaneous, non-simultaneous, at the same time, at different time, synchronized, and non-synchronized.

Clause E14. The method of the qualified wireless system of Clauses E12-E13: wherein the first carrier frequency and the second carrier frequency are at least one of: the same and different.

Clause E15. The method of the qualified wireless system of Clauses E12-E14: wherein the first channel and the second channel are at least one of: the same channel, overlapping channels, and different channels.

Clause E16. The method of the qualified wireless system of Clauses E12-E15: wherein the first antenna and the second antenna are at least one of: the same antenna, and different antennas.

Clause E17. The method of the qualified wireless system of Clauses E12-E16: wherein the first group of antennas and the second group of antennas are at least one of: the same group of antennas, overlapping groups of antennas, and disjoint groups of antennas. Characteristics negotiated/arranged between Type 1 device and Type 2 device. E.g. characteristics may be probing/sounding frequency, probing/sounding timing, carrier frequency, channel, antenna, group of antenna, response to congestion, what CSI to get, and/or precision/format/consistency/accuracy of CSI, etc.

Clause E18. The method of the qualified wireless system of Clauses E12-E17: wherein a first characteristics of the first part of the wireless signal and a second characteristics of the second part of the wireless signal are at least one of: determined, worked out, exchanged, hand-shaked, shared, negotiated, arranged, and coordinated, among at least two of: the Type 1 device, the Type 2 device and another device.

Clause E19. The method of the qualified wireless system of Clause E18: wherein the first characteristics of the first part of the wireless signal and the second characteristics of the second part of the wireless signal are at least one of: determined, worked out, exchanged, hand-shaked, shared, negotiated, arranged, and coordinated, based on at least one of: a standard, a protocol, an established protocol, an interoperable protocol, a specification, a requirement, a qualification requirement, the qualification criterion, a protocol agreed by the Type 1 device and the Type 2 device, a timing agreed by the Type 1 device and the Type 2 device, a timing based on at least one of: the standard and the protocol, a strategy, a time table, a user setting, a user request, a control by a server, the Type 1 device, the Type 2 device, another device, the server, a control signal communicated between two of: the Type 1 device, the Type 2 device, the another device, the server, another Type 1 device, another Type 2 device, a situation, a condition of the wireless multipath channel, another criterion, and another mechanism.

Clause E20. The method of the qualified wireless system of Clauses E1-E119, further comprising: receiving a first part of the wireless signal by the Type 2 device using at least one of: the first carrier frequency, the first channel, a third antenna, and a third group of antennas, of the Type 2 device; and receiving a second part of the wireless signal by the Type 2 device using at least one of: the second carrier frequency, the second channel, a fourth antenna, and a fourth group of antennas, of the Type 2 device.

Clause E21. The method of the qualified wireless system of Clause E20: wherein the first part and the second part of the wireless signal are received by the Type 2 device in at least one of the following manner: coordinated, un-coordinated, independent, together, un-separated, separated, simultaneous, contemporaneous, non-simultaneous, at the same time, at different time, synchronized, and non-synchronized.

Clause E22. The method of the qualified wireless system of Clauses E20-E21: wherein the third antenna and the fourth antenna of the Type 2 device are at least one of: the same antenna, and different antennas.

Clause E23. The method of the qualified wireless system of Clauses E20-E22: wherein the third group of antennas and the fourth group of antennas of the Type 2 device are at least one of: the same group of antennas, overlapping groups of antennas, and disjoint groups of antennas.

Clause E24. The method of the qualified wireless system of Clauses E1-E23, further comprising: transmitting the wireless signal from the Type 1 device to a second Type 2 device, wherein a first part of the wireless signal is intended for the Type 2 device, wherein a second part of the wireless signal is intended for the second Type 2 device; transmitting the first part of the wireless signal by the Type 1 device using at least one of: a first carrier frequency, a first channel, a first antenna, and a first group of antennas, of the Type 1 device; and transmitting the second part of the wireless signal by the Type 1 device using at least one of: a second carrier frequency, a second channel, a second antenna, and a second group of antennas, of the Type 1 device.

Clause E25. The method of the qualified wireless system of Clause E24: wherein the first part and the second part of the wireless signal are transmitted by the Type 1 device in at least one of the following manner: coordinated, un-coordinated, independent, together, un-separated, separated, simultaneous, contemporaneous, non-simultaneous, at the same time, at different time, synchronized, and non-synchronized.

Clause E26. The method of the qualified wireless system of Clauses E24-E25: wherein the first carrier frequency and the second carrier frequency are at least one of: the same and different.

Clause E27. The method of the qualified wireless system of Clauses E24-E26: wherein the first channel and the second channel are at least one of: the same channel, overlapping channels, and different channels.

Clause E28. The method of the qualified wireless system of Clauses E24-E27: wherein the first antenna and the second antenna of the Type 1 device are at least one of: the same antenna, and different antennas.

Clause E29. The method of the qualified wireless system of Clauses E24-E28: wherein the first group of antennas and the second group of antennas of the Type 1 device are at least one of: the same group of antennas, overlapping groups of antennas, and disjoint groups of antennas. Characteristics negotiated/arranged between Type 1 device and Type 2 device.

Clause E30. The method of the qualified wireless system of Clauses E24-E29: wherein a first characteristics of the first part of the wireless signal and a second characteristics of the second part of the wireless signal are at least one of: determined, worked out, exchanged, hand-shaked, shared, negotiated, arranged, and coordinated, among at least two of: the Type 1 device, the Type 2 device, the second Type 2 device, and another device.

Clause E31. The method of the qualified wireless system of Clause E30: wherein the first characteristics of the first part of the wireless signal and the second characteristics of the second part of the wireless signal are at least one of: determined, worked out, exchanged, hand-shaked, shared, negotiated, arranged, and coordinated, based on at least one of: a standard, a protocol, an established protocol, an interoperable protocol, a specification, a requirement, a qualification requirement, the qualification criterion, a protocol agreed by the Type 1 device and the Type 2 device, a timing agreed by the Type 1 device and the Type 2 device, a timing based on at least one of: the standard and the protocol, a strategy, a time table, a user setting, a user request, a control by a server, the Type 1 device, the Type 2 device, another device, the server, a control signal communicated between two of: the Type 1 device, the Type 2 device, the another device, the server, another Type 1 device, another Type 2 device, a situation, a condition of the wireless multipath channel, another criterion, and another mechanism.

Clause E32. The method of the qualified wireless system of Clauses E24-E31: wherein the first part of the wireless signal is received by the Type 2 device using at least one of: the first carrier frequency, the first channel, a third antenna, and a third group of antennas, of the Type 2 device, wherein the second part of the wireless signal is received by the second Type 2 device using at least one of: the second carrier frequency, the second channel, a fourth antenna, and a fourth group of antennas, of the second Type 2 device.

Clause E33. The method of the qualified wireless system of Clauses E1-E332, further comprising: transmitting a second wireless signal from a second Type 1 device to the Type 2 device; receiving the wireless signal by the Type 2 device using at least one of: a first carrier frequency, a first channel, a first antenna, and a first group of antennas, of the Type 2 device; and receiving the second wireless signal by the Type 2 device using at least one of: a second carrier frequency, a second channel, a second antenna, and a second group of antennas, of the Type 2 device.

Clause E34. The method of the qualified wireless system of Clause E33: wherein the first wireless signal and the second wireless signal are transmitted by the Type 1 device and the second Type 1 device respectively in at least one of the following manner: coordinated, un-coordinated, independent, together, un-separated, separated, simultaneous, contemporaneous, non-simultaneous, at the same time, at different time, synchronized, and non-synchronized.

Clause E35. The method of the qualified wireless system of Clauses E31-E34: wherein the first carrier frequency and the second carrier frequency are at least one of: the same and different.

Clause E36. The method of the qualified wireless system of Clauses E31-E35: wherein the first channel and the second channel are at least one of: the same channel, overlapping channels, and different channels.

Clause E37. The method of the qualified wireless system of Clauses E31-E36: wherein the first antenna and the second antenna of the Type 2 device are at least one of: the same antenna, and different antennas.

Clause E38. The method of the qualified wireless system of Clauses E31-E37: wherein the first group of antennas and the second group of antennas of the Type 2 device are at least one of: the same group of antennas, overlapping groups of antennas, and disjoint groups of antennas. Characteristics negotiated/arranged among Type 1 device, second Type 1 device and Type 2 device.

Clause E39. The method of the qualified wireless system of Clauses E31-E38: wherein at least one of: a first characteristics of the wireless signal and a second characteristics of the second wireless signal is at least one of: determined, worked out, exchanged, hand-shaked, shared, negotiated, arranged, and coordinated, among at least two of: the Type 1 device, the second Type 1 device, the Type 2 device, and another device.

Clause E40. The method of the qualified wireless system of Clause E39: wherein at least one of: the first characteristics of the wireless signal and the second characteristics of the second wireless signal is at least one of: determined, worked out, exchanged, hand-shaked, shared, negotiated, arranged, and coordinated, based on at least one of: a standard, a protocol, an established protocol, an interoperable protocol, a specification, a requirement, a qualification requirement, the qualification criterion, a protocol agreed by the Type 1 device and the Type 2 device, a timing agreed by the Type 1 device and the Type 2 device, a timing based on at least one of: the standard and the protocol, a strategy, a time table, a user setting, a user request, a control by a server, the Type 1 device, the Type 2 device, another device, the server, a control signal communicated between two of: the Type 1 device, the Type 2 device, the another device, the server, another Type 1 device, another Type 2 device, a situation, a condition of the wireless multipath channel, another criterion, and another mechanism.

Clause E41. The method of the qualified wireless system of Clauses E1-E40: wherein the wireless signal comprises at least one of: an electromagnetic (EM) wave, a radio frequency (RF) signal, a RF transmission, a RF signal transmitted by one or more transmitting antennas, a RF signal received by one or more receiving antennas, a RF signal repeated by a RF repeater, a RF signal retransmitted by a RF repeater, a 800/900MHz signal, a 1.8/1.9 GHz signal, a 2.4GHz signal, a 5GHz signal, a 6GHz signal, a 24GHz signal, a 76-81 GHz signal, a 28GHz signal, a 60GHz signal, a 122GHz signal, a 244GHz signal, a microwave signal, an infrared signal, a light signal, an ultraviolet signal, an audio signal, an OFDM signal, a CDMA signal, a FDMA signal, a TDMA signal, an OFDMA signal, a MIMO signal, a MU-MIMO signal, a QAM signal, a 4-QAM, a 8-QAM, a 16-QAM, a 32-QAM, a 64-QAM, a 128-QAM, a 256-QAM, a 512-QAM, a 1024-QAM, a 2048-QAM, a 4096-QAM, a 8192-QAM, a 16384-QAM, a 32768-QAM, a 65536-QAM, a WiFi signal, an IEEE 802 compliant signal, an IEEE 802.11 signal, an 802.15 signal, an IEEE 802.16 signal, a standard compliant signal, a wireless local area network (WLAN) signal, a Zigbee signal, a Bluetooth signal, an RFID signal, a cellular network signal, a 3GPP compliant signal, a 3G/4G/LTE/5G/6G/7G/8G signal, a cellular communication signal, an RF signal that uses an ISM band, an RF signal that uses an unlicensed band, an RF signal that uses a licensed band, a GPS signal, a baseband signal, a bandlimited signal, an ultra-wide band (UWB) signal, a wireless standard-compliant signal, a frequency-hopping signal, a burst signal, a train of signals, a steady stream of signals, a stream of signals with irregular timings, a stream of signals with regular timings, a null signal, a protocol signal, a protocol compliant signal, a data signal, a control signal, a beacon signal, a pilot signal, a probe signal, an excitation signal, an illumination signal, a reference signal, a training signal, a synchronization signal, a request signal, an enquiry signal, a response signal, an acknowledgement signal, a downlink signal, an uplink signal, a unicast signal, a multicast signal, a broadcast signal, a pulsed signal, a signal burst, a motion probe signal, a motion detection signal, a motion sensing signal, a line-of-sight (LOS) signal, a non-line-of-sight (NLOS) signal, a combination of signals, a mixture of signals, a succession of signals, a series of signals, and another wireless signal.

Clause E42. The method of the qualified wireless system of Clause E41: , wherein the wireless signal comprises at least one of: a response to a second wireless signal transmitted from at least one of: the Type 2 device, another Type 1 device, another Type 2 device, and another wireless device, to the Type 1 device, a response to at least one of: a request signal, a query signal, a probe-request signal, a command signal, a control signal, a data signal, a non-wireless signal, an electronic signal, and another signal, received by the Type 1 device, an acknowledgement to the another wireless signal, a protocol signal, a handshake signal, an enquiry signal, a request signal, a query signal, a probe-request signal, a command signal, a control signal, a data signal, a response signal, a probe response signal, an acknowledgement signal, a reply signal, a beacon signal, a pilot signal, a probe signal, a sounding signal, a broadcast signal, a train of signals, and a part of a handshake between the Type 1 device and the Type 2 device.

Clause E43. The method of the qualified wireless system of Clause E42, further comprising: wherein the wireless signal comprises a series of sounding signals, controlling at least one of: a timing, an appearance, a generation, a repetition, a repeated occurrence, a regular occurrence, a cyclic occurrence, a periodic occurrence, an occurrence with a regular interval, a sounding interval, a sounding period, a sounding rate, a sounding timing, and another aspect, of the sounding signals of the wireless signal based on the second wireless signal.

Clause E44. The method of the qualified wireless system of Clause E43, further comprising: wherein the second wireless signal comprises a series of probe-request signals, wherein each sounding signal is a probe-response signal to a respective probe-request signal of the second wireless signal, controlling at least one of: the timing, the appearance, the generation, the repetition, the repeated occurrence, the regular occurrence, the cyclic occurrence, the periodic occurrence, the occurrence with a regular interval, the sounding interval, the sounding period, the sounding rate, the sounding timing, and the another aspect, of the sounding signals of the wireless signal by controlling at least one of: a timing, an appearance, a generation, a repetition, a repeated occurrence, a regular occurrence, a cyclic occurrence, a periodic occurrence, an occurrence with a regular interval, a sounding interval, a sounding period, a sounding rate, a sounding timing, and another aspect, of the probe-request signals of the second wireless signal.

Clause E45. The method of the qualified wireless system of Clauses E1-E44, further comprising: wherein the wireless signal is at least one of: a response, a reply, an acknowledgement, and a handshake, to a second wireless signal, controlling a characteristics of the wireless signal by controlling corresponding characteristics of the second wireless signal.

Clause E46. The method of the qualified wireless system of Clauses E42-E45, further comprising: controlling at least one timing of the wireless signal by controlling at least one timing of the second wireless signal.

Clause E47. The method of the qualified wireless system of Clauses E42-E46, further comprising: controlling at least one rate of the wireless signal by controlling at least one corresponding rate of the second wireless signal.

Clause E48. The method of the qualified wireless system of Clauses E1-E47: wherein the wireless signal comprises a series of probe signals (or sounding signal or beacon signal or pilot signal), wherein each CI of the TSCI is obtained based on a corresponding probe signal.

Clause E49. The method of the qualified wireless system of Clauses E43-E48: wherein the series of probe signals comprise at least one of: a steady stream of probe signals, a locally-steady stream of probe signals, a locally-absence of probe signals, a momentarily-steady stream of probe signals, a momentary absence of probe signals, a burst of probe signals, a pause of probe signals, a first steady stream (or wave, or train, or succession) of probe signals associated with a first rate, a second steady stream (or wave, or train, or succession) of probe signals associated with a second rate, a probe signal associated with a target transmission time, a probe signal transmitted by the Type 1 device at the target transmission time, a late probe signal, a probe signal transmitted after the target transmission time, a late probe signal that is late due to congestion of the wireless multipath channel, a late probe signal that is late because the wireless multipath channel is used by another device, a lost probe signal, a probe signal not received successfully by the Type 2 device, a protocol signal, a data signal, a control signal, a beacon signal, a pilot signal, an excitation signal, an illumination signal, a reference signal, a training signal, a synchronization signal, a handshake signal, a request signal, an enquiry signal, a response signal, a probe request signal, a probe enquiry signal, a probe response signal, an acknowledgement signal, a synchronization signal, a training signal, a reference signal, a unicast signal, a multi-cast signal, a broadcast signal, an uplink signal, an downlink signal, a pulsed signal, a signal burst, a data frame, a control frame, a beacon frame, a pilot frame, a beacon frame in a primary channel, a probe request frame, a probe response frame, a unicast frame, a multicast frame, a broadcast frame, a frame with a header, a frame with a preamble, a frame with a data payload, an IEEE 802.11 frame, a FHSS frame, a DSSS frame, an OFDM frame, a HR-DSSS frame, an ERP-OFDM frame, a DSSS-OFDM frame, an ERP-PBCC frame, an HT-OFDM frame, a VHT-OFDM frame, a HE-OFDM frame, a DMG frame, an EDMG frame, a TVHT frame, an SIG frame, a WUR frame, an IR frame, an IEEE 802.11 MAC protocol data unit (MPDU), an IEEE 802.11 PHY protocol data unit (PPDU), an IEEE 802.11 PLCP Service Data Unit (PSDU), and another frame.

Clause E50. The method of the qualified wireless system of Clause E43: wherein a timing is associated with at least one of: the series of probe signals, the TSCI, the transmission of the series of probe signals by the Type 1 device, the reception of the series of probe signals by the Type 2 device, at least one of: a channel condition, a channel state, a channel usage information of the wireless multipath channel, and at least one of: a condition and a state, of the TSCI; wherein the timing comprises at least one of: a timing associated with the transmission of a probe signal from the Type 1 device, a timing associated with the reception of the probe signal by the Type 2 device, a timing associated with the transmission of the series of probe signals from the Type 1 device, a timing associated with the reception of the series of probe signals by the Type 2 device, a timing associated with the task, a timing associated with a requirement of the task, a timing associated with a user requirement of the task, a timing required for the task to achieve a performance level, a timing associated with a requirement of the task regarding at least one of: a frequency, a period, a starting time, an ending time, a pause, a stand-by, a power-down, a sleep, a power-up, a wake-up, an alarm, an alert, a notification, a schedule, a plan, a time table, a control, a signaling, a request, an enquiry, an acknowledgement, a response, an event, a triggering event, a triggering condition, a triggering situation, and another timing feature, a timing associated with at least one of: a request, an enquiry, a response, and an acknowledgement, based on the task, a timing associated with a control signal sent between at least two of: the Type 1 device, the Type 2 device and another device, a change time, a state transition time, a frequency, a period, a starting time, a stopping time, a pause time, a stand-by time, a power-down time, a sleep time, a power-up time, a wake-up time, an alarm time, an alert time, a notification time, a scheduled time, a planned time, a time table, a control time, a signaling time, a request time, an enquiry time, an acknowledgement time, a response time, an event time, a triggering time, a condition/situation to at least one of: change, remain unchanged, enter a state, change state, remain in a state, start, stop, pause, stand by, detect an event, respond to an event, trigger, power down, sleep, power up, wake up, alert, alarm, notify, schedule, set up a timed event, and perform another action, a time period, a duration, a period based on the task, a regular period, a high alert period, a low alert period, more than one related timings, and a timing associated with another timing associated with at least one of: another wireless signal, another time series of probe signal, and another TSCI.

Clause E51. The method of the qualified wireless system of Clauses E43-E50, further comprising: signaling between at least two of: the Type 1 device, the Type 2 device, and another device, a timing of at least one of: the series of probe signals, the TSCI, the task, and a user requirement of the task.

Clause E52. The method of the qualified wireless system of Clauses E43-E51, further comprising: signaling an information of at least one of: the series of probe signals, the TSCI, the task, and a user requirement of the task, between at least two of: the Type 1 device, the Type 2 device, and another device.

Clause E53. The method of the qualified wireless system of Clauses E47-E52, further comprising: signaling an information of at least one of: the series of probe signals, the TSCI, the task, and a user requirement of the task, between the Type 1 device and the Type 2 device using the wireless signal.

Clause E54. The method of the qualified wireless system of Clauses E43-E53, further comprising: signaling a requirement of at least one of: the series of probe signals, the TSCI, the task, and a user requirement of the task, between at least two of: the Type 1 device, the Type 2 device, and another device.

Clause E55. The method of the qualified wireless system of Clauses E49-E54, further comprising: signaling a capability in relation to the requirement of at least one of: the series of probe signals, the TSCI, the task, and a user requirement of the task, between at least two of: the Type 1 device, the Type 2 device, and another device.

Clause E56. The method of the qualified wireless system of Clauses E43-E555, further comprising: negotiating a timing of at least one of: the series of probe signals, the TSCI, the task, and a user requirement of the task, between at least two of: the Type 1 device, the Type 2 device, and another device.

Clause E57. The method of the qualified wireless system of Clauses E43-E56, further comprising: coordinating a timing of at least one of: the series of probe signals, the TSCI, the task, and a user requirement of the task, between at least two of: the Type 1 device, the Type 2 device, and another device.

Clause E58. The method of the qualified wireless system of Clauses E43-E57, further comprising: determining a timing of at least one of: the series of probe signals, the TSCI, the task, and a user requirement of the task, between at least two of: the Type 1 device, the Type 2 device, and another device.

Clause E59. The method of the qualified wireless system of Clauses E43-E58, further comprising: signaling an information regarding a timing of at least one of: the series of probe signals, the TSCI, the task, and a user requirement of the task, between at least two of: the Type 1 device, the Type 2 device, and another device.

Clause E60. The method of the qualified wireless system of Clauses E43-E59, further comprising: signaling a capability regarding a timing of at least one of: the series of probe signals, the TSCI, the task, and a user requirement of the task, between at least two of: the Type 1 device, the Type 2 device, and another device.

Clause E61. The method of the qualified wireless system of Clauses E43-E60, further comprising: negotiating an information regarding a timing of at least one of: the series of probe signals, the TSCI, the task, and a user requirement of the task, between at least two of: the Type 1 device, the Type 2 device, and another device.

Clause E62. The method of the qualified wireless system of Clauses E43-E61, further comprising: coordinating an information of a timing of at least one of: the series of probe signals, the TSCI, the task, and a user requirement of the task, between at least two of: the Type 1 device, the Type 2 device, and another device.

Clause E63. The method of the qualified wireless system of Clauses E43-E62, further comprising: determining an information of a timing of at least one of: the series of probe signals, the TSCI, the task, and a user requirement of the task, between at least two of: the Type 1 device, the Type 2 device, and another device.

Clause E64. The method of the qualified wireless system of Clauses E43-E63, further comprising: computing a statistics associated with at least one of: the series of probe signals, the TSCI obtained based on the series of probe signals, the task performed based on the TSCI, and a user requirement of the task; wherein the statistics comprises at least one of: a frequency, a rate, a sounding rate, a sounding rate associated with the task, a period, a period associated with the task, an accuracy, a regularity, a consistency, an irregularity, a deviation, an error, a hit rate, a miss rate, a detection, a false alarm, a false positive, a mean, a variance, a high order statistics, a timing accuracy, a timing regularity, a frequency accuracy, a frequency regularity, a timing irregularity, a frequency irregularity, a deviation, a frequency deviation, a timing deviation, a performance, a performance measure, a performance statistics, a time window, a current statistics associated with a current time window, a current frequency, a current rate, and a current period.

Clause E65. The method of the qualified wireless system of Clauses E59-E664, further comprising: signaling the statistics between at least two of: the Type 1 device, the Type 2 device, and another device.

Clause E66. The method of the qualified wireless system of Clauses E59-E65, further comprising: negotiating the statistics between at least two of: the Type 1 device, the Type 2 device, and another device.

Clause E67. The method of the qualified wireless system of Clauses E59-E66, further comprising: negotiating settings of at least one of: the Type 1 device, the Type 2 device, and another device, to achieve a requirement related to at least one of: the statistics, the task and a user requirement of the task.

Clause E68. The method of the qualified wireless system of Clauses E59-E67, further comprising: coordinating at least two of: the Type 1 device, the Type 2 device, and another device, to achieve a performance related to at least one of: the statistics, the task and a user requirement of the task.

Clause E69. The method of the qualified wireless system of Clauses E59-E68, further comprising: determining the statistics between at least two of: the Type 1 device, the Type 2 device and another device.

Clause E70. The method of the qualified wireless system of Clauses E1-E69: checking whether the TSCI is suitable for the task.

Clause E71. The method of the qualified wireless system of Clauses E65-E70, further comprising: wherein the wireless signal comprises a series of probe signals, obtaining an information of at least one of: the series of probe signals, and the TSCI.

Clause E72. The method of the qualified wireless system of Clauses E1-E71: wherein the information to comprise at least one of: at least one of: an attribute, a size, a dimension, a cardinality, an amount of components, and a count of components of a CI, associated with at least one of: the TSCI, and a CI of the TSCI, at least one of: a characteristics, a property, a feature, a function, a data type, a precision level, a data structure, an amplitude, a phase, and a power, associated with at least one of: the TSCI, a CI of the TSCI, and a component of the CI, at least one of: a time stamp, a timing, a time duration, a sounding rate, a sounding period, a sounding timing, a regularity, an accuracy, a consistency, an irregularity, a timing jitter, a variation, a deviation, an error, a channel condition, a noise power, an interference, and another channel information associated with at least one of: the TSCI, a CI of the TSCI, a component of the CI, the wireless signal, a probe signal of the wireless signal, the wireless multipath channel, the Type 1 device and the Type 2 device, at least one of: an amount of transmit antenna, a type of transmit antenna, an information of transmit antenna, an antenna gain, a group of at least one transmit antenna, an information of transmit radio, a hardware, a processor, a hardware accelerator, a memory, a sensor, a module, a software, an operating system, an application software, a firmware, a version of a set of instructions, an update history of the set of instructions, a connectivity, a network neighborhood, a capability, an available computing power, a memory bandwidth, a data transfer capability, a storage capacity, a wake-up timing, an operating condition, a setting, a standard compliance, a battery level, a power setting, a system setting, and a location of the Type 1 device, at least one of: an amount of receive antenna, a type of receive antenna, an information of receive antenna, an antenna gain, a group of at least one receive antenna, an information of receive radio, a hardware, a processor, a hardware accelerator, a memory, a sensor, a module, a software, an operating system, an application software, a firmware, a version of a set of instructions, an update history of the set of instructions, a connectivity, a network neighborhood, a capability, an available computing power, a memory bandwidth, a data transfer capability, a storage capacity, a wake-up timing, an operating condition, a setting, a battery level, a power setting, a system setting, and a location of the Type 2 device, at least one of: an amount of transmit antenna, an amount of receive antenna, a type of transmit antenna, a type of receive antenna, a group of at least one transmit antenna, a group of at least one receiver antenna, a processor, a memory, a software, a firmware, a version of a set of instructions, a update history of the set of instructions, a connectivity, a network neighborhood, a capability, and a location, of a wireless relaying device associated with at least one of: the TSCI, a CI of the TSCI, a component of the CI, the wireless signal, the wireless multipath channel, and the Type 1 device, wherein the wireless signal is relayed by the wireless relaying device during the transmission from the Type 1 device to the Type 2 device, a noise condition associated with at least one of: the TSCI, a CI of the TSCI, a component of the CI, the wireless multipath channel, the Type 1 device and the Type 2 device, a signal-to-noise condition associated with at least one of: the TSCI, a CI of the TSCI, a component of the CI, the wireless signal, the wireless multipath channel, the Type 1 device and the Type 2 device, a bandwidth associated with at least one of: the TSCI, a CI of the TSCI, a component of the CI, the wireless signal, the wireless multipath channel, the Type 1 device and the Type 2 device, an effective bandwidth associated with at least one of: the TSCI, a CI of the TSCI, a component of the CI, the wireless signal, the wireless multipath channel, the Type 1 device and the Type 2 device, a quantity associated with at least one of: the TSCI, and a CI of the TSCI, a type associated with at least one of: the TSCI, and a CI of the TSCI, and another information.

Clause E73. The method of the qualified wireless system of Clauses E1-E72: obtaining the TSCI or an information of the TSCI based on at least one of: a primitive, a service primitive, a PHY layer primitive, a MAC layer primitive, an instructive command, a set of configurations, a set of instructions, a firmware, a firmware driver, a firmware call, a software, a software driver, a software call, an operating system (OS), an OS driver, an OS call, a system call, a firmware interface, a function call, a software interface, at least one of: a parameter, a data field, an input data and an output data of one of the above, a collection of at least one of: primitives, instructive commands, configurations, instructions, firmware, software, firmware drivers, software drivers, and OS drivers, any of the above that provide/perform/achieve low-level control of at least one of: a device, a hardware of the device, and an IC of the device, any of the above of at least one of: the Type 1 device, the IC of the Type 1 device, the Type 2 device, the IC of the Type 2 device, another device and an IC of the another device, a format of the TSCI or the information of the TSCI, a representation of the TSCI or the information of the TSCI, a compression scheme for the TSCI or the information of the TSCI, an encryption scheme for the TSCI or the information of the TSCI, a file format or storage scheme of the TSCI or the information of the TSCI, a transmission format/scheme, or streaming format/scheme of the TSCI or the information of the TSCI, a requirement based on the task comprising: a CI precision requirement, a CI time stamp requirement, a timing requirement of the TSCI or the wireless signal, a timing accuracy requirement of the TSCI or the wireless signal, a timing regularity of the TSCI or the wireless signal, a sounding rate of the TSCI or the wireless signal, an transmit antenna and receive antenna requirement, a bandwidth associated with the TSCI or the wireless signal, an effective bandwidth associated with the TSCI or the wireless signal, a quantity of TSCI, the qualification criterion, a qualification of at least one of: the TSCI, the Type 1 device, the IC of the Type 1 device, the Type 2 device, the IC of the Type 2 device, and another requirement.

Clause E74. The method of the qualified wireless system of Clauses E1-E73: comparing characteristics of the TSCI with a requirement of the task.

Clause E75. The method of the qualified wireless system of Clauses E1-E74: making a request for the TSCI based on the task.

Clause E76. The method of the qualified wireless system of Clauses E1-E75: making a request for the TSCI for the task.

Clause E77. The method of the qualified wireless system of Clauses E7-E76: making a request for the TSCI with a requirement. (precision, timing, sounding rate, Perform task jointly.

Clause E78. The method of the qualified wireless system of Clauses E12-E77: making a request for the particular TSCI in a particular representation.

Clause E79. The method of the qualified wireless system of Clauses E12-E78: making a request for the particular TSCI with a particular precision.

Clause E80. The method of the qualified wireless system of Clauses E1-E79: wherein there are a plurality of pairs of Type 1 device and Type 2 device in the venue, each respective Type 2 device receiving a respective wireless signal asynchronously from the respective Type 1 device and obtaining asynchronously a respective TSCI; wherein more than one pairs share a common Type 2 device.

Clause E81. The method of the qualified wireless system of Clauses E6-E80: wherein the common Type 2 device is active alternately in the more than one pairs.

Clause E82. The method of the qualified wireless system of Clauses E7-E81: wherein the common Type 2 device is active alternately in the same wireless channel in the more than one pairs.

Clause E83. The method of the qualified wireless system of Clauses E6-E82: wherein the common Type 2 device is active simultaneously or contemporaneously in the more than one pairs.

Clause E84. The method of the qualified wireless system of Clauses E9-E83: wherein the common Type 2 device is active simultaneously or contemporaneously in the same wireless channel in the more than one pairs.

Clause E85. The method of the qualified wireless system of Clauses E6-E84, further comprising: making a plurality of TSCI individually available, wherein each respective TSCI is obtained based on a respective wireless signal transmitted from a respective Type 1 device to the common Type 2 device.

Clause E86. The method of the qualified wireless system of Clauses E6-E885: requesting a particular TSCI, wherein the particular TSCI is obtained based on a particular wireless signal transmitted from a particular Type 1 device to the common Type 2 device.

Clause E87. The method of the qualified wireless system of Clauses E12-E86: making a request for the particular TSCI.

Clause E88. The method of the qualified wireless system of Clauses E12-E87: making a request for the particular TSCI with a particular requirement. (precision, timing, sounding rate, etc.

Clause E89. The method of the qualified wireless system of Clauses E12-E88: making a request for the particular TSCI in a particular representation.

Clause E90. The method of the qualified wireless system of Clauses E12-E89: making a request for the particular TSCI with a particular precision.

Clause E91. The method of the qualified wireless system of Clauses E12-E90: making the particular TSCI available based on the request.

Clause E92. The method of the qualified wireless system of Clauses E12-E91: making a software request for the particular TSCI.

Clause E93. The method of the qualified wireless system of Clauses E12-E92: buffering the particular TSCI.

Clause E94. The method of the qualified wireless system of Clauses E6-E93: obtaining the particular TSCI.

Clause E95. The method of the qualified wireless system of Clauses E6-E94: obtaining the particular TSCI.

Clause E96. The method of the qualified wireless system of Clauses E6-E95, further comprising: performing a first task based on a first TSCI obtained based on a first wireless signal transmitted from a first Type 1 device to the common Type 2 device; and performing a second task based on a second TSCI obtained based on a second wireless signal transmitted from a second Type 1 device to the common Type 2 device.

Clause E97. The method of the qualified wireless system of Clauses E6-E96, further comprising: making a plurality of TSCI available, wherein each respective TSCI is obtained based on a respective wireless signal transmitted from a respective Type 1 device to the common Type 2 device.

Clause E98. The method of the qualified wireless system of Clauses E11-E97, further comprising: making the plurality of TSCI available for a joint task.

Clause E99. The method of the qualified wireless system of Clauses E11-E98, further comprising: requesting the plurality of TSCI available for a joint task.

Clause E100. The method of the qualified wireless system of Clauses E11-E99, further comprising: performing the joint task jointly based on the plurality of TSCI.

Clause E101. The method of the qualified wireless system of Clauses E11-E100, further comprising: performing the joint task jointly based on the plurality of TSCI.

Clause E102. The method of the qualified wireless system of Clauses E6-E101, further comprising: monitoring a motion of an object in the venue jointly based on all TSCI obtained based on the plurality of pairs, each TSCI obtained separately from a respective pair.

Clause E103. The method of the qualified wireless system of Clauses E6-E102, further comprising: monitoring a motion of an object in the venue individually each based on a TSCI obtained in one of the more than one pairs, monitoring the motion jointly by combining the individual monitoring.

Clause E104. The method of the qualified wireless system of Clauses E1-E103: wherein there are a plurality of pairs of Type 1 device and Type 2 device in the venue, each respective Type 2 device receiving a respective wireless signal asynchronously from the respective Type 1 device and obtaining asynchronously a respective TSCI; wherein more than one pairs share a common Type 1 device.

Clause E105. The method of the qualified wireless system of Clauses E7-E104: wherein the common Type 1 device is active alternately in the more than one pairs.

Clause E106. The method of the qualified wireless system of Clauses E8-E105: wherein the common Type 1 device is active alternately in the same wireless channel in the more than one pairs.

Active in a simultaneous, concurrent, or contemporaneous manner. Two possibilities: (a) broadcast, (b) multiple probe signals simultaneous transmitted to multiple Type 2 devices (e.g. using MU-MIMO).

Clause E107. The method of the qualified wireless system of Clauses E7-E106: wherein the common Type 1 device is active simultaneously or contemporaneously in the more than one pairs.

Clause E108. The method of the qualified wireless system of Clauses E10-E107: wherein the common Type 1 device is active simultaneously or contemporaneously in the same wireless channel in the more than one pairs.

Clause E109. The method of the qualified wireless system of Clauses E7-E108: wherein the common Type 1 device broadcasts to more than one Type 2 devices in the more than one pairs, transmitting a common wireless signal to all the more than one Type 2 devices.

Clause E110. The method of the qualified wireless system of Clauses E12-E109: wherein an information of the broadcast is announced.

Clause E111. The method of the qualified wireless system of Clauses E12-E110: wherein an information of the broadcast is announced in at least one of: a data frame, a control frame, a beacon frame, a beacon frame in a primary channel, a probe request frame, a probe response frame, an acknowledgement frame, a multicast frame, a broadcast frame, a frame with a header, a FHSS frame, a DSSS frame, an OFDM frame, a HR-DSSS frame, an ERP-OFDM frame, a DSSS-OFDM frame, an ERP-PBCC frame, an HT-OFDM frame, a VHT-OFDM frame, a HE-OFDM frame, a DMG frame, an EDMG frame, a TVHT frame, an SIG frame, a WUR frame, an IR frame, another frame, a server, a cloud server, a local server, a web server, a database, a publicly accessible site, a published site, an announcement channel, a handshake channel, an enquiry channel, a signaling channel, a primary channel, a secondary channel, a side channel, an announcement, a handshake, an enquiry, a signaling, the wireless signal, a past wireless signal, and another channel.

Clause E112. The method of the qualified wireless system of Clauses E12-E111: wherein the common Type 1 device broadcasts to more than one Type 2 devices in the more than one pairs; wherein the common Type 1 device transmits the common wireless signal to a common destination address; wherein each of the more than one Type 2 devices sets its address as the common destination address to receive the common wireless signal.

Clause E113. The method of the qualified wireless system of Clauses E15-E112: wherein at least one of: the common destination address, and an information of broadcasting channel associated with the common wireless signal is announced.

Clause E114. The method of the qualified wireless system of Clauses E12-E113: wherein the common Type 1 device broadcasts to more than one Type 2 devices in the more than one pairs; wherein the common Type 1 device transmits the common wireless signal to a universal destination address; wherein each of the more than one Type 2 devices is configured to respond to the universal destination address and receive the common wireless signal.

Clause E115. The method of the qualified wireless system of Clauses E12-E114: wherein the common Type 1 device broadcasts to more than one Type 2 devices in the more than one pairs; wherein the common Type 1 device transmits a common wireless signal; wherein each of the more than one Type 2 devices is configured to respond and receive the common wireless signal.

Clause E116. The method of the qualified wireless system of Clauses E1-E115: wherein an information of the transmitting of the wireless signal from the Type 1 device through the wireless channel is announced, at least in part, in at least one of: a data frame, a control frame, a beacon frame, a beacon frame in a primary channel, a probe request frame, a probe response frame, a multicast frame, a broadcast frame, a frame with a header, a FHSS frame, a DSSS frame, an OFDM frame, a HR-DSSS frame, an ERP-OFDM frame, a DSSS-OFDM frame, an ERP-PBCC frame, an HT-OFDM frame, a VHT-OFDM frame, a HE-OFDM frame, a DMG frame, an EDMG frame, a TVHT frame, an SIG frame, a WUR frame, an IR frame, another frame, a server, a cloud server, a local server, a web server, a database, a publicly accessible site, a published site, an announcement channel, a handshake channel, an enquiry channel, a signaling channel, a primary channel, a secondary channel, a side channel, an announcement, a handshake, an enquiry, a signaling, the wireless signal, a past wireless signal, and another channel.

Clause E117. The method of the qualified wireless system of Clauses E1-E116, further comprising: exchanging an information between the Type 1 device and the Type 2 device.

Clause E118. The method of the qualified wireless system of Clauses E20-E117, further comprising:

exchanging the information between the Type 1 device and the Type 2 device using the wireless multipath channel.

Clause E119. The method of the qualified wireless system of Clauses E20-E118, further comprising: exchanging the information based on a standardized protocol.

Clause E120. The method of the qualified wireless system of Clauses E20-E119, further comprising: determining an agreed set of settings between the Type 1 device and the Type 2 device.

Clause E121. The method of the qualified wireless system of Clauses E23-E120, further comprising: determining the agreed set of settings between the Type 1 device and the Type 2 device for a task.

Clause E122. The method of the qualified wireless system of Clauses E24-E121, further comprising: determining that the agreed set of settings satisfy a requirement of the task.

Clause E123. The method of the qualified wireless system of Clauses E24-E122: wherein the task is associated with the venue.

Clause E124. The method of the qualified wireless system of Clauses E23-E123, further comprising: determining the agreed set of settings between the Type 1 device and the Type 2 device for monitoring a motion in the venue.

Clause E125. The method of the qualified wireless system of Clauses E27-E124, further comprising: determining that the agreed set of settings satisfy a requirement for monitoring the motion in the venue.

Clause E126. The method of the qualified wireless system of Clauses E27-E125: wherein the motion is a motion of an object in the venue.

Clause E127. The method of the qualified wireless system of Clauses E23-E126: wherein the agreed set of settings is a set of settings for the transmission of the wireless signal from the Type 1 device to the Type 2 device.

Clause E128. The method of the qualified wireless system of Clauses E23-E127: determining the agreed set of settings between the Type 1 device and the Type 2 device based on a standardized protocol.

Clause E129. The method of the qualified wireless system of Clauses E23-E128, further comprising: transmitting the wireless signal based on the agreed set of settings.

Clause E130. The method of the qualified wireless system of Clauses E23-E129, further comprising: broadcasting the wireless signal based on the agreed set of settings.

Clause E131. The method of the qualified wireless system of Clauses E20-E130, further comprising: determining that no settings of the Type 1 device and the Type 2 device can satisfy a requirement of a task.

Clause E132. The method of the qualified wireless system of Clauses E34-E131: determining based on a standardized protocol.

Clause E133. The method of the qualified wireless system of Clauses E34-E132: wherein the task is a monitoring task related to the venue.

Clause E134. The method of the qualified wireless system of Clauses E34-E133, further comprising: wherein the task is to monitor a motion of an object in the venue.

Clause E135. The method of the qualified wireless system of Clauses E20-E134, further comprising: exchanging the information between the Type 1 device and the Type 2 device before the transmitting of the wireless signal.

Clause E136. The method of the qualified wireless system of Clauses E20-E135, further comprising: exchanging the information between the Type 1 device and the Type 2 device during the transmitting of the wireless signal.

Clause E137. The method of the qualified wireless system of Clauses E20-E136, further comprising: exchanging the information between the Type 1 device and the Type 2 device after the transmitting of the wireless signal.

Clause E138. The method of the qualified wireless system of Clauses E20-E137: wherein the information comprises at least one of: a meta-data, a device information, a manufacturing information, a model information, a version information, a registration information, an identification information, a classification, a category, a grouping, a restriction, a usage information, a service provider information, a service information, a sales information, a logistical information, a system information, a companion system information, a capability information, a power information, a computation information, a processor information, a storage information, a supported system information, a supported task information, a performance requirement, a carrier frequency, a frequency information, a timing information, an antenna information, a location-based information, a software or firmware information, an updating information, a hardware information, a component information, a network information, a wireless network information, an address information, an access information, a security protection information, an encryption information, an internet information, and another information, of the Type 1 device, the Type 2 device or a device communicatively coupled with the Type 1 device or the Type 2 device.

Clause E139. The method of the qualified wireless system of Clauses E20-E138, further comprising: exchanging a portion of the information using at least one of: a data stream, a point-to-point stream, a multicast stream, a broadcast stream, a file, a header of a file, a field of a file, a name of a file, a meta-data of a file, a directory of a file, a file based on a standardized format, a database, a database of a storage network, a data network, a database of a server, a database of a cloud server, a database of a local server, a data packet, a data record, a data structure, a data structure based on a standard, a field of a database, a field of a data record, a field of a data structure, a field of a data packet, a server, a cloud server, a local server, a web server, a database, a publicly accessible site, a published site, a frame, a frame of a data stream, a frame of a file, a preamble of a frame, a header of a frame, a payload of a frame, a flag of a frame, a field of a frame, a field of a preamble, a field of a header, a control field, a signaling field, a protocol field, a data field, a payload field, a signal field, a service field, a timing field, a duration field, an extension field, a trailer field, a data frame, a control frame, a beacon frame, a beacon frame in a primary channel, a beacon frame in a secondary channel, a probe request frame, a probe response frame, a multicast frame, a broadcast frame, a frame with a header, an enquiry frame, a response frame, an acknowledgement frame, a FHSS frame, a DSSS frame, an OFDM frame, a HR-DSSS frame, an ERP-OFDM frame, a DSSS-OFDM frame, an ERP-PBCC frame, an HT-OFDM frame, a VHT-OFDM frame, a HE-OFDM frame, a DMG frame, an EDMG frame, a TVHT frame, an SIG frame, a WUR frame, an IR frame, another frame, one or more radio frequency (RF) band with a bandwidth of B MHz where B is between 0.01 and 100000, a data rate less than or equal to the rate at which the wireless signal is being transmitted from the Type 1 device to the Type 2 device, a short preamble of a frame, a long preamble of a frame, a preamble sent at a data rate of A Mbps where A is between 0.01 and 100000, a preamble sent at a lowest supported rate in a physical layer of the wireless multipath channel, a frame or protocol compliant to at least one of: a wireless protocol, a wireless network standard, a wireless mess network standard, a wireless communication standard, WiFi, WiMax, WiGiG, WLAN, WMAN, an IEEE 802 standard, an IEEE 802.11 standard, an IEEE 802.15 standard, an 802.16 standard, a mobile communication standard, a cellular communication standard, a mobile network standard, a 3GPP standard, GSM, EDGE, WCDMA, LTE, a 2G/3G/4G/5G/6G/7G/8G related standard/system/protocol, a standard or a protocol comprising at least one of: time-division multiple access (TDMA), frequency-division multiple access (FDMA), code-division multiple access (CDMA), orthogonal frequency-division multiplexing (OFDM), multiple-input-multiple-output (MIMO), carrier aggregation (CA), orthogonal frequency-division multiple access (OFDMA), multiuser MIMO (MU-MIMO), beamforming (BF), transmit beamforming (TxBF), receiver beamforming (RxBF), target wake time (TWT), spatial streams (SS), BSS coloring, quadrature amplitude modulation (QAM), fast Fourier transform (FFT), the channel information (CI), channel state information (CSI), CSI associated with a transmitting antenna and a receiving antenna, channel impulse response (CIR), channel frequency response (CFR), compressed CSI, and uncompressed CSI, a wireless communication protocol that computes CSI of the wireless multipath channel, a defacto standard, an industry standard, a national standard, an international standard, a Bluetooth standard, BLE, a UWB standard, NFC, ZigBee, and another standard, an announcement, an announcement channel, a handshake, a handshake channel, an enquiry, an enquiry channel, a signaling, a signaling channel, a primary channel, a secondary channel, a side channel, the wireless signal, a signal exchange before the wireless signal is transmitted, a signal exchange between the Type 1 device and the Type 2 device, a signal exchange between the Type 1 device and a server, a signal exchange between the Type 2 device and a server, and another avenue.

Clause E140. The method of the qualified wireless system of Clauses E20-E139, further comprising: transmitting the wireless signal based on the exchanged information.

Signal transmission based on agreed set of settings.

Clause E141. The method of the qualified wireless system of Clauses E20-E140, further comprising: broadcasting the wireless signal based on the exchanged information.

A device functions as both Type 1 and Type 1.

Clause E142. The method of the qualified wireless system of Clauses E1-E141: wherein there are a plurality of pairs of Type 1 device and Type 2 device in the venue, each respective Type 2 device receiving a respective wireless signal asynchronously from the respective Type 1 device and obtaining asynchronously a respective TSCI; wherein a device functions as a Type 1 device in a first pair and as a Type 2 device in a second pair.

Each computed CI may be an estimation of the real CI. Estimation requirement: e.g. estimation error of CI, minimum average absolute error, minimum average square error, minimum maximum error, minimum average log error, minimum weighted error, minimum trimmed error, etc. Precision requirement: e.g. 8 bit precision, 12 bit, 16 bit, 20 bit, 24 bit, 32 bit, etc. Representation requirement: e.g. fixed point, floating point, single precision, double precision, extended precision, rounding, truncation, two's complement, one's complement, sign-and-magnitude, compression, etc. Encoding: e.g. compression, redundancy reduction, real-time requirement: e.g. time lag of less than 1 sec, 0.1s, 0.01s, 0.001s, 0.0001s, 0.00001, etc. buffering: e.g. storage requirement of 1 byte, 10 byte, 100 byte, 1kB, 10kB, 1MB, 1GB, etc. memory requirement: e.g. memory read time, memory write time, cache, data bus width, RAM, ROM, refreshing, DRAM, SDRAM, etc. stability/temporal consistency/correlation/outlier/deviation/tail/percentile/quantile requirement: e.g. when there is little/no change in venue, the TSCI needs to be insensitive to noise/background radiation/atmospheric/climate condition/computation imperfection/algorithmic tradeoff, or be stable over time, or consistent over time, or not fluctuate much over time, or has high or low correlation over time, or have very few outliers over time, or have little deviation over time, or have little/small statistical tail, or bounded percentile, or bounded quantile, etc. indicator requirement: the IC firmware may have an interface (e.g. a driver, a tool in a firmware or SDK or software package) that would allow an application software to.

Clause E143. The method of the qualified wireless system of Clauses E1-E142, further comprising: receiving the wireless signal based on the IC of the Type 2 device, computing the TSCI based on the IC, obtaining the TSCI from the IC, wherein the qualification criterion for the qualification of the IC of the Type 2 device comprises at least one of: an estimation error requirement of each CI, an estimation error requirement of the TSCI, a precision requirement of each CI, a precision requirement of the TSCI, a representation requirement of the TSCI, an encoding requirement of the TSCI, a real-time requirement of the TSCI, a buffering requirement of the TSCI, a memory requirement of the TSCI, a stability requirement of the TSCI, a temporal consistency requirement of the TSCI, a correlation requirement of the TSCI, an outlier requirement of the TSCI, a deviation requirement of the TSCI, a tail requirement of the TSCI, a percentile requirement of the TSCI, a quantile requirement of the TSCI, a scalability requirement of the TSCI, an indicator to communicate the availability of at least one of: a CI, a group of recent CI, and the whole TSCI, an accuracy requirement of the computation of more than one consecutive CI, making the TSCI available to another set of instructions stored in another memory; wherein the another set of instructions when executed causes another processor to: monitoring a motion of an object in the venue.

Clause E144. The method of the qualified wireless system of Clauses E1-E143, further comprising: wherein the wireless signal comprises a time series of probe signal (TSPS), wherein a field of a control signal indicates at least one of: a parameter, a destination address, a frequency, a timing, an allowable frequency and an allowable period, of the TSPS.

Clause E145. The method of the qualified wireless system of Clauses E18-E144, further comprising: wherein the control signal is transmitted by at least one of: the Type 1 device and another device.

Clause E146. The method of the qualified wireless system of Clauses E19-E145, further comprising: wherein the control signal is transmitted in at least one of: a regular manner, a repeated manner, an occasional manner, an on-demand manner, an acknowledgement-to-query manner, and a broadcasting manner.

Clause E147. The method of the qualified wireless system of Clauses E1-E146, further comprising: coordinating the Type 1 device and the Type 2 device. Signaling between the Type 1 device and the Type 2 device.

Clause E148. The method of the qualified wireless system of Clauses E1-E147, further comprising: signaling between the Type 1 device and the Type 2 device. Sending signal from the Type 1 device to the Type 2 device.

Clause E149. The method of the qualified wireless system of Clauses E1-E148, further comprising: wherein the wireless signal comprises at least one probe signal, wherein the probe signal comprises a frame with at least one of: a preamble field, a header field, a data field, a data frame, a MAC frame, a synchronization field, a training field, a delimiter field, a header field, a signal field, a service field, a length field, an error-control field, and another field, sending the at least one probe signal from the Type 1 device to the Type 2 device.

In WiFi/LTE/3G/4G/5G/6G or any wireless network, a physical layer packet is sent from Type 1 device to Type 2 device.

Clause E150. The method of the qualified wireless system of Clauses E1-E149, further comprising: sending a physical layer packet from the Type 1 device to the Type 2 device, wherein the physical layer frame to comprise at least one of: a preamble transmitted in a first modulation at a first data rate, a header transmitted in a second modulation at a second data rate, and a physical layer payload in a third modulation at a third data rate.

Clause E151. The method of the qualified wireless system of Clauses E6-E150: wherein at least one of: the preamble, the header and the physical layer payload, contains a field related to wireless sensing.

Clause E152. The method of the qualified wireless system of Clauses E6-E151: wherein at least one of: the preamble, the header and the physical layer payload, contains a field related to sensing of the venue based on the TSCI.

Clause E153. The method of the qualified wireless system of Clauses E6-E152: wherein at least one of: the preamble, the header and the physical layer payload, contains a field related to the monitoring of an object motion in the venue based on the TSCI.

Clause E154. The method of the qualified wireless system of Clauses E5-E153, further comprising: causing the Type 2 device to at least one of: make the TSCI available, signal that the TSCI is available, processed the TSCI, make the processed TSCI available, signal that the processed TSCI is available, compute an analytics based on the TSCI, make the analytics available, signal that the analytics is available, perform a task based on the analytics, perform a task jointly with at least one of: another Type 1 device and another Type 2 device, and another operation.

Clause E155. The method of the qualified wireless system of Clauses E1-E154, further comprising: signaling at least one of: the Type 1 device and the Type 2 device.

Coordinating.

Clause E156. The method of the qualified wireless system of Clauses E1-E155, further comprising: communicating at least one of: a request, a command, a response, a reply and a signal to at least one of: the Type 1 device and the Type 2 device.

Clause E157. The method of the qualified wireless system of Clauses E1-E156, further comprising: causing the Type 1 device to transmit the wireless signal to the Type 2 device.

Clause E158. The method of the qualified wireless system of Clauses E4-E157, further comprising: causing the Type 1 device to transmit the wireless signal to the Type 2 device in such a way that the TSCI satisfies the respective qualification criterion.

Clause E159. The method of the qualified wireless system of Clauses E1-E158, further comprising: causing the Type 2 device to receive the wireless signal from the Type 1 device.

Clause E160. The method of the qualified wireless system of Clauses E6-E159, further comprising: causing the Type 2 device to obtain the TSCI based on the wireless signal.

Clause E161. The method of the qualified wireless system of Clauses E7-E160, further comprising: causing the Type 2 device to monitor a motion of an object in the venue based on the TSCI, wherein the wireless multipath channel is impacted by the motion of the object in the venue.

Clause E162. The method of the qualified wireless system of Clauses E7-E161, further comprising: requesting the Type 2 device to compute a characteristics of the motion of the object based on the TSCI.

Clause E163. The method of the qualified wireless system of Clauses E9-E162, further comprising: requesting the Type 2 device to perform a task based on the characteristics of the motion of the object computed based on the TSCI.

Clause E164. The method of the qualified wireless system of Clauses E1-E163, further comprising: conducting a negotiation between the Type 1 device and the Type 2 device.

Clause E165. The method of the qualified wireless system of Clauses E1-E164: wherein the qualification criterion is applied at a time when the venue has no change and no object motion.

To test for qualification, there may be requirements on the venue (e.g. in Clause E2), and other requirements. There may be a requirement of carrier frequency of the wireless multipath channel. For example, 2.4GHz or 5GHz for WiFi Let N1 is the number of antennas of the Type 1 device. Let N2 be the number of antenna of the Type 2 device. There may be a requirement regarding N1 and N2. E.g. If the channel bandwidth is 20MHz, the product of N1 and N2 (i.e. N1*N2) may be required to be 4 or more. E.g. If the channel bandwidth is 40MHz, N1*N2 may be required to be 2, or 3, or more. E.g. If the channel bandwidth is 80MHz (e.g. 802.11n/ac) or 160MHz (e.g. 802.11ac), N1*N2 may be required to be 1 or more. Thresholds used in the qualification criterion may be determined/changed/adjusted based on the channel bandwidth, N1, N2, a description of the venue, etc.

Clause E166. The method of the qualified wireless system of Clauses E1-E165: wherein the respective qualification criterion comprises at least one of: a requirement of the venue, a requirement of the wireless multipath channel, a requirement of the wireless signal, a requirement of signaling between the Type 1 device and the Type 2 device, a requirement of the Type 1 device, a requirement of the Type 2 device, a requirement of the wireless transmitter of the Type 1 device, a requirement of the wireless receiver of the Type 2 device, a requirement of the antennas of the Type 1 device, a requirement of the antennas of the Type 2 device, a requirement of the number of antennas of the Type 1 device, a requirement of the number of antennas of the Type 2 device, a requirement of the placement of the Type 1 device, a requirement of the placement of the Type 2 device, a requirement of the module of the Type 1 device, a requirement of the module of the Type 2 device, a requirement of the IC of the Type 1 device, a requirement of the IC of the Type 2 device, and a type of qualification.

Clause E167. The method of the qualified wireless system of Clauses E3-E166: wherein the requirement of the venue comprises at least one of: a type-of-venue requirement comprising at least one of: indoor, outdoor, semi-outdoor, underground, house, office, building, warehouse, lab, special testing facility, and another venue type, a type-of-partition requirement comprising at least one of: wall plaster, dry wall, fiberboard, paneling, gypsum, wood, metal, vinyl, stucco, shingle, asphalt, brick, stone, masonry, concrete, cement, tile, ceramic tile, glass, and another partition type, a size-of-venue requirement comprising at least one of: volume, area, width, length, height, depth, thickness, layering, and another venue size, a structure requirement comprising at least one of: furniture, supporting structures, columns, beams, tables, chairs, shelves, cabinets, vehicles, and another structure, a multipath-richness requirement of the venue, a state requirement of the venue, a motion requirement of the venue, a composition requirement of the venue, the venue is not changing at least temporarily, the venue is stationary at least temporarily, the venue is motionless at least temporarily, there is no object moving in the venue at least temporarily, and another venue-related requirement.

Clause E168. The method of the qualified wireless system of Clauses E3-E167: wherein the requirement of the wireless multipath channel comprises at least one of: a bandwidth requirement comprising of at least one of: 10MHz, 20MHz, 30MHz, 40MHz, 50MHz, 60MHz, 70MHz, 80MHz, 100MHz, 160MHz, 320MHz, and another bandwidth, a carrier frequency requirement based on at least one of: an ISM band centered near at least one of: 6.78MHz, 13.56MHz, 27.12MHz, 40.68MHz, 4.5GHz, 33.93MHz, 915MHz, 2.45GHz, 5GHz, 5.8GHz, 24.125GHz, 61.25GHz, 122.5GHz, and 245GHz, a mobile communication band, a mobile communication channel, 3G, 4G, LTE, 5G, 6G, 7G, a WiFi band, a WiFi channel, and another carrier frequency, a standard compliance requirement comprising at least one of: WLAN, WiFi, a 802.11 standard, a 802.15 standard, a 802.20 standard, a mobile communication standard, a 3GPP standard, 3G, 4G, LTE, 5G, 6G, 7G, 8G, a Bluetooth standard, a standard using OFDM, a standard comprising computation of the CI, and another standard, a protocol requirement, a network requirement, a signaling requirement, a signal handshaking requirement, a multiple access requirement, a channel traffic requirement, a channel availability requirement, a frequency hopping requirement, a data transmission requirement, and another channel-related requirement.

Clause E169. The method of the qualified wireless system of Clauses E3-E168: wherein the requirement of the wireless signal comprises at least one of: the wireless signal comprising a time series of probe signals (TSPS), a protocol requirement, a network requirement, a signaling requirement, a signal handshaking requirement, a multiple access requirement, a channel traffic requirement, a modulation requirement, a frequency hopping requirement, a data transmission requirement, a transmission power requirement of the TSPS, a probing frequency requirement of the TSPS, a probing timing requirement of the TSPS, a sounding frequency requirement of the TSPS, a sounding timing requirement of the TSPS, a timing requirement of the TSPS, a rapid-firing timing requirement of the TSPS, a pulsating timing requirement of the TSPS, a progressive timing requirement of the TSPS, a time-varying timing requirement of the TSPS, a timing jitter requirement of the TSPS, a broadcasting requirement associated with each probe signal, a signaling requirement associated with each probe signal, a protocol requirement associated with each probe signal, a handshake requirement associated with each probe signal, a requirement of a predecessor signal that triggers the Type 1 device to send a probe signal, a requirement of a predecessor signal to which a probe signal is an acknowledgement in a handshake, a requirement of a predecessor signal to which a probe signal is a reply in a handshake, a data field requirement of a probe signal that causes the obtaining of CI by the Type 2 device, a header field requirement of a probe signal that causes the obtaining of CI by the Type 2 device, a data field requirement of a packet of a probe signal that causes the obtaining of CI by the Type 2 device, a control data field requirement of a probe signal that causes the obtaining of CI by the Type 2 device, and another signal-related requirement.

Clause E170. The method of the qualified wireless system of Clauses E3-E169: wherein the requirement of the Type 1 device comprises at least one of: a placement requirement, an installation requirement, a processor requirement, a memory requirement, a software requirement, a system requirement, a power requirement, an interface requirement, a transmission requirement, a housing requirement, a signaling requirement, an environment requirement, an antenna-type requirement, an antenna-count requirement, an antenna-gain requirement, an antenna-placement requirement, an antenna-radiation requirement, an antenna-material requirement, an antenna-structure requirement, and another Type 1 device requirement.

Clause E171. The method of the qualified wireless system of Clauses E3-E170: wherein the requirement of the Type 2 device comprises at least one of: a placement requirement, an installation requirement, a processor requirement, a memory requirement, a software requirement, a system requirement, a power requirement, an interface requirement, a transmission requirement, a housing requirement, a signaling requirement, an environment requirement, an antenna-type requirement, an antenna-count requirement, an antenna-gain requirement, an antenna-placement requirement, an antenna-radiation requirement, an antenna-material requirement, an antenna-structure requirement, and another Type 2 device requirement.

Consider two CI. Qualification criterion: (TRRS high enough, stationary/stable) First CI and second CI are similar (e.g. small TRRS between them). First CI and predictor of first CI based on second CI are similar. The predictor may be zero-order hold, i.e. the predictor may be the second CI. It may be first order (e.g. linear) predictor based on two past CI. It may also be second order (based on 3 past CI) or higher order predictor or other predictors. Or, First time and second time are close to each other.

Clause E172. The method of the qualified wireless system of Clauses E1-E171: wherein a first CI of the TSCI is obtained by the Type 2 device at a first time;

wherein a second CI of the TSCI is obtained by the Type 2 device at a second time; wherein the qualification criterion comprises at least one of: First CI and second CI are similar (described in different wordings) the first CI and the second CI are similar, there is little variation between the first CI and the second CI, the first CI is in a neighborhood of the second CI, a similarity score between the first CI and the second CI is greater than a threshold, a variation score between the first CI and the second CI is less than a threshold, a distance score between the first CI and the second CI is less than a threshold, First CI and predictor of first CI based on second CI are similar Predictor may be second CI, or linear predictor, or 2nd order predictor, or higher order predictor, or another predictor the first CI and a predictor of the first CI based on the second CI are similar, there is little variation between the first CI and the predictor, the first CI is in a neighborhood of the predictor, a similarity score between the first CI and the predictor is greater than a threshold, a variation score between the first CI and the predictor is less than a threshold, a distance score between the first CI and the predictor is less than a threshold, Feature of first CI and corresponding feature of second CI are similar. The feature may comprise at least one of: a magnitude, a phase, a magnitude square, a subcarrier, a subcarrier magnitude, a subcarrier phase, a tab, a component, a component magnitude, a component phase, a time-domain component, a frequency-domain component, a subset, an average, a weighted average, a trimmed mean, a percentile, a function (e.g. absolute, square, polynomial, root, square root, cubic root,.., exponential, trigonometric, log, etc.) of another features, etc. A feature of the first CI and the feature of the second CI are similar, the feature of the first CI is in a neighborhood of the feature of the second CI, a similarity score between the feature of the first CI and the feature of the second CI is greater than a threshold, a variation score between the feature of the first CI and the feature of the second CI is less than a threshold, a distance score between the feature of the first CI and the feature of the second CI is less than a threshold, Feature of first CI and corresponding feature of predictor CI of first CI are similar.

The feature of the first CI and the feature of the predictor of the first CI based on the second CI are similar, the feature of the first CI is in a neighborhood of the feature of the predictor, a similarity score between the feature of the first CI and the feature of the predictor is greater than a threshold, a variation score between the feature of the first CI and the feature of the predictor is less than a threshold, a distance score between the feature of the first CI and the feature of the predictor is less than a threshold, First time and second time are close to each other. The first time and the second time are similar, the first time is in a neighborhood of the second time, the first CI and the second CI are neighboring CI in the TSCI, the first time and the second time are neighboring sampling time of the Type 2 device, a difference between the first time and the second time is less than a threshold, and another qualification criterion.

Clause E173. The method of the qualified wireless system of Clauses E1-E172: wherein the wireless signal comprises a time series of probe signals (TSPS); wherein a first probe signal transmitted by the Type 1 device at a first transmitting time is associated with a first CI of the TSCI obtained by the Type 2 device at a first time; wherein a second probe signal transmitted by the Type 1 device at a second transmitting time is associated with a second CI of the TSCI obtained by the Type 2 device at a second time; wherein the qualification criterion comprises at least one of: First and second transmitting time are close to each other/similar (described in different wordings) the first transmitting time and the second transmitting time are similar, there is little variation between the first transmitting time and the second transmitting time, the first transmitting time is in a neighborhood of the second transmitting time, a first probe signal and the second probe signal are neighboring probe signals in the time series of probe signal, the first transmitting time and the second transmitting time are neighboring transmitting time of the Type 1 device, a difference between the first transmitting time and the second transmitting time is less than a threshold, First and second transmitting time, or first and second time are close to each other/similar (described in different wordings) two of the first transmitting time, the first time, the second transmitting time and the second time are similar, there is little variation between the two times, the two times are in a neighborhood of each other, a difference between the two times is less than a threshold, and another qualification criterion.

Clause E174. The method of the qualified wireless system of Clauses E1-E173: wherein there are a plurality of CI of the TSCI in a period of time; wherein the qualification criterion comprises at least one of: The plurality of CI are similar (described in different wordings) the plurality of CI are similar, the plurality of CI are consistent, there is little variation among the plurality of CI, there is little outlier among the plurality of CI, all of the plurality of CI are in a neighborhood, all of the plurality of CI are in a dense cluster, a similarity score of the plurality of CI is greater than a threshold, a variation score of the plurality of CI is less than a threshold, a distance score of the plurality of CI is less than a threshold, majority vote a similarity score of the plurality of CI is greater than a threshold for at least a percentage of the period of time, a variation score of the plurality of CI is less than a threshold for at least a percentage of the period of time, a distance score of the plurality of CI is less than a threshold for at least a percentage of the period of time, a similarity score of the plurality of CI is less than a threshold for at most a percentage of the period of time, a variation score of the plurality of CI is greater than a threshold for at most a percentage of the period of time, a distance score of the plurality of CI is greater than a threshold for at most a percentage of the period of time, some possible similarity score based on pairwise similarity score a mean of a pairwise similarity score of the plurality of CI is greater than a threshold, a median of the pairwise similarity score of the plurality of CI is greater than a threshold, a mode of the pairwise similarity score of the plurality of CI is greater than a threshold, a percentile of the pairwise similarity score of the plurality of CI is greater than a threshold, a smallest pairwise similarity score of the plurality of CI is greater than a threshold, a weighted mean of the pairwise similarity score of the plurality of CI is greater than a threshold, a variance of the pairwise similarity score of the plurality of CI is less than a threshold, some possible similarity score based on pairwise similarity score with respect to centroid (mean) a mean of a pairwise similarity score of the plurality of CI from a centroid of the plurality of CI is greater than a threshold, a median of the pairwise similarity score of the plurality of CI from a centroid is greater than a threshold, a mode of the pairwise similarity score of the plurality of CI from a centroid is greater than a threshold, a percentile of the pairwise similarity score of the plurality of CI from a centroid is greater than a threshold, a smallest pairwise similarity score of the plurality of CI from a centroid is greater than a threshold, a weighted mean of the pairwise similarity score of the plurality of CI from a centroid is greater than a threshold, a variance of the pairwise similarity score of the plurality of CI from a centroid is less than a threshold, some possible variation score or distance score a variance of the plurality of CI is less than a threshold, a mean distance of the plurality of CI from a centroid is less than a threshold, a central moment of the plurality of CI is less than a threshold, a kurtosis of the plurality of CI is less than a threshold, a tailedness measure of the plurality of CI is less than a threshold, an outlier measure of the plurality of CI is less than a threshold, and another qualification criterion.

Similar to Clause E4, except that "feature" of CI is similar instead of the CI itself. Consider CI in a period of time as a set of random data. The feature may comprise at least one of: a magnitude, a phase, a magnitude square, a subcarrier, a subcarrier magnitude, a subcarrier phase, a tab, a component, a component magnitude, a component phase, a time-domain component, a frequency-domain component, a subset, an average, a weighted average, a trimmed mean, a percentile, a function (e.g. absolute, square, polynomial, root, square root, cubic root,.., exponential, trigonometric, log, etc.) of another features, etc.

Clause E175. The method of the qualified wireless system of Clauses E1-E174: wherein there are a plurality of CI of the TSCI in a period of time; wherein the qualification criterion comprises at least one of: Features of the plurality of CI are similar (described in different wordings) a feature of each of the plurality of CI is similar, the feature of each of the plurality of CI is consistent, there is little variation of the feature among the plurality of CI, there is little outlier of the feature among the plurality of CI, the features of the plurality of CI are in a neighborhood, the features of the plurality of CI are in a dense cluster, a similarity score of the features of the plurality of CI is greater than a threshold, a variation score of the features of the plurality of CI is less than a threshold, a distance score of the features of the plurality of CI is less than a threshold, majority vote a similarity score of the features of the plurality of CI is greater than a threshold for at least a percentage of the period of time, a variation score of the features of the plurality of CI is less than a threshold for at least a percentage of the period of time, a distance score of the features of the plurality of CI is less than a threshold for at least a percentage of the period of time, a similarity score of the features of the plurality of CI is less than a threshold for at most a percentage of the period of time, a variation score of the features of the plurality of CI is greater than a threshold for at most a percentage of the period of time, a distance score of the features of the plurality of CI is greater than a threshold for at most a percentage of the period of time, some possible similarity score based on pairwise similarity score a mean of a pairwise similarity score of the features of the plurality of CI is greater than a threshold, a median of the pairwise similarity score of the features of the plurality of CI is greater than a threshold, a mode of the pairwise similarity score of the features of the plurality of CI is greater than a threshold, a percentile of the pairwise similarity score of the features of the plurality of CI is greater than a threshold, a smallest pairwise similarity score of the features of the plurality of CI is greater than a threshold, a weighted mean of the pairwise similarity score of the features of the plurality of CI is greater than a threshold, a variance of the pairwise similarity score of the features of the plurality of CI is less than a threshold, some possible similarity score based on pairwise similarity score with respect to centroid (mean) a mean of a pairwise similarity score of the features of the plurality of CI from a centroid of the plurality of CI is greater than a threshold, a median of the pairwise similarity score of the features of the plurality of CI from a centroid is greater than a threshold, a mode of the pairwise similarity score of the features of the plurality of CI from a centroid is greater than a threshold, a percentile of the pairwise similarity score of the features of the plurality of CI from a centroid is greater than a threshold, a smallest pairwise similarity score of the features of the plurality of CI from a centroid is greater than a threshold, a weighted mean of the pairwise similarity score of the features of the plurality of CI from a centroid is greater than a threshold, a variance of the pairwise similarity score of the features of the plurality of CI from a centroid is less than a threshold, some possible variation score or distance score a variance of the features of the plurality of CI is less than a threshold, a mean distance of the features of the plurality of CI from a centroid is less than a threshold, a central moment of the features of the plurality of CI is less than a threshold, a kurtosis of the features of the plurality of CI is less than a threshold, a tailedness measure of the features of the plurality of CI is less than a threshold, an outlier measure of the features of the plurality of CI is less than a threshold, and another qualification criterion.

Consider CI in two periods of time. Qualification criterion is that the two sets should form a tight cluster, close to each other.

Clause E176. The method of the qualified wireless system of Clauses E1-E175: wherein there are a first set of CI in the TSCI in a first period of time; wherein there are a second set of CI in the TSCI in a second period of time; wherein the qualification criterion comprises at least one of: The plurality of CI are similar (described in different wordings) the first set of CI are self-similar, the first set of CI are self-consistent, the second set of CI are self-similar, the second set of CI are self-consistent, the first set of CI and the second set of CI are similar, there is little variation within the first set of CI, there is little variation within the second set of CI, there is little variation between the first set of CI and the second set of CI, there is little outlier within the first set of CI, there is little outlier within the second set of CI, there is little outlier within the first set of CI and the second set of CI combined, all of the first set of CI are in a neighborhood, all of the second set of CI are in a neighborhood, all of the first set of CI and the second set of CI are in a neighborhood, all of the first set of CI are in a dense cluster, all of the second set of CI are in a dense cluster, all of the first set of CI and second set of CI are in a dense cluster, a similarity score of the first set of CI is greater than a threshold, a similarity score of the second set of CI is greater than a threshold, a similarity score of the first set of CI and the second set of CI is greater than a threshold, a variation score of the first set of CI is less than a threshold, a variation score of the second set of CI is less than a threshold, a variation score of the first set of CI and the second set of CI is less than a threshold, a distance score of the first set of CI is less than a threshold, a distance score of the second set of CI is less than a threshold, a distance score of the first set of CI and the second set of CI is less than a threshold, majority vote a similarity score of the first set of CI is greater than a threshold for at least a percentage of the period of time, a similarity score of the second set of CI is greater than a threshold for at least a percentage of the period of time, a similarity score of the first set of CI and the second set of CI is greater than a threshold for at least a percentage of the period of time, a variation score of the first set of CI is less than a threshold for at least a percentage of the period of time, a variation score of the second set of CI is less than a threshold for at least a percentage of the period of time, a variation score of the first set of CI and the second set of CI is less than a threshold for at least a percentage of the period of time, a distance score of the first set of CI is less than a threshold for at least a percentage of the period of time, a distance score of the second set of CI is less than a threshold for at least a percentage of the period of time, a distance score of the first set of CI and the second set of CI is less than a threshold for at least a percentage of the period of time, a similarity score of the first set of CI is less than a threshold for at most a percentage of the period of time, a similarity score of the second set of CI is less than a threshold for at most a percentage of the period of time, a similarity score of the first set of CI and the second set of CI is less than a threshold for at most a percentage of the period of time, a variation score of the first set of CI is greater than a threshold for at most a percentage of the period of time, a variation score of the second set of CI is greater than a threshold for at most a percentage of the period of time, a variation score of the first set of CI and the second set of CI is greater than a threshold for at most a percentage of the period of time, a distance score of the first set of CI is greater than a threshold for at most a percentage of the period of time, a distance score of the second set of CI is greater than a threshold for at most a percentage of the period of time, a distance score of the first set of CI and the second set of CI is greater than a threshold for at most a percentage of the period of time, some possible similarity score based on pairwise similarity score a mean of a pairwise similarity score of the first set of CI is greater than a threshold, a mean of a pairwise similarity score of the second set of CI is greater than a threshold, a mean of a pairwise similarity score of the first set of CI and the second set of CI is greater than a threshold, a median of the pairwise similarity score of the first set of CI is greater than a threshold, a median of the pairwise similarity score of the second set of CI is greater than a threshold, a median of the pairwise similarity score of the first set of CI and the second set of CI is greater than a threshold, a mode of the pairwise similarity score of the first set of CI is greater than a threshold, a mode of the pairwise similarity score of the second set of CI is greater than a threshold, a mode of the pairwise similarity score of the first set of CI and the second set of CI is greater than a threshold, a percentile of the pairwise similarity score of the first set of CI is greater than a threshold, a percentile of the pairwise similarity score of the second set of CI is greater than a threshold, a percentile of the pairwise similarity score of the first set of CI and the second set of CI is greater than a threshold, a smallest pairwise similarity score of the first set of CI is greater than a threshold, a smallest pairwise similarity score of the second set of CI is greater than a threshold, a smallest pairwise similarity score of the first set of CI and the second set of CI is greater than a threshold, a weighted mean of the pairwise similarity score of the first set of CI is greater than a threshold, a weighted mean of the pairwise similarity score of the second set of CI is greater than a threshold, a weighted mean of the pairwise similarity score of the first set of CI and the second set of CI is greater than a threshold, a variance of the pairwise similarity score of the first set of CI is less than a threshold, a variance of the pairwise similarity score of the second set of CI is less than a threshold, a variance of the pairwise similarity score of the first set of CI and the second set of CI is less than a threshold, some possible similarity score based on pairwise similarity score with respect to centroid (mean) a mean of a pairwise similarity score of the first set of CI from a centroid of the plurality of CI is greater than a threshold, a mean of a pairwise similarity score of the second set of CI from a centroid of the plurality of CI is greater than a threshold, a mean of a pairwise similarity score of the first set of CI and the second set of CI from a centroid of the plurality of CI is greater than a threshold, a median of the pairwise similarity score of the first set of CI from a centroid is greater than a threshold, a median of the pairwise similarity score of the second set of CI from a centroid is greater than a threshold, a median of the pairwise similarity score of the first set of CI and the second set of CI from a centroid is greater than a threshold, a mode of the pairwise similarity score of the first set of CI from a centroid is greater than a threshold, a mode of the pairwise similarity score of the second set of CI from a centroid is greater than a threshold, a mode of the pairwise similarity score of the first set of CI and the second set of CI from a centroid is greater than a threshold, a percentile of the pairwise similarity score of the first set of CI from a centroid is greater than a threshold, a percentile of the pairwise similarity score of the second set of CI from a centroid is greater than a threshold, a percentile of the pairwise similarity score of the first set of CI and the second set of CI from a centroid is greater than a threshold, a smallest pairwise similarity score of the first set of CI from a centroid is greater than a threshold, a smallest pairwise similarity score of the second set of CI from a centroid is greater than a threshold, a smallest pairwise similarity score of the first set of CI and the second set of CI from a centroid is greater than a threshold, a weighted mean of the pairwise similarity score of the first set of CI from a centroid is greater than a threshold, a weighted mean of the pairwise similarity score of the second set of CI from a centroid is greater than a threshold, a weighted mean of the pairwise similarity score of the first set of CI and the second set of CI from a centroid is greater than a threshold, a variance of the pairwise similarity score of the first set of CI from a centroid is less than a threshold, a variance of the pairwise similarity score of the second set of CI from a centroid is less than a threshold, a variance of the pairwise similarity score of the first set of CI and the second set of CI from a centroid is less than a threshold, some possible variation score or distance score a variance of the first set of CI is less than a threshold, a variance of the second set of CI is less than a threshold, a variance of the first set of CI and the second set of CI is less than a threshold, a mean distance of the first set of CI from a centroid is less than a threshold, a mean distance of the second set of CI from a centroid is less than a threshold, a mean distance of the first set of CI and the second set of CI from a centroid is less than a threshold, a central moment of the first set of CI is less than a threshold, a central moment of the second set of CI is less than a threshold, a central moment of the first set of CI and the second set of CI is less than a threshold, a kurtosis of the first set of CI is less than a threshold, a kurtosis of the second set of CI is less than a threshold, a kurtosis of the first set of CI and the second set of CI is less than a threshold, a tailedness measure of the first set of CI is less than a threshold, a tailedness measure of the second set of CI is less than a threshold, a tailedness measure of the first set of CI and the second set of CI is less than a threshold, an outlier measure of the first set of CI is less than a threshold, an outlier measure of the second set of CI is less than a threshold, an outlier measure of the first set of CI and the second set of CI is less than a threshold, and another qualification criterion.

Clause E177. The method of the qualified wireless system of Clauses E1-E176, further comprising: performing a task based on the TSCI.

Clause E178. The method of the qualified wireless system of Clauses E1-E177, further comprising: monitoring a motion of an object in the venue based on the TSCI, wherein the wireless multipath channel is impacted by the motion of the object in the venue.

Clause E179. The method of the qualified wireless system of Clauses E16-E178, further comprising: computing a characteristics of the motion of the object based on the TSCI.

Clause E180. The method of the qualified wireless system of Clauses E17-E179, further comprising: computing a current characteristics of the motion of the object based on at least one of: the TSCI and a past characteristics of the motion of the object.

Clause E181. The method of the qualified wireless system of Clauses E18-E180, further comprising: computing the current characteristics of the motion of the object based on at least one of: a current window of the TSCI and the past characteristics, and computing the past characteristics of the motion of the object based on at least one of: a past window of the TSCI.

Clause E182. The method of the qualified wireless system of Clauses E17-E181: wherein the characteristics comprises at least one of: a frequency of a repeating motion, a frequency characteristics, a vital characteristics, a breathing rate, a heart rate, a frequency spectrum, a period of the repeating motion, a temporal characteristics, a temporal profile, a time, a timing, a starting time, an ending time, a duration, a history, a trend, a prediction, a motion type, a motion characteristics, a motion intensity, a motion measure, a motion classification, an identity, a presence, a proximity, a proximity, a count, a people count, a location, a geometry, a speed, a velocity, a displacement, a distance, a range, a direction, an angle, an acceleration, a rotational speed, a rotational characteristics, a gait cycle of the object, gesture, a transient behavior of the object, a transient motion, a change, a change in the motion, a change in frequency, a change of period, a change of gait cycle, an event, a sudden motion, a fall-down event and another characteristics.

Clause E183. The method of the qualified wireless system of Clauses E17-E182, further comprises: performing a task based on the characteristics of the motion of the object.

Clause E184. The method of the qualified wireless system of Clauses E21-E183, further comprises: generating a presentation associated with the task.

Clause E185. The method of the qualified wireless system of Clauses E22-E184, further comprises: generating the presentation in a user-interface (UI) of a user device.

Clause E186. The method of the qualified wireless system of Clauses E21-E185: wherein the task to comprise at least one of: object detection, presence detection, proximity detection, object recognition, activity recognition, object verification, object counting, daily activity monitoring, well-being monitoring, vital sign monitoring, health condition monitoring, baby monitoring, elderly monitoring, sleep monitoring, sleep stage monitoring, walking monitoring, exercise monitoring, tool detection, tool recognition, tool verification, patient detection, patient monitoring, patient verification, machine detection, machine recognition, machine verification, human detection, human recognition, human verification, baby detection, baby recognition, baby verification, human breathing detection, human breathing recognition, human breathing estimation, human breathing verification, human heart beat detection, human heart beat recognition, human heart beat estimation, human heart beat verification, fall-down detection, fall-down recognition, fall-down estimation, fall-down verification, emotion detection, emotion recognition, emotion estimation, emotion verification, motion detection, motion degree estimation, motion recognition, motion estimation, motion verification, periodic motion detection, periodic motion recognition, periodic motion estimation, periodic motion verification, repeated motion detection, repeated motion recognition, repeated motion estimation, repeated motion verification, stationary motion detection, stationary motion recognition, stationary motion estimation, stationary motion verification, cyclo-stationary motion detection, cyclo-stationary motion recognition, cyclo-stationary motion estimation, cyclo-stationary motion verification, transient motion detection, transient motion recognition, transient motion estimation, transient motion verification, trend detection, trend recognition, trend estimation, trend verification, breathing detection, breathing recognition, breathing estimation, breathing verification, human biometrics detection, human biometrics recognition, human biometrics estimation, human biometrics verification, environment informatics detection, environment informatics recognition, environment informatics estimation, environment informatics verification, gait detection, gait recognition, gait estimation, gait verification, gesture detection, gesture recognition, gesture estimation, gesture verification, machine learning, supervised learning, unsupervised learning, semi-supervised learning, clustering, feature extraction, featuring training, principal component analysis, eigen-decomposition, frequency decomposition, time decomposition, time-frequency decomposition, functional decomposition, other decomposition, training, discriminative training, supervised training, unsupervised training, semi-supervised training, neural network, sudden motion detection, fall-down detection, danger detection, life-threat detection, regular motion detection, stationary motion detection, cyclo-stationary motion detection, intrusion detection, suspicious motion detection, security, safety monitoring, navigation, guidance, map-based processing, map-based correction, irregularity detection, locationing, room sensing, tracking, multiple object tracking, indoor tracking, indoor position, indoor navigation, energy management, power transfer, wireless power transfer, object counting, car tracking in parking garage, activating/deactivating/waking/sleeping/ controlling a device/system (e.g. security system, access system, alarm, siren, speaker, television, entertainment system, camera, heater/air-conditioning (HVAC) system, ventilation system, lighting system, gaming system, coffee machine, cooking device, cleaning device, housekeeping device, etc.), geometry estimation, augmented reality, wireless communication, data communication, signal broadcasting, networking, coordination, administration, encryption, protection, cloud computing, other processing, and another task.

Clause E187. A method of a qualified wireless system, comprising: receiving a wireless signal by a Type 2 heterogeneous wireless device, wherein the wireless signal is transmitted to the Type 2 device by a Type 1 heterogeneous wireless device through a wireless multipath channel of a venue, and obtaining a time series of channel information (CI) of the wireless multipath channel based on the wireless signal using a processor of the Type 2 device, a memory communicatively coupled with the process and a set of instructions stored in the memory, wherein at least one of: the Type 1 device and the Type 2 device is qualified if the time series of CI (TSCI) satisfy a respective qualification criterion.

Clause E188. The method of the qualified wireless system of Clauses E1-E187: wherein the wireless signal is compatible with a standard.

Clause E189. The method of the qualified wireless system of Clauses E1-E188: wherein the wireless signal comprises at least one of: a pilot signal, a token signal, a control signal, a physical layer signal, a MAC layer signal, a handshake signal, a probing signal, a pinging signal, an acknowledgement signal, an enquiry signal, a response signal, a data signal, a hybrid signal, a standard compliant signal, a signal with a header, a signal with a header comprising a probing pattern, a signal with a header data field being a probing pattern, a signal with a payload, a signal with an identifier of the Type 1 device, a signal with an identifier of the Type 2 device, a signal with a time stamp, a signal with a destination address, a signal with a destination MAC address, a signal compatible with an IEEE 802 standard, a signal compatible with a mobile communication standard, a signal compatible with a wireless standard, a signal compliant with a protocol, a point-to-point signal, a broadcasting signal, and another signal.

Clause E190. The method of the qualified wireless system of Clauses E3-E189: wherein the probe signal is compatible with a standard.

Some embodiments of the present teaching disclose a method for automatic online qualification of internet-of-things (IoT) devices as Bots. In one embodiment, two or more mesh access point (AP) devices are used to detect whether a room is static or not. Then one of the AP devices is used to probe an IoT device and perform the qualification test.

For example, IoT devices (e.g. echo dots, apple TV, Vivint cameras, etc.) are qualified to be used as Bots offline. For example, for an echo dot, CSI is captured in an empty room or home, in motion and with breathing. One can check out the quality of CSI. This process can also be moved online to the Origin. To check a device whether it can be used for motion may be performed as follows. First, one can use an existing motion sensing to determine if the home is empty. If it is known that the home is empty, CSI is captured with the IoT device to be qualified. If the CSI is good, one can add the IoT device to the list of sensing for that network. For example, when there are existing Velop devices running at home for Linksys Aware, one can use the Velop to know whether the home is empty. Then the CSI between the Velop and the IoT device is captured to see if the CSI is good. If so, the IoT device is added into the Velop network for sensing.

The disclosed qualification method can be used not only for mesh devices but also for sole routers. In one example, the home router is the only device one can control. There is a whitelist of devices that have already been pre-qualified, e.g. echo dots, google home mini, Belkin WeMo smart plug, wiz light, etc. One can use these devices for initial sensing to know if a home is empty and then can check out other devices to see if it is good and should be qualified.

In various embodiments of the present teaching, an exemplary method of a qualified wireless system can be further disclosed in the following clauses.

Clause E191. The method of the qualified wireless system of Clauses E1-E190, further comprising: obtaining a second TSCI of a second wireless multipath channel of the venue based on a second wireless signal transmitted from a second Type 1 device and received by a second Type 2 device, wherein one of the second Type 1 device and the second Type 2 device is qualified and the other one is to-be-qualified; performing a qualifying test based on the second TSCI; determining the to-be-qualified device to be qualified based on a determination that a qualification criterion associated with the qualifying test is satisfied.

When the new device is qualified, a database of qualified device is updated. The database may be associated with the qualified device.

Clause E192. The method of the qualified wireless system of Clause E191, further comprising: updating a database of qualified device associated with at least one of: the to-be-qualified device, the qualified device between the second Type 1 device and the second Type 2 device, the venue, the second wireless signal, the second wireless multipath channel, and at least one associated task associated with at least one of: the qualifying test and the qualification criterion.

The new device may be registered as qualified.

Clause E193. The method of the qualified wireless system of Clauses E191-E192, further comprising: registering the to-be-qualified device as a qualified device.

The new device may be registered as qualified for a task.

Clause E194. The method of the qualified wireless system of Clauses E191-E193, further comprising: registering the to-be-qualified device as a qualified device for a task associated with at least one of: the qualifying test and the qualification criterion.

After being qualified, the newly qualified device (whether Type 1 or Type 2 device) may be used to work with a third qualified device to obtain a third TSCI which is used for another task.

Clause E195. The method of the qualified wireless system of Clauses E191-E194, further comprising: obtaining a third TSCI of a third wireless multipath channel of the venue based on a third wireless signal transmitted between the to-be-qualified device that is determined to be qualified and another qualified device; making the third TSCI available for another task.

The third qualified device may inquire a database of qualified devices and obtain info of the newly-qualified device.

Clause E196. The method of the qualified wireless system of Clause E195: wherein the another qualified device sends an enquiry to a database of qualified devices associated with the venue; wherein the another qualified device obtains from the database an information of the to-be-qualified device.

Some possible info of the newly-qualified device that may be sent to the third qualified device.

Clause E197. The method of the qualified wireless system of Clause E196: wherein the information of the to-be-qualified device comprises at least one of: an identification information (ID) of the to-be-qualified device, a method to communicate with the to-be-qualified device, the second wireless multipath channel, the second wireless signal, a list of supported functionalities of the to-be-qualified device, and a coordination information between the to-be-qualified device and the another qualified device.

Second wireless channel may be 80MHz. Third wireless channel may be a subset of the 80MHz (i.e. subset of second channel), e.g. 40MHz, 20MHz, 10MHz, or frequency hopping (e.g. 20MHz at a time) within the 80MHz.

Clause E198. The method of the qualified wireless system of Clauses E195-E197, further comprising: wherein the second wireless multipath channel comprises the third wireless multipath channel.

Transmission and reception may be coordinated. Perhaps by another device, or the to-be-qualified device, or the another qualified device.

Clause E199. The method of the qualified wireless system of Clauses E195-E198, further comprising: coordinating the transmission and reception of the third wireless signal between the to-be-qualified device and the another qualified device.

Transmission and reception may be configured to be in compliance with one or more standard, e.g. WiFi standard, or IEEE 802.11.

Clause E200. The method of the qualified wireless system of Clauses E195-E199, further comprising: configuring the transmission and reception of the third wireless signal between the to-be-qualified device and the another qualified device in compliance with at least one of: a protocol, a standard, a signaling requirement.

Clause E201. The method of the qualified wireless system of Clause E200, further comprising: configuring at least one of the following of the third wireless signal: a sounding frequency, sounding period, sounding timing, carrier frequency, bandwidth, protocol, networking, signaling, handshaking, multiple access, channel traffic characteristics, channel availability characteristics, frequency hopping characteristics, choice of probe signal, and another signal characteristics.

Special case: the qualified device may be the Type 1 device, or the Type 2 device (in Clause E1).

Clause E202. The method of the qualified wireless system of Clauses E195-E201: wherein the qualified device is one of the Type 1 device and the Type 2 device.

Special case: the qualified device may be the another qualified device.

Clause E203. The method of the qualified wireless system of Clauses E195-E202: wherein the another qualified device is the qualified device between the second Type 1 device and the second Type 2 device. The new device may request for the qualifying test. The venue may be determined to be stationary or otherwise suitable for the qualifying test based on a TSCI captured by a pair of qualified Type 1 and Type 2 devices. Or, the new device request to join the groups of "qualified devices" associated with the qualified device.

Clause E204. The method of the qualified wireless system of Clauses E200-E203: receiving a request associated with the to-be-qualified device; determining based on the TSCI that the venue is in a suitable testing condition for the qualifying test, wherein both the Type 1 device and the Type 2 device are qualified; coordinating the second Type 1 device to send the second wireless signal in the second wireless multipath channel of the venue and the second Type 2 device to receive it.

Clause E205. The method of the qualified wireless system of Clause E204: wherein the request comprises at least one of: a request from the to-be-qualified device to the qualified device, a request from the to-be-qualified device to at least one of: the Type 1 device, the Type 2 device, the processor and the memory, a request from the to-be-qualified device to a server communicatively coupled with the qualified device, a request for qualification of the to-be-qualified device, request for the to-be-qualified device to be qualified as a qualified Type 1 (TX) device, request for the to-be-qualified device to be qualified as a qualified Type 1 (TX) device for at least one second task, request for the to-be-qualified device to be qualified as a qualified Type 2 (RX) device, request for the to-be-qualified device to be qualified as a qualified Type 2 (RX) device for the at least one second task, request for the to-be-qualified device to be qualified as both a qualified Type 1 device and a qualified Type 2 device, request for the to-be-qualified device to be qualified as both a qualified Type 1 device and a qualified Type 2 device for the at least one second task, request for commencing the at least one second task with the to-be-qualified device, request for the to-be-qualified device to join the second task, request for performing the qualifying test for the to-be-qualified device, request for performing the qualifying test associated with at least one second task for the to-be-qualified device, request for the to-be-qualified device to join a group of qualified devices, request for the to-be-qualified device to join a group of qualified devices associated with at least one second task, request for the to-be-qualified device to join a group of qualified devices associated with at least one of: a Type 1 (TX) device and a Type 2 (RX) device associated with the second task, request for transmission and reception of the second wireless signal in the venue for at least one of: the qualifying test and the at least one second task, request for usage of the second wireless multipath channel in the venue for at least one of: the qualifying test and the at least one second task, request for transmission and reception of the second wireless signal in the second wireless multipath channel for at least one of: the qualifying test and the at least one second task, and another request.

"Suitable testing condition" may comprise: the venue has no change and no object motion, or the TSCI remain steady or stationary.

Clause E206. The method of the qualified wireless system of Clauses E204-E205: wherein the suitable testing condition comprises at least one of: no detectable motion is detected in a motion detection test based on the TSCI, motion level is low in a motion detection test based on the TSCI, no detectable change is detected in a change detection test based on the TSCI, the wireless multipath channel is stationary in a stationarity test based on the TSCI, the wireless multipath channel is steady in a steadiness test based on the TSCI, the channel traffic of the wireless multipath channel is low, the noise level in wireless multipath channel traffic is low, a target object motion associated with at least one of: the qualifying test and a task associated with the qualifying test, is detected based on the TSCI, the target object motion is anticipated based on the TSCI.

The target object motion is successfully monitored based on the TSCI. The target repeatable object motion is detected based on the TSCI, and another condition of the channel based on the TSCI. Special case: both the second Type 1 device and second Type 2 device need to be qualified and are qualified together in the qualified test.

Clause E207. The method of the qualified wireless system of Clauses E200-E206: wherein both the second Type 1 device and the second Type 2 device are to-be-qualified devices; wherein both the to-be-qualified devices are determined to be qualified based on the determination that the qualification criterion associated with the qualifying test is satisfied.

The features described above may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language (e.g., C, Java), including compiled or interpreted languages, and it may be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, ASICs (application-specific integrated circuits).

While the present teaching contains many specific implementation details, these should not be construed as limitations on the scope of the present teaching or of what may be claimed, but rather as descriptions of features specific to particular embodiments of the present teaching. Certain features that are described in this specification in the context of separate embodiments may also be implemented in combination in a single embodiment. Conversely, various features that are described in the context of a single embodiment may also be implemented in multiple embodiments separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Particular embodiments of the subject matter have been described. Any combination of the features and architectures described above is intended to be within the scope of the following claims. Other embodiments are also within the scope of the following claims. In some cases, the actions recited in the claims may be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A first wireless device of a wireless monitoring system, comprising:

   a receiver configured to receive a first wireless signal through a wireless multipath channel of a venue, wherein:

   the venue comprises a vehicle and an immediate vicinity of the vehicle,
   the first wireless signal is received based on a transmitted wireless signal transmitted by a second wireless device of the wireless monitoring system, and
   the first wireless signal differs from the transmitted wireless signal due to the wireless multipath channel and a modulation by an object undergoing a motion in the venue;

   a processor communicatively coupled with the receiver;
   a memory communicatively coupled with the processor; and
a set of instructions stored in the memory which, when executed by the processor, causes the processor to:

obtain a time series of channel information (TSCI) of the wireless multipath channel based on the first wireless signal, and perform a monitoring task by monitoring, based on the TSCI, at least one of: the vehicle, the object, or the motion of the object.

2. The first wireless device of claim 1, wherein the set of instructions, when executed by the processor, further causes the processor to monitor, based on the TSCI, at least one of: an interior space, an exterior space or a structure, of the vehicle, wherein:

the interior space comprises at least one of: cabin, trunk, hood, storage space, compartments, trailer, container, cargo bay, gas tank, fuel tank, or oil bag;
the exterior space comprises at least one of: a garage, a parking facility in which the vehicle stops and parks, or an area around the vehicle that another vehicle can approach, stop or park;
the structure comprises at least one of: vehicle chassis, body, lights, window, door, tailgate, bumpers, wheels or engine.

3. The first wireless device of claim 2, wherein the set of instructions, when executed by the processor, further causes the processor to perform:

computing, based on the TSCI, at least one spatial-temporal information (STI) of at least one of: the vehicle, the object or the motion of the object; and
monitoring the vehicle, the object or the motion of the object, based on the at least one STI, wherein an STI comprises at least one of: presence, count, motion intensity, distance, speed, acceleration, angle, motion statistics, motion localization, motion classification, gesture, behavior, motion trend, head motion, motion rhythm, motion cycle, cycle period, cycle frequency, breathing statistics, heartbeat statistics, breathing rate, heart rate, eye-blinking, driver event, passenger event, entrance event, exit event, window event, door event, driver sleepiness event, driver distraction event, fall-down event, security event, accident event, physical state, health state, or mental state.

4. The first wireless device of claim 3, wherein the set of instructions, when executed by the processor, further causes the processor to perform:

computing an analytics based on the at least one STI; and
monitoring the vehicle, the object or the motion of the object based on the analytics, wherein computing the analytics comprises at least one of:

processing the at least one STI,
analyzing the at least one STI,
thresholding the at least one STI based on a threshold,
classifying the at least one STI based on at least one of: a classifier or a neural network with input comprising the at least one STI, or
computing at least one of: a degree of motion, a change, an indication, an event occurrence, a security event, an identification, a trend, a sleep state, a driver alertness, a driver state, a gesture, a duration, a count, a location, an irregularity, a deviation, or an alert, based on the at least one STI.

5. The first wireless device of claim 3 or claim 4, wherein computing the at least one STI comprises:

computing a time series of features of the TSCI; and
computing an STI based on the time series of features of the TSCI, wherein each feature comprises at least one of:
a scalar, vector, matrix, magnitude of CI, phase of CI, magnitude square of CI, function of a sliding window of CI, component of CI, correlation, autocorrelation, autocorrelation function (ACF), correlations between two windows of CI aligned using dynamic time warping (DTW), local maximum, local minimum, zero crossing, inner product, time reversal resonance strength (TRRS), distance score, Euclidean distance, absolute distance, moving average, weighted average, variance, variation, derivative, variability, deviation, divergence, entropy, variation measure, regularity measure, similarity measure, similarity score, transformation, frequency spectrum, feature of spectrum, spectral analysis, inverse transform, frequency transform, zero padding, repeatedness, periodicity, impulsiveness, sudden-ness, recurrence, frequency, rate, period, timing, duration, change, feature extraction, decomposition, dimension reduction, projection, eigen-decomposition, or principal component analysis (PCA).

6. The first wireless device according to any previous claim, wherein the set of instructions, when executed by the processor, further causes the processor to perform:

preprocessing the TSCI;

computing a time series of features of the TSCI, each feature being a feature of a first sliding time window of the preprocessed TSCI;

computing a time series of STI based on the time series of features, wherein each STI corresponds to a second sliding time window of the time series of features;

computing a time series of analytics based on the time series of STI, wherein each analytics corresponds to a third sliding time window of the time series of STI;

monitoring the at least one of: the vehicle, the object or the motion of the object, based on at least one of: the time series of features, the time series of STI or the time series of analytics; and generating a response based on the monitoring.

7.  The first wireless device according to any of claims 2-6, wherein the set of instructions, when executed by the processor, further causes the processor to perform monitoring a security of the vehicle based on the TSCI, wherein monitoring the security comprises at least one of:

    detection of suspicious activity in the exterior space, detection of a person approaching the vehicle, detection of a person in the exterior space peeping into the vehicle through a window, detection of a person in the exterior space damaging the vehicle, detection of a person in the exterior space force-opening a door or a window of the vehicle,

    detection of suspicious activity in the interior space, detection of an outsider reaching inside vehicle through a window, intrusion detection, intruder tracking, detection of presence of children in back seat, detection of presence of a pet, detection of window being broken when parked, detection of door open when parked, detection of hit-and-run when parked, detection of collision, or detection of structural damage.

8.  The first wireless device according to any of claims 2-7, wherein the set of instructions, when executed by the processor, further causes the processor to perform monitoring driver and passengers of the vehicle based on the TSCI, wherein monitoring the driver and passengers comprises at least one of:

    driver monitoring, driver presence detection, driver identification, driver activity monitoring, driver vital sign monitoring, driver breathing monitoring, driver heart rate monitoring, driver alertness monitoring, driver distraction detection, driver entrance to vehicle, driver exit from vehicle,

    passenger monitoring, passenger presence detection, baby detection, child detection, pet detection, passenger locationing, passenger counting, passenger recognition, passenger activity monitoring, passenger breathing monitoring, passenger heart beat monitoring, passenger vital sign monitoring, passenger sleeping detection, passenger entrance to vehicle, passenger exit from vehicle, or

driver-passenger interaction monitoring.

9.  The first wireless device according to any previous claim, wherein the set of instructions, when executed by the processor, further causes the processor to perform:

    pausing the monitoring task when a low-activity condition is determined in the monitoring task; entering a low-power mode;

    awakening, triggered by a signal, from the low-power mode;

    resuming the monitoring task;

    pausing the monitoring task again when the low-activity condition is determined again in the monitoring task; and

    entering the low-power mode again.

10. The first wireless device according to any previous claim, wherein:

    the set of instructions, when executed by the processor, further causes the processor to perform:

        associating an event of the vehicle with a characteristics of the TSCI, wherein the event comprises at least one of: a safety monitoring event, a security monitoring event, a vehicle structure integrity monitoring event, a driver monitoring event, a passenger monitoring event, or an intruder monitoring event; and

        detecting the event of the vehicle by recognizing the characteristics of the TSCI; and

    the event comprises at least one of:

    window opened, window closed, window broken, door opened, door closed, door not locked, door deformed, unauthorized opening of door, driver presence, driver motion, driver sleepy, driver distracted, passenger presence, passenger motion, intruder presence, intruder motion, collision, sabotage of vehicle, baby left in vehicle, child left in vehicle, pet left in vehicle, people walking by, people peeping through vehicle windows, another vehicle too close, breathing detected in vehicle, or motion detected in vehicle.

11. The first wireless device according to any of claims 6-10, wherein the set of instructions, when executed by the processor, further causes the processor to perform:

associating an event of the vehicle with a characteristics of at least one of: the TSCI, the time series of features, the time series of STI, or the time series of analytics, wherein the event comprises at least one of: a safety event, a security event, a vehicle structure integrity event, a driver event, a passenger event, or an intruder event; detecting the event of the vehicle by recognizing the characteristics of the TSCI; and training a model of the event based on the characteristics of at least one of: a training TSCI of a training wireless multipath channel of a training venue, a time series of training features computed based on the training TSCI, a time series of training STI computed based on the training features, or a time series of training analytics computed based on the training STI, wherein:

the training TSCI is obtained from a training wireless signal transmitted from a training wireless device in the training venue to another training wireless device in the training venue during a training time period; and the event is detected based on the model and at least one of: the TSCI, the time series of features, the time series of STI or the time series of analytics.

12. The first wireless device according to any previous claim, wherein the set of instructions, when executed by the processor, further causes the processor to perform starting, stopping or pausing a sub-task of the monitoring task based on at least one of:

an arming or disarming the wireless monitoring system, a parking status or a non-parking status of the vehicle, a stopping status or an in-motion status of the vehicle, a turning-on or a turning-off of an engine of the vehicle, a turning-on or turning off of a headlight of the vehicle, a brake release or a brake depression by a driver of the vehicle, an opening or a closing of at least one of: a driver door, a passenger door, a vehicle trunk door, a window, a cover of a vehicle hood, a door of a cargo bay, a door of a trailer, a door of a container, a door of a storage space, or a cover of a fuel tank, an entrance or an exit of the driver with associated opening and closing of the driver door,

an entrance or an exit of a passenger with associated opening and closing of a passenger door, an entrance or an exit of the driver's smart phone, an entrance or an exit of the passenger's smart phone, a presence or an absence of a paired device, a pairing or an unpairing of a previously paired device, an interaction with a part of the vehicle, a lack of motion inside the vehicle for a period of time, or a presence of motion inside the vehicle for a period of time.

13. The first wireless device according to any previous claim, wherein:

at least one of the first wireless device or the second wireless device is physically attached to or physically supported by the vehicle based on at least one of: a USB port, a cigarette lighter port, a OBD port, an Ethernet point, a network point, or an attachment unit of the first or second wireless device; the first wireless device and the second wireless device are at different locations in the vehicle; and at least one of the first wireless device or the second wireless device is factory installed or integrated into a vehicle subsystem of the vehicle.

14. The first wireless device according to any previous claim, wherein:

at least one of the first wireless device or the second wireless device is communicatively coupled to or powered by the vehicle based on at least one of: a USB port, a cigarette lighter port, a OBD port, an Ethernet point, a network point, a vehicle network, a vehicle Wi-Fi system, a vehicle Bluetooth system, a vehicle BLE system, a vehicle Zigbee system, a vehicle communication system, an in-vehicle electronic subsystem, hard-wiring, or an attachment unit of the first or second wireless device; and the first wireless device and the second wireless device are at a same location in the vehicle.

15. A method of a wireless monitoring system, comprising:

transmitting a first wireless signal from a first wireless device in a venue through a wireless multipath channel of the venue, the venue comprising a vehicle and an immediate vicinity of the vehicle;

receiving a second wireless signal by a second wireless device in the venue through the wireless multipath channel, wherein the second wireless signal differs from the first wireless signal due to the wireless multipath channel and a modulation of the first wireless signal by an object undergoing a motion in the venue;

obtaining a time series of channel information (TSCI) of the wireless multipath channel based on the second wireless signal using a processor, a memory communicatively coupled with the processor and a set of instructions stored in the memory; and

performing a monitoring task by monitoring, based on the TSCI, at least one of: the vehicle, the object or the motion of the object.

**FIG. 1**

EP 3 872 520 A2

**FIG. 2A**

EP 3 872 520 A2

FIG. 2B

300

| Transmit, by a transmitter, a wireless signal through a wireless multipath channel of a venue | 302 |

↓

| Receive, by a receiver, the wireless signal impacted by the wireless multipath channel and a modulation of an object undergoing a motion in the venue | 304 |

↓

| Obtain a set of channel information (CI) of the wireless multipath channel based on the wireless signal | 306 |

↓

| Perform a monitoring task by monitoring the object and the motion of the object based on the set of CI | 308 |

↓

| Determine a plurality of admissible system states of the wireless monitoring system, wherein each admissible system state is associated with a respective setting of at least one of: the wireless signal, a series of sounding signals in the wireless signal, or the monitoring task | 310 |

↓

| Choose one of the admissible system states to be a system state of the wireless monitoring system based on the monitoring task | 312 |

↓

| Configure the wireless monitoring system by applying a setting associated with the chosen admissible system state to the wireless monitoring system | 314 |

FIG. 3

EP 3 872 520 A2

**400**

Obtain a set of channel information (CI) of a wireless multipath channel in a venue based on a wireless signal impacted by the wireless multipath channel and a modulation of an object undergoing a motion in the venue — 402

Perform a monitoring task by monitoring the object and the motion of the object based on the set of CI — 404

Determine a plurality of admissible system states of the wireless monitoring system, wherein each admissible system state is associated with a respective setting — 406

Choose one of the admissible system states to be a system state of the wireless monitoring system automatically based on the monitoring task — 408

Configure the wireless monitoring system by applying a setting associated with the chosen admissible system state to the wireless monitoring system — 410

Change the system state to a first state associated with a normal sounding rate associated with the monitoring task — 412

Change the system state to a second state associated with a sounding rate higher than the normal sounding rate when the monitoring task is demanding — 414

Change the system state to a third state associated with a sounding rate lower than the normal sounding rate to save power — 416

**FIG. 4**

FIG. 5

FIG. 6

FIG. 7A

FIG. 7B

FIG. 7C

**FIG. 8**

FIG. 9A

FIG. 9B

```
┌─────────────────────────────────────────────────────────────┐
│ Transmit a first wireless signal from a first wireless device │        ⌐1002
│ through a wireless multipath channel of a venue, where the    │
│ venue comprises a vehicle and an immediate vicinity of the    │
│ vehicle                                                       │
└─────────────────────────────────────────────────────────────┘
                              │
                              ▼
┌─────────────────────────────────────────────────────────────┐
│ Receive a second wireless signal by a second wireless device  │        ⌐1004
│ through the wireless multipath channel, wherein the second    │
│ wireless signal differs from the first wireless signal due to │
│ the wireless multipath channel and a modulation of the first  │
│ wireless signal by an object undergoing a motion in the venue │
└─────────────────────────────────────────────────────────────┘
                              │
                              ▼
┌─────────────────────────────────────────────────────────────┐
│ Obtain a time series of channel information (TSCI) of the     │        ⌐1006
│ wireless multipath channel based on the second wireless       │
│ signal using a processor, a memory communicatively coupled    │
│ with the processor and a set of instructions stored in the    │
│ memory                                                        │
└─────────────────────────────────────────────────────────────┘
                              │
                              ▼
┌─────────────────────────────────────────────────────────────┐
│ Perform a monitoring task by monitoring, based on the TSCI,   │        ⌐1008
│ at least one of: the vehicle, the object or the motion of the │
│ object                                                        │
└─────────────────────────────────────────────────────────────┘
```

**FIG. 10**

EP 3 872 520 A2

1100

A  User turns on the car engine

B  User turns off the car engine

C  CPD system goes to deep sleep mode

D  CPD system wakes up by abnormal event
   (e.g. hit, window smash)

1101  Car on

1130  Car off, CPD system in deep sleep mode

1110  Car off, CPD sensing, owner is in proximity
      (no alert is sent)

1120  Car off, CPD sensing, owner is not in proximity

      Car off, CPD sensing, motion detected

      Car off, CPD sensing, breathing detected

**FIG. 11**

EP 3 872 520 A2

FIG. 12A

FIG. 12B

Transmit a first wireless signal from a first wireless device in a venue through a wireless multipath channel of the venue ⟋—1302

Receive a second wireless signal by a second wireless device through the wireless multipath channel, wherein the second wireless signal differs from the first wireless signal due to the wireless multipath channel that is impacted by a motion of a person in the venue ⟋—1304

Obtain a time series of channel information (TSCI) of the wireless multipath channel based on the second wireless signal using a processor, a memory communicatively coupled with the processor and a set of instructions stored in the memory ⟋—1306

Monitor the motion of the person in the venue based on the TSCI ⟋—1308

Generate an assistance to the person in the venue based on the monitoring without any input from the person ⟋—1310

**FIG. 13**

<u>1400</u>

| | |
|---|---|
| Transmit a first wireless signal from a first wireless device through a wireless multipath channel of a venue | 1402 |
| Receive a second wireless signal by a second wireless device through the wireless multipath channel, wherein the second wireless signal differs from the first wireless signal due to the wireless multipath channel that is impacted by a motion of an object in the venue | 1404 |
| Obtain a time series of channel information (TSCI) of the wireless multipath channel based on the second wireless signal | 1406 |
| Monitor the motion of the object in the venue based on the TSCI, wherein at least one of the first wireless device or the second wireless device is attached to an accessory for power supply | 1408 |

**FIG. 14**

EP 3 872 520 A2

FIG. 15B

FIG. 15A

EP 3 872 520 A2

FIG. 16B

FIG. 16A

136

1701

1700

**FIG. 17B**

1702

1701

1703

**FIG. 17A**

FIG. 18B

FIG. 18A

**FIG. 19**

EP 3 872 520 A2

FIG. 20

FIG. 21

**FIG. 22**

**FIG. 23**

**FIG. 24**

EP 3 872 520 A2

2500

Transmit, by a Type 1 device, a wireless signal through a wireless multipath channel of a venue — 2502

Receive the wireless signal by the Type 2 device — 2504

Obtain a time series of channel information (CI) of the wireless multipath channel based on the wireless signal — 2506

Perform a qualification test based on the TSCI for a to-be-qualified device related to Type 1 device or Type 2 device — 2508

Determine the to-be-qualified device to be a qualified device when a qualification criterion is satisfied — 2510

Perform a task based on the TSCI using the qualified device — 2512

Register the to-be-qualified device as a qualified device for a task associated with the test or the criterion — 2514

Update a database of qualified devices with the qualified device, the venue or the task — 2516

Obtain an additional TSCI with signal transmissions between the qualified device and an additional qualified device — 2518

Configure the signal transmissions in compliance with: a protocol, a standard, or a signaling requirement — 2520

Obtain, by the additional qualified device, information of the to-be-qualified device from the database using an inquiry — 2522

Perform another task based on the additional TSCI using the qualified device or the additional qualified device — 2524

**FIG. 25**